(19) Europäisches Patentamt
European Patent Office
Office européen des brevets

(11) **EP 4 012 871 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **20212537.3**

(22) Anmeldetag: **08.12.2020**

(51) Internationale Patentklassifikation (IPC):
*H02J 3/00* (2006.01)      *H02J 3/02* (2006.01)
*H02J 3/38* (2006.01)      *H02J 13/00* (2006.01)

(52) Gemeinsame Patentklassifikation (CPC):
**H02J 13/00007; H02J 3/0075; H02J 3/02;**
**H02J 3/381;** H02J 2203/10; Y02D 30/70;
Y02E 40/70; Y02E 60/00; Y04S 10/12; Y04S 40/121

(54) **VERFAHREN ZUM GERICHTETEN ÜBERTRAGEN VON ENERGIE IN FORM VON ENERGIEPAKETEN**

METHOD FOR THE DIRECTED TRANSMISSION OF ENERGY IN THE FORM OF ENERGY PACKETS

PROCÉDÉ DE TRANSFERT DIRIGÉ DE L'ÉNERGIE SOUS FORME DE PAQUETS ÉNERGIE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**15.06.2022   Patentblatt 2022/24**

(73) Patentinhaber: **GIP AG**
**55131 Mainz (DE)**

(72) Erfinder: **Reifenhäuser, Bernd**
**55131 Mainz (DE)**

(74) Vertreter: **WSL Patentanwälte Partnerschaft mbB
Kaiser-Friedrich-Ring 98
65185 Wiesbaden (DE)**

(56) Entgegenhaltungen:
**DE-A1-102014 119 431      DE-A1-102014 214 863
DE-A1-102015 109 967      US-A1- 2016 252 922**

- **GELENBE E: "Adaptive Management of Energy Packets", 2014 IEEE 38TH INTERNATIONAL COMPUTER SOFTWARE AND APPLICATIONS CONFERENCE WORKSHOPS, IEEE, 21. Juli 2014 (2014-07-21), Seiten 1-6, XP032646924, DOI: 10.1109/COMPSACW.2014.125 [gefunden am 2014-09-18]**

**Beschreibung**

Gebiet der Erfindung

Die Erfindung beschäftigt sich mit der Übertragung von Leistung zur Energieversorgung in einem Übertragungsnetzwerk unter besonderer Berücksichtigung regenerativer Leistungs- bzw. Energieerzeugung und der Handhabung der damit verbundenen Volatilität.

Stand der Technik

Im Stand der Technik gibt es einige Konzepte für ein paketbasiertes Stromnetz, wie z.B. in dem europäischen Patent EP 2 430 723 B1, US 9013902 B2, R. Abe et al., A. Sumper et al., Alex Q. Huang et al. usw. dargelegt ist.

In dem europäischen Patent EP 2 430 723 B1 wird davon ausgegangen, dass ein Quell-Knoten des dort beschriebenen "Quantum-Grids" für einen in der Zukunft liegenden Buchungszeitraum über die Kapazität verfügt ein Energiepaket an einen Senken-Knoten zu übertragen, der für diesen Buchungszeitpunkt genau den einen Bedarf für dieses Energiepakets hat.

Für den Buchungszeitraum fragen die Senken zur Deckung ihres Bedarfs als Nachfrage diese Energiepakete bei den Quellen an. Die von den Quellen zur Übertragung bereitstellbaren Energiepakete werden Angebot genannt. In einem mehrstufigen Verfahren werden Angebot und Nachfrage abgeglichen und mittels eines geeigneten Auktions- und Routingverfahrens Pakete zur Übertragung auf einem optimalen Pfad bestimmt. In diesem Verfahren werden aus den Angeboten der Quellen, Pakete zur optimalen Deckung der Nachfrage jeder Senke bestimmt. Für jede Senke wird dann der optimale Graph zwischen den Quellen, die zur Nachfragedeckung der Senke bestimmt wurden, und der Senke bestimmt. Dieses Verfahren wird so lange fortgesetzt bis für eine Senke, entsprechend vorher bestimmter Kriterien, die optimale Kombination von Quellen und Graphen, die die Quellen mit der Senke verbinden und deren Bedarf optimal decken, bestimmt ist. Dieses Ergebnis wird dann fest gebucht, das heißt es wird ein entsprechender Vertrag zwischen der Senke und diesen Quellen und mit dem Betreiber des Stromnetzes über die Übertragung auf dem Transportgraph geschlossen.

Zentrales Element des Konzepts aus der EP 2 430 723 B1 ist, dass das Energiepaket durch sein kohärent an das Energiepaket gekoppelte Datenpaket definiert wird und der zeitliche Verlauf der Leistung, das sogenannte Leistungsprofil $p_{Profil}(t)$, das dann bei der Übertragung das Energiepaket bildet, gemäß der Informationen im Datenpaket eingestellt wird. Wesentlicher Bestandteil des Datenpakets sind die dort hinterlegten Informationen über den Übertragungszeitraum $T$ und das Leistungsprofil $p_{Profil}(t)$ für alle Zeitpunkte $t$ aus dem Übertragungszeitraum $T$.

Diese Datenpakete werden über eine Routing Plane und ein Datennetzwerk, das alle Knoten des Übertragungsnetzwerk mit einander und mit der Routing Plane verbindet, an alle Knoten des Transportgraphs übermittelt. Zur Übertragungszeit, also ab dem Beginn des Übertragungszeitraums $T$, wird durch Leistungsteller auf den Kanten des Transportgraphs für jeden Zeitpunkt $t$ innerhalb des Übertragungszeitraums $T$ die physikalische Leistung durch eine Power Plane so eingestellt, dass diese gleich dem, vor der Übertragungszeit an die Knoten übermittelten und im Datenpaket hinterlegten Wert des Leistungsprofils zu dem jeweiligen Zeitpunkt ist. Dabei bilden die Routing- und die Power Plane zusammen den sogenannten Quantum Grid Router. Diese Quantum Grid Router sind über Kanten des elektrischen Übertragungsnetzwerk miteinander verbunden, sodass mindestens eine Quelle mit einer Senke verbunden werden kann.

Trotz aller Vorteile, welche die paketbasierte Stromübertragung aus dem Stand der Technik bietet, bieten die bekannten Verfahren keine Konzepte für den Umgang mit der nicht-deterministischen Eigenschaft der regenerativen Erzeugung von Energie. Beispielsweise geht die 2 430 723 B1 konzeptionell von der Annahme aus, dass für den Buchungszeitraum ein fest definierter Bedarf der Senken und ein fest definiertes Angebot an Energiepaketen der Quellen besteht. Das setzt aber voraus, dass die Quellen garantieren, dass die von ihnen in das Netz eingespeiste Leistung den Leistungsbedarf der Senken exakt deckt.

Aufgabe gegenüber dem Stand der Technik

Demgegenüber ist es Aufgabe der vorliegenden Erfindung,

- die Volatilität sowohl der regenerativen Erzeugung wie auch des Bedarfs der Senken zu behandeln,
- Durchleitungsverluste zu berücksichtigen,
- ein einheitliches, in sich geschlossenes selbstorganisiertes, dezentrales und automatisches System zur Energieversorgung verschiedener Energieformen zu bilden und
- einen Ansatz für die Sektorenkopplung von Übertragungsnetzen mit verschiedenen Energieformen, vor allem von einem Stromnetz, mit regenerativen Erzeugung, und einem Gasversorgungsnetz, unter anderem für die langfristigen Energiespeicherung, zu liefern.

Zumindest eine der zuvor genannten Aufgaben wird durch ein Verfahren zum gerichteten Übertragen von Energie in Form mindestens eines Energiepakets von einer Mehrzahl von Quellen Q über mindestens zwei Knoten, von denen einer ein über eine Einspeisekante mit einer aus der Mehrzahl von Quellen Q verbundener Einspeiseknoten $K_Q$ und einer ein über eine Bedarfskante mit einer Senke S verbundener Bedarfsknoten $K_S$ ist, und über eine Mehrzahl von Kanten an eine Mehrzahl von Senken S in einem Übertragungsnetzwerk, wobei das Übertragungsnetzwerk mittels eines Daten- und Rechnernetzwerkes derart steuerbar ist, dass für mindestens einem Ort x auf jeder aus der Mehrzahl von Kanten eine tatsächlich fließende physikalische Leistung $p_\varphi(x,t)$ von einer Kontrollinstanz des Daten- und Rechnernetzwerks einstellbar ist, mit den Schritten:

A) Bilden eines Datenpaketes für jedes Energiepaket, wobei das Datenpaket genau einem Energiepaket eineindeutig zugeordnet ist, wobei das Datenpaket das jeweilige Energiepaket definiert und wobei das Datenpaket beschreibt

> i. einen Übertragungszeitraum T des Energiepakets mit einer Dauer DT und einer Ausführungszeit $t_0$, die den Beginn des Übertragungszeitraums T kennzeichnet,
> ii. einen zuvor bestimmten Transportpfad eines Transportgraphen des Übertragungsnetzwerks zur gerichteten Übertragung des Energiepakets, der mindestens eine aus der Mehrzahl von Quellen Q mit genau einer aus der Mehrzahl von Senken verbindet, wobei die genau eine aus der Mehrzahl von Quellen Q über genau eine Einspeisekante an einen Einspeiseknoten $K_Q$ des zuvor bestimmten Transportpfads angebunden ist und die genau eine Senke S über eine Bedarfskante des zuvor bestimmten Transportpfads an den Bedarfsknoten $K_S$ angebunden ist, und
> iii. eine Äquivalenzklasse $\{p_{nom}(t),R(t),T\}$ des Energiepaketes,

> > wobei die Äquivalenzklasse gegeben ist durch

> > > einen durch mindestens eine Prognose zuvor bestimmten zeitlichen Verlauf einer nominellen Leistung $p_{nom}(t)$ des Energiepaketes und
> > > einen zeitlichen Verlauf eines Restes $R(t)$ als Funktion einer Prognoseunsicherheit der mindestens einen Prognose,
> > > wobei es für jeden Zeitpunkt t innerhalb des Übertragungszeitraums T des Energiepakets ein $\mu(t)$, mit $-1 \le \mu(t) < 1$ oder mit $-1 < \mu(t) \le 1$ oder mit $-1 \le \mu(t) \le 1$ gibt, sodass die physikalische Leistung $p_\varphi(x,t)$ bei der Übertragung des Energiepaketes zu jedem Zeitpunkt t und an mindestens einem Ort x auf jeder Kante des Transportpfads, als Summe aus der nominellen Leistung $p_{nom}(t)$ und dem Produkt aus $\mu(t)$ und dem Rest $R(t)$ festlegt ist,

> > wobei die Äquivalenzklasse durch eine Äquivalenzrelation definiert ist,
> > gemäß der für jeden Zeitpunkt t des Übertragungszeitraums T eine erste physikalische Leistung $p'_\varphi(\hat{x},t)$ an einem beliebigen Ort $\hat{x}$ einer Kante des Transportpfads und eine zweite physikalische Leistung $p_\varphi(x, t)$ an einem beliebigen Ort x einer Kante des Transportpfads genau dann äquivalent sind, wenn es einen vorgegebenen Rest $R(t)$ größer oder gleich null und kleiner oder gleich einem Grenzwert $R_{max}$ sowie ein $\mu(t)$, mit $-1 \le \mu(t) < 1$ oder mit $-1 < \mu(t) \le 1$ oder mit $-1 \le \mu(t) \le 1$ gibt, so dass die erste physikalische Leistung $p'_\varphi(\hat{x},t)$ gleich der Summe aus der zweiten physikalischen Leistung $p_\varphi(x,t)$ und dem Produkt von $\mu(t)$ und dem Rest $R(t)$ ist,

B) vor der Ausführungszeit $t_0$ Übertragen des Datenpaketes an alle Kontrollinstanzen zumindest aller Knoten oder aller Kanten auf dem Transportpfad,
C) beginnend mit der Ausführungszeit $t_0$ Übertragen des dem Datenpaket eineindeutig zugeordneten Energiepaketes,
wobei für alle Zeitpunkte t innerhalb des Übertragungszeitraums T des Energiepakets die auf dem Transportpfad zwischen dem Einspeiseknoten $K_Q$ und dem Bedarfsknoten $K_S$ fließende physikalische Leistung $p_\varphi(x,t)$ für mindestens einen Ort x jeder Kante des Transportpfads so eingestellt wird, dass die in den Bedarfskonten $K_S$ eingespeiste physikalische Leistung ein Element der von dem Datenpaket beschriebenen Äquivalenzklasse $\{p_{nom}(t),R(t),T\}$ ist.

Der erfindungsgemäßen Lösung liegt die Idee zu Grunde, die Volatilität von Quellen und Senken durch Definition eines neuen Paketbegriffs, welcher Prognosen mit der Einstellung des Leistungsflusses verknüpft, zu berücksichtigen. Dabei verstehen wir in der vorliegenden Anmeldung unter einem Leistungsfluss den zeitlichen Verlauf einer Leistung $p(x,t)$ für alle Zeitpunkte t aus einem vorgegebenen Zeitraum T an einem Ort x einer Kante des Graphs des Übertragungsnetzwerks.

Demgegenüber versucht der Stand der Technik der Aufgabe durch folgende Maßnahmen zu begegnen

1. Man differenziert und überdimensioniert das Portfolio der regenerativen Quellen und stellt nur den "sicheren" Teil als Angebot zur Verfügung. Zusätzlich sichert man die Versorgung mit deterministischen Quellen ab, um in Form von Regelenergie die Volatilität auszugleichen.

2. Die Quellen werden mit überdimensionierten analogen Speichern versehen, um neben den nicht genau bestimmbaren Bedarfsschwankungen die zusätzliche Volatilität der regenerativen Erzeugung und die damit verbundene Unter- oder Überdeckung auszugleichen.

3. Die Senken sind auch mit analogen Speichern versehen, die die Unter- oder Überdeckung auszugleichen

4. An die Knoten, über die die Leistung für eine paketbasierte Leistungsübertragung eingestellt wird, sind Speicher angebunden, um so die durch die Volatilität auftretende Unter- bzw. Überdeckung durch diese Speicher auszugleichen. Insbesondere werden so die anfallenden Übertragungsverluste kompensiert.

5. Die Knoten, über die die Leistung für eine paketbasierte Leistungsübertragung eingestellt wird, sind über eine sogenannte Slack Line an ein klassisches On Demand Netz angebunden über die, mit dem Regelungsansatz $\Sigma p_i(t)$ = 0, die Unter- und Überdeckung ausgeglichen wird.

Die Ansätze 1 bis 3 sind ingenieurmäßige Lösungen wie sie einem Fachexperten zugänglich sind. Die Lösung 4, ist der Digital Grid Ansatz von Abbe et al. für eine paketbasierte Leistungsübertragung. Die Lösung 5 ist eine Möglichkeit die Verluste beim Power Router Ansatz von A. Sumper auszugleichen. Die Lösung 1 führt dazu das unnötig große Erzeugungskapazitäten sowie weiterhin deterministische Quellen auf der Basis fossiler Energieträger oder Kernenergie für die Regelenergie benötigt werden. Bei den Lösungen 2, 3 und 4 werden die Speicher gemäß der "klassischen" Netzphysik für den Ausgleich der Unterdeckung entladen und für den Ausgleich der Überdeckung geladen. Sie gehören somit nicht zum paketbasierten Grid und werden nicht durch die paketbasierten Verfahren gesteuert und bewirtschaftet. Das heißt man benötigt neben dem Management des Angebots und Nachfrage von Paketen ein "analoges" Bewirtschaftungsverfahren für die Speicher. Diese benötigen ja immer genügend Kapazität zum Ausgleich der Fehlmengen. Dieser so scheinbar einfache Ansatz erhöht die Komplexität und das Risiko der Instabilität erheblich. Die letzte Lösung löst das Problem dadurch, dass die Fehlmengen durch das Power on Demand Prinzips des angeschlossenen klassischen Netzes ausgeglichen werden. Neben diesem Fakt ist die Lösung auch deshalb nachteilig, da es ein zusätzlich die Anbindung an ein klassisches Stromnetz braucht und somit keine reine paketbasierte Übertragung mit dieser Lösung realisiert ist.

Die vorliegende Erfindung löst die Aufgabenstellung, indem ein neuer Paketbegriff eingeführt wird. Dieser neue Paketbegriff wird mithilfe von Prognosen, insbesondere der Einspeiseprognose für eine Quelle, der Bedarfsprognose für eine Senke, deren Bedarf durch diese Quelle gedeckt werden soll und den anfallenden Übertragungsverlustprognosen, gebildet.

Die Erfindung ermöglicht ein paketbasiertes Energiesystem, welches

- selbstorganisiert und autonom, ist und/oder
- eine optimierte Bedarfsdeckung für Energie bzw. Leistung bereitstellt und/oder
- eine optimierte Behandlung der regenerativen und der bedarfsbedingten Volatilität bereitstellt und/oder
- ein optimiertes Routing für die Übertragung im Leistungsübertragungsnetz bereitstellt und/oder
- die Übertragung elektromagnetischer Energie, thermischer und chemische Energie sowie die Bildung von sektorgekoppelten Hybridnetzen ermöglicht.

Die im nachfolgenden Text angegebenen Bezugszeichen ermöglichen lediglich eine Identifikation der einzelnen, abstrakt beschriebenen Elemente in den beigefügten Figuren, die folgende allgemeine Beschreibung ist dennoch nicht als Beschreibung konkreter Ausführungsbeispiele zu verstehen, eine solche folgt am Ende des Textes nach der Figurenkurzbeschreibung.

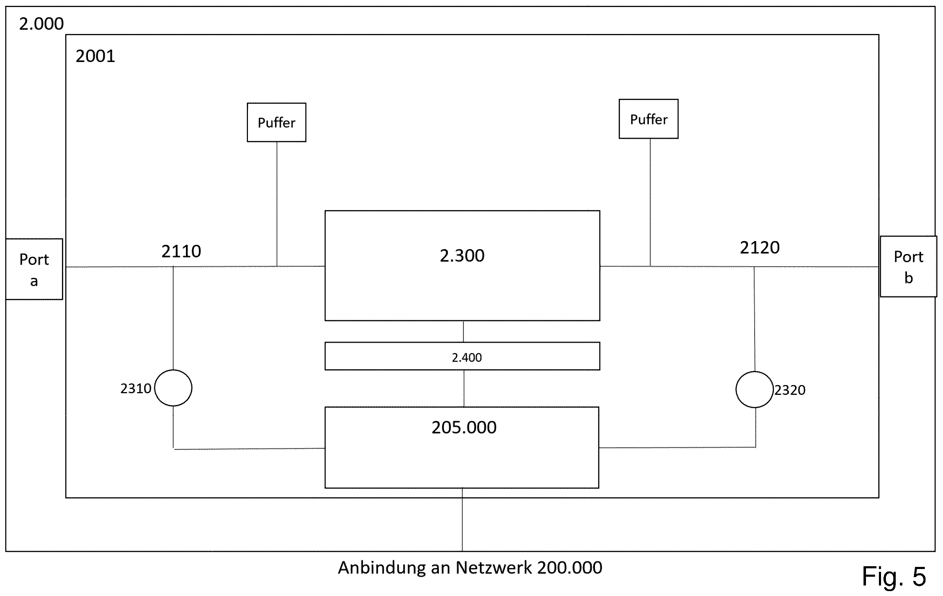

In einer Ausführungsform der Erfindung wird das Übertragungsnetzwerk 100.000 von Knoten die über Kanten verbunden sind gebildet. ist eine tatsächlich fließende physikalische Leistung $p_{\varphi}(x,t)$ von einer Kontrollinstanz 220.000, das auf einem Daten- und Rechnernetzwerks 200.000 ausgeführt wird, steuerbar einstellbar. In einer Ausführungsform erfolgt die Einstellung der tatsächlich fließenden physikalische Leistung $p_{\varphi}(x,t)$ für mindestens einem Ort x auf jeder dieser Kanten dadurch, dass diese am Ort x jeder dieser Kanten eingestellt wird. Die Knoten und Kanten können in verschiedenen Ausführungsformen vorliegen. So gibt es Knoten ausschließlich als Quellen, wie zum Beispiel ein Windgenerator, Leistung in das Übertragungsnetzwerk einspeisen und Knoten die ausschließlich als Senken, wie zum Beispiel ein Privathaushalt ohne eigene Erzeugung, Leistung aus dem Übertragungsnetzwerk entnehmen. Es gibt Knoten, die sowohl Quelle wie auch Senke sind, wie zum Beispiel Energiespeicher. Quellen und Senken können mit mehreren Kanten an das Übertragungsnetz angebunden sein. Des Weiteren gibt es die sogenannten Ohmknoten. Ein Ohmknoten verbindet mehrere Kanten mit einander. Bezogen auf die Übertragungsrichtung gibt es eingehende und abgehende Kanten. Für die Einstellung der physikalischen Leistung an einem Ort x einer Kante dient der Quantum Flow Control (QFC)-Knoten 2.000, wie er in Figur 5 gezeigt wird. Ein QFC-Knoten besteht aus einem QFC und über zwei Anbindungsstellen, genannt Ports, zur flexiblen Anbindung zweier Kanten bzw. physikalischen Übertragungsleitungen als Grundlage für die Kante, die mit dem QFC verbunden sind. Bezogen auf die Übertragungsrichtung gibt es eine eingehende Kante die über den entsprechenden Port an den QFC-Knoten angebunden ist und eine abgehende Kante mit der entsprechenden Anbindung. Die QFC-Knoten ist so gestaltet, dass die physikalische Leistung an der Anbindungsstelle, der äußeren abgehenden Kante unter Verwendung des Leistungsflusses, der über die äußere eingehende Kante in den QFC-Knoten übertragen wird, über das Daten- und Rechnernetzwerk steuerbar einstellbar ist. Die Anbindungsstellen der Kanten an die Ports eines QFC-Knoten bilden jeweils die Orte x der entsprechenden Kanten an denen die physikalische Leistung eingestellt wird. Neben der bidirektionalen Ausführungsform des QFC-Knotens, die entsprechend der Übertragungsrichtung an der jeweiligen Anbindungsstelle die physikalische Leistung einstellen können, gibt es QFC-Knoten die ausschließlich für eine Übertragungsrichtung vorgesehen sind. Der innere Aufbau des QFC-Knotens besteht aus zwei Ports, das sind die Anbindungsstellen zur flexiblen Anbindung äußerer Kanten, die über innere Kanten mit einem QFC verbunden sind. Der QFC stellt entsprechend der Flussrichtung über die jeweilige innere Kante, mit dem der QFC verbunden ist, die Leistung ein. Die vom QFC eingestellte Leistung ist von dem Daten- und Rechnernetzwerk steuerbar einstellbar. Die Quantum Flow Controller gibt es in mono- und bidirektionaler Ausführungsform.

Die Kanten des Übertragungsnetzwerks werden durch die folgenden Ausführungsformen gebildet. Eine Ausführungsform besteht darin, dass eine Kante des Übertragungsnetzwerk von einer Übertragungsleitung mit einer maximalen Übertragungskapazität, die über zwei Anbindungsstellen zur Anbindung an Knoten verfügt, gebildet wird. Eine solche Kante kann Ohmknoten mit Ohmknoten und Ohmknoten mit QFC-Knoten sowie zwei QFC-Knoten über ihre Anbindungsstellen mit einander verbinden. Die physikalische Leistung kann jeweils an der Anbindungsstelle, der der Ort x der Kante ist, eingestellt werden.

In einer anderen Ausführungsform, genannt aktive Kante, besteht diese aktive Kante aus zwei Teilkanten jeweils stehend aus einer Übertragungsleitungen gleicher maximaler Übertragungskapazität pro Längeneinheit, die jeweils eine Kante im Sinne der vorangestellten Ausführungsform einer Kante sind, die über einen QFC, der in dieser Ausführungsform ein Bestandteil der aktiven Kante ist, fest mit einander verbunden sind. Durch die Wahl der Längen der beiden Leitungen wird der Ort des QFC und somit der der beliebige Ort x der aktiven Kante, für den die physikalische Leistung eingestellt werden kann, bestimmt. In einer weiteren Ausführungsform wird die Kante aus einer Übertragungsleitung gebildet die so ausgestaltet ist, dass mindestens an einem Ort x der Kante ohne galvanische Trennung der Leitung die physikalische Leistung durch steuerbar einstellbar ist.

Grundsätzlich ist die vorliegende Erfindung für eine Umsetzung mit allen möglichen Typen von Übertragungsnetzwerken der verschiedensten Energieformen geeignet. Insbesondere ist das Übertragungsnetzwerk in einer Ausführungsform der Erfindung ein elektrisches Übertragungsnetzwerk oder ein Gasnetz oder ein hybrides Übertragungsnetzwerk, das für die Sektorenkopplung aus einem gekoppelten elektrischen Übertragungsnetzwerk und einem Gasnetzwerk besteht.

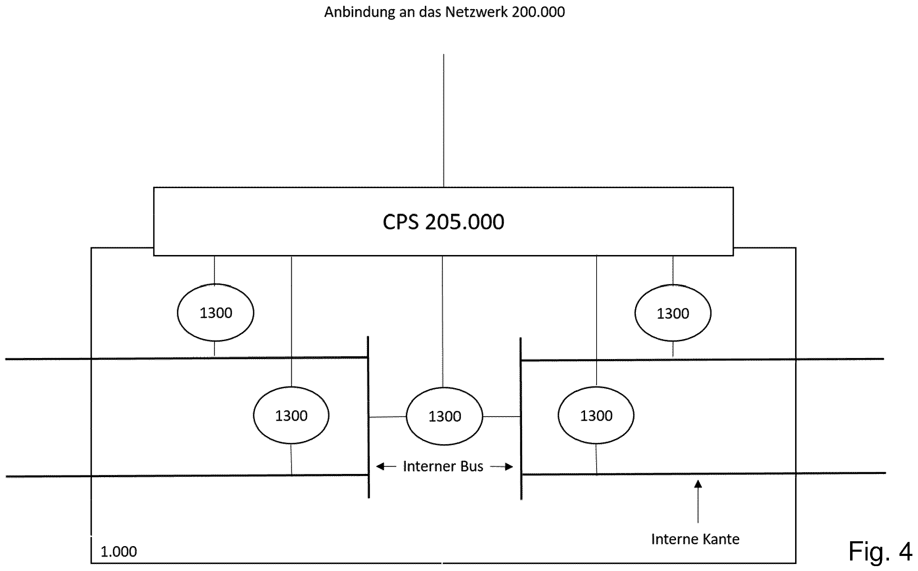

In eine Ausführungsform eines Ohm-Knoten 1.000 für ein elektrisches Übertragungsnetzwerk, wie schematisch in Figur 4 gezeigt, sind an einem Ohm-Knoten mehrere Kanten, bestehend aus elektrischen Übertragungsleitungen, angeschlossen. In der Regel sind die an dem Ohm-Knoten angeschlossenen Kanten am anderen Ende mit einem QFC-Knoten verbunden, der Leistung in den Ohm-Knoten ein- oder ausspeisen kann. Diese von dem jeweiligen QFC-Knoten gesteuerten Leistungsflüsse werden dann in dem Ohm-Knoten über einen Bus, wie ihn Figur 4 zeigt, an dem die Kanten angeschlossen sind, entsprechend der Kirchhoffschen Regeln verteilt. Darüber hinaus können in einer Ausführungsform in einem Ohm-Knoten die angeschlossenen Kanten zusätzlich an- und abgeschaltet werden. Bei der Übertragung von physikalischer Leistung wirken die Kanten sowie die Ohm-Knoten auf die Leistung, indem sie diese um den an bzw. in ihnen auftretenden Verlust reduzieren.

In einer Ausführungsform eines QFC-Knotens für ein elektrisches Übertragungsnetzwerk wird, gemäß der Figur 5, die physikalische Leistung durch den Leistungssteller 2.300 an den entsprechenden Anbindungsstellen der Kanten eingestellt. Dabei zeigt die Figur 5 das der Leistungssteller 2.300 die Leistung über eine Stelleinheit 2.400 steuerbar einstellt. Die Stelleinheit 2.400 ist mit einem CPS-Knoten (Cyber-Physical-System) 2.500 des Daten- und Rechnernetzwerks verbunden, der Daten zur Steuerung der Einstellung mit einer Kontrollinstanz 220.000, die auf 200.000 ausgeführt wird, austauschen kann. Die in einer Ausführungsform für ein elektrisches Übertragungsnetzwerk verwendeten Leistungssteller sind Stand der Technik, wie zum Beispiel moderne Inverter-Technologien bzw. bidirektionale Hochsetz-Tiefsetzsteller oder die aus DE 10 2012 204 035 A1, US 5027264 bekannten, regelbaren bidirektionalen sogenannten Double-Active-Bridges mit oder ohne Spannungstransformation. Figur 5 zeigt das ein QFC-Knoten über einen Port a zur Anbindung einer Kante $e_a$ und über einen Port b zur Anbindung einer Kante $e_b$ verfügt, Die jeweiligen Anbindungsstellen x und x' der Kanten sind die Orte auf denen der Leistungssteller 2.300 über die inneren Kanten des QFC die Leistung einstellt. Betrachten wir jetzt den Fall einer Übertragung von der Kante $e_a$ zur Kante $e_b$. Dann entnimmt der Leistungssteller 2.300 über die Anbindungsstelle x' der Kante $e_a$ dort die Leistung um an der Anbindungsstelle x von $e_b$ das elektromagnetische Feld einzustellen, sodass für jeden Zeitpunkt t von T, am Ort x die physikalische Leistung $p_\varphi(x,t)$ gemäß der, durch das Daten- und Rechnernetzwerks übermittelten, Vorgaben einstellt wird.

Aufgrund der Kirchhoff Gesetze wird somit auch die an x' entnommene physikalische Leistung und somit $p_\varphi(x',t)$

entsprechend eingestellt. Zusammengefasst an *x* wird $p_\varphi(x,t)$ eingestellt woraus dann gemäß Kirchhoff an *x'* sich $p_\varphi(x',t)$ automatische einstellt. Entsprechendes gilt für die gegenläufige Übertragungsrichtung.

In einer Ausführungsform der Erfindung wird ein erfindungsgemäßes Energiepakets gemäß den Informationen seines eineindeutig mit ihm kohärent gekoppelten Datenpakets definiert und entsprechend der im Datenpaket hinterlegten Informationen über das Übertragungsnetzwerk übertragen. Dabei wird das erfindungsgemäße Energiepaket von einem Knoten des Übertragungsnetzwerks als Quelle für das Energiepaket, genannt Quelle *Q,* über einen, zuvor bestimmten und im Datenpaket hinterlegten, gerichteten Pfad, den Transportpfad, an einen Knoten des Übernetzwerks als Senke für das Energiepaket, genannt Senke *S,* übertragen. Wobei die Quelle *Q* eineindeutig über die erste Kante $e_1$ des Transportpfads, genannt Einspeisekante 5.800, mit einem Ohmknoten des Transportpfads, genannt Einspeiseknoten $K_Q$, verbunden ist. Die Senke ist ihrerseits eineindeutig über die letzte Kante $e_p$ des Transportpfads, genannt Bedarfskante 5.900 mit einem Ohmknoten des Transportpfads, genannt Bedarfsknoten $K_S$, verbunden. Der Einspeiseknoten und der Bedarfsknoten sind über den verbleibenden Teilpfad des Transportpfads miteinander verbunden. Das Energiepaket E wird gemäß der, im Datenpaket hinterlegten, Informationen zum Übertragungszeitraum *T* mit der Ausführungszeit $t_0$ für seine Dauer *DT* dadurch übertragen, dass für jeden Zeitpunkt t des Übertragungszeitraums über die Kontrollinstanz eines Daten- und Rechnernetzwerk die physikalische Leistung $p_\varphi(x,t)$ entsprechend der Übertragungsrichtung an mindestens einem Ort *x* mindestens einer Kante $e_i$ des Transportpfads entsprechend der im Datenpaket hinterlegten Äquivalenzklasse, der sogenannten Leistungsklasse $\{p_{nom}(t),R(t),T\}$ so eingestellt wird, dass die ein Element dieser Leistungsklasse ist.

In einer Ausführungsform ist die Einspeisekante 5.800 eine aktive Kante. Dabei setzt sich 5.800 aus einer Übertragungsleitung, genannt Einspeisekante 5.810, die die Senke 6.000 mit dem Einspeise-QFC 2.800 verbindet, dem Einspeise-QFC 2.800 zur Einstellung der physikalischen Leistung an der Anbindungsstelle und einer zweiten Übertragungsleitung, genannt Einspeisekante 5.820, über die der Einspeise-QFC 2.800 mit dem Einspeiseknoten 1.800 verbunden ist, zusammen. Analog besteht die Bedarfskante 5.900 aus einem Bedarfs-QFC 2.900 und den Bedarfskanten 5.910 über die der Bedarfsknoten 1.900 mit dem Bedarfs-QFC 2.900 verbunden ist und der Bedarfskante 5.920 mit dem 2.900 mit der Senke 7.000 verbunden ist. Der Bedarfs-QFC 2.900 stellt die physikalische Leistung an der Anbindungsstelle der Bedarfskante 5.920, die diese mit 2.900 verbindet, ein. Für Knoten die nur Quelle oder nur Senke sind genügt es das der Einspeise-QFC die Leistung nur auf der Anbindungsstelle von 5.820 und der Bedarfs-QFC die Leistung nur auf der Anbindungsstelle von 5.920 einstellen kann.

Für den Fall das ein Knoten sowohl Quelle wie Senke sein kann, muss die Kante über die dieser mit dem Transportpfads verbunden ist, aus einem bidirektionalen QFC und zwei Übertragungsleitungen, mit dem dieser bidirektionalen QFC mit diesem Knoten und dem Transportpfads verbunden ist, bestehen. Für den Fall das dieser Knoten als Quelle ein Paket über den Transportpfad an eine Senke überträgt, übernehmen die beiden Übertragungsleitungen und der bidirektionale QFC entsprechend der Übertragungsrichtung die Rollen der Einspeisekanten 5.810 und 5.820 sowie die Rolle des Einspeise-QFCs 2.800. Für den Fall, dass ein solcher Knoten die Senke für die Übertragung eines Energiepakets ist nehmen, entsprechend der entgegengesetzten Übertragungsrichtung die Übertragungsleitungen die entsprechenden Rollen für 5.910 und 5.920 sowie der bidirektionale QFC die Rolle des Bedarfs-QFCs ein.

Nachfolgend fassen wir die Definitionen eines Transportpfads und eines Transportgraphs im Sinne der vorliegenden Anmeldung mithilfe der Graphentheorie (siehe Wikipedia, Krumke et al.) präziser. Da es im Übertragungsnetzwerk Knoten gibt, wie zum Beispiel Energiespeicher, die sowohl Quelle wie auch Senke sein können, kann über eine Kante des Netzwerks Leistung in beider Richtungen übertragen werden und es gibt somit für das gesamte Übertragungsnetzwerk keine ausgezeichnete Richtung. Aus diesem Grund liegt es nahe das Übertragungsnetzwerk durch einen ungerichteten Graphen zu beschreiben. Ein ungerichteter Graph ist gemäß Krumke et al., das Tripel

$$\hat{G} = (\hat{V}, \hat{E}, \gamma)$$

mit den nichtleeren Mengen $\hat{V}$ und $\hat{E}$ mit $\hat{V} \cap \hat{E} = \emptyset$ und einer Abbildung
$\gamma. \hat{E} \rightarrow$ *Menge der Teilmengen Y von* $\hat{V}$ *mit* $Y \subseteq \hat{V}$ *und für die Anzahl* $|Y|$ *gilt* $1 \le |Y| \le 2$,
die jeder ungerichteten Kante $\hat{e} \in \hat{E}$ ihre Vertexmenge $\gamma(\hat{e}) \in Y \subseteq \hat{V}$ zuordnet. Dabei ist $\hat{V}$ die Menge der Knoten- und $\tilde{E}$ die Menge der ungerichteten Kanten für die mindestens an einem Ort *x* jeder Kante die physikalische Leistung $p_\varphi(x,t)$ für einen Zeitpunkt t eingestellt werden kann. Ein wichtiger Faktor ist die Übertragungskapazität der einzelnen Kanten.

Diese kann wie folgt mithilfe der Graphentheorie beschrieben werden. So kann jeder Kante $\hat{e}_i \in \hat{E}$ eine maximale Übertragungskapazität $c_i^{max}$ zuweisen. Auf der Basis von dieser maximalen Übertragungskapazität $c_i^{max}$ der Kante $\hat{e}_i$ kann dann, in Abhängigkeit der schon gebuchten oder genutzten Übertragungskapazität, die zum Zeitpunkt *t* die freie Übertragungskapazität $c_i(t)$ der Kante $\hat{e}_i$ zugeordnet werden.

In einer Ausführungsform wird dem ungerichteten Graph $\hat{G} = (\hat{V}, \hat{R},)$ des Übertragungsnetzwerks der Residualgraph $\hat{G}_{Residual} = (\hat{V}, \hat{R}, c, T)$ des Übertragungsnetzwerks zu geordnet, wobei jeder Kante $\hat{e}_i \in \hat{R}$ die freie Übertragungskapazität $c_i(t)$ für jeden Zeitpunkt t eines Zeitraums $T$ zugeordnet ist. Dabei wird $c_i(t)$ durch die Abbildung $c: (e_i, t) \rightarrow c_i(t) \leq c_i^{max}$, die jeder Kante $\hat{e}_i \in \hat{R}$ und jedem Zeitpunkt $t \in T$ die freie Übertragungskapazität zu ordnet, bestimmt.

Der ungerichtete Graph $\hat{G}$ beschreibt somit das Übertragungsnetzwerk und die durch die Netzphysik definierten Eigenschaften als "Hardware zur Ausführung des erfindungsgemäßen Verfahrens als "Software" zum gerichteten Übertragen der erfindungsgemäßen Energiepaketen.

In einer Ausführungsform der Erfindung ist im Datenpaket ein zuvor bestimmten Transportpfad eines Transportgraphs des Übertragungsnetzwerks zur gerichteten Übertragung des Energiepakets beschrieben. Da die gerichtete Übertragung eine Richtung vorgibt, liegt es nahe zur Beschreibung des Transportpfads und seines Transportgraphs einen gerichteten Graph zu verwenden.

Betrachten wir jetzt einen gerichteten Graph. Ein gerichteter Graph ist, gemäß Krumke et al., das Quadrupel $G = (V;R;\alpha,\omega)$ mit den folgenden Eigenschaften:

    i. $V$ ist eine nicht leere Menge, die Knoten- oder Vertice-Menge des Graphen
    ii. $R$ ist die eine Menge, die Menge der gerichteten Kanten oder auch Pfeilmenge genannt
    iii. Es gilt $R \cap V = \emptyset$
    iv. $\alpha: R \rightarrow V$ und $\omega: R \rightarrow V$ sind Abbildungen

Dabei ist $\alpha(r)$ der Anfangskonten und $\omega(r)$ der Endknoten einer gerichteten Kante oder Pfeils.

Ein gerichteter Graph ist ein Pfad genau dann, wenn er aus einer Folge von Knoten besteht, in welcher jeweils zwei auf einander folgende Knoten durch eine gerichtete Kante verbunden sind.

Ein gerichteter Graph $G' = (V',R',\alpha',\omega')$ heißt Teilgraph von einem gerichteten Graph

$G = (V,R,\alpha,\omega)$ d. h, $G' \subseteq G$, wenn

    i. $V' \subseteq V$ und $R' \subseteq R$ sowie
    ii. Die Einschränkungen $\alpha$ und $\omega$ auf $V'$ und $R'$ stimmen mit $\alpha'$ bzw. $\omega'$ überein,
    d. h. $\alpha|_{R'} = \alpha'$ und $\omega|_{R'} = \omega'$

Der Graph $G$ heißt dann Obergraph von $G'$, falls $V' \subset V$ oder $R' \subset R$ gilt, dann ist $G'$ ein echter Teilgraph von $G$, d. h. $G' \subset G$ und $G$ ist ein echter Obergraph von $G'$.

Die Betrachtungen zu der maximalen Übertragungs- und der verfügbaren Übertragungskapazität gelten gleichermaßen auch für die gerichteten Kanten.

In einer Ausführung dieser Erfindung ist ein Transportpfad $TP$ $(E,Q,S,T,P)$ des Übertragungsnetzwerks ein gerichteter Pfad $P = (V,R,\alpha,\omega)$, für der die Bedingungen zur Übertragung des Energiepakets $E$ im Übertragungszeitraum $T$ erfüllt. Für den gerichteten Pfad $P$ gilt, da er ein gerichteten Graph ist, dass die Kantenmenge $R$ aus den, gerichteten Kanten $(e_1, ... , e_p)$, besteht, wobei jeder dieser gerichteten Kanten durch Zuweisung der Übertragungsrichtung aus den, jeweils an mindestens einem Ort $x_i$ einstellbaren, Kanten des Übertragungsnetzwerks gebildet wird. Für die Knotenmenge $V$ gilt, dass sie aus den entsprechenden Knoten des Übertragungsnetzwerks gebildet wird, sodass $Q \in V$ der Anfangsknoten und $S \in V$ der Endknoten des Pfads $P$ ist. Weiterhin gilt für die erste Kante $e_1$ des Pfads $P$, dass $\alpha(e_1) = Q$, und $\omega(e_1) = K_Q$ ist. Für die letzte Kante $e_p$ des Pfads muss dann $\alpha(e_p) = K_S$ und $\omega(e_p) = S$ sein und für die übrigen Kanten $e_i$ mit $2 \leq i \leq p$ gilt $\omega(e_{i-1}) = \alpha(e_i)$.

Damit ein solcher Pfad $P$, der eine Quelle $Q \in V$ über eine Folge von gerichteten Kanten $e_i \in R$, mit $i = 1$ bis $p$, mit einer Senke $S \in V$ verbindet ein Transportpfad $TP$ $(E,Q,S,T)$ für die gerichtete Übertragung eines Energiepakets $E$ ist, müssen zusätzlich die dafür notwendigen Bedingungen erfüllt sein.

    1. Die Quelle $Q$ muss für jeden Zeitpunkt $t$ des Übertragungszeitraum $T$ eine Leistung über die Einspeisekante $e_1$ in den Pfad einspeisen können, sodass an mindestens einem Ort $x_i$ jeder dieser Kanten $e_i$, die physikalische Leistung $p_\varphi(x_i,t)$ durch eine Steuerung, als Teil einer Kontrollinstanz die auf dem Daten- und Rechnernetzwerk ausgeführt wird, so eingestellt werden kann, dass die in den Bedarfskonten $K_S$ eingespeiste physikalische Leistung am Ort $x_p \in e_p$ ein Element der von dem Datenpaket des Energiepakets $E$ beschriebenen Äquivalenzklasse, bzw. Leistungsklasse $\{p_{nom}(t),R(t),T\}$ sein muss.

    2. Jede Kante $e_i$ des Pfads P verfügt zu jedem Zeitpunkt t des Übertragungszeitraums $T$ über eine freiverfügbare Übertragungskapazität $c_i(t)$, sodass die entsprechenden physikalischen Leistungen übertragen werden können.

Ein Transportpfad ist in diesem Sinne ein gerichteter Pfad, d.h. ein Graph $TP$ $(E,Q,S,T)$, über den von einer Quelle 6.000 über eine Einspeisekante 5.800 und eine weitere Abfolge von Knoten und Kanten ein Energiepaket, gemäß seiner im Datenpaket hinterlegten Leistungsklasse, über die Bedarfskante 5.900 an eine Senke 7.000 im Übertragungszeitraum $T$ zur Übertragung ansteht.

Ein Transportgraph $TG(TP_1(E_1,Q_1,S,T_1), \dots . \ TP_n(E_n,Q_n,S,T_n))$ ist ein Obergraph der Transportpfade $TP_i(E_i,Q_i,S,T_i)$, sodass $T = \cup T_i$ und $E = \oplus \ E_i$ gilt. Dabei bedeutet die Bedingung $E = \oplus \ E_i$ das die Energiepakete $E_i$ zusammen ein Energiepaket $E$ bilden, dass für den Übertragungszeitraum $T$ den durch eine Prognose bestimmten Bedarf der Senke S deckt. Die genaueren Erläuterungen folgen später.

Werden zur maximalen Deckung des Bedarfs einer Senke mehrere Energiepakete, die über mehrere Transportpfade von den entsprechenden Quellen an diese eine Senke übertragen werden, gebraucht, dann wird der Transportgraph als Vereinigung dieser Transportpfade gebildet. Zur Vereinfachung benutzen wir im Folgenden auch die Abkürzung $TG$ für einen Transportgraphen, wenn aus dem Zusammenhang klar ist welcher Transportgraph gemeint ist.

An dieser Stelle wollen wir den Zusammenhang zwischen dem ungerichteten Graph, der das Übertragungsnetzwerks darstellt, und eines gerichteten Transportgraphen des Übertragungsnetzwerks darlegen. Für einen gerichteter Transportgraph eines Übertragungsnetzwerks gilt:

    1. Die Knotenmenge $V$ des Transportgraphen $TG$ ist eine Teilmenge der Knotenmenge $\hat{V}$ des ungerichteten Graphen $\hat{G}$ des Übertragungsnetzwerks

    2. Jeder gerichteten Kante $e_i$ von $TG$ lässt sich eindeutig eine ungerichtete Kante $\hat{e}_i$ von $\hat{G}$ dadurch zuweisen, dass $\alpha(e_i) \in \gamma(\hat{e}_i)$ und $\omega(e_i) \in \gamma(\hat{e}_i)$ gilt.

Es sei anmerken, dass eine ungerichtete Kante $\hat{e}$ des Übertragungsnetzwerks, die z. B. die Knoten $K_A$ und $K_B$ verbindet, zu einer gerichtete Kante e durch Zuweisung einer Übertragungsrichtung wird, indem man $\alpha(\hat{e}) = \alpha(e) = K_A$ für die Übertragungsrichtung vom Knoten $K_A$ zum Knoten $K_B$ oder $\alpha(\hat{e}) = \alpha(e) = K_B$ für die gegenläufige Übertragungsrichtung setzt. Entsprechend werden die Endknoten der gerichteten Kanten festgelegt.

Wir wählen die folgende Konvention um für eine gerichtete Kante die Übertragungsrichtung anzuzeigen. Bezüglich dieser freigewählten Konvention bezeichnen wir eine gerichtete Kante für die Übertragung von $K_A$ nach $K_B$ mit $e^+$ und die Kante mit der entgegengesetzten Übertragungsrichtung bezeichnen wir mit $e^-$. Betrachten wir jetzt den Fall, dass der Knoten $K_A$ ein Knoten $K_{Q\&S}$ ist, der sowohl Quelle wie auch Senke, z.B. eine Energiespeicher ist, und $K_B$ ein Ohmknoten ist. Wir wählen die Konvention, dass eine Leistung die in einen Ohmknoten eingespeist wird, positiv und eine die aus einem Ohmknoten ausgespeist wird, negativ gezählt wird. In unserer gewählten Konvention überträgt dann $K_A = K_{Q\&S}$ als Quelle Leistung über die gerichtete Kante $e^+$ an $K_B$. Für den Fall das $K_A = K_{Q\&S}$ als Senke die Übertragung ist, wird Leistung über $e^-$ von $K_B$ an $K_A$ übertragen. Physikalisch haben die betrachteten ungerichteten und gerichteten Kanten aber immer die ein und dieselbe Übertragungsleitung, die $K_A$ und $K_B$ verbindet, gemeinsam.

Wir fassen jetzt die Kanten $e^+$ und $e^-$ mit ihren entsprechenden Anfangs- und Endknoten, sowie entsprechend die ungerichtete Kante $\hat{e}$ , jeweils als einen Graph mit zwei Knoten und einer Kanten auf und bezeichnen diese Graphen genauso wie ihre Kanten. In diesem Fall ist $e^-$ der inverse Graph zum Graph $e^+$ und die symmetrische Hülle $e^+ \cup e^-$, die die Vereinigung der beiden Graphen ist, ist isomorph zu dem ungerichteten Graph e. Das heißt in unserem Beispiel können wir in einem gerichteten Graph anstelle der beiden gerichteten Teilgraphen $e^+$ und $e^-$ einfach den ungerichteten Graph $\hat{e}$ als Teilgraph des gerichteten Graphens verwenden. Diese Isomorphie gilt nicht nur für solche Einkantengraph sondern auch für Pfade. Wir werden diese Isomorphie zur Vereinfachung zum Beispiel bei der Beschreibung der Kompensation und des Ausgleichs noch verwenden.

Im Fall eines Speichers kann zu einem Zeitpunkt immer nur eine Leistungsübertragung in eine Richtung erfolgen. Generell kann es aber dazu kommen, dass gleichzeitig zwei Energiepakete mit entgegengesetzter Übertragungsrichtung über eine Kante oder über einen Teilgraphen des Übertragungsnetzwerks übertragen werden. In diesem Fall superpositionieren sich die physikalische Leistungsflüsse, sodass sich eine resultierende gerichtete Kante daraus ergibt. Daraus leitet sich die Notwendigkeit ab, dass das erfindungsgemäße Verfahren beschreibt wie sich gleichzeitig über eine Kante übertragene Energiepakete superpositionieren. Dieses werden wir später erläutern.

Nachdem wir den Transportpfad und den Transportgraph behandelt haben wenden wir uns dem Datenpaket eines Energiepakets zu. Ein Energiepaket wird immer eineindeutig durch das ihm zugeordnete Datenpaket definiert. Das Datenpaket wird von einer Kontrollinstanz, die auf dem Daten- und Rechnernetzwerks ausgeführt wird, gebildet und enthält die Informationen über den zuvor bestimmten Transportpfad, über die Bedingungen gemäß der die physikalische Leistung auf dem Transportgraph im Übertragungszeitraum $T$ eingestellt werden muss, sowie über den Übertragungszeitraum $T$. Dabei ist der Übertragungszeitraum $T$ durch eine Ausführungszeit $t_0$, die den Beginn der Übertragung festlegt, und eine Dauer $DT$ definiert.

Die Übertragung eines Energiepakets von einer Quelle zu genau einer Senke dient für den Übertragungszeitraum $T$ mindestens zur teilweisen Deckung des Leistungsbedarfs dieser Senke durch die Einspeiseleistung der Quelle. Dafür muss für den Übertragungszeitraum $T$ mindestens eine Quelle 6.000 bestimmt werden deren Einspeiseleistung im Übertragungszeitraum *T* zum Bedarf einer Senke 7.000 passt. Daraus folgt, dass die durch das Energiepaket, zu übertragende Leistung durch Prognosen bestimmt werden muss. Somit ist der Kern der Erfindung die Idee, die im Datenpaket beschriebene Bedingung wie die Leistung zu übertragen ist, durch diese Prognosen zu bestimmen. Generell verstehen wir unter Prognosen zu einem Prognosezeitpunkt $t^0$ die Ermittlung von zukünftigen Leistungsverläufen in einem Prognosezeitraum $T_{Prog}$ für die Erzeugung, Einspeisung, Bedarf und die Durchleitungsverluste auf Basis mathematischer Modelle unter Eingabe von Zeitreihen verschiedener Messwerte und der Variation verschiedener Parameter. Dabei unterscheiden wir zwischen exakten und volatilen Modellen. Ein exaktes Model beschreibt zum Beispiel die elektrische Einspeiseleistung eines Gaskraftwerkes in Abhängigkeit von der Gasmenge, die eine vernachlässigbare Unsicherheit, d.h. Varianz hat. Anders sieht das bei der Einspeiseleistung eines Windgenerators aus, denn da das Wettermodell nichtlinear ist, zeigt es eine große Varianz in Bezug auf die Varianz der Anfangsbedingungen. Bei diesem Modell sind die Prognosen mit einer relevanten Unsicherheit, d.h. Varianz, behaftet.

Mögliche mathematische Modelle als Grundlage für die jeweiligen Prognose sind neben den Wettermodellen, die Ableitung einer lokalen Wind- oder Sonnenscheinprognose aus globaleren Wetterprognosen, die Ableitung der Einspeiseleistung einzelner Anlagen in Abhängigkeit deren Zustandsfunktionen bis hin zu den Modellen der synthetischen Biologie die die Produktion von verstrombaren Gasen beschreiben.

Entsprechend der verschiedenen Ausführungsformen von Quellen 6.000 wie z. B.

- Windgeneratoren 6.100,
- Solargeneratoren 6.200,

   SynBio-Gasanlagen 6.300
   das sind Anlagen, die mittels zukünftiger Technologien der synthetischen Biologie z. B. Wasserstoff, Methan oder andere Gase für Gas-to-Power-Generatoren produzieren,

- Wasserkraftwerken, z. B. Speicher-Wasserkraftwerken,
- Biogas-Anlagen,
- Deterministische Generatoren, z. B. Gaskraftwerke und
- andere Formen

unterscheiden sich dann auch die entsprechenden Prognosen.

Da eine Aufgabe dieser Erfindung der Umgang mit dem Auftreten einer ausgeprägten Volatilität bei der Leistungserzeugung durch regenerative Quellen, insbesondere Wind- und Solargeneratoren, ist, betrachten wir diese Ausführungsformen der Quellen und damit die Wetter- bzw. Wind- und Sonnenscheinprognosen im Folgenden beispielhaft genauer.

Für die regenerative Erzeugung sind die Wetterprognosen relevant. Diese werden auf der Basis von Messwerten und Wettermodellen durch Simulationen erstellt. Dabei werden unter Variation der Parameter und Anfangsbedingungen für die Simulationsberechnungen verschiedene Rechnungsläufe für wahrscheinliche Szenarien durchgeführt. Diese Ergebnisse der unterschiedlichen Berechnungen können auch einer Verteilungsfunktion der Grundgesamtheit zugeordnet werden, sodass man dann den Erwartungswert für eine der Observablen der Rechnungsläufe, zum Beispiel als Monte Carlo Simulation bestimmen kann.

In einer Ausführungsform ergeben die verschiedenen Rechnungsläufe dann für jeden Zeitpunkt *t* aus dem Prognosezeitraum $T_{Prog}$ einen Erwartungswerte $< \vec{w}(x_0,t) >$ z. B. des Wirkwindvektors $\vec{w}(x_0,t)$ für einen Windgenerator am Ort $x_0$ eines elektrischen Übertragungsnetzwerks mit einer zugehörigen Varianz $\vartheta_{Wind}(t)$. Aufgrund eines Berechnungsmodells für den Windgenerators lässt sich dann aus $< \vec{w}(x_0,t) >$ der Erwartungswert der zum Zeitpunkt *t* erzeugten elektrischen Leistung $< p(x_0,t) >$ mit einer entsprechend abgeleiteten Varianz $\vartheta(t)$ berechnen. Im Folgenden bezeichnen wir mit $x_0$ den Ort einer Quelle und mit $x_{p+1}$ den Ort einer Senke des Übertragungsnetzwerks.

In einer Ausführungsform entspricht für jeden Zeitpunkt *t* des Prognosezeitraums die Verteilung der Prognosewerte für jeden dieser Zeitpunkte beispielhaft einer Gauß-Verteilung. Der Erwartungswert den wir betrachten ist der Mittelwert der Ergebnisse der Rechnungsläufe, z. B. der Strahlungsintensität an einem Ort $x_0$ zu einem Zeitpunkt t.

Neben dem Mittelwert ist die Standardabweichung $\sigma(t) = +\sqrt{\vartheta(t)}$ ein wichtiger Parameter, der eine Aussage über die Prognoseschwankung gibt.

Der Kern der Definition der Energiepakete im Sinne einer Ausführungsform der vorliegenden Erfindung liegt darin, dass die übertragene physikalische Leistung innerhalb einer Schwankungsbreite um den Erwartungswert der Prognose bei der Übertragung schwanken darf. Die zulässige Schwankungsbreite ist eine Funktion der Varianz der Prognose. Damit ist die physikalische Leistung immer gegeben als der Erwartungswert und einem variablen Rest.

In einer Ausführungsform wird nicht nur eine Prognose der Erzeugung der Quelle, sondern auch eine Prognose für den Bedarf der Senke bei der Definition des Energiepakets berücksichtigt. In einer Ausführungsform beinhaltet eine Prognose des Bedarfs nicht nur den Bedarf der Senke, sondern auch eine Prognose der Übertragungsverluste die bei der Übertragung eines Energiepakets über den Transportgraphen entstehen.

Mit dieser Definition des Energiepakets verpflichtet sich die Quelle eine Leistung in einem festgelegten Leistungsbereich zu liefern und die Senke muss dann in der Lage sein mit der Varianz der übertragenen Leistung ihren Bedarf zu decken und ist auch verpflichtet die Leistung in diesem Bereich abzunehmen. In einer Ausführungsform verfügen die Senke und die Quelle in ihren analog elektrischen Teilen über einen Speicher. Durch den Speicher der Senke wird die Varianz zwischen dem tatsächlichen Bedarf und der übertragenen physikalischen Leistung in einem gewissen Maße kompensiert. Der Speicher an der Quelle gleicht, in einem gewissen Maß, die Abweichungen der tatsächlich erzeugten Leistung von dem prognostizierten Bedarf der Senke aus.

Die Bedingungen für die zu übertragende physikalische Leistung eines Energiepakets werden in dem Datenpaket durch eine Äquivalenzklasse $\{p_{nom}(t), R(t), T\}$ des Energiepaketes, in dieser Anmeldung auch als Leistungsklasse bezeichnet, festgelegt und beschrieben. Dabei ist die Äquivalenzklasse gegeben durch einen durch mindestens eine Prognose zuvor bestimmten zeitlichen Verlauf einer nominellen Leistung $p_{nom}(t)$ des Energiepaketes und einen zeitlichen Verlauf eines Restes $R(t)$ als Funktion einer Prognoseunsicherheit der mindestens einen Prognose, wobei es für jeden Zeitpunkt $t$ innerhalb des Übertragungszeitraums $T$ des Energiepakets ein $\mu(t)$,

- mit $-1 \leq \mu(t) < 1$ oder mit $-1 < \mu(t) \leq 1$ oder mit $-1 \leq \mu(t) \leq 1$ gibt,
- sodass eine physikalische Leistung $p_{\varphi}(x,t)$ bei der Übertragung des Energiepaketes zu jedem Zeitpunkt t und an mindestens einem Ort $x$ auf jeder Kante $e_i$ des Transportpfads $TP(E;Q;S;T)$, als Summe aus der nominellen Leistung $p_{nom}(t)$ und dem Produkt aus $\mu(t)$ und dem Rest $R(t)$ festlegt ist,

  wobei die Äquivalenzklasse durch eine Äquivalenzrelation definiert ist,
  gemäß der eine erste physikalische Leistung $p'_{\varphi}(\hat{x}_i, t)$ , $\hat{x}_i$ *beliebig und* $\hat{x}_i \in e_i \in TP(E;Q;S;T)$ und eine zweite physikalische Leistung $p_{\varphi}(x_j, t), x_j$ *beliebig und* $x_j \in e_j \in TP(E;Q;S;T)$ genau dann äquivalent sind, wenn es einen vorgegebenen Rest $R(t)$ größer oder gleich null und kleiner oder gleich einem Grenzwert $R_{max}$ sowie ein $\mu(t)$, mit $-1 \leq \mu(t) < 1$ oder mit $-1 < \mu(t) \leq 1$ oder mit $-1 \leq \mu(t) \leq 1$ gibt, so dass die erste physikalische Leistung $p'_{\varphi}(\hat{x}_i, t)$ gleich der Summe aus der zweiten physikalischen Leistung $p_{\varphi}(x_j, t)$ und dem Produkt von $\mu(t)$ und dem Rest $R(t)$ ist.

Damit sind zwei physikalische Leistungen, welche zur der gleichen Äquivalenzklasse gehören, zueinander äquivalent. Zueinander äquivalente Energiepakete können in dem erfindungsgemäßen Verfahren wie identische Energiepakete gehendhabt werden. Zur Vereinfachung führen wir unsere Überlegungen im Folgenden für Quellen, die sich immer an dem einem und selben Ort $x_0$ und für Senken die sich immer an dem einem und selben Ort $x_{p+1}$ befinden, durch. Aus diesem Grund lassen wir den Ortsbezug für die Quellen und Senken vorerst weg. Im weiteren Verlauf werden wir auf den Ortsbezug zurückkommen.

In einer Ausführungsform ist die nominelle Leistung $p_{nom}(t)$ genau gleich dem Erwartungswert $< p(t) >$ für eine Leistung zu einem Zeitpunkt t mit einer Varianz $\vartheta(t)$. Dabei ist der Prognosezeitpunkt $t^0$ und der Prognosezeitraum $T_{Prog}$ für die entsprechende Prognose so gewählt, dass für den Übertragungszeitraum $T, T \subseteq T_{Prog}$ gilt. In dieser Ausführungsform kann das die Einspeiseleistung einer Quelle 6.000 oder die Bedarfsleistung einer Senke 7.000 oder der Übertragungsverlust eines Transportpfads sein.

Wir erinnern uns, die zum Zeitpunkt $t$ des Übertragungszeitraums $T$, übertragene physikalische Leistung ist damit die Summe aus der nominellen Leistung $p_{nom}(t)$ und einem Rest, bzw. des Produkts $\mu(t) \cdot R(t)$, wobei $R(t)$ eine Funktion $f'_{Prognose}$ der Prognoseunsicherheit ist, sodass

$$R(t) = f`_{Prognose}(\vartheta(t))$$

gilt. In einer Ausführungsform entsprechen beispielhaft die, für jedes $t \in T$, durch die Prognoserechnungsläufe berechneten $p_{Modell}(t) = p(t)$ einer Gaußverteilung. Somit ist für jeden Zeitpunkt $t$ der Erwartungswert $< p(t) >$ der Mittelwert und die Prognoseunsicherheit wird durch die Standardabweichung $\sigma(t)$ beschrieben.

Damit ist lässt sich in dieser beispielhaften Ausführungsform die nominelle Leistung zu $p_{nom}(t) :=< p(t) >=< p(t) >_{Mittelwert}= \overline{p(t)}$ und der Rest zu $R(t) = f(\sigma(t))$ bestimmen. Somit werden für jeden Zeitpunkt t des Übertragungszeitraums $T$ im Intervall $+/-\sigma(t)$ um den Mittelwert $< p(t) >$ 68,3 % aller Werte der prognostizierten Erzeugungsleistung $p(t)$ liegen. In unserer Darstellung ist $\sigma(t)$ als Prozentwert angegeben. In einer Ausführungsform kann beispielhaft

$$R(t) = f_{Prognose}(\sigma(t)) = 2\sigma(t) \cdot < p(t) > = 2\sigma(t) \cdot p_{nom}(t)$$

gewählt werden.

Damit befinden sich für den Zeitpunkt t aus T ca. 95,4% der wahrscheinlichen Werte in dem Intervall $p_{nom}(t)$ +/-$2\sigma(t) \cdot p_{nom}(t)$. Wählt man in einer anderen Ausführungsform für $t \in T, R(t) = 3\sigma(t) \cdot p_{nom}(t)$, so werden damit ca, 99,7% der wahrscheinlichen Schwankungen zum Zeitpunkt t umfasst. Als Repräsentant für die Leistungsklasse nehmen wir dann die nominelle Leistung $p_{nom}(t)$ dieser Leistungsklasse. Daraus folgt, dass an einem Ort $\hat{x}$ einer Kante des Transportpfads alle physikalischen Flüsse $p_\varphi(\hat{x},t)$, für die es, für alle Zeitpunkte t innerhalb des Übertragungszeitraums $T$, ein entsprechendes $\mu(t)$ gibt, sodass $p_\varphi(\hat{x},t) = p_{nom}(t) + \mu(t) \cdot R(t)$ gilt, äquivalent sind. Gemäß dieser Definition erzeugen äquivalente physikalische Leistungsflüsse dasselbe Energiepaket bei der Übertragung. In einer Ausführungsform lässt sich für mindestens einen Ort $x_i \in e_i$ jeder Kante $e_i$ eines Transportpfads die physikalische Leistung bei der Übertragung eines Energiepakets durch $p_\varphi(x_i,t) = p_{nom}(t) + \mu_{xi}(t) \cdot R(t)$ darstellen. Dabei bezeichnet $\mu_{xi}(t)$ das dem Ort $x_i$ zugeordnete $\mu(t)$. Der Einfachheit halber verwenden wir im Folgenden nur noch $\mu(t)$ und meinen damit aber immer genau den zeitlichen Werteverlauf für den entsprechenden Ort.

In einer anderen Ausführungsform kann die Prognose einen Erwartungswert $< p(t) >$ mit einer nicht symmetrischen Unsicherheit aufweisen. Mittels einer geeigneten Verschiebefunktion kann dann $p_{nom}(t)$ ausgehend von $< p(t) >$ so bestimmt werden, dass dieses mittig im Unsicherheitsintervall liegt.

In einer Ausführungsform wird das von der Kontrollinstanz 220.000 gebildete Datenpaket dann an alle für die Übertragung relevanten Kontrollinstanzen 220.000, die auf dem Daten- und Rechnernetzwerks 200.000 ausgeführt wird, übermittelt. Zur Ausführungszeit $t_0$ wir dann durch 220.000 über die QFC-Knoten 2.000, und die QFCs 2001 der aktiven Kanten an den entsprechenden Anbindungsstellen der Kanten 5.000 die physikalische Leistung eingestellt.

In einer Ausführungsform erfolgt die Übertragung dadurch, dass bei der Einspeisung von der Quelle über die Einspeisekante für alle Zeitpunkte t innerhalb des Übertragungszeitraums $T$ die physikalische Leistung am Ort $x_1$ der Einspeisekante eingestellt wird, sodass

$$p_\varphi(x_1,t) \in \{p_{nom}(t), R(t), T\}$$

gilt. In einer Ausführungsform, in der nur ein Energiepaket von der Quelle bedient wird, kann durch Standardverfahren der Regelungstechnik die Einstellung der Leistung so erfolgen, dass der Einspeise-QFC 2.800 die maximal mögliche Leistung aus der Quelle 6.000 entnimmt und diese als physikalische Leistung auf der Kante 5.820 so einstellt, dass sie ein Element der Leistungsklasse des zu übertragenden Energiepakets ist. Dabei ist anzumerken, dass für jeden Zeitpunkt des Übertragungszeitraums die physikalische Leistung so eingestellt wird, dass diese, die, durch die Leistungsklasse bzw. definierende Äquivalenzklasse des Energiepaketes vorgegebene, obere Grenze von $p_{nom}(t) + R(t)$ nicht überschreitet.

Für den Fall das nur eine physikalische Leistung in den Transportpfad einspeist werden kann, die kleiner als $p_{nom}(t) - R(t)$ ist, kann das Energiepaket nicht in der vorgesehenen Form übertragen werden. Auf diesen Fall werden wir später noch einmal eingehen

In dieser Ausführungsform, stell dann jeder folgende QFC-Knoten auf Basis der, bezogen auf die Übertragungsrichtung, gemessenen Eingangsleistung mit Standardmethoden der Regelungstechnik, die Leistung an der jeweiligen Anbindungsstelle der Folgekante so ein, dass diese physikalische Leistung ein Element der Leistungsklasse ist. Damit ist ein Energiepaket eineindeutig durch das kohärent gekoppelte Datenpaket, mit den Informationen zu der Leistungsklasse, dem Intervall $T$ und dem Transportgraph, definiert und wird zur Übertragungszeit dadurch gebildet, dass der Leistungsfluss gemäß den Informationen des Datenpakets auf dem Übertragungsnetzwerk eingestellt werden.

In einer Ausführungsform handelt es sich bei dem Übertragungsnetzwerk um ein Gasnetz oder um ein hybrides Netz bestehend aus einem Gasnetz und einem elektrischen Übertragungsnetz, wobei das Gasnetz mit dem elektrischen Übertragungsnetz gekoppelt ist. In dieser Ausführungsform haben die Pakete, die von einer deterministischen Gasquellen, vorzugsweise einem Gasspeicher übertragen werden einen Rest konstant gleich Null. In einer Ausführungsform, bei der die Quelle für die Gasenergiepakete eine Power-to-Gas Anlage ist, wird entsprechend des Übersetzungsverhältnisses für die elektrische Leistung in die Gasleistung, das heißt, die chemische Energie pro Zeiteinheit, der Power-to-Gas Anlage die nominelle Leistung und der Rest des Gasenergiepakets bestimmt. In einer Ausführungsform wird der einem Gaspakete zugeordnete physikalische Leistungsfluss definiert durch den Massefluss und den spezifischen Energieinhalt kW/kg des Gases. Der Massefluss lässt sich z. B. durch Coriolis-Massendurchflussmesser bestimmen. Der Leistungsfluss entlang eines zuvor bestimmten Pfades kann dann mit regelbaren Pumpen realisiert werden. Die Senken über die das Gasnetz verfügt, sind z. B. Gaskraftwerke, Industriebetriebe oder Privathaushalte. Quellen im Gasnetz sind neben Power-to-GasQuellen, vor allem Biogasanlagen und vielleicht in der Zukunft Gaserzeugungsanlagen mit Technologien auf Basis der synthetischen Biologie.

Zentral sind in einer Ausführungsform eines hybriden Netzes die Knoten an denen das Strom- und das Gasnetz gekoppelt sind. Diese Knoten bezeichnen wir als Gateways. Diesen bestehen in der Regel aus bidirektionalen Power-to-Gas-Anlagen. Bei dem Übergang von Strom zum Gasnetz fallen sehr große Verluste an. Diese werden im Sinne der vorliegenden Anmeldung als Durchleitungsverluste betrachtet.

Für eine Übertragung eines Energiepakets $E$, über einen Transportpfad von einer Quelle Q an eine Senke S, das über sein Datenpaket bestimmt ist, haben sich die Quelle und Senke vor der Übertragung im Rahmen des Routing- und einem der bekannten Preisbildungsverfahren, wie z. B. einer Auktion dazu verpflichtet, dass die Quelle eine physikalische Leistung in die Senke einspeist die ein Element der Leistungsklasse des Energiepakets ist und die Senke hat sich verpflichtet diese Leistung abzunehmen.

Dadurch kann es dazu kommen, dass die tatsächlich von der Senke benötigte Leistung von der eingespeisten Leistung um einen Betrag $\delta(t)$ abweicht. Das heißt es kann zu einer Überdeckung des Bedarfs der Senke kommen falls die Quelle mehr Leistung als benötigt einspeist. In diesem Fall ist $\delta(t)$ positiv. Genauso kann die Quelle zu wenig Leistung einspeisen und es kommt zu einer Unterdeckung mit einem negativen Wert von $\delta(t)$. Durch die Bedingung, dass die einzuspeisende und abzunehmende physikalische Leistung Elemente der Leistungsklasse des Energiepakets sein müssen ist der Betrag $|\delta(t)|$ auf einen maximalen Wert $C(t)$ begrenzt. Für die Bestimmung von $C(t)$ wird an einer nachfolgenden Stelle behandelt. Es stellt sich somit die Aufgabe, wie die so entstehende Unter- oder Überdeckung kompensiert wird.

In einer Ausführungsform wird diese Aufgabe für Senken, die in ihrem analogen, nicht zum Übertragungsnetzwerk gehörenden, Teil über einen analogen Energiespeicher verfügen, dadurch gelöst, dass dieser Energiespeicher eine Leistung bis maximal $C(t)$ abgeben oder aufnehmen kann umso $\delta(t)$ zu kompensieren.

Für den Fall das eine Senke nicht über einen solchen analogen Speicher mit ausreichend großem $C(t)$ verfügt, wird die Aufgabe der Kompensation durch die folgende Ausführungsform gelöst.

In einer Ausführungsform der Erfindung beschreibt das Datenpaket darüber hinaus

iv) einen zuvor bestimmten Kompensationspfad des Transportgraphen des elektrischen Übertragungsnetzwerkes, der einen zuvor bestimmten Kompensationsknoten $K_{SAS}$ über eine Mehrzahl von Kanten mit dem Bedarfsknoten $K_S$ verbindet, wobei der Kompensationsknoten $K_{SAS}$ zu jedem Zeitpunkt $t$ des Übertragungszeitraums $T$ des Energiepaketes eine physikalische Leistung bis zu einer zuvor bestimmten maximalen Kompensationsleistung $C(t)$, wobei die zuvor bestimmte maximale Kompensationsleistung $C(t)$ als Funktion des Rests $R(t)$ bestimmt ist, aufnehmen kann, oder eine physikalische Leistung bis zu der maximalen Kompensationsleistung $C(t)$, optional erhöht um einen durch eine Prognose bestimmten Verlustabfall, über den Kompensationspfad abgeben kann, und

wobei in Schritt C) die zwischen dem Kompensationsknoten $K_{SAS}$ und zumindest dem Bedarfsknoten $K_S$ fließende physikalische Leistung für mindestens einen Ort $x$ auf der Mehrzahl von Kanten des Kompensationspfads so eingestellt wird, dass die physikalische Leistung an diesem mindestens einen Ort $x$ zu jedem Zeitpunkt $t$ innerhalb des Übertragungszeitraums $T$ ein Element einer Äquivalenzklasse $\{p_{nom}(t) = 0, R(t) = C(t), T\}$ mit einer nominellen Leistung $p_{nom}(t)$ von Null und einem Rest mit dem Wert der zuvor bestimmten maximalen Kompensationsleistung $C(t)$ ist, und dass an mindestens einem Ort $x$ der Bedarfskante, die über die Bedarfskante zwischen dem Bedarfsknoten $K_S$ und der an diesen Bedarfsknoten angebundenen Senke S fließende physikalische Leistung $p_\varphi(x,t)$ gleich der nominellen Leistung $p_{nom}(t)$ des Energiepaketes plus einer Kompensationsleistung $\delta(t)$ als Funktion der Prognose ist,
und/oder das Datenpaket beschreibt

v) einen zuvor bestimmten Ausgleichspfad des Transportgraphen des Übertragungsnetzwerkes, der über eine Mehrzahl von Kanten einen zuvor bestimmten Ausgleichsknoten $K_{Aus}$ und den Einspeiseknoten $K_Q$ verbindet, wobei der Ausgleichsknoten $K_{Aus}$ zu jedem Zeitpunkt $t$ des Übertragungszeitraums $T$ des Energiepaketes eine physikalische Leistung bis zu einer zuvor bestimmten maximalen Ausgleichsleistung $D(t)$, wobei die zuvor bestimmte maximale Ausgleichsleistung $D(t)$ als Funktion des Rests $R(t)$ bestimmt ist, aufnehmen oder eine physikalische Leistung bis zu der maximalen Ausgleichsleistung $D(t)$, optional erhöht um den durch eine Prognose bestimmten Verlustabfall, über den Ausgleichspfad abgeben kann, und

wobei in Schritt C) die zwischen dem Ausgleichsknoten $K_{Aus}$ und dem Einspeiseknoten $K_Q$ fließende physikalische Leistung für mindestens einen Ort $x$ auf der Mehrzahl von Kanten des Ausgleichspfads so eingestellt wird, dass an diesem mindestens einem Ort $x$ diese physikalische Leistung zu jedem Zeitpunkt t innerhalb des Übertragungszeitraums $T$ ein Element einer Äquivalenzklasse $\{p_{nom}(t) = 0, R(t) = D(t), T\}$ mit einer nominellen Leistung $p_{nom}(t)$ von Null und einem Rest mit dem Wert der zuvor bestimmten maximalen Ausgleichsleistung $D(t)$ ist, und dass die zwischen dem Einspeiseknoten $K_Q$ und dem Bedarfsknoten $K\_S$ fließende physikalische Leistung $p_\varphi(x,t)$ für mindestens einen Ort $x$ auf der Mehrzahl von Kanten des Transportpfads ein Element der Äquivalenzklasse $\{p_{nom}(t), R(t), T\}$ des Energiepaketes ist.

Diese Ausführungsform wird im Sinne der vorliegenden Anmeldung auch als Kompensation bezeichnet und ermöglicht es, eine Abweichung $\delta(t)$ zwischen der über den Transportpfad $TP(E,Q,S,T)$ in die Bedarfskante $e_p$, bzw. in die Bedarfskante 5.920 als Teilkante von $e_p$, bei der Übertragung des Energiepakets eingespeiste Leistung und der von der an die Bedarfskante angebundenen Senke tatsächlich benötigten Leistung zu kompensieren.

Zur exemplarischen Erläuterung betrachten wir jetzt den Fall, dass das Datenpaket einen Transportgraphen beschreibt, der aus einem zuvor bestimmten Transportpfad $TP(E,Q,S,T)$ und einem zuvor bestimmten Kompensationspfad $KP(K_S,K_{SAS})$ gebildet wird. Im Folgenden bezeichnen wir einen Transportgraph mit einem oder mehreren Kompensationspfad, die einen Kompensationsgraph bilden, als einen erweiterten gerichteten oder als einen um Kompensation erweiterten gerichteten Transportgraph. Da Transportpfade und Transportgraphen immer gerichtet sind, verzichten wir gelegentlich auf diesen Zusatz. Der Kompensationspfad verbindet einen Kompensationsknoten über einen ungerichteten Pfad mit dem Bedarfsknoten $K_S$ des Transportpfads $TP(E,Q,S,T)$. Zur Vereinfachung bezeichnen wir den Transportpfad mit $TP$ und den Kompensationspfad mit $KP$. Der Kompensationspfad als ungerichteter Pfad ist als Teilgraph des gerichteten Transportgraphs im Sinne der vorangestellt beschriebenen Isomorphie zwischen einem ungerichteten Graph und der symmetrischen Hülle eines Graphen und seines inversen Graphen zu verstehen. Da der Kompensationsknoten $K_{SAS}$ sowohl eine Quelle wie auch eine Senke sein kann, gilt $K_{SAS} = K_{Q\&S}$. Somit ist $KP = KP^+ \cup KP^-$, wobei $KP^-$ der gerichtete Pfad ist, der $K_S$ mit $K_{SAS}$ verbindet. Der gerichtete Pfad $KP^+$ ist der inverse Pfad zu $KP^-$ und verbindet $K_{SAS}$ mit $K_S$. Da der Bedarfsknoten $K_S$ ein Ohmknoten ist haben wir die entsprechende vorangestellt Konvention für die Vorzeichen dafür benutzt.

Der Kompensationspfad und der Kompensationsknoten $K_{SAS}$ wurden zuvor so bestimmt, dass $K_{SAS}$ zu jedem Zeitpunkt $t$ des Übertragungszeitraums $T$ des Energiepaketes eine physikalische Leistung bis zu einer zuvor bestimmten maximalen Kompensationsleistung $C(t)$, wobei die zuvor bestimmte maximale Kompensationsleistung $C(t)$ als Funktion des Rests $R(t)$ bestimmt ist, aufnehmen kann, oder eine physikalische Leistung bis zu der maximalen Kompensationsleistung $C'(t)$, wobei $C'(t)$ dadurch bestimmt wir, dass $C(t)$ optional um einen durch eine Prognose bestimmten Verlustabfall erhöht wird, über den Kompensationspfad abgeben kann.

In einer bevorzugten Ausführungsform ist $C'(t)$ immer gleich $C(t)$ erhöht um den Verlustabfall der bei einer Übertragung von $C(t)$ über den entsprechenden Kompensationspfad entsteht. Im Folgenden betrachten wir nur diese Ausführungsform. In einer Ausführungsform kann $K_{SAS}$ über $KP$ oder genauer ausgedrückt über den gerichteten Pfad $KP^-$ maximal einer physikalische Leistung bis zu $C(t) = f_C(R(t))$ aufnehmen und über $KP$ oder genauer ausgedrückt über den gerichteten Pfad $KP^+$ die physikalische Leistung $C'(t) = C(t) + v_{KP}(t)$ abgeben und in $K_S$ einspeisen. Dabei ist $R(t)$ der Rest der Leistungsklasse $\{p_{nom}(t),R(t),T\}$ des Energiepakets $E$ das über $TP$ übertragen wird und $v_{KP}(t)$ ist der Verlust der bei der Übertragung einer physikalischen Leistung von $C(t)$ über $KP$ entstehen würde. In einer Ausführungsform kann $C(t)$ beispielhaft zu $C(t) = f_C(R) = 2R$ bestimmt sein.

Der Bedarfsknoten $K_S$, 1.900, ist in einer Ausführungsform sowohl über eine Anbindungskante $e_{p-1}$ mit des Teilpfads des Transportpfads $TP$, der $K_S$ mit $Q$ verbindet, als auch mit einer aktiven Kante $e_1^{KP}$ des Kompensationspfads $KP$ und über die Bedarfskante 5.910, als Teilkante der Bedarfskante $e_p$, mit dem Bedarfs-QFC 2.900 verbunden.

In einer Ausführungsform in der das Übertragungsnetzwerk ein elektrisches Hochspannungsgleichstromnetzwerk ist, wird bei der Übertragung des Energiepakets die physikalische Leistung bei der Einspeisung über die Anbindungskante $e_{p-1}$ von $TP$ an den Bedarfsknoten $K_S$ gemessen. Diese geschieht durch den entsprechenden Sensor 1.300 am Ort $x''$ der inneren Kante des Ohmknotens $K_S$, die $e_{p-1}$ mit dem inneren Bus verbindet. Mithilfe einer Prognose wird aus diesen gemessenen Werten, der Wert für den Ort $x_p^{K_S}$, der dort in die Bedarfskante eingespeisten physikalischen Leistung bestimmt und mit $p_{\varphi Ein}(t)$ bezeichnet. Dabei bezeichnet $x_p^{K_S}$ die Anbindungsstelle der Bedarfskante $e_p$, 5.900, an den Bedarfsknoten $K_S$, 1.900. Des Weiteren wird durch eine Bedarfsprognose die Bedarfsleistung, die über den Bedarfsknoten $K_S$ in die Bedarfskante zur Deckung des prognostizierten Bedarfs eingespeist werden muss, bestimmt und mit $p_{\varphi Bed}(t)$ bezeichnet. In einer Ausführungsform wird diese Prognose verfeinert, indem die Prognose wiederholt wird. Dabei kann zumindest der Prognosezeitraum $T_{prog}$ oder der Abstand zwischen dem Zeitpunkt der Prognoseerstellung (nachfolgend auch als Prognosezeitpunkt t° bezeichnet) und der Ausführungszeit $t_0$ verkürzt werden. Diese Verfeinerung liefert dann immer genauer werdende Werte für $p_{\varphi Bed}(t)$. Zur Vereinfachung nehmen wir beispielhaft an, dass der Bedarfsknoten $K_S$ nur mit Kanten des Transport- und Kompensationspfad sowie mit der Bedarfskante verbunden ist.

Da $p_{\varphi Bed}(t)$ aus dem Ohmknoten entnommen und über die Bedarfskante in die Senke eingespeist wird, muss sie bei der Leistungsbilanzierung auf dem Bus des Ohmknotens $K_S$ von der eingespeisten Leistung $p_{\varphi Ein}(t)$ subtrahiert werden. Das Ergebnis ist die Leistungsbilanzdifferenz $\delta(t)$ auf dem Bus des Ohmknotens, die durch mögliche Unter- oder Überdeckungen entsteht und lässt sich zu $p_{\varphi Ein}(t) - p_{\varphi Bed}(t) = \delta(t)$ bestimmen.

Für $\delta(t) > 0$ wird mit herkömmlicher Regelungstechnik die physikalische Leistung am Ort $x_{Komp}$ des QFC-Knoten der aktiven Kante $e_1^{KP}$ von KP so eingestellt, dass diese gleich $\delta(t)$ ist, um diese so in $K_{SAS}$ einzuspeisen.

Für $\delta(t) < 0$ wird dann an $x_{Komp}$ die physikalische Leistung mit herkömmlicher Regelungstechnik so eingestellt, dass diese gleich $|\delta(t)|$ ist und umso in $K_S$. eingespeist zu werden. Dabei wird in beiden Fällen die Leistung immer so eingestellt, dass $|\delta(t)| \leq C(t)$ ist. Diese Bedingung ergibt sich daraus, dass $K_{SAS}$ für jeden Zeitpunkt $t$ aus dem Übertragungszeitraum $T$ maximal eine Leistung von $C(t)$ aufnehmen kann, und somit darf an dem Ort $x_0^{Komp}$ der Anbindungsstelle von KP an $K_S$ die physikalische Leistung nicht größer als $C(t)$ sein. Beträgt die Leistung die $K_{SAS}$ maximal abgibt $C'(t) = C(t) + v_{KP}(t)$, dann fällt diese an der Anbindungsstelle $x_0^{Komp}$ auf C(t) ab.

Somit wird zu jedem Zeitpunkt $t$ aus dem Übertragungszeitraum $T$ die auf dem Kompensationspfad übertragene physikalische Leistung $p_\varphi\left(x_0^{Komp}, t\right)$ so eingestellt, das für diese am Ort $x_0^{Komp}$, $-C(t) \leq p_\varphi\left(x_0^{Komp}, t\right) \leq C(t)$ gilt.

Somit ist $p_\varphi\left(x_0^{Komp}, t\right)$ für jeden Zeitpunkt t des Übertragungszeitraums $T$ ein Element der Leistungsklasse {$p_{nom}(t)$ = 0,$R(t) = C(t),T$} mit einer nominellen Leistung $p_{nom}(t)$ von konstant gleich Null und einem Rest mit dem Wert der zuvor bestimmten maximalen Kompensationsleistung $C(t)$.

In einer Ausführungsform lässt sich $\delta(t)$, beginnend zur Ausführungszeit $t_0$, für jeden Zeitpunkt t des Übertragungszeitraums einstellen , sodass $p_{\varphi Ein}(t) - p_{\varphi Bed}(t) - \delta(t) = 0$ gilt, indem man durch die Regelung des Kompensations-QFCs der aktiven Kante die Busspannung des internen Buses von $K_S$ konstant hält.

Entsprechend der so eingestellten Leistungen ist dann $p_{\varphi Bed}(t)= p_{\varphi Ein}(t)- \delta(t)$. Da $p_{\varphi Ein}(t)$ ein Element der Leistungsklasse {$p_{nom}(t),R(t),T$} sein muss, gibt es ein $\mu(t)$, sodass $p_{nom}(t) + \mu(t) \cdot R(t)$ ist. Durch die Einstellung der physikalischen Leistung für jeden Zeitpunkt $t$ des Übertragungszeitraums $T$ und der im Datenpaket hinterlegten Informationen auf dem Transport- und Kompensationspfad, ist die physikalische Leistung an der Anbindungsstelle $x_p^{K_S}$ zu

$$p_\varphi(x_0^{Bedarfskante}, t) = p_{nom}(t) + \mu(t) \cdot R(t) - \delta(t) = p_{nom}(t) + \delta'(t)$$ eingestellt, wobei $\delta(t)$ eine Kompensationsleistung ist.

In einer Ausführungsform beschreibt das Datenpaket und/oder

v) einen zuvor bestimmten Ausgleichspfad des Transportgraphen des Übertragungsnetzwerkes, der über eine Mehrzahl von Kanten einen zuvor bestimmten Ausgleichsknoten $K_{Aus}$ und den Einspeiseknoten $K_Q$ verbindet, wobei der Ausgleichsknoten $K_{Aus}$ zu jedem Zeitpunkt $t$ des Übertragungszeitraums $T$ des Energiepaketes eine physikalische Leistung bis zu einer zuvor bestimmten maximalen Ausgleichsleistung $D(t)$, wobei die zuvor bestimmte maximale Ausgleichsleistung $D(t)$ als Funktion des Rests $R(t)$ bestimmt ist, aufnehmen oder eine physikalische Leistung bis zu der maximalen Ausgleichsleistung $D(t)$, optional erhöht um den durch eine Prognose bestimmten Verlustabfall, über den Ausgleichspfad abgeben kann, und

wobei in Schritt C) die zwischen dem Ausgleichsknoten $K_{Aus}$ und dem Einspeiseknoten $K_Q$ fließende physikalische Leistung für mindestens einen Ort $x$ auf der Mehrzahl von Kanten des Ausgleichspfads so eingestellt wird, dass an diesem mindestens einem Ort $x$ diese physikalische Leistung zu jedem Zeitpunkt $t$ innerhalb des Übertragungszeitraums $T$ ein Element einer Äquivalenzklasse {$p_{nom}(t) = 0,R(t) = D(t),T$} mit einer nominellen Leistung $p_{nom}(t)$ von Null und einem Rest mit dem Wert der zuvor bestimmten maximalen Ausgleichsleistung $D(t)$ ist, und dass die zwischen dem Einspeiseknoten $K_Q$ und dem Bedarfsknoten K_S fließende physikalische Leistung $p_\varphi(x,t)$ für mindestens einen Ort $x$ auf der Mehrzahl von Kanten des Transportpfads ein Element der Äquivalenzklasse {$p_{nom}(t),R(t),T$} des Energiepaketes ist.

In einer Ausführungsform kann das Datenpaket nur einen zuvor bestimmten Ausgleichspfads oder einen zuvor bestimmten Kompensationspfad oder einen zuvor bestimmten Kompensations- und einen zuvor bestimmten Ausgleichspfad des zuvor bestimmten Transportgraphen beschreiben. In einer beispielhaften Ausführungsform der Erfindung beschreibt das eineindeutig mit dem Energiepaket verbundene Datenpaket einen nur um Ausgleich erweiterten Transportgraphen $ETG(TP(E,Q,S);AP(K_{Aus},Q))$ des Übertragungsnetzwerk mit einem zuvor bestimmten Ausgleichspfad $AP(K_{Aus},Q)$.

Eine Ausführungsform der Erfindung beschreibt das Verfahren wie für die Fälle in denen die erzeugte und von einer Quelle in den Transportpfad eingespeiste Leistung nicht zu jedem Zeitpunkt des Übertragungszeitraums ein Element der geforderten Leistungsklasse des zu übertragenden Energiepakets ist, die entstehende Abweichungen zu den Bedingungen der Leistungsklasse ausgeglichen werden. Übersteigt zu einem Zeitpunkt $t_{aus}$ des Übertragungszeitraums $T$ die von der Quelle, die sich am Ort $x_0$ des Übertragungsnetzwerks befindet, die über die Einspeisekante $e_1$ in den

Einspeiseknoten eingespeiste Leistung die Grenze von $((p_{nom}(t_{aus}) + R(t_{aus})))$, so liegt für diesen Zeitpunkt $t_{aus}$ eine Abweichung, der durch das Energiepaket vorgegebenen Grenzen, durch die Überdeckung

$$\rho^-(t_{aus}) = p_\varphi\left(x_1^{K_Q}, t_{aus}\right) - \left((p_{nom}(t_{aus}) + R(t_{aus}))\right) > 0$$ vor. Wird hingegen zu einem Zeitpunkt $t_{aus}$ die Grenze

$(p_{nom}(t_{aus}) - R(t_{aus})$ um den Wert $\rho^+(t_{aus}) = ((p_{nom}(t_{aus}) - R(t_{aus})) - p_\varphi\left(x_1^{K_Q}, t_{aus}\right) > 0$ unterschritten, so handelt es sich bei der Abweichung um eine Unterdeckung. Dabei ist die Überdeckung mit einem negativen Vorzeichen im Exponenten von $\rho^-$ versehen, umso die Flussrichtung aus dem Einspeiseknoten $K_Q$ in den Ausgleichspfad anzuzeigen. Der positive Exponent zeigt die Flussrichtung in den Ohmknoten $K_Q$ an. Die Vorzeichen wurden entsprechend den gewählten Vorzeichenregeln für einen Ohmknoten gewählt. Dabei ist $x_1^{K_Q}$ der Ort der Anbindungsstelle der Einspeisekante $e_1$ an den Einspeiseknoten $K_Q$. In einer Ausführungsform wird für diese Zeitpunkte $t_{aus}$ diese Überdeckung $\rho^-(t_{aus})$ oder Unterdeckung $\rho^+(t_{aus})$ durch einen Ausgleichsknoten $K_{Aus}$ eines Ausgleichspfads $AP(K_{Aus}, K_Q)$, eines zuvor bestimmten erweiterten Transportgraphen, ausgeglichen. Der Ausgleichpfad $AP(K_{Aus}, K_Q)$ verbindet den Einspeiseknoten $K_Q$ mit dem Ausgleichsknoten $K_{Aus}$. Der Ausgleichsknoten $K_{Aus}$ kann als $K_{Q\&S}$-Knoten eine zuvor bestimmten maximale Ausgleichsleistung $D(t)$, wobei die zuvor bestimmte maximale Ausgleichsleistung $D(t)$ als Funktion des Rests $R(t)$ bestimmt ist, aufnehmen oder eine physikalische Leistung bis zu der maximalen Ausgleichsleistung $D(t)$, optional erhöht um den durch eine Prognose bestimmten Verlustabfall, über den Ausgleichspfad abgeben. In einer bevorzugten Ausführungsform kann $K_{Aus}$ für jedes $t \in T$ maximal eine Leistung von $D(t)$ aufnehmen oder maximal eine Leistung von $D'(t) = D(t) + v_{AP}(t)$ abgeben.

Dabei ist $v_{AP}(t)$ die Verlustleistung die bei der Übertragung von $D(t)$ über $AP$ entsteht. Der Einspeiseknoten ist durch eine aktive Kante des Ausgleichspfads mit dem Ausgleichspfad verbunden. Durch eine Messung und eine Prognose für $p_\varphi\left(x_1^{K_Q}, t\right)$ kann in einer Ausführungsform für jeden Zeitpunkt $t \in T$ geprüft werden, ob eine Unter- oder Überdeckung für diesen Zeitpunkt vorliegt und somit mit $t = t_{aus}$, $\rho^+(t_{aus})$ bzw. $\rho^-(t_{aus})$ bestimmt werden. Somit kann an der aktiven Kante $e_1^{AP}$ von $AP$, die mit $K_Q$ verbunden ist, an dem Ort $x_1^{AP}$ von $e_1^{AP}$ die Leistung so eingestellt werden, dass die physikalische Leistung für den Ort $x_1^{AP}$ ein Element der Leistungsklasse $\{0, D(t), T\}$ ist. Dabei ist $x_1^{AP}$ der Ort der Anbindungsstelle von $e_1^{AP}$ an $K_Q$. Wird gleichermaßen am Ort $x_1$ der Einspeisekante die physikalische Leistung so eingestellt, dass diese an $x_1^{K_Q}$ gleich der prognostizierten Leistung ist, so ist die physikalische Leistung $p_\varphi(x,t)$ für mindestens einen Ort x auf der Mehrzahl von Kanten des Transportpfads ein Element der Äquivalenzklasse $\{p_{nom}(t), R(t), T\}$ des Energiepaketes.

In einer Ausführungsform wird die Kompensation und der Ausgleich für die Übertragung eines Energiepakets $E$ mit der Leistungsklasse $\{p_{nom}(t), R(t), T\}$, von einer Quelle Q über einen Transportpfad TP an eine Senke S, gemäß Anspruch 1, dadurch gelöst, dass für die Kompensation eine zusätzlichen Senke S_ über einen zusätzlichen zuvor bestimmten Pfad P⁻ an den Einspeiseknoten $K_Q$, der Quellen Q sowie eine zusätzliche Quelle Q₊ über einen weiteren zuvor bestimmten Pfad P⁺ an den Bedarfsknoten $K_S$ mder Senke S angeschlossen ist, sodass über P⁻ ein zusätzliches zweites Energiepaket mit der Leistungsklasse $\{P_{nom}(t) = \left(\frac{1}{2}(C(t) + D(t))\right), R(t) = (\frac{1}{2}(C(t) + D(t))), T\}$ an die Senke S_ übertragen wird und über den Pfad P⁺ von der Quelle Q₊ ein weiters Paket mit der Leistungsklasse $\{P_{nom}(t) = \left(\frac{1}{2}(C'(t) + D'(t))\right), R(t) = (\frac{1}{2}(C'(t) + D'(t))), T\}$ eingespeist wird.

Die Senke S_ kann über P⁻ maximal eine Leistung von C(t) + D(t) aufnehmen und die Quelle Q₊ kann maximal eine Leistung von C'(t) + D'(t) über den Pfad P⁺ in $K_S$ einspeisen. Für diesen Fall muss die Einspeise- wie auch die Bedarfsprognose sowie das Routing diese zusätzlichen Knoten und Pfade bestimmen. Dabei sind C(t); C'(t); D(t) und D'(t) wie vorangestellt beschrieben bestimmt.

In einer Ausführungsform der Erfindung weist das Verfahren für einen frei wählbaren Prognosezeitraum $T_{prog}$ mit einem Prognosebeginn $t_{0prog}$ und einer Prognosedauer $DT_{prog}$ weiterhin die Schritte auf, zu einem Prognosezeitpunkt $t^0$, der vor dem Prognosebeginn $t_{0prog}$ liegt,

D) Erstellen einer Einspeiseprognose für eine zu jedem Zeitpunkt $t$ in dem Prognosezeitraum $T_{prog}$ von der jeweiligen Quelle bereitstellbaren prognostizierten Einspeiseleistung $p_{progEin}(t)$, wobei die Einspeiseprognose eine Einspeiseprognoseunsicherheit aufweist und

E) Erstellen einer Bedarfsprognose für einen zu jedem Zeitpunkt $t$ in dem Prognosezeitraum $T_{prog}$ von der jeweiligen Senke abzunehmenden prognostizierten Leistungsbedarf $p_{progBed}(t)$, wobei die Bedarfsprognose eine Bedarfsprognoseunsicherheit aufweist

wobei der zeitliche Verlauf der nominellen Leistung $p_{nom}(t)$ des Energiepaketes mindestens aus der Einspeiseprognose und der Bedarfsprognose bestimmt ist und wobei der zeitliche Verlauf des Restes $R(t)$ eine Funktion zumindest der Einspeiseprognoseunsicherheit und der Bedarfsprognoseunsicherheit ist.

Diese Ausführungsform ermöglicht es, durch Prognosen für die Erzeugung einer Quelle, den Bedarf einer Senke sowie optional der Übertragungsverluste die entsprechenden Energiepakete, die über die Transportgraphen übertragen werden, zu bestimmen.

In einer Ausführungsform ist die Prognoseerstellung ein dynamischer Prozess in Form einer Zeitreihe sich wiederholender Prognosen $\mathcal{P}$, bei der der Abstand zwischen dem Prognosezeitpunkt $t°$ und dem Beginn $t_{0prog}$ des Prognosezeitraums $T_{prog}$ immer kleiner wird. Dabei bezeichnet der Prognosezeitpunkt $t°$ den Zeitpunkt der Erstellung der Prognose. Der Prognosezeitraum $T_{prog}$ hat eine Prognosedauer $DT_{prog}$, welche mit dem Beginn $t_{0prog}$ anfängt. In dieser Ausführungsform wird das Verfahren damit gestartet, dass zunächst für einen in der fernen Zukunft liegenden Prognosezeitraum mit einer großen Prognosedauer $DT_{prog}$, Prognosen für die Erzeugung der Quellen und den Bedarf der Senken erstellt werden. Bedarfsdatenpakete werden abgeleitet, indem mittels der entsprechenden Prognosen Leistungsklassen und somit Datenpakete für die Erzeugung einer Quelle und den Bedarf einer Senke bestimmt werden. Durch Wiederholen dieser Prognosen, wobei der Abstand zwischen dem Prognosezeitpunkt $t°$ und dem Beginn $t_{0prog}$ des Prognosezeitraums $T_{prog}$ kürzer wird, und/oder die Prognosedauer $DT_{prog}$ verkürzt wird, werden diese Prognosen immer genauer.

In einer Ausführungsform wird eine Prognose $\mathcal{P}(X, t°, T_{prog})$ zu einem Zeitpunkt $t°$ für den zeitlichen Verlauf einer Leistung für mindestens einen Ort oder eines Teilgraphen des Graphs des Übertragungsnetzwerks erstellt. Dabei bezeichnet $X$ die verschieden Prognosearten. So wird beispielsweise mit $X = Q$ oder $X = x_Q$ wird eine Einspeiseprognose für die Einspeiseleistung einer Quelle $Q$ am Ort $x_Q$ bezeichnet. Eine Bedarfsprognose für die Bedarfsleistung einer Senke $S$ am Ort $x_S$ wird mit $X = S$ oder mit $X = x_S$ bezeichnet, Entsprechend steht $X = v_{ei}$ für die Verlustleistung, die bei der Übertragung eines Energiepakets $E$ über eine Kante $e_i$ entsteht. Man kann dafür aber auch $X = v(x = \omega(e_i))$ schreiben. Dabei bezeichnet $x = \omega(e_i)$ den Leistungsabfall am Endpunkt $x$ der Kante $e_i$ an dem diese Kante an den Folgeknoten angebunden ist. Für die Verlustleistung die bei der Übertragung eines Energiepakets über einen Pfad $P(K_i, K_j)$, der die Knoten $K_i$ und $K_j$ verbindet, steht dann $X = P(K_i, K_j)$. Mit $X = K_i$ oder $X = x_{Ki}$ werden die Prognosen der Verluste die bei der Übertragung eines Energiepaketes über einen Knoten eines Transportpfads bezeichnet. Dabei steht $x_{Ki}$ für den Ort des Knotens $K_i$. Im Prognosezeitraum $T_{prog}$ wird durch die Abbildung $\mathcal{P}(X, t°, T_{prog}) \rightarrow \{p_{nom}(t), R(t), T_{prog}\}$ der Prognose eine Leistungsklasse zugeordnet, indem $p_{nom}(t)$ gleich dem Verlauf des Erwartungswerts der Prognose für die entsprechende durch $X$ bezeichnete Leistung und der zeitliche Verlauf des Rests $R(t)$ als eine Funktion der Varianz dieser Prognose gesetzt wird. In der Ausführungsform, bei welcher beispielsweise die Wahrscheinlichkeitsverteilung für die Wahrscheinlichkeit, dass die prognostizierte Leistung einen bestimmten Wert annimmt, eine Gaußverteilung ist, ist der Erwartungswert der Mittelwert und die Varianz die Standardabweichung. Dabei beschreibt $p_{nom}(t)$ den Funktionsgraph im Prognosezeitraum $T_{prog}$, d.h. den Leistungsfluss.

In einer Ausführungsform wird die in einem zukünftig Zeitraum, dem Prognosezeitraum $T_{prog}$, wahrscheinlich durch eine Quelle Q bereitstellbare Leistung $p_{progEin}(t)$ durch die Erstellung einer Einspeiseprognose $\mathcal{P}(Q, t°, T_{prog})$ in Form der zeitlichen Verläufe des Erwartungswerts oder Mittelwerts für die Leistung $p_{progEin}(t)$ und der, durch die Varianz bzw. Standardabweichung $\sigma_{Ein}(t)$ gegebenen, Einspeiseprognoseunsicherheit bestimmt.

In einer Ausführungsform werden für die Einspeiseprognose der jeweiligen Quelle 6.000 zugeordnete Messwerte erfasst. Dazu zählen auch Sensoren die direkt an der Quelle vorgesehen sind und Messwerte erfassen, welche den Zustand der Quelle beschreiben, sowie Messwerte eines an die Quelle über die Einspeisekante angebundenen QFC-Knotens 2.800. Zusätzlich werden für die Einspeiseprognose in einer Ausführungsform Messwerte von der Quelle zugeordneten Sensoren eines Perimeternetzwerks 210.000 berücksichtigt. Das Perimeternetzwerk umfasst Sensoren zur Erfassung zusätzlicher Messwerte in Ergänzung zu den Messwerten des Übertragungsnetzwerks. Dabei handelt es sich um für die Leistungserzeugung der entsprechenden Quelle relevante Messwerte, wie z. B. die Windgeschwindigkeit, die in verschiedenen Abständen von den entsprechenden Quellen erfasst werden. Das Perimeternetzwerk umfasst in einer Ausführungsform weiterhin auch Sensoren die zusätzlich zu den Messwerten der Senke, der Senke zugeordnete Messwerte erfasst, die für den Bedarf und somit für die Bedarfsprognose relevant sind. Die erfassten Messwerte werden an eine der Prognose für diese Quelle und der Senke jeweils zugeordnete Kontrollinstanz 220.000 des Daten- und Rechnernetzwerk 200.000 übermittelt. Mittels dieser Messwerte und anderer Informationen, wie beispielsweise globale Wetterprognosen eines Wetterdienstes, erstellt das das Kontrollnetzwerk zu einem Prognosezeitpunkt $t°$ die Einspeiseprognose.

In einer Ausführungsform werden die Einspeiseprognosen auf der Basis von mathematischen Modellen, wie z.B. Wettermodellen, durch mehrere Berechnungsdurchläufe sowie die Zusammenführung der Ergebnisse verschiedener Modelle und deren statische Auswertung sowie der Abbildung auf die betrachteten Quellen und deren Erzeugungseigenschaften gebildet. In einer Ausführungsform werden die Einspeiseprognosen für die jeweilig betrachtete Quelle mithilfe der Methoden und Technologien der künstlichen Intelligenz, wie z. B. Deep Learning Networks (DLN) erstellt.

Unter einer Einspeiseprognose verstehen wir auch die exakte Erzeugungsleistung einer deterministischen Quelle. Diese unterscheiden sich nur darin, dass die entsprechenden Modelle keine Unsicherheit beinhalten, sondern exakt sind und es somit keine Prognoseunsicherheit gibt. Der Rest $R(t)$ der Leistungsklasse, welche ein Energiepaket einer solchen Einspeiseprognose beschreibt, ist dann unabhängig von der Zeit gleich Null.

In einer Ausführungsform wird, zu einem Prognosezeitpunkt $t°$, der, in einem zukünftig Zeitraum, dem Prognosezeitraum $T_{prog}$, wahrscheinlich durch eine Senke $S$ abzunehmende Leistungsbedarf $p_{progBed}(t)$ durch die Erstellung einer Bedarfsprognose $\mathcal{P}(S, t°, T_{prog})$ in Form der zeitlichen Verläufe des Erwartungswerts oder Mittelwerts für den Leistungsbedarf $p_{progBed}(t)$ und der durch die Varianz bzw. Standardabweichung $\sigma_{Bed}(t)$ gegebenen Bedarfsprognoseunsicherheit bestimmt.

In Abhängigkeit von der Art der Senken 7.000 gibt es verschiedene Ausführungsformen für die Bedarfsprognosen. Ausführungsformen der Senken sind beispielsweise ganze Wohngebiete mit Privathaushalten, Privathäuser, ein einzelner Industriecampus, Gewerbebetriebe bis hin zu einzelnen Verbrauchern wie z.B. Elektroautos, die wenn sie geladen werden, eine Senke darstellen, sowie anderen Formen von Senken wie z. B. Power-to-Gas- oder SynBio-Gas-Anlagen. Elektroautos mit ihren Speichern können jedoch gleichzeitig auch Quellen im Sinne der vorliegenden Anmeldung bilden. Mögliche Ausführungsformen für die Bedarfsprognosen sind die heute schon eingesetzten statistischen Verfahren bis hin zu Prognoseverfahren auf Basis künstlicher Intelligenz, z.B. Deep Learning Networks. In einer Ausführungsform für eine Bedarfsprognose für einen Industriebetrieb finden die Ergebnisse von Vertriebsprognosen und der Produktionsplanung bei der Bestimmung des Leistungsbedarfs $p_{progBed}(t)$ Berücksichtigung.

Entsprechend der vorangestellten Beschreibung gibt es Ausführungsformen für die Bedarfsprognosen, die auf Basis globaler Prognosen die Bedarfsprognosen für die einzelnen Senken erstellen. So kann, z.B. aus den üblichen statistischen Bedarfsprognosen wie sie heute schon eingesetzt werden, aus dem Verbrauch in der Vergangenheit, der Haus- und Grundstücksgröße, der Anzahl der Bewohner und deren Profil, eine Bedarfsprognose für einen Privathaushalt abgeleitet werden.

In einer bevorzugten Ausführungsform werden analog zu den Einspeiseprognosen für die Bedarfsprognosen Messwerte erfasst. Messwerte können z.B. am Bedarfs-QFC 2.900 aber vor allem mit Sensoren eines Perimeternetzwerks, die der Senke zugeordnet sind, erfasst werden. Bei den Sensoren des Perimeternetzwerks kann es sich um Sensoren z.B. in einem Industriebetrieb handeln, die z.B. die aktuelle Leistungsaufnahme großer Verbraucher erfassen. Diese Messwerte werden in einer Ausführungsform wieder an die, der Bedarfsprognose dieser Quelle zugeordnete Kontrollinstanz 220.00 übermittelt. Diese Kontrollinstanz erstellt beispielsweise unter der Verwendung von Daten, die von außen bezogen werden, die Bedarfsprognose. Die von außen bezogenen Daten können z.B. die Prognosen für den wahrscheinlich zu erwartenden Temperaturverlauf sein. Aus diesen lässt sich beispielsweise im Sommer die zu erwartende elektrische Leistungsaufnahme, z. B. für die Klimatisierung, vorhersagen.

In einer Ausführungsform können für schon bekannte und wahrscheinliche Transportgraphen zur Übertragung eines Energiepakets als Bestandteil der Bedarfsprognose die Durchleitungsverluste bestimmt werden.

Gemäß einer Ausführungsform wird zur Deckung des, einer Senke wird ein Energiepaket E über einen zuvor bestimmten Transportgraph $TP(E,Q,S,T)$ von einer zuvor bestimmten Quelle an diese Senke übertragen. Dabei wird das zu übertragende Energiepaket dadurch bestimmt, dass der zeitliche Verlauf der nominellen Leistung $p_{nom}(t)$ der Leistungsklasse $\{Pnom(t),R(t), T = T_{prog}\}$ des Energiepaketes mindestens aus der Einspeiseprognose und der Bedarfsprognose bestimmt ist und der zeitliche Verlauf des Restes $R(t)$ der Leistungsklasse eine Funktion zumindest der Einspeiseprognoseunsicherheit und der Bedarfsprognoseunsicherheit ist.

In einer Ausführungsform wird die Bestimmung der Leistungsklasse eines Energiepaketes das möglicherweise zwischen der betreffenden Quelle 6.000 mit der Einspeiseprognose und der betrachteten Senke 7.000 mit der Bedarfsprognose übertragen werden soll, in Bezug auf die Verhältnisse der beiden Prognosen zu einander fallweise entsprechend vorgebbarer Regeln vorgenommen.

So wird in einer Ausführungsform für den Fall, dass die Quelle gemäß der Einspeiseprognose wahrscheinlich mehr Leistung zur Verfügung stellen kann als die Senke gemäß der Bedarfsprognose für alle $t$ in im selben Prognosezeitraum $T_{prog} = T$ wahrscheinlich benötigt, das heißt es gilt $p_{progEin}(t) \geq p_{progBed}(t) \, \forall t \in T$, und die Prognoseunsicherheit der Einspeiseprognose kleiner oder gleich der der Bedarfsprognose ist, d. h. es ist $R_{progEin}(t) \leq p_{progBed}(t) \, \forall t \in T$, der zeitliche Verlauf der nominellen Leistung $p_{nom}(t)$ des Energiepaketes durch $p_{nom} = p_{progBed}(t)$ und der zeitliche Verlauf des Rests durch $R(t) = R_{progBed} = \sigma_{Bed}(t) \cdot p_{progBed}(t)$ bestimmt, sodass die Leistungsklasse des Energiepaketes $\{p_{nom}(t) = p_{progBed}(t) ; R(t) = \sigma_{Bed}(t) \cdot p_{progBed}(t) , T\}$ ist.

Für den Fall das $R_{progEin}(t) > R_{progBed}(t) \, \forall t \in T$ ist, wird in einer mögliche Ausführungsform der Rest des Energiepakets $R(t)$ gleich $R_{progEin}(t)$ gesetzt. Im Fall das $p_{progEin}(t) < p_{progBed}(t)$ und $R_{progEin}(t) \leq R_{progBed}(t) \, \forall t \in T$ ist, kann ein daraus abgeleitetes Energiepaket nur einen Teil des Bedarfs decken. Für diesen Teil wird dann in einer Ausführungsform die Einspeiseprognose zur Festlegung der Leistungsklasse des Energiepakets das für die Teildeckung des Bedarfs genommen. In einer Ausführungsform, bei der sich die Größenverhältnisse zwischen der Einspeiseprognose und der Bedarfsprognose im zeitlichen Verlauf umdrehen, wird die Leistungsklasse stückweise durch Einschränkung des Zeitraums auf Teilintervalle, in denen die entsprechenden vorangestellten Regeln gelten, bestimmt.

In einer Ausführungsform der Erfindung, umfasst das Verfahren die Schritte

F) Bilden eines Bedarfsdatenpakets $\{p_{progBed}(t),R(t),T_{prog}\}$ der Senke, wobei das Bedarfsdatenpaket den prognostizierten zeitlichen Verlauf der von der Senke benötigten nominellen Leistung $p_{nomBed}(t)$ zu jedem Zeitpunkt t innerhalb des Prognosezeitraums $T_{prog}$ und den zeitlichen Verlauf eines Restes $R(t)$ als Funktion der Bedarfsprognoseunsicherheit der Bedarfsprognose zu jedem Zeitpunkt $t$ innerhalb des Prognosezeitraums $T_{prog}$ beschreibt,

G) Bilden eines Einspeisedatenpakets der Quelle, wobei das Einspeisedatenpaket den prognostizierten zeitlichen Verlauf der von der Quelle einzuspeisenden nominellen Leistung $p_{nomEin}(t)$ zu jedem Zeitpunkt $t$ innerhalb des Prognosezeitraums $T_{prog}$ und den zeitlichen Verlauf eines Restes $R(t)$ als Funktion der Einspeiseprognoseunsicherheit der Einspeiseprognose zu jedem Zeitpunkt $t$ innerhalb des Prognosezeitraums $T_{prog}$ beschreibt, und

wobei das Bilden der Äquivalenzklasse eines Energiepakets zur Übertragung von einer Quelle an eine Senke durch mindestens eine Zuweisung eines Teilpakets des Einspeisedatenpakets zu einem Teilpaket des Bedarfsdatenpakets zumindest zur Deckung des Bedarfs der Senke umfasst.

In einer Ausführungsform werden die Einspeise- und Bedarfsdatenpakete gebildet durch die Schritte

1. Bilden eines Bedarfsdatenpakets $E_S^{Bed}$ mit der Leistungsklasse $\{p_{progBed}(t),R_{Bed}(t),T_{prog}\}$ der Senke, wobei das Bedarfsdatenpaket den prognostizierten zeitlichen Verlauf der von der Senke S benötigten nominellen Leistung $p_{progBed}(t)$, zu jedem Zeitpunkt $t$ innerhalb des Prognosezeitraums $T_{prog}$ und den zeitlichen Verlauf eines Restes $R_{bed}(t)$ als Funktion der Bedarfsprognoseunsicherheit der Bedarfsprognose zu jedem Zeitpunkt t innerhalb des Prognosezeitraums $T_{prog}$ beschreibt,

2. Bilden eines Einspeisedatenpakets $E_Q^{Ein}$ der Quelle Q, wobei die Leistungsklasse $\{p_{progEin}(t),R_{Ein}(t),T_{prog}\}$ des Einspeisedatenpakets den prognostizierten zeitlichen Verlauf der von der Quelle einzuspeisenden nominellen Leistung $p_{progEin}(t)$ zu jedem Zeitpunkt t innerhalb des Prognosezeitraums $T_{prog}$ und den zeitlichen Verlauf eines Restes $R_{Ein}(t)$ als Funktion der Einspeiseprognoseunsicherheit der Einspeiseprognose zu jedem Zeitpunkt $t$ innerhalb des Prognosezeitraums $T_{prog}$ beschreibt.

In einer Ausführungsform werden dafür beispielhaft auf der Basis des Mittelwerts, der gleich $p_{proX}$ gesetzt wird, der Ergebnisse der entsprechenden Prognoserechnungen $\mathcal{P}(X,t^\circ,t \in T_{prog})$ für jedes $t \in T_{prog}$ und der dazugehörigen Bestimmung des Restes als Funktion der Standardabweichung $\sigma(t)$ die entsprechenden Einspeise- und Bedarfsdatenpakete gebildet, indem die entsprechenden Prognosen so wie sie zuvor beschrieben wurden, auf den entsprechend zugeordneten Kontrollinstanzen 220.000 durchgeführt und dann dort auf der Basis dieser Prognosen entsprechende Bedarfs- und Einspeisedatenpakete gebildet werden.

In einer Ausführungsform, in der die Standardabweichungen als Prozentwert angegeben wird, werden die Reste beispielsweise durch das Produkt eines Vielfachen der entsprechenden Standardabweichung $\sigma(t)$ mit dem Mittelwert $p_{prog}X$ gebildet. In einer Ausführungsform wird $R_{progx}(t)$ beispielsweise durch $R_{progX}(t) = 2 \cdot \sigma(t) \cdot p_{progX}(t)$ bestimmt.

In einer Ausführungsform wird die schnelle und einfache Bestimmung der Energiepakete und der Übertragungsgraphen sowie die einfache Übertragung dieser Energiepakete ermöglicht, indem die Zeit und die Leistung in feste Zeit- und Leistungsscheiben $dt$, den Zeit-Quäntchen, und $dp$, den Leistungsquäntchen, unterteilt werden. In dieser Ausführung wird dazu die Zeit in Intervalle der festen Länge $dt$ unterteilt. Damit wird eine Äquivalenzrelation definiert, sodass alle $t$ und $t'$ genau dann äquivalent sind, wenn der Betrag der Differenz zwischen $t$ und $t'$ kleiner als $dt$ ist. Für die Wahl eines zeitlichen Referenzpunktes lässt sich somit jeder Zeitpunkt $t$ nach diesem Referenzpunkt $\hat{t}$ genau einem Intervall $i \cdot dt$ zuordnen, wobei $i \in \mathbb{N}$, $\mathbb{N}$ inklusive der Null, eine ganze positive Zahl ist. Mit dieser Wahl werden alle Zeiten, die in einem dieser Zeitintervalle liegen, gleichbehandelt und durch Zahl $i \in \mathbb{N}$, repräsentiert. Das bedeutet, dass es für jeden Zeitpunkt t bezüglich eines freiwählbaren aber festen Referenzzeitpunkts $\hat{t}$ es ein $i \in \mathbb{N}$ gibt, sodass $t = t + i \cdot dt$ gilt. Weiterhin seien alle Übertragungszeiträume $T$ in dieser Ausführungsform ein positives ganzzahliges Vielfaches von $dt$. Das heißt die Zeit $t$ wird in einer Ausführungsform durch $i \in \mathbb{N}$ und der Übertragungszeitraum durch $k \in \mathbb{N}$ repräsentiert. In einer Ausführungsform ist analog dazu gefordert, dass die nominelle Leistung $p_{nom}(t)$ zu jedem Zeitpunkt t ein positives ganzzahliges Vielfaches eines konstanten elementaren Leistungsniveaus $dp$ ist. Das heißt für jeden Zeitpunkt $t$ gilt: $p_{nom}(t) = p_{nom}(t) = n_i dp$. Dabei ist $n_i$ das positive ganzzahlige Vielfache von $dp$ im Zeitintervall $i$. Analog wird der Rest $R(t)$ behandelt, sodass $R(t) = R(i) = m_i dp$ gilt. Damit ist der Rest für jeden Zeitpunkt $t$, der durch eine ganze Zahl $i$ repräsentiert wird, ein ganzzahliges Vielfaches von $dp$ und wird durch die ganze Zahl $m_i$ repräsentiert. In dieser Ausführungsform werden dann die Leistungsklassen $\{p_{nom}(t),R(t),T\} = \{i, n_i, m_i, k\}$ durch die entsprechenden positiven ganzen Zahlen $i, n_i, m_i$ und $k$ repräsentiert.

Ferner ermöglicht eine Ausführungsform der Erfindung eine einfache Bewirtschaftung von Energiespeichern, die selbst Knoten im Übertragungsnetzwerk sind. Diese Speicher sind sowohl Quellen als auch Senken, sowie in Ausführungsformen auch Kompensations- und Ausgleichknoten. Dazu sind in dieser Ausführungsform entsprechende Kontrollinstanzen 220.000, die auf dem Daten- und Rechnernetzwerk ausgeführt werden, mit den Speichern verbunden und dort wird das Speichermanagement zur Bewirtschaftung realisiert. Für die Bewirtschaftung des Speichers und des Speicherinhalts eines Speichers, ist dieser in einen analogen Speicheranteil, den Sumpf, und einen quantisierten bzw. digitalisierten Speicheranteil unterteilt. In dieser Ausführungsform lässt sich der Speicherinhalt des quantisierten Anteils als ein ganzzahliges Vielfaches von $dp \cdot dt$ darstellen. Das heißt der quantisierte Anteil besteht aus Energiepaketen mit der Leistungsklasse $\{dp, R = 0, dt\}$. Der Rest ist hier Null, da es sich bei dem quantisierten Anteil des Speichers um eine deterministische Quelle bzw. Senke handelt. Betrachten wir jetzt in dieser Ausführungsform die Speicherung eines quantisierten physikalischen Leistungsflusses. Diese lässt sich durch $p_\varphi(t) = n_i \cdot dp + \mu_i \cdot m_i \cdot dp$ darstellen. Zu beachten ist, dass, für alle $i, \mu_i$ aufgrund seiner Definition keine ganze Zahl sein kann. Daraus folgt, dass das Produkt $\mu_i \cdot m_i$ sich als die Summe einer ganzen Zahl $m'_i$ und eines $\mu_i'$, mit $0 \leq |\mu_i'| < 1$ darstellen lässt. Damit folgt, dass sich jeder "quantisierte" Leistungsfluss als Summe eines ganzzahligen Anteils von $dp$ und eines "Restchens" von $\mu_i' dp < dp$ darstellen, sodass $p_\varphi(t) = (n_i + m_i') \cdot dp + \mu_i' \cdot dp$ gilt. Setzen wir $k_i = n_i + m_{i'}$, dann werden durch das Speichermanagement die $k_i$ Elementarenergiepakete der Größe $dE = dp \cdot dt$ in den quantisierten Anteil des Speichers aufgenommen und das "Energierestchenpaket" $\mu_i' \cdot dp \cdot dt$ für alle i aus $T$ in dem Sumpf gespeichert. Lassen sich durch die Aufnahme dieser Anteile und dem vorhandenen analogen Speicherinhalt des Sumpfes wieder quantisierte Pakete bilden, so weist das Speichermanagement diese dem quantisierten Anteil zu. Mithilfe des Sumpfes kann der Speicher, falls gefordert, auch einen physikalischen Fluss, wie vorangestellt dargestellt, bereitstellen.

Damit das funktioniert muss das Speichermanagement die beiden Anteile entsprechend verwalten und steuern. In dieser Ausführungsform wird das Speichermanagement auf dafür zugeordnete Kontrollinstanzen 220.000 durchgeführt. Dafür ist sind die Stelleinrichtungen für die Leistungsaufnahme und - abgabe durch den Speicher sowie die Sensoren der Speicher über das Daten- und Rechnernetzwerk 200.000 mit den entsprechenden Kontrollinstanzen verbunden. Die entsprechenden Sensoren der Speicher übermitteln die für das Speichermanagement notwendigen Messwerte, wie z. B. den Füllstand oder bei elektrischen Speichern den Ladezustand. Durch entsprechende Modelle der Speicher lassen sich dann auch die erforderlichen Prognosen für die Einspeise- wie auch für die Bedarfsleistung wie auch für die Ladeverluste erstellen.

In einer Ausführungsform sind analoge Speicher in den analogen Teilen der Quellen bzw. der Senken mit Sensoren des Perimeternetzwerkes versehen, die den Ladezustand dieser Speicher bestimmen, sodass im Rahmen der Einspeise- bzw. der Bedarfsprognosen für die entsprechende Quelle bzw. Senke für jeden Zeitpunkt des Übertragungszeitraums auf Basis dieser Messungen, die Leistung die diese Speicher maximal in den analogen Teil der Quelle bzw. Senke einspeisen können, sowie die Leistung die diese Speicher maximal aus dem analogen Teil der Quelle bzw. der Senke aufnehmen können, bestimmt werden.

Zudem ermöglicht es eine Ausführungsform, den physikalischen Leistungsfluss so einzustellen, das er, bis auf minimale technisch nicht vermeidbare Abweichungen, ein ganzzahliges Vielfaches der Elementarleistung **dp** ist und sich sowohl aus einem ganzzahligen Vielfachen von **dp** als nomineller Leistung als auch einem ganzzahligen Vielfachen von **dp** als Rest zusammen setzt.

Dazu werden in einer Ausführungsform $dt$ und $dp$ hinreichend klein gewählt, und jeder QFC-Knoten 2.000 verfügt über einen analogen Puffer, analog dem Sumpf der Speicher, so dass zu mindestens an den, dem jeweiligen QFC-Knoten zugeordneten Orten der an den QFC-Knoten angeschlossenen Kanten, die physikalischen Leistungsflüsse als ganzzahlige Vielfache von *dp* eingestellt werden können. Das heißt durch diese Puffer werden die oben schon erwähnten "Restchen" entweder aufgenommen oder zu einem Ganzen *dp* aufgefüllt.

In einer Ausführungsform der Erfindung werden dann, wenn eine Mehrzahl von Energiepaketen gleichzeitig über genau eine Kante des Übertragungsnetzwerks übertragen wird, die Schritte ausgeführt

H) Superpositionieren der gleichzeitig übertragenen Energiepakete zu genau einem simultanen Energiepaket mit einem superpositionierten simultanen Datenpaket

I) Einstellen der über die genau eine Kante fließenden physikalischen Leistung, so dass die physikalische Leistung an mindestens einem Ort x der genau einen Kante ein Element der Äquivalenzklasse $\{p_{nom}(t),R(t),T\}$ des superpositionierten simultanen Datenpakets des genau einen durch die Superpositionierung in Schritt H) gebildeten simultanen Energiepakets ist, wobei die nominelle Leistung $p_{nom}(t)$ dieser Äquivalenzklasse $\{p_{nom}(t),R(t),T\}$ die Summe der nominellen Leistungen der gleichzeitig übertragenen Energiepakete ist, wobei bei der Summenbildung für die nominelle Leistung $p_{nom}(t)$ die Flussrichtungen der Leistung berücksichtigt wird, und wobei der Rest $R(t)$ der Äquivalenzklasse $\{p_{nom}(t),R(t),T\}$ die Summe der Reste der gleichzeitig übertragenen Energiepakete ist und wobei für die Summenbildung des Rests die Flussrichtung unberücksichtigt bleibt.

In einer Ausführungsform werden die Energiepakete $E_i$ der Quellen $Q_i$ mit den Übertragungszeiträumen $T_i$ bzw. ihre Teilpakete, die über genau eine Kante gleichzeitig übertragen werden, dadurch bestimmt, dass alle dieser Transportgraphen, die in den Datenpaketen der Energiepakete abgelegt und beschrieben sind, diese Kante enthalten und dass es einen nicht leeren Durchschnitt $T' = \cap\ T\_i$ gib. In dieser Ausführungsform werden dann die gleichzeitig oder simultan über die genau eine Kante übertragenen Teilpakete $E_i' \subseteq E_i$ der Energiepakete $E_i = \{p_{nom}^i (t), R^i(t), T^i\}$ dadurch gebildet, dass nur Zeitpunkte t aus dem zeitlichen Durchschnitt $T'$ betrachtete werden. Somit werden diese Teilpakete für $T'$ gleichzeitig über die entsprechende Kante übertragen.

Aufgrund der Tatsache, dass wir Knoten wie z.B. Prosumer haben, die sowohl Quelle als auch Senke sein können, gibt es gleichzeitig über eine Kante übertragene Teilpakete gegenläufiger Übertragungsrichtung. Die Richtung ist einfach durch die Flussrichtung des dazugehörigen physikalischen Leistungsflusses gegeben. In einer Ausführungsform wird für das Gesamtnetzwerk eine Richtung als positiv und eine Richtung als negativ definiert.

In der bevorzugten Ausführungsform eines rein elektrischen Übertragungsnetzwerkes mit einer beispielsweisen globalen Richtungsdefinition benutzen wir in einer Ausführungsform das physikalische Superpositionsprinzip für die gleichzeitige Übertragung elektrischer Leistung. Damit wäre es naheliegend die Leistungsklassen zu superpositionieren, indem man die nominelle Leistung und den Rest einfach addiert und so die Superposition der Leistungsklassen zu bilden. Das ist für in der gleichen Richtung laufende Pakete genau die Berechnungsvorschrift. Aber wie sieht das für gegenläufige Pakte aus? Klarerweise wird die nominelle Leistung des Pakets mit negativer Flussrichtung bei der Superposition mit einem negativen Vorzeichen versehen und so die Summe mit der nominellen Leistung des Paketes mit positiver Flussrichtung gebildet. Was passiert aber mit den Resten der Pakte? Würde man den Rest auch mit einem negativen Vorzeichen versehen so machte das keinen Sinn. Denn der Rest ist in seinem Wesen ja durch die Varianz einer Prognose definiert und beschreibt eine Art Unsicherheit. Würde man so verfahren, dann würden sich bei Paketen mit gleichem Rest aber gegenläufiger Flussrichtung die Reste zu Null addieren. Das hieße ja dann, dass die Unsicherheit null wäre. Dann müssten die μ's der zugehörigen physikalischen Flüsse ja gleich sein. Das ist aber in der Regel nicht der Fall. Somit bleiben nur die entsprechenden Reste zu addieren. Aus diesem Grund liefert die naheliegende Rechenvorschrift für die Klassen nicht das richtige Ergebnis. Da die Reste die Varianzen beschreiben, die die physikalischen Ströme einnehmen können, sind das keine physikalischen Größen auf die die Flussrichtungen keinen Einfluss haben. Vielmehr verstärken sich diese Varianzen bei der Superpositionierung.

In einer bevorzugten Ausführungsform erfolgt das Superpositionieren der gleichzeitig übertragenen Energiepakete $E_i$ zu genau einem simultanen Energiepaket $E_{sim}$ mit einem superpositionierten simultanen Datenpaket, indem die Leistungsklassen der Energiepakete $E_i$ eingeschränkt auf den gemeinsamen Durchschnitt ihrer Übertragungszeiträume $T'$ und gemeinsame Kanten superpositioniert werden und somit die $\oplus_i$ die Superpostionierungsoperation von i Leistungsklassen dadurch definiert wird, dass die nominellen Leistungen der einzelnen Leistungsklassen unter Berücksichtigung der Flussrichtung und die Reste ohne Berücksichtigung der Flussrichtung auf gemeinsamen Kannten addiert werden. Somit ist die Leistungsklasse des superpositionierten simultanen Datenpakets des simultanen Energiepakets $\{p_{nomSim(t)},R_{Sim}(t),T'\} =\oplus_i \{p_{ni}(t),R_i(t),T'\}$ mit der die Superpostionierungsoperation $\oplus_i$ von i Leistungsklassen definiert durch $\oplus_i \{p_{ni}(t),R_i(t),T'\}: = \{\Sigma p_{ni}(t),\Sigma R_i(t),T'\}$, wobei für negative Flüsse $p_n = -|p_n|$ und $R = |R|$ gilt.

In dieser Ausführungsform wird bei der gleichzeitigen Übertragung von Energiepaketen $E_i$, mit den Leistungsklassen $\{p_{nomi}(t),R_i(t),T'\}$, über genau eine Kante, die physikalische Leistung über die genau eine Kante fließenden physikalischen Leistung so eingestellt, dass die physikalische Leistung an mindestens einem Ort x der genau einen Kante ein Element einer Äquivalenzklasse $\{p_{nomSim}(t), R_{Sim}(t), T\} = \oplus_i \{p_{nomi}(t), R_i(t), T\}$ des Datenpakets des simultanen Energiepakets ist. In einer Ausführungsform ist der mindestens eine Ort x, genau dieser Kante, bezogen auf die Übertragungsrichtung die Anbindungsstelle eines QFC-Knoten an genau diese Kante bzw. bei einer aktiven Kante der Ort des OFCs der aktiven Kante.

In einer Ausführung weist das Verfahren weiterhin die Schritte auf

J) an jedem Knoten auf dem Übertragungsnetzwerk Bestimmen der Anteile der an jeder Kante des jeweiligen Knoten in einem frei wählbaren Prüfzeitraum zur gleichzeitigen Übertragung an den nächsten Knoten anstehenden Energiepakete anhand der Datenpakete,

K) für die Dauer des Prüfzeitraums Einstellen der Leistungseinspeisung in jede Kante des jeweiligen Knotens, so dass die physikalische Leistung $p_\varphi(x,t)$ an mindestens einem Ort x der jeweiligen Kante ein Element einer Äquivalenzklasse $\{p_{nom}(t), R(t), T\}$ ist, deren nominelle Leistung $p_{nom}(t)$ die Summe der nominellen Leistungen der gleichzeitig übertragenen Energiepakete ist, wobei bei der Summenbildung für die nominelle Leistung die Flussrichtungen der elektrischen Leistung berücksichtigt wird, und deren Rest die Summe der Reste der gleichzeitig übertragenen Energiepakete ist, wobei für die Summenbildung des Rests die Flussrichtung unberücksichtigt bleibt, wobei die Flussrichtung für eine über eine Kante des Knotens ausgespeiste elektrische Leistung mit dem entgegengesetzten Vorzeichen zu der Flussrichtung, einer über eine Kante eingespeisten elektrischen Leistung gezählt wird.

In einer Ausführungsform der Erfindung erfolgt die Bestimmung der, über alle Transportgraphen, die aus den Transport-, Kompensations- und Ausgleichspfade bestehen, gleichzeitig, d. h. simultan, übertragenen Energiepakete $E_i$ durch folgende nachfolgende Schritte:

Für jeden Knoten $K_i \in V$ des Übertragungsnetzwerks, Bestimmen der Anteile $E_i$ aus den Datenpaketen, der an jeder Kante $e_{ki}^{in}$ des jeweiligen Knoten $K_i$, in einem frei wählbaren Prüfzeitraum $T'$ zur gleichzeitigen Übertragung an den diesen Knoten $K_i$, anstehenden Energiepakete $E'_i$. Somit sind $e_{ki}^{in}$ die Kanten über die, die den Energiepaketen zugeordneten, physikalischen Flüsse in den Knoten $K_i$ eingespeist werden.

Im nächsten Schritt werden für jeden Knoten $K_i$ des Übertragungsnetzwerks an jeder Kante $e_{ij}^{out}$ des jeweiligen Knoten $K_i$ in einem frei wählbaren Prüfzeitraum T' die zur Übertragung an den nächsten Knoten gleichzeitig anstehenden Anteile $E_i$ der Energiepakete $E'_i$ bestimmt. Wobei $E_i$, die Teilpakete der Energiepakete $E'_i$, mit $E_i \subseteq E'_i$ sind, die durch Einschränkung ihrer Übertragungszeiträume $T_i$ auf $T'_i$ gebildet werden. Somit sind $e_{ij}^{out}$ die Kanten in die, die gleichzeitig übertragenen Anteile $E_i$ der Energiepaketen, zugeordneten physikalischen Flüsse vom Knoten $K_i$ eingespeist werden.

In einer bevorzugten Ausführungsform haben alle Prüfzeiträume die gleiche Dauer und schließen sich lückenlos aneinander an.

In einer Ausführungsform werden durch die zuständigen Kontrollinstanzen 220.000, die auf dem Daten- und Rechnernetzwerks 200.000 ausgeführt wird, die Anteile $E_i$ der an jeder Kante des jeweiligen Knoten in einem frei wählbaren Prüfzeitraum zur gleichzeitigen Übertragung an den diesen Knoten anstehenden Energiepakete $E'_i$ aus den Datenpaketen bestimmt. In einer Ausführungsform, wird für die Dauer des Prüfzeitraums T' für die gleichzeitige Übertragung von Energiepaketen $E_i$ durch die zuständigen Kontrollinstanzen 220.000 steuerbar, die Leistungseinspeisung an einem Ort x in die Folgekante, über die gleichzeitig Energiepakete $E_i$ übertragen werden, bezogen auf die Richtung des superpositionierten Leistungsflusses, vorzugsweise an der Anbindungsstelle x dieser Folgekante an den vorgelagerten QFC, von diesem an x so eingestellt, dass die physikalische Leistung $p_\varphi(x,t)$ ein Element der superpositionierten Leistungsklasse des Datenpakets des simultanen Energiepakets $E_{Sim}$ $\{\tilde{p}_{nom}(t), \tilde{R}(t), T\} = \{p_{nomSim}(t), R_{Sim}(t), T\} = \{\oplus_i \{p'^i_{nom}(t), R'^i(t), T\}$ ist. Deren nominelle Leistung $p_{nom}(t)$ ist die Summe der nominellen Leistungen $p'^i_{nom}(t)$ der gleichzeitig übertragenen Energiepakete $E'_i$. Bei der Summenbildung für die nominelle Leistung $p'^i_{nom}(t)$ wird die Flussrichtungen der elektrischen Leistung berücksichtigt. Der Rest $\tilde{R}(t)$ ist die Summe der Reste $R'_i(t)$ der gleichzeitig übertragenen Energiepakete ist, wobei für die Summenbildung des Rests die Flussrichtung unberücksichtigt bleibt. Die Flussrichtung für eine über eine Kante des Knotens ausgespeiste elektrische Leistung wird mit dem entgegengesetzten Vorzeichen zu der Flussrichtung, einer über eine Kante eingespeisten elektrischen Leistung gezählt.

In dieser Ausführungsform definiert die superpositionierte Leistungsklasse $\oplus_i \{p_{nomi}(t), R_i(t), T\}$ das simultane Energiepaket $E_{Sim}$ das im Prüfzeitraum über die betreffende Kante, genannt simultane Kante übertragen wird. Durch die simultane Übertragung der einzelnen Pakete über eine simultane Kante wird dieses simultanen Energiepaket $E_{Sim}$ gebildet. Dabei enthält das superpositionierten simultanen Datenpaket eines simultanen Energiepakets neben dieser superpositionierten Leistungsklasse als Transportpfad den gerichteten Pfad, den sogenannten simultanen Pfad, der von simultanen Kanten gebildet wird, über die dieses simultane Energiepaket für den Übertragungszeitraum T' übertragen wird. Es kann somit vorkommen, dass dieser Pfad nur aus einer Kante mit seinen Anfangs- und Endknoten oder aber auch nur aus einem Knoten besteht.

In einer Ausführungsform kann somit allgemein die Superposition von Energiepakete auf einem gemeinsamen Teilgraph ihrer Transportgraphen durch die nachfolgende Definition bestimmt werden. Die Superpositionsoperation $\oplus$ von n Energiepaketen $E_i$, mit den Übertragungszeiträumen $T_i$, den Transportpfaden $TP_{Ei}$ sowie den Leistungsklassen $\{p_{nomi}(t), R_i(t), T_i\}$ bildet dann das simultanes Energiepaket $E_{Sim} = \oplus_i E_i$, das durch den im Datenpaket des simultanen Energiepaket beschriebenen simultanen Übertragungszeitraum $T_{Sim} = \bigcap_{i=1}^{n} T_i$ , den simultanen Transportpfad $TP_{Sim} = \bigcap_{i=1}^{n} TP_{E_i}$ sowie der simultanen Leistungsklasse $\{p_{nom\,Sim}(t), R_{Sim}(t), T_{Sim}\} = \{\sum_{i=1}^{n}(z_i) \cdot p_{nom\,i}(t), R_i(t), T_i\}$ , wobei $z_i$ das Vorzeichen des Energiepakets gemäß seiner Übertragungsrichtung definiert ist, beschrieben wird. Durch die Superpositionsoperation wird dann aus den einzelnen Transportpfaden $TP_i$ ein Transportgraph $TG_{Sim}$ durch, $TG_{Sim} = \bigcup_{i=1}^{n} \widetilde{TG}_i \cup TG_{Sim}$ , gebildet, wobei $\widetilde{TG}_i$ für jedes i = 1 bis n durch $\widetilde{TG}_i = TP_i \setminus TP_{Sim}$ bestimmt ist. Dabei ist bei einem simultanen Transportpfad $TP_{Sim}$ eine Endknoten entsprechend des Vorzeichens von $p_{nomSim}(t)$ die Quelle und gleichzeitig der Einspeiseknoten für $TP_{Sim}$ und entsprechend der andere Endknoten die Senke und gleichzeitig der Bedarfsknoten.

In dieser Ausführungsform lassen sich so auch Teilpakete für Energiepakete definieren. Ein Energiepaket $E'$ ist ein Teilpaket eines Energiepakets $E$ , $E' \subseteq|_{TP' \cap TP} E$ auf dem Durchschnitt der Transportpfade $TP'$ und $TP$, genau dann wenn es ein Energiepaket $E_{resi}$ mit einem simultanen Transportpfad $TP_{resi}$ gibt, sodass $TP_{resi} = TP'$ n $TP$ und $E = E' \oplus E_{resi}$ gilt.

Ein Teilpaket E' ist, genau dann ein maximales Teilpaket auf $TP_E$ n $TP_E$ von $E$ mit $E = E' \oplus E_{resi}$ wenn es kein $E''$ und $E''_{resi}$ mit $E = E'' \oplus E''_{resi}$ und $\| E''_{resi}(t) \| < \| E_{resi}(t) \|$ , $\forall$ t $\in$ $T$, gibt. Dabei bezeichnet $\| E(t) \| = Norm(t)$ in einer Ausführungsform einer Normfunktion für ein Energiepaket $E$ und ist durch die Funktion die der Leistungsklasse $\{p_{nom}(t), R(t), T\}$ von $E$ für jeden Zeitpunkt t $\in$ $T$ eine Zahl $Norm(t) = p_{nom}(t) + R(t)$ zu ordnet.

In einer Ausführungsform weist die Erfindung für einen Reservierungszeitraum $T_{res}$ weiterhin die Schritte auf, zu einem Reservierungszeitpunkt $t^{\circ\circ}$, wobei der Reservierungszeitpunkt $t^{\circ\circ}$ vor dem Beginn eine Reservierungszeitraums $T_{res}$ mit einem Startzeitpunkt $t_{0res}$ und einer Reservierungsdauer $DT_{res}$ liegt und wobei der Reservierungszeitraum $T_{res}$ innerhalb des Prognosezeitraums $T_{pro}$ liegt,

L) für jede Senke Bestimmen der Menge aller Transportgraphen, von denen jeder an die Senke angebunden ist, sodass für jeden dieser Transportgraphen jede an den Transportgraphen angeschlossene Quelle über einen Transportpfad des Transportgraphen mit der Senke verbunden ist und für den Reservierungszeitraum $T_{res}$ über ein Teilpaket $E'_{Ein}$ eines von dem Einspeisedatenpaket definierten Einspeisepakets $E_{Ein}$ verfügt, wobei dieses verfügbare Teilpaket $E'_{Ein}$ aus einem von einem Deckungsdatenpaket $E_D$ definierten Deckungspaket und einem von einem Verlustdatenpaket $E_V$ definierten Verlustpaket gebildet wird, wobei die Deckungspakete der Quellen $Q$ des Transportgraphen zusammen einen maximierten Teil eines von dem Bedarfsdatenpaket definierten Bedarfspakets der Senke S decken und wobei das jeweilige Verlustdatenpaket den durch eine Prognose bestimmten Verlust bei der Übertragung des jeweiligen von dem Deckungsdatenpaket definierten Deckungspaketes über den entsprechenden Transportpfad beschreibt,

M) Zuordnen eines Verlustdatenpakets $E_V$ zu jedem der Deckungsdatenpakete, wobei jedes der von den Deckungsdatenpaketen definierten Deckungspakete über einen ihm zugeordneten Transportpfad als Teilgraph eines Transportgraphs aus der Menge der Transportgraphen, die gemäß dem vorangestellten Schritt L) gebildet werden, übertragen wird, wobei eine nominelle Leistung der Äquivalenzklasse eines von dem Verlustdatenpaket definierten Verlustpakets durch eine Prognose des Verlustes und der Rest der Äquivalenzklasse des von dem Verlustdatenpaket definierten Verlustpakets als eine Funktion einer Prognoseunsicherheit einer Verlustprognose bestimmt werden, wobei die nominelle Verlustleistung die mittels der Verlustprognose prognostizierte, bei der Übertragung des Deckungspakets über den Transportpfad von der Quelle $Q$ zu der Senke S abfallende Leistung ist, und wobei für die Verlustprognose alle in dem Reservierungszeitraum über den betrachteten Transportpfad zu übertragenden Energiepakete berücksichtigt werden, und der Transportpfad eine verfügbare Übertragungskapazität hat, um das Teilpaket $E'_{Ein}$, das aus dem von dem Deckungsdatenpaket definierten Deckungspaket $E_D$ und dem von dem Verlustdatenpaket definierten Verlustpaket $E_V$ gebildet wird, wobei das von dem Deckungsdatenpaket definierte Deckungspaket $E_D$ und das von dem Verlustdatenpaket übertragene Verlustpaket $E_V$ dieselbe Übertragungsrichtung haben, zu übertragen,

N) wobei die Äquivalenzklasse des Teilpakets $E'_{Ein}$ dadurch gebildet wird, dass die nominellen Leistungen des Deckungspakets und des Verlustpaketes sowie die Reste addiert werden und wobei das Verlustpaket dieselbe Flussrichtung wie das Deckungspaket hat und der Übertragungszeitraum $T$ gleich dem Reservierungszeitraum $T_{res}$ gesetzt wird,

O) für jede Senke Bestimmen der optimierten Transportpfade als Teilgraphen des bezüglich einer gewählten Metrik optimiert bestimmten Transportgraphen, wobei jede Quelle eines jeden so optimiert bestimmten Transportpfads, der diese Quelle Q mit der Senke S des Transportgraphen zur Übertragung eines Teilpakets des Einspeisepakets verbindet, zu jedem Zeitpunkt $t$ innerhalb des Reservierungszeitraums $T_{res}$ eine verfügbare Leistung bereitstellt, die ein Element der Äquivalenzklasse des gemäß dem vorstehenden Schritt N) bestimmten Teilpaktes ist,

P) Bilden jeweils eines Reservierungsdatenpakets zur Definition eines Reservierungspakets des Transportpfads aus Schritt O), wobei das Reservierungsdatenpaket des Reservierungspakets die Äquivalenzklasse des jeweiligen Teilpakets des Einspeisepakets als Äquivalenzklasse des Reservierungspakets, die Einspeisekante des jeweiligen Teilpakets des Einspeisepakets als Einspeisekante des Reservierungspakets, den Transportpfad und den Reservierungszeitraum $T_{res}$ beschreibt,

Q) für jede Quelle des Transportgraphen Bestimmen eines noch verfügbaren Teilpakets des Einspeisepakets jeder Quelle, sodass das Einspeisepaket durch Superposition aller Reservierungspakete und diesem verfügbaren Teilpaket für den Reservierungszeitraum gebildet wird,

R) für jede Senke für den Reservierungszeitraum $T_{res}$ Bestimmen des noch nicht gedeckten Teilpakets des Bedarfspakets, sodass das Bedarfspaket aus den Deckungspaketen gemäß Schritt N) den der Senke zugeordneten Reservierungspaketen und dem nicht gedeckten Teilpaket gebildet wird,

S) für jeden Zeitpunkt $t$ aus dem Reservierungszeitraum $T_{res}$ Bestimmen der noch verfügbaren Übertragungskapazität des Übertragungsnetzwerks, sodass die vorgegebene Übertragungskapazität des Übertragungsnetzwerks die Summe aus der noch verfügbaren Übertragungskapazität und aus der Summe der nominellen Leistungen zuzüglich der Reste der Reservierungspakete ist,

T) für jede Einspeiseprognose, Bedarfsprognose und Verlustprognose durch die mindestens einer der durch sie bestimmten Werte geändert wird, wiederholen der vorangehenden Schritte,

U) für jedes in den Schritten L) bis O) gebildete Reservierungspaket zu einem freiwählbaren Buchungszeitpunkt $t_{Buch}$, der vor dem Startzeitpunkt $t_{0res}$ des Reservierungspakets liegt, verbindliches Buchen des Reservierungsdatenpakets des Reservierungspakets als das Datenpaket des Energiepakets, wobei der Übertragungszeitraum des Energiepakets der Reservierungszeitraum ist, wobei die Äquivalenzklasse $\{p_{nom}(t), R(t), T = T_{res}\}$ die Äquivalenzklasse des Reservierungspakets ist, wobei die Einspeisekante des Reservierungspakets die Einspeisekante des Energiepakets ist und wobei der Transportpfad des Reservierungspakets der Transportpfad des Energiepakets ist und

V) zur Ausführungszeit $t_0$ Übertragen des jeweiligen Energiepakets gemäß des Datenpakets des Energiepakets.

In einer Ausführungsform gibt es Fahrpläne für die zukünftige Reihenfolge der Prognosezeitpunkte $t_i^0$. Ein Fahrplan legt somit die jeweiligen Prognosezeitpunkte $t_i^0$ fest an denen die verschiedenen Prognosen $\mathcal{P}(X, t^\circ, t \in T_{prog})$ mit den entsprechenden und unterschiedlichen Prognosezeitraum $T_{Prog}^i$ durchgeführt werden.

Dabei ist der minimal mögliche zeitliche Abstand zwischen dem Prognosezeitpunkt $t_i^0$ und dem Beginn des entsprechenden Prognosezeitraums $t_{0prog}$ durch die Dauer der Berechnungsläufen unter Verwendung verschiedener Modelle für das jeweilige X und deren Zusammenführung der Ergebnisse bestimmt. In einer Ausführungsform können die Prognosen $\mathcal{P}(X, t^\circ, t \in T_{prog})$ mit festen X nach der unterschiedlichen Dauer von $T_{prog}$, z. B. in Kurzfrist-, Mittelfrist- und Langfristprognosen, mit den entsprechenden Fahrplänen, unterschieden werden.

Entsprechend der Fahrpläne für die Prognosen ergeben sich daraus Fahrpläne für die zukünftige Reihenfolgen der Reservierungszeitpunkte $t_i^{00}$ und der entsprechenden Reservierungszeiträume $T_{res}^i$. In einer Ausführungsform sind, entsprechenden der Fristigkeit die Prognosezeiträume sich aneinander anschließende Zeiträume gleicher Dauer, d.h. beispielsweise folgt eine Prognosezeitraum für eine Kurzfristprognose unmittelbar auf den vorhergehenden Prognosezeitraum für eine Kurzfristprognose. Entsprechend sind auch Prüfzeit-, Reservierungs- und Buchungszeiträume jeweils sich aneinander anschließende Zeiträume gleicher Dauer. In dieser Ausführungsform sind die Reservierungs-

zeitpunkte $t_i^{\circ\circ}$, die vor dem Beginn eines Reservierungszeitraums $T_{res}^i$ , mit einem Startzeitpunkt $t_{ores}^i$ und einer Reservierungsdauer $DT_{res}^i$ liegen, wobei der Reservierungszeitraum $T_{res}^i$ innerhalb des Prognosezeitraums $T_{prog}^i$ liegt, eine entsprechend eines Fahrplans festgelegte Reihenfolge von Zeitpunkten und die Dauer der Reservierungszeiträume $T_{res}^i$ ist ein ganzzahliger Teiler der Dauer des jeweiligen Prognosezeitraums $T_{prog}^i$ .

Im Folgenden betrachten wir ohne Beschränkung der Allgemeinheit nur ein beliebiges aber fest gewählte Stelle *i* in der Reihenfolge der Fahrpläne.

In einer Ausführungsform wird durch das Einspeisedatenpaket für einer Quelle am Ort $x_0$ des Übertragungsnetzwerks ein Einspeisepaket $E_{Ein}$ durch dieses Einspeisedatenpaket definiert, indem im Einspeisedatenpaket der dort zu beschreibende Transportpfad nur aus dem Ort $x_0$ besteht.

Durch das Bedarfsdatenpaket für eine Senke am Ort $x_{p+1}$ des Übertragungsnetzwerks wird ein Bedarfspaket $E_{Bed}$ definiert, indem im Bedarfsdatenpaket der dort zu beschreibende Transportpfad nur aus dem Ort $x_{p+1}$ besteht.

In einer Ausführungsform ist ein Energiepaket E, das im Übertragungszeitraum T von einer Quelle Q über einen Transportpfad TP(E,Q,S,T) an eine Senke S übertragen wird, ein simultanes Energiepaket, das eine Superposition eines, durch das Deckungsdatenpaket $E_D$ definierten, Deckungspakets und seines, dem Deckungspaket und dem Transportpfad eindeutig zugeordneten und durch sein Verlustdatenpaket $E_V$ definiertes, Verlustpakets $E_V$ ist. Dabei beschreiben sowohl das Deckungs- wie auch das Verlustpaket diesen Transportpfad.

Da in diesen Ausführungsformen das Einspeisepaket $E_{Ein}$ eineindeutig durch das Einspeisedatenpaket definiert ist, bezeichnen wir dieses ebenfalls mit $E_{Ein}$. Analog verfahren wir für das Bedarfs- Deckungs- und Verlustpaket, die wir genauso bezeichnen wie ihre Datenpakete. In diesen Ausführungsformen gilt somit, dass $E = E_D \oplus E_V$ ist. Da $E_D$ und $E_V$ denselben Transportpfad haben, ist das simultane Energiepaket für den ganzen Transportpfad bestimmt.

Zur Vereinfachung bezeichnen wir, wenn der Zusammenhang klar ist, auch die Datenpakete entsprechend ihrer Pakete, wie z.B. das Deckungsdatenpaket, oder das Verlustdatenpaket als Deckungs- bzw. Verlustpaket.

Das Verlustpaket $E_V$ beschreibt die bei der Übertragung eines Deckungspakets $E_D$ über TP, entstehenden Verlust. Die nominelle Leistung $v_{nom}(t)$ der Leistungsklasse $\{v_{nom}(t), R_{Verlust}(t), T_{res}\}$ von $E_V$ wird durch eine Prognose des Verlustes, der bei der Übertragung des Deckungspakets $E_D$ über TP, unter Berücksichtigung weiter Leistungsübertragungen über TP, entsteht, bestimmt. Der Rest $R_{Verlust}(t)$ ist eine Funktion der Prognoseunsicherheit dieser Prognose.

Das Deckungsenergiepaket $E_D$ deckt ganz oder teilweise den, entsprechend des Bedarfsenergiedatenpaket $E_{Bed}$ für den Übertragungszeitraum T prognostizierten Bedarf der Senke. Dies bedeutet, dass $E_D \subseteq|_{xp+1} E_{Bed}$ ist. Da der Transportpfad des Deckungspakets und der Transportpfad des Bedarfspakets, der nur aus $x_{p+1}$ besteht, nur den Ort $x_{p+1}$ der Senke gemeinsam hat, ist nur dort die Teilpaketbedingung erfüllt. Im Folgenden wird zur besseren Darstellung wird das, Bedarfspaket $E_{Bed}$ einer Senke $S_k$ mit $E_{S_k}^{Bed}$ bezeichnet.

In einer Ausführungsform wir das Datenpaket des, über den zuvor bestimmten Transportpfad TP zu übertragenden, Energiepakets E dadurch gebildet, dass dieses entsprechend der Superpositionierungsregeln aus den zuvor bestimmten Deckungs- und Verlustenergiedatenpakete gebildet wird.

In einer Ausführungsform werden für jeden Reservierungszeitraum $T_{res}$ zu seinem Reservierungszeitpunkt t°°, für jede Senke die für $T_{res}$ ein ungedecktes Bedarfsdatenpaket oder ein ungedecktes Teilpaket des Bedarfsdatenpakets hat, die möglichen Transportgraphen des Residualgraphen $\hat{G}_{Residual}$ des Übertragungsnetzwerks zur maximalen Deckung des Bedarfsdatenpakets oder seines Teilpakets der betrachteten Senken , optimal bestimmt. Die Bestimmung der möglichen Transportgraphen erfolgt durch die, für die entsprechende Region oder das Teilnetz des Übertragungsnetzes 100.000, in der die Senke 7.000 liegt, zuständige Kontrollinstanz oder mehrere kohärent gekoppelte Kontrollinstanzen 220.000.

An dieser Stelle wollen wir anmerken, dass wenn für eine Kante $e_i$ zu mindestens für einen Zeitpunkt $c_i(t) = 0$ ist, diese für die Bildung möglicher Transportgraphen nicht betrachtet werden kann.

In einer Ausführungsform werden die Einspeisedatenpakete $E_i^{Ein}$ der Quellen $Q_i$ und das Bedarfsdatenpaket $E_{S_k}^{Bed}$ der Senke $S_k$ aus den entsprechenden Prognosen dadurch bestimmt, dass die entsprechenden Prognosezeiträume auf den betrachteten Reservierungszeitraum eingeschränkt werden.

In einer Ausführungsform in denen diese Bestimmung durch mehrere Kontrollinstanzen, die jeweils für einen entsprechenden Teilgraphen des Graphen des Übertragungsnetzes zuständig sind, werden zur Bestimmung die dazu notwendigen, verteilt in den Kontrollinstanzen vorgehaltenen Daten, durch ein Verfahren, wie z. B. im europäischen Patent. EP 2 250 588 A2 beschrieben, kohärent gehalten. Durch dieses Verfahren werden die verteilt auf 200.000 ausgeführten Kontrollinstanzen kohärent gekoppelt und bilden somit ein kohärent gekoppeltes Kontrollinstanznetzwerk. Wenn wir im Folgenden nur von einer Kontrollinstanz sprechen, so dient das der Vereinfachung und schließt nicht aus das die entsprechend beschriebene Aufgabe auch von mehreren Kontrollinstanzen gelöst wird. an

In einer Ausführungsform werden durch eine oder mehrere zuständige Kontrollinstanzen 220.000, für jeden Reservierungszeitraum $T_{res}$ zum entsprechenden Reservierungszeitpunkt $t°°$ zur maximalen Deckung des durch das Bedarfspakets $E_{S_k}^{Bed}$ einer Senke $S_k$ für den zugeordneten Reservierungszeitraum durch die, für die entsprechende Region oder das Teilnetz des Übertragungsnetzes 100.000 in der die Senke $S_k$ liegt, zuständigen Kontrollinstanzen 220.000 die Menge $\mathfrak{TG}$ der möglichen Transportgraphen $TG$ $((E'_{Ein1}, TP_{11}, Q_1),.....(E'_{Einn}, TP_{nl}, Q_n),S_k)$ mit *k fest und i = 1 bis n sowie j = 1 bis l*

bestimmt. Diese Transportgraphen werde aus den möglichen Transportpfaden $TP_{ij}$, die jeweils genau eine Quelle $Q_i$ mit der genau einen Senke $S_k$ verbinden, gebildet. Wobei diese $TP_{ij}$ die Menge $\mathfrak{TP}$ der möglichen Transportpfade bildet, über die jeweils ein mögliches Teilpaket $E'_{Eini}$ des durch das Einspeisedatenpaket definierte Einspeisepaket $E_i^{Ein}$ der Quelle $Q_i$ von dieser an die Senke $S_k$ übertragen werden könnten. Wobei dieses verfügbare Teilpaket $E'_{Eini}$ aus einem von einem Deckungsdatenpaket definierten Deckungspaket $E_{Di}$ und einem von einem Verlustdatenpaket definierten Verlustpaket $E_{vij}$ gebildet wird.

In dieser Ausführungsform wird zuerst die Menge der möglichen Kombinationen von Deckungspakete $E_{Di}$ gebildet, sodass die Vereinigung der Übertragungszeiträume $T_i$ der Deckungspakete maximal den Übertragungszeitraum des Bedarfsdatenpakets $E_{S_k}^{Bed}$ abdeckt, und für jede dieser Kombinationen $E_{S_k}^{Bed} = \oplus E_{D_i} \oplus E_{S_k}^{Residual}$ sowie für alle $E_{D_i}, E_{D_i} \subseteq |_{x_0^i} E_{Ein_i}$ gilt. Zur Erinnerung $x_0^i$ sind die Orte der Quelle $Q_i$ und jeweils der Durchschnitt des Transportpfads des Deckungs- und des Einspeisedatenpakets. Im Folgenden verzichten wir der Einfachheit halber auf die Einschränkung bei den Teilpaketen auf den simultanen Transportpfad, wenn es aus dem Zusammenhang klar ist was gemeint ist. Dabei sind die Deckungspakete so gewählt, dass die superpositionierten Deckungspakete $\oplus E_{Di}$ ein maximales Teilpaket des Bedarfspakets $E_{S_k}^{Bed}$ der Senke $S_k$ sind. $E_{S_k}^{Residual}$ ist. Anschließend wird durch die zuständigen Kontrollinstanzen 220.000 für jeden möglichen Transportpfad $TP_{ij}$, aus der Menge $\mathfrak{TP}$ der Transportpfade, dann für das entsprechend zu übertragende Deckungspakets $E_{Di}$, durch Prognosen der Übertragungsverluste und unter Berücksichtigung von Energiepaketen, die simultan über eine oder mehrere Kanten und Knoten des entsprechenden Transportgraphs übertragen werden, die Verlustpakete $E_{vij}$ bestimmt, sodass die über die möglichen Transportpfade $TP_{ij}$ und die über sie übertragbaren Energiepakete

$$E'_{Ein_{ij}} = E_{D_i} \oplus E_{v_{ij}}$$

bestimmt sind. $E_{vij}$ sind die Verlustenergiepakete die entsprechend bei der Übertragung der Deckungspakete $E_{Di}$ über die verschiedenen Transportpfade $TP_{ij}$ entstehen. Diese Verlustpakete werden durch die, durch Verlustprognose bestimmten, Leistungsklassen $\{v_{nom}^{ij}(t), R_V^{ij}(t), T_{res}\}$ definiert.

In einer Ausführungsform wird der zeitliche Verlauf der nominelle Leistung $v_{nom}^{ij}(t)$ dadurch bestimmt, dass mittels der Gesetze der Elektrodynamik der Verlust, der bei der Übertragung der nominellen Leistung des Deckungspaketes $p_{nomD}(t)$ über $TP_{ij}$ entsteht, berechnet wird. Mit der der entsprechenden Berechnung der Verluste von $p_{nomD}(t) + R_D(t)$ und $p_{nomD}(t) - R_D(t)$ lässt sich dann der zeitliche Verlauf $R_V^{ij}(t)$ des Rests des Verlustpakets berechnen.

In dieser Ausführungsform werden in den nachfolgenden Schritten nur noch die Pakete $\check{E}_{ij}$ betrachtet, die Teilpakete, d. h.

$$\check{E}_{ij} \subseteq E_i^{Ein}$$

der entsprechenden Einspeisedatenpakete $E_i^{Ein}$ sind. In einer Ausführungsform wird dann eine Metrik $\mathcal{M}$ die auf die Menge der möglichen Transportgraphen $\mathfrak{TG}$ für die verbleibenden Pakete $\check{E}_{ij}$ mit

$$\mathcal{M} : \mathfrak{TG} \rightarrow \mathbb{R}$$

angewendet, wobei sich $\mathcal{M}$ beispielsweise aus den verschiedenen Preisen für die Teilpakete $\check{E}_{ij}$ und den verschiedenen Preisen für die Nutzung der entsprechenden Anteile des Übertragungsnetzwerkes zusammensetzt, und mittels der Metrik $\mathcal{M}$ wird dann ein optimierter Transportgraphen bestimmt.

In einer Ausführungsform werden die Preise für die Teilpakete sowie für die Nutzung des Übertragungsnetzwerks durch ein Auktionsverfahren bestimmt. In einer Ausführungsform werden zur Bestimmung des optimiert bestimmten Transportgraphen $TG_{op}$ dazu bekannte Methoden und Verfahren verwendet. In einer anderen Ausführungsform genetische Algorithmen oder andere Methoden der künstlichen Intelligenz. An dieser Stelle sei angemerkt das aufgrund der Laufzeit der verwendeten Algorithmen in der Regel kein optimaler, sondern nur ein optimierter Transportgraph bestimmt werden kann. In einer Ausführungsform kann dazu eine maximale Berechnungszeit für die Durchführung der Optimierung vorgeben werden und das beste Ergebnis nach Ablauf der maximalen Berechnungszeit ist dann der optimiert bestimmte Transportgraph.

In einer Ausführungsform werden dann aus diesem, bezüglich einer gewählten Metrik, so optimiert bestimmten Transportgraph $TG_{op}$ für eine Senke $S_k$ die jeweils optimiert bestimmten Transportpfade $TP_{op}^b \subseteq TG_{op}$ , $\forall\, b$ bestimmt, dabei sind die Indizes b durch die Indexpaare (i,j), für die $TP_{ij} \subseteq TG_{op}$ gilt bestimmt. Wobei jede Quelle $Q_b$ eines jeden so optimiert bestimmten Transportpfads $TP_{op}^b \, (E_b, Q_b, S_b\ T_b)$ , der diese Quelle $Q_b$ mit der Senke $S_k$ des Transportgraphen zur Übertragung eines Teilpakets $E_b = E_{Db} \oplus E_{vb} = E'_{Einb}$ des Einspeisepakets $E_{Einb}$ der Quelle $Q_b$ verbindet, zu jedem Zeitpunkt t innerhalb des Reservierungszeitraums $T_{res}$ eine verfügbare Leistung bereitstellt, die ein Element der Äquivalenzklasse $\{p_{nomb}(t), R_b(t), T_b\}$ des, gemäß dem vorstehenden Schritt bestimmten, Teilpaktes $E_b$ ist. Alternativ kann man diese Äquivalenzklasse auch äquivalent als $\{p''_{nomb}(t), R''_b(t), T_{res}\}$ schreiben, mit $p''_{nomb}(t) = p_{nomb}(t), R''_b(t) = R_b(t), \forall t \in T_b$ aber $p''_{nomb}(t) = R''_b(t) = 0, \forall\, t \in T_{res} \backslash T_b$. Gleicherma-ßen bilden die superpositionierten Deckungspakete $\oplus E_{Db}$ der Quellen $Q_b$ ein maximales Teilpaket des Bedarfspakets $E_k^{Bed}$ der Senke $S_k$ mit $E_k^{Bed} = E_k^{BedResidual} \oplus E_{D_b}$ . Des Weiteren bilden für jede dieser Quellen $Q_b$ die Teilpakete $E_{Ein_b}^{Residual}$ mit $E_{Ein_b} = E_b \oplus E_{Ein_b}^{Residual}$ , die noch freien Teilpakete der entsprechenden Einspeisepakete. Für diesen durch die Kontrollinstanz optimierten bestimmten Transportgraph $TG_{op}$ werden dann die entsprechenden Datenpakete, die sogenannten Reservierungsdatenpakete $E''_b$ der über diesen Transportgraph zu übertragenden Energiepakete $E_b$ gebildet.

Das Reservierungsdatenpakets $E''_b$ zur Definition eines Reservierungspakets des Transportpfads $TP_{op}^b$ wird gebildet, indem das Reservierungsdatenpaket des Reservierungspakets die Äquivalenzklasse des jeweiligen Teilpakets $E_b$ des Einspeisepakets als Äquivalenzklasse des Reservierungspakets, den Transportpfad $TP_{op}^b$ des jeweiligen Teilpakets des Einspeisepakets und den Reservierungszeitraum $T_{res}$ beschreibt. Durch die Beschreibung von $TP_{op}^b$ im Reservierungsdatenpaket ist auch die entsprechende Einspeisekante dort beschrieben. Durch die Bestimmung von $TG_{op}$ und $E_k^{BedResidula}$ sowie $E_{Ein_b}^{Residual}$ wird für jede Quelle des Transportgraphs das noch verfügbare Teilpaket des Einspeisepakets jeder Quelle bestimmt, sodass das Einspeisepaket durch Superposition aller Reservierungspakete und diesem verfügbaren Teilpaket für den Reservierungszeitraum gebildet wird. Analog wird für jede Senke für den Reservierungszeitraum $T_{res}$ das noch nicht gedeckten Teilpakets des Bedarfspakets bestimmt, sodass das Bedarfspaket aus den Deckungspaketen der Senke zugeordneten Reservierungspaketen und dem nicht gedeckten Teilpaket gebildet wird,

In dieser Ausführungsform wird für die Übertragung eines Reservierungspakets $E''_b$ über einen Tranportpfad $TP_{op}^b$ mit der Leistungsklasse $\{ p_{nomb}(t), R_b(t), T_b\}$ für jede der gerichteten Kanten des Transportpfads $TP_{op}^b$ und jedes t aus $T_b$ maximal die Übertragungskapazität $(p_{nomb}(t) + R_b(t)) = \| E_b(t) \|$ benötigt. In einer Ausführungsform werden diese benötigten Übertragungskapazitäten für die betroffenen Kanten durch die Kontrollinstanz reserviert. In einer Ausführungsform wird dann der, nach dieser Reservierung, verbleibende Residualgraph $\hat{G}_{Residual}$ wie folgt bestimmt. Sei jetzt $c_i^{alt}(t)$ die freie Übertragungskapazität ohne die benötigte Übertragungskapazität für die Reservierungspakete, dann ist die, nach der Reservierung, verbleibende noch freie Übertragungskapazität von $\hat{G}_{Residual}$ zu

$c_i(t) = c_i^{alt} - \| E_b(t) \|, \forall \in T_b$ durch die Kontrollinstanz bestimmt.

In einer Ausführungsform wird das vorangestellt beschriebene Verfahren durch die entsprechenden Kontrollinstanzen iterativ Senke für Senke auf der Menge der Residuum-Einspeisedatenpakete $E_i^{Einresid}$ und des Residualgraphs durchgeführt, sowie wenn sich für jede der Einspeiseprognosen, Bedarfsprognosen und Verlustprognosen mindestens einer der durch sie bestimmten Werte vor einem Buchungszeitpunkt $t_{Buch}$ ändert.

Ab einem frei wählbaren Buchungszeitpunkt $t_{Buch}$ werden durch die zuständigen Kontrollinstanzen die Reservierungen nicht mehr geändert und gehen in den Zustand "gebucht" über und die Reservierungsdatenpakete werden zu den Datenpaketen der Energiepakete, die dann im Übertragungszeitraum entsprechend übertragen werden.

In einer Ausführungsform weist die Erfindung weiterhin für einen Reservierungszeitraum $T_{res}$ die Schritte auf, zu dem Reservierungszeitpunkt $t°°$,

W) für jede Senke Bestimmen der Menge der Transportgraphen, die jeweils an die Senke angebunden sind, sodass für jeden dieser Transportgraphen jede an den Transportgraphen angeschlossene Quelle über einen Transportpfad des Transportgraphen mit der Senke verbunden ist und ein verfügbares Teilpaket des noch verfügbaren Einspeisepakets der Quelle hat, wobei dieses verfügbare Teilpaket aus einem von einem Deckungsdatenpaket definierten Deckungspaket und einem von einem Verlustdatenpaket definierten Verlustpaket gebildet wird, wobei die Deckungspakete der Quellen $Q_i$ des Transportgraphen zusammen einen maximierten Teil des Bedarfsdatenpakets der Senke S decken und wobei das Verlustpaket den durch eine Prognose bestimmten Verlust bei der Übertragung des jeweiligen Deckungspaketes über den entsprechenden Pfad beschreibt,

X) für jede Senke und jeden gemäß Schritt W) bestimmten Transportgraphen, Erweitern des jeweiligen Transportgraphen zu einem erweiterten Transportgraphen durch Bestimmen der Kompensationsknoten des jeweiligen erweiterten Transportgraphen, indem für jede Quelle des erweiterten Transportgraphen die Kompensationsknoten bestimmt werden, sodass jeder dieser Kompensationsknoten über mindestens einen Kompensationspfad, als Teilgraph des erweiterten Transportgraphen, mit der Senke S verbunden ist und die Kompensationsknoten zusammen über eine zuvor bestimmte maximale Gesamtkompensationsleistung $C(t)$ verfügen, um für jeden Zeitpunkt $t$ innerhalb des Reservierungszeitraums $T_{res}$ eine physikalische Leistung bis zu dieser maximalen Gesamtkompensationsleistung $C(t)$ aufzunehmen, wobei die maximale Gesamtkompensationsleistung $C(t)$ eine Funktion der Reste der Deckungspakete der jeweiligen Quelle $Q$ ist, und um über die Kompensationspfade in Summe eine physikalische Leistung bis zu dieser maximalen Gesamtkompensationsleistung $C(t)$, die um die durch Prognose bestimmten Verlustleistungen, die bei der Übertragung der Teilpakete von den Kompensationsknoten über die Kompensationspfade abfallen, erhöht ist, in den Bedarfsknoten $K_S$ einzuspeisen,

Y) für jede Senke Bestimmen genau eines gemäß einer vorgegebenen Metrik optimierten erweiterten Transportgraphen aus der Menge aller gemäß den Schritten W) und X) bestimmten erweiterten Transportgraphen, die jeder über eine Bedarfskante mit der Senke verbunden sind,

Z) für den optimierten erweiterten Transportgraphen aus Schritt Y) Bilden der Reservierungsdatenpakete zur Definition der Reservierungspakete der über den optimalen erweiterten Transportgraphen zu übertragenden Energiepakete, wobei das Reservierungsdatenpaket jedes Reservierungspakets die Äquivalenzklasse des jeweiligen verfügbaren Einspeisepakets als Äquivalenzklasse des Reservierungspakets, die Einspeisekante des jeweiligen Einspeisepakets als Einspeisekante des entsprechenden Einspeiseknotens $K_Q$ des Reservierungspakets, den entsprechenden Transportpfad, der die Quelle mit der Senke verbindet, den Reservierungszeitraum $T_{res}$, sowie die Kompensationsknoten mit den entsprechenden Kompensationspotentialen und den Kompensationspfaden, die die Kompensationsknoten mit dem Bedarfsknoten $K_S$ an dem die Senke über die Bedarfskante angebunden ist, beschreibt,

AA) Bestimmen der noch verfügbaren Teilpakete der Einspeisepakete und der noch nicht gedeckten Anteile des Bedarfspakets der noch verfügbaren Übertragungskapazitäten gemäß des Schrittes O), Reduzieren der noch verfügbaren Kapazität der reservierten Kompensationsknoten um die reservierten maximalen Leistungen zur Aufnahme und zur Abgabe der entsprechenden Leistungen, Reduzieren der noch verfügbaren Übertragungskapazitäten der Kompensationspfade um die reservierten und um die Verlustleistung erhöhten Potentialen zur Abgabe von Leistung der reservierten Kompensationsknote

BB) für jede Einspeiseprognose, Bedarfsprognose und Verlustprognose durch die mindestens einer der durch sie bestimmten Werte geändert wird, Wiederholen der vorangehenden Schritte,

CC) für jedes in den vorangestellten Schritten gebildete Reservierungspaket eines optimierten erweiterten Transportgraphen, zu einem freiwählbaren Buchungszeitpunkt $t_{Buch}$, der vor dem Startzeitpunkt $t_{0res}$ des Reservierungspakets liegt, verbindliches Buchen der Reservierungsdatenpakete der Reservierungspakete als die Datenpakete der Energiepakete, wobei für jedes dieser Datenpakete der Übertragungszeitraum des Energiepakets der Reservierungszeitraum ist, wobei die Äquivalenzklasse $\{p_{nom(t)}, R(t), T\}$ die Äquivalenzklasse des Reservierungspakets ist und die Einspeisekante des Reservierungspakets die Einspeisekante des Energiepakets ist, und verbindliches Buchen der reservierten Übertragungskapazitäten auf dem optimalen erweiterten Transportgraphen und zur Ausführungszeit $t_0$ Übertragen des jeweiligen Energiepakets gemäß des Datenpakets des Energiepakets über die gebuchten Kapazitäten des gebuchten erweiterten Transportgraphen,

und/oder

DD) für jede Senke Erweitern der in den Schritten W) und X) zuvor bestimmten möglichen Transportgraphen und/oder zuvor bestimmten möglichen erweiterten Transportgraphen um die möglichen Ausgleichsknoten und die möglichen Ausgleichspfade, sodass jeder dieser Ausgleichsknoten über einen Ausgleichspfad mit einer der Quellen des Transportgraphen und/oder erweiterten Transportgraphen, für die das zugeordnete Einspeisedatenpaket einen Ausgleich fordert, verbunden ist und diese Ausgleichsknoten Einzeln oder in Summe den Ausgleich für die entsprechenden Quellen leisten können und die die bei der Übertragung des Ausgleichspakets von dem Ausgleichsknoten an die Quelle auftretenden durch mindestens eine Verlustprognose bestimmten Verluste ausgleichen können,

EE) gemäß einer vorgegebenen Metrik Bestimmen eines optimierten Transportgraphen mit Ausgleich oder eines um die Kompensation erweiterten Transportgraphen mit Ausgleich aus der Menge der möglichen, gemäß Schritt DD) bestimmten Transportgraphen mit Ausgleich oder eines um die Kompensation erweiterten Transportgraphen mit Ausgleich und

FF) für den so bestimmten optimierten Transportgraphen mit Ausgleich oder eines um die Kompensation erweiterten Transportgraphen mit Ausgleich Durchführen der Schritte Z) bis CC).

In einer Ausführungsform löst die Erfindung für den Fall, dass eine Senke $S_k$ keinen analogen Speicher zur Kompensation hat, die Aufgabe, eine, durch die übertragene physikalische Leistung der Energiepakete $E_i = E_{Di} \oplus E_{vi}$ verursachte, mögliche Unter- oder Überdeckung des Bedarfs einer Senke $S_k$ zu kompensieren, indem, ein um die Kompensation erweiterter, optimiert bestimmter Transportgraph $ETG$ bestimmt wird.

In einer Ausführungsform erfolgt die Kompensation durch Kompensationsknoten $K_{SASi}$ die zusammen über eine zuvor bestimmte maximale Gesamtkompensationsleistung $C(t)$ verfügen, um für jeden Zeitpunkt t innerhalb des Reservierungszeitraums $T_{res}$ eine physikalische Leistung bis zu dieser maximalen Gesamtkompensationsleistung $C(t)$ aufzunehmen, wobei die maximale Gesamtkompensationsleistung $C(t)$ eine Funktion der Reste der Deckungspakete $E_{Di}$ der jeweiligen Quelle $Q_i$ ist. Das heißt $C(t) = F_{kom}(R_{D1}(t),....,R_{Dn}(t))$ Dabei sind $R_{Di}(t)$ die Reste der bestimmten Deckungspakete $E_{Di}$.

Im Folgenden betrachten wir beispielhaft eine weitere Ausführungsform in der von jedem Kompensationsknoten $K_{SASi}$, für jeden Zeitpunkt $t$ innerhalb des Reservierungszeitraums $T_{res}$, eine physikalische Leistung bis zu einer maximalen Kompensationsleistung $C_i(t)$ aufgenommen werden kann, wobei $C_i(t)$ eine Funktion des Rests $R_{Di}(t)$ der Teilpakete bzw. Deckungspakete $E_{Di}$ der Quelle $Q_i$ ist, sodass

$$C(t) = \sum C_i(t) = \sum f_{komp}(R_{D_i}(t)) \; \forall \; t \; aus \; T_{res}$$

gilt. Die zuständigen Kontrollinstanzen 220.000 bilden jetzt die Menge $\mathfrak{TEG}$ der, um Kompensation erweiterte, Transportgraphen,

$$ETG\big(TP_{11}(E_1,Q_1), \ldots TP_{1l}(E_1,Q_1), \ldots TP_{nj}(E_n,Q_n); \; KP_{1i}\big(K_{SAS_1}\big), \ldots; KP_{mi}\big(K_{SAS_m}\big), S_k\big),$$

indem die Menge der mögliche Transportgraphen $\mathfrak{TG}$ um die möglichen Kompensationsknoten $K_{SASi}$, die über mögliche Kompensationspfade $KP_{il}(K_{SASi}, S_k)$ mit der Senke $S_k$ verbunden werden können, erweitert wird.

Mittels einer Verlustprognose $v_{il}(C_i(t))$ für die Übertragung einer Leistung von $C_i(t)$ über einen der möglichen Kompensationspfad $KP_{il}$ wird dann durch die entsprechenden Kontrollinstanzen geprüft, welche Kompensationsknoten $K_{SASs}$ aus der Menge der möglichen Kompensationsknoten $K_{SASs}$ für jeden Zeitpunkt t innerhalb des Reservierungszeitraums $T_{res}$ eine physikalische Leistung bis zu einer um den Verlust erhöhten maximalen Kompensationsleistung der Größe $C'_{is}(t) = C_i(t) + v_{is}(C_i(t))$ zur Einspeisung in $KP_{is}$ bereitstellen können. Dann wird die Menge $\mathfrak{TEG}$ auf diese Kompensationsknoten $K_{SASi}$ eingeschränkt und mit $\mathfrak{TEG}'$ bezeichnet

In einer Ausführungsform wird dann die Metrik $\mathcal{M}$ um die Kosten für die Potentiale $C'_i(t)$ und die Nutzung der Kompensationspfades $KP_{ij}$ erweitert.

In einer Ausführungsform wird dann aus $\mathfrak{TEG}'$, analog zu den Schritten der Bestimmung des optimiert bestimmten Transportgraph, der optimiert bestimmte, um Kompensation erweitere, Transportgraph und die entsprechenden Reservierungspakete sowie die Buchung bestimmt. Bei der Bestimmung des Residualgraphen wird für die reservierten Kompensationspfade eine Kapazität von $C'_i(t)$ berücksichtig. Für den optionalen Ausgleich wird der Erweitertes Transportgraph um die Ausgleichspfade und die Ausgleichsknoten, mit den entsprechenden maximalen Ausgleichsleistungen für die Leistungsaufnahme sowie die um die entsprechend um die Verluste erhöhten maximalen Ausgleichsleistungen für die Leistungsabgabe, entsprechend erweitert und das weitere Vorgehen ist analog zu dem bekannten vorangestellt beschriebenen Vorgehen.

In einer Ausführungsform weist, das Verfahren für einen Echtzeitprognosezeitraum $T_{RT}$ mit einem Echtzeitprognosebeginn $t_{0RT}$ und einer Echtzeitprognosedauer $DT_{RT}$, wobei der Echtzeitprognosezeitraum $T_{RT}$ ein Teilzeitraum des Reservierungszeitraums $T_{res}$ des Reservierungspakets ist, weiterhin die Schritte auf, zu einem Echtzeitprognosezeitpunkt $t°°°$, der nach dem Reservierungszeitpunkt $t°°$ des Reservierungszeitraums $T_{res}$ und vor dem Echtzeitprognosebeginn $t_{0RT}$ liegt,

GG) Messen mindestens eines Parameters,

HH) Erstellen einer Echtzeitprognose $p_{RT}(x,t)$ der physikalischen Leistung $p_\varphi(x,t)$ zu jedem Zeitpunkt $t$ innerhalb des Echtzeitprognosezeitraums $T_{RT}$ an einem Ort $x$ des Übertragungsnetzwerks, wobei die Echtzeitprognose $p_{RT}(x,t)$ eine vernachlässigbare Echtzeitprognoseunsicherheit aufweist und unter Einbeziehung des mindestens einen Parameters erstellt wird, wobei die physikalische Leistung $p_\varphi(x,t)$ eine Funktion dieses Parameters ist, und

II) Bilden eines Echtzeitenergiepaketes für die Übertragung über einen Teilgraphen des Übertragungsnetzwerks, indem das dem Echtzeitenergiepaket zugeordnete Echtzeitdatenpaket, welches das Echtzeitenergiepaket definiert, den zeitlichen Verlauf der nominellen Leistung $p_{nomRT}(x,t) = p_{RT}(x,t)$ an mindestens einem Ort $x$ jeder Kante des Teilgraphen als Funktion des prognostizierten zeitlichen Verlaufs der in diesen Teilgraph eingespeisten physikalischen Leistung $p_\varphi(x,t)$ an dem Ort $x$ beschreibt, wobei der Rest $R(t)$ konstant gleich Null und der Übertragungszeitraum $T$ gleich dem Echtzeitprognosezeitraum $T_{RT}$ gesetzt wird.

In dieser Ausführungsform wird möglichst genau der zukünftige zeitliche Verlauf der physikalischen Leistung für die Übertragung eines Energiepakets jeweils an einem Ort des Übertragungsnetzwerkes bestimmt, indem für einen Echtzeitprognosezeitraum $T_{RT}$ mit einem Echtzeitprognosebeginn $t_{0RT}$ und einer Echtzeitprognosedauer $DT_{RT}$, wobei der Echtzeitprognosezeitraum $T_{RT}$ ein Teilzeitraum des Reservierungszeitraums $T_{res}$ des Reservierungspakets ist, durch Messen mindestens eines Parameters $m_i(t°°°)$ zu dem Echtzeitprognosezeitpunkt $t°°°$, der nach dem Reservierungszeitpunkt $t°°$ des Reservierungszeitraums $T_{res}$ und vor dem Echtzeitprognosebeginn $t_{0RT}$ liegt, eine_Echtzeitprognose

$$\mathcal{EP}(t°°°, T_{RT}, m_i(t), x, t) = p_{RT}(x,t)$$

der physikalischen Leistung $p_\varphi(x,t)$ zu jedem Zeitpunkt t innerhalb des Echtzeitprognosezeitraums $T_{RT}$ an einem Ort $x$ des Übertragungsnetzwerks erstellt wird. Dabei weist die Echtzeitprognose $p_{RT}(x,t)$ aufgrund ihrer Kurzfristigkeit eine vernachlässigbare Echtzeitprognoseunsicherheit auf. Die Echtzeitprognose wird unter Einbeziehung mindestens eines gemessenen Parameters $m_i(t)$ erstellt, wobei die prognostizierte physikalische Leistung $p_\varphi(x,t)$ eine Funktion dieses Parameters ist. Ein Ort des Übertragungsnetzwerkes ist beispielsweise eine Quelle, eine Senke, ein Knoten oder ein Ort auf einer Kante des Übertragungsnetzwerks.

Des Weiteren ermöglicht es diese Ausführungsform, mittels der Echtzeitprognose Echtzeitdatenpakete für die Übertragung über einen Teilgraphen des Übertragungsnetzwerks zu bilden, indem das dem Echtzeitenergiepaket zugeordnete Echtzeitdatenpaket, welches das Echtzeitenergiepaket definiert, den zeitlichen Verlauf der nominellen Leistung $p_{nomRT}(x,t) = p_{RT}(x,t)$ an mindestens einem Ort $x$ jeder Kante des Teilgraphen als Funktion des prognostizierten zeitlichen Verlaufs der am Ort $x$ in diesen Teilgraph eingespeisten physikalischen Leistung $p_\varphi(x,t)$ beschreibt, wobei der Rest $R(t)$ konstant gleich Null und der Übertragungszeitraum $T$ gleich dem Echtzeitprognosezeitraum $T_{RT}$ gesetzt wird.

In einer Ausführungsform werden zu sich periodisch in einem zuvor bestimmten zeitlichen Abstand von $DT_{RT}$ wiederholenden Echtzeitprognosezeitpunkten $t°°°$ Echtzeitprognosen durchgeführt. Die Echtzeitprognosezeitpunkte $t°°°$ sind so bestimmt, dass sie genau einem Prognosezeitraum $T_{prog}$ mit dem Prognosebeginn $t_{0prog}$ zugeordnet sind und alle Echtzeitprognosezeitpunkte $t°°°$ nach dem Reservierungszeitpunkt $t_{res}$ und vor dem Beginn des Prognosezeitraum liegen.

In der bevorzugten Ausführungsform wird für ein reserviertes bzw. gebuchtes Energiepaket, mit dem Übertragungszeitraum $T_{res}$, bzw. $T_{Buch}$, der Prognosezeitraum $T_{prog}$ so gewählt, dass $T_{prog} = T_{res} = T_{Buch}$ ist, wobei $T_{Buch}$ dann der Übertragungszeitraum $T$ bei der Übertragung des Energiepakets ist. In der bevorzugten Ausführungsform wird für ein reserviertes oder gebuchtes Energiepaket, mit dem Übertragungszeitraum $T$, der Prognosezeitraum $T_{prog}$ so gewählt, dass $T_{prog} = T$ ist.

In einer Ausführungsform werden durch Sensoren an Orten $x_i$ des Übertragungsnetzwerkes Zeitreihen $m(x_i, t_{mess}^k)$ der physikalischen Leistung für die Messzeitpunkte $t_{mess}^k \leq t^{\circ\circ\circ}$ gemessen. Zusätzlich werden durch Sensoren an den Orten $r_j$ eines Perimeternetzwerks 210.000 Zeitreihen von Messgrößen $pm(r_j, t_{mess}^j)$ für die Messzeitpunkte $t_{mess}^j \leq t^{\circ\circ\circ}$ ermittelt. Diese gemessenen Parameter haben direkten Einfluss auf die physikalische Erzeugungs- bzw. Einspeisungsleistung einer Quelle 6.000, z. B. metrologische Messgrößen, und den physikalische Leistungsbedarf einer Senke 7.000, z. B. Produktionskennzahlen eines Produktionsbetriebs.

In einer bevorzugten Ausführungsform ist $T_{RT}$, in Abhängigkeit der Echtzeitprognosemethode bzw. Funktion $\mathcal{EP}$, so gewählt, dass der Erwartungswert $< p_{TR}(x,t) >$ eine verschwindende Varianz $\vartheta$ auf dem Intervall $T_{RT}$ hat, und für den Echtzeitprognosezeitraum $T_{RT}$ in dieser bevorzugten Ausführungsform konstant $< p_{TR}^{t^{\circ\circ\circ}}(x,t) >_{\mathcal{EP}} = p_{RT}(x, t^{\circ\circ\circ}), \forall\, t$ *aus* $T_{RT}$ ist. Außerdem ist in dieser Ausführungsform für alle Zeitpunkte $t$ aus $T_{RT}$ die Abweichung der tatsächlichen physikalischen Leistung $p_\varphi(x,t)$ für alle t aus $T_{RT}$ von $p_{RT}(x,t^{\circ\circ})$ so klein, dass diese vernachlässigbar ist. Das heißt bei geeigneter Wahl kann $p_\varphi(x,t)$ im Teilraum des Übertragungszeitraums der dem entsprechend zugeordneten $T_{RT}$ entspricht, gleich $p_{RT}(x,t^{\circ\circ\circ})$ , mit dem entsprechenden Echtzeitprognosezeitpunkt $t^{000}$ für $T_{RT}$, gesetzt werden.

In einer Ausführungsform werden die Echtzeitprognosen $\mathcal{EP}$ zur Bestimmung von $p_{RT}(x_i,t)$ für t aus $T_{RT}$ mit Methoden der linearen und nichtlinearen Zeitreihenanalyse erstellt. Dabei wird $p_{RT}(x_i,t)$ für die Orte $x_i$ des Übertragungsnetzwerkes, bevorzugt an einer Anbindungsstelle einer Kante an einen QFC-Knoten über den dieser Leistung an diesem Ort einstellt wird bestimmt. Die Methoden der linearen und nichtlinearen Zeitreihenanalyse erfolgt unter Verwendung der Zeitreihen von Messwerten an diesem Punkt $x_i$ sowie weiteren Messwerten an Orten $x_j$, *mit j < i*. Dabei liegen diese Orte $x_j$, in Bezug auf $x_i$ und der Übertragungsrichtung, auf dem nachgelagerten Teilgraphen des Übertragungsgraphen.

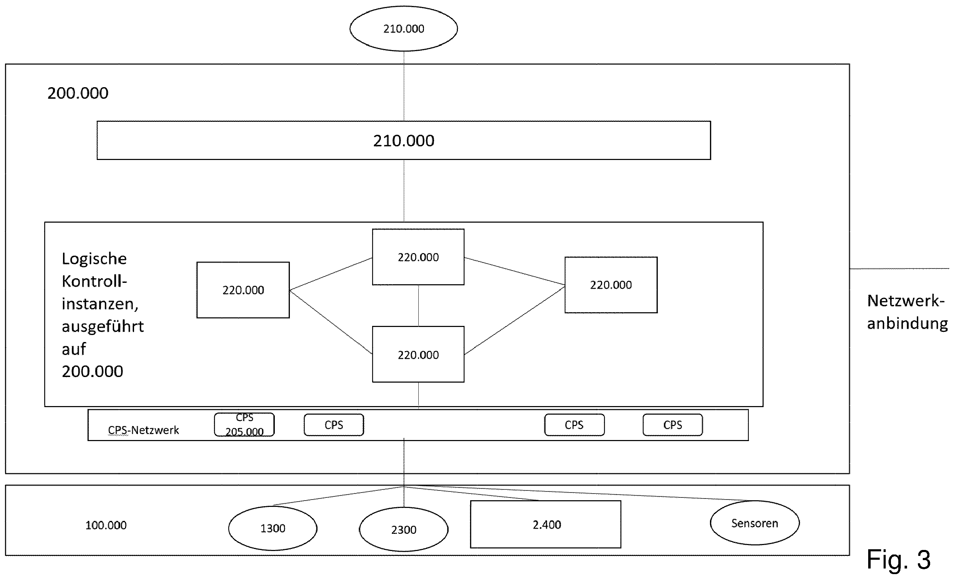

In einer Ausführungsform werden diese Echtzeitprognosen mit den Methoden der linearen und nichtlinearen Zeitreihenanalyse auf einer oder mehreren kohärent gekoppelten Kontrollinstanzen 220.000 durchgeführt. Dazu werden die erfassten Zeitreihen der Messwerte werden an diese zugeordneten Kontrollinstanzen 220.000 des, mit dem Perimeternetzwerk verbundenen, Daten- und Rechnernetzwerks weitergeleitet. In der Figur 3 und der zugehörigen Beschreibung lässt der Zusammenhang zwischen dem Perimeternetzwerk als Teil des Daten- und Rechnernetzwerks, sowie seine Aufgaben ableiten.

In einer bevorzugten Ausführungsform werden darüber hinaus die Echtzeitprognosen für regenerative Quellen 6.000, sowie für Senken 7.000 so gewählt, dass die Totzeit minimiert wird. Dabei wird als Totzeit die Zeitspanne zwischen der Signaländerung am Eingang des Echtzeitprognoseprozesses und der der Zeit bis zur Erstellung der Echtzeitprognose, bezeichnet.

In einer bevorzugten Ausführungsform werden zusätzlich in räumlichen Abständen $r$ um ausgewählte regenerative Quellen 6.000 und/oder in einem, einer Senke zugeordneten Gebiet, durch die Sensoren des Perimeternetzwerks 210.000 die, die Erzeugungs- und/oder Bedarfsleistung beeinflussenden, Parametern $m_i(\hat{t})$ gemessen. Die Messpunkte $\hat{t}$ liegen vor den Echtzeitprognosezeitpunkten $t^{\circ\circ\circ}$. Die so erfassten Zeitreihen $m_i(\hat{t})$ werden an die zugeordneten Kontrollinstanzen 220.000 des, mit dem Perimeternetzwerk verbundenen, Daten- und Rechnernetzwerks weitergeleitet. In der Figur 3 und der zugehörigen Beschreibung lässt der Zusammenhang zwischen dem Perimeternetzwerk als Teil des Daten- und Rechnernetzwerks, sowie seine Aufgaben ableiten.

In einer Ausführungsform gibt es eine ausgezeichnete Echtzeitprognosefunktion $\widetilde{\mathcal{EP}}_{Ein}$ für die Erzeugungsleistung $p_{RT}(x_0, t^{000}, t \in T_{RT})$ einer regenerativen Quelle am Punkt $x_0$ des Übertragungsnetzwerks, mit vernachlässigbarer Prognoseunsicherheit bei geeigneter Dauer $DT_{RT}$, sodass für alle t aus $T_{RT}$

$$p_{RT}(x_0, t^{000}, t \in T_{RT}) = p_{RT}(x_0, t^{000}) \,\forall\, t \in T_{RT}$$

gilt, wobei $p_{RT}(x_0, t^{000})$ durch die Echtzeitprognose $\widetilde{\mathcal{EP}}_{Ein}(x_0, t^{\circ\circ\circ}, pm(\vec{r}, t_{mess}^1), \dots, pm(\vec{r}, t_{mess}^n = t^{\circ\circ\circ}), m(x_0, t_{mess}^1), \dots, m(x_0, t_{mess}^n = t^{\circ\circ\circ}), \mathcal{P}_{ein}(x_0, T_{RT}))$ der Einspeiseleistung der Quelle am Ort $x_0$ bestimmt wird.

Dabei sind die Eingabewerte von $\widetilde{\mathcal{EP}}$ die Zeitreihen der Messwerte $pm(\vec{r}, t_{mess}^1)$ bis $pm(\vec{r}, t_{mess}^n = t^{000})$

des Perimeternetzwerks an den Orten $\vec{r} = (r_1,...,r_l)$ zu den Messzeitpunkten $t^1_{mess}$ *bis* $t^n_{mess} = t^{000}$ mit $t^i_{mess} \leq t^{\circ\circ\circ}, i = 1$ bis $n$ und die Zeitreihen $m(x_0, t^1_{mess})$ bis $m(x_0, t^n_{mess} = t^{000})$ der von der Quelle erzeugten Leistung zu den entsprechenden Messzeitpunkten vor und zum Zeitpunkt $t^{000}$, sowie das Ergebnis der Einspeiseprognose $\mathcal{P}_{ein}(x_0, T_{RT})$ für die Quelle am Punkt $x_0$ für den auf $T_{RT}$ eingeschränkten Prognosezeitraum $T_{Prog}$.

Mit dieser Ausführungsform wird dann an einem Punkt $x_i$ des Übertragungsnetzwerk durch $p_{RT}(x_i, t^{000}, t \in T_{RT})$ die physikalische Leistung $p_\varphi(x_i, t)$ durch die Echtzeitprognose $\mathcal{EP}$ prognostiziert, sodass

$$p_{RT}(x_i, t^{000}, t \in T_{RT}) = \mathcal{EP}(x_i, t^{000}, t \in T_{RT}, p_{RT}(x_0, t^{000}), m(\vec{x}, t^1_{mess}), ..., m(\vec{x}, t^l_{mess}))$$

gilt. Dabei ist $p_{RT}(x_0, t^{000})$ die durch die Echtzeitprognose $\widetilde{\mathcal{EP}}$ prognostizierte Einspeiseleistung der Quelle und $\vec{x} = (x_1,...,x_s)$, *mit s < i*, sind Punkte des Transportpfads, der die Quelle am Punkt $x_0$ mit der Senke am Punkt $x_{p+1}$ verbindet, an denen zu den Messzeiten $t^1_{mess}$ bis $t^l_{mess}, t^l_{mess} \leq t^{\circ\circ\circ}$ die physikalische Leistung $m(x_j, t^i_{mess}), x_j \in \vec{x}$ gemessen wird.

In einer ausgezeichneten Ausführungsform der Echtzeitprognose des Leistungsbedarfs einer Senke S am Punkt $x_{p+1}$, gibt es eine ausgezeichnete Echtzeitprognose $\widetilde{\mathcal{EP}}_{Bed}$ unter Verwendung von Perimetermesswerten mit

$$p_{RT}(x_{p+1}, t^{000})$$
$$= \widetilde{\mathcal{EP}}_{Bed}(x_{p+1}, t^{\circ\circ\circ}, pm(\vec{y}, t^1_{mess}), ..., pm(\vec{y}, t^n_{mess}), m(x_{p+1}, t^1_{mess}), ..., m(x_{p+1}, t^n_{mess}), \mathcal{P}_B(x_0, T_{RT}))$$

wobei $t^n_{mess} = t^{000}$. In dieser Ausführungsform sind $\vec{y} = (y_1, ... y_k)$ die Messpunkte des Perimeternetzwerkes für die Messungen in einem der Senke zugeordneten Bedarfsgebiet und $pm(\vec{y}, t^i_{mess})$ bezeichnen die entsprechenden Zeitreihen dieser Messungen. Mit $m(x_{p+1}, t^i_{mess})$ sind die Zeitreihen der Messungen der Leistung an der Senke an dem Punkt $x_{p+1}$ bezeichnet. $\mathcal{P}_{Bed}(x_0, T_{RT})$ sind die Werte der Bedarfsprognose für die Senke eingeschränkt auf $T_{RT}$, unter Verwendung einer weiteren Prognose, wie z. B. für Industriebetriebe einer Prognose der zu produzierenden Stückzahlen.

In einer Ausführungsform kann die Echtzeitprognosefunktion $\widetilde{\mathcal{EP}}_{Ein}$ auf einem Windmodell basieren das aufgrund der gemessenen Windgeschwindigkeit und Richtung zum Zeitpunkt $t^{\circ\circ\circ}$ den Wirkwind auf einen Windgenerator für $T_{RT}$ bestimmt, woraus sich dann mit den Generatordaten die eingespeiste Leistung entsprechend prognostizieren lässt.

In einer anderen Ausführungsform kann die Echtzeitprognosefunktion auf einem Schattenwurfmodel basieren, das durch Wolkenbeobachtung und Verfolgung durch Kamerasysteme oder LIDAR, Messung der Windgeschwindigkeiten, in Abhängigkeit von dem Datum, der Uhrzeit und der genauen geographischen Verortung eines Solargenerators, die Leistung des Solargenerators prognostiziert.

Diese Perimeter gestützte Echtzeitprognose hat den Vorteil, dass Änderungen erfasst werden, bevor sie eine Auswirkung auf die Leistung haben, und somit das Totzeitproblem vermindert wird.

In einer anderen Ausführungsform verfügen die beteiligten Quellen, QFC-Knoten und die QFCs der aktiven Kanten über Puffer, sodass bei hinreichend kleinen Echtzeitprognosezeiträumen verbleibenden totzeitbasierte Abweichungen ausgeglichen werden können.

In der bevorzugten Ausführungsform wird durch eine Echtzeitprognose, die zum Echtzeitprognosezeitpunkt $t^{\circ\circ\circ}$ für mindestens einem Ort jeder Kante eines Teilgraphen des Übertragungsnetzwerks erstellt wird und die den zeitlichen Verlauf von $p_{RT}(x,t)$ für alle t aus $T_{RT}$ beschreibt, ein Echtzeitdatenpaket gebildet. Das entsprechende Echtzeitdatenpaket enthält die Leistungsklasse bzw. Äquivalenzklasse mit dem zeitlichen und örtlichen Verlauf der nominellen Leistung $p_{nomRT}(x,t) = p_{RT}(x,t)$ und einem Rest $R(t)$ konstant gleich Null sowie einem Übertragungszeitraum $T$ der gleich dem entsprechenden Echtzeitprognosezeitraum $T_{RT}$ gesetzt wird.

In dieser Ausführungsform wird dann ein Echtzeitpaket gemäß diesem Echtzeitdatenpaket über den Teilgraphen übertragen, indem an den Orten x eine physikalische Leistung eingestellt wird, die ein Element der Äquivalenzklasse aus dem Echtzeitdatenpaket, im Folgenden Echtzeitklasse genannt, ist. Da $R(t)$ für alle $t$ an all den Orten x konstant gleich Null ist, wird die physikalische Leistung so eingestellt, dass sie gleich $p_{RT}(x,t)$ ist.

In einer Ausführungsform der Erfindung umfasst das Übertragen des dem Datenpaket zugeordneten Energiepakets über einen gerichteten Transportpfad des gebuchten Transportgraphen, der die Quelle für das Energiepaket mit der Senke verbindet, für jeden Echtzeitprognosezeitraum $T_{RT}$, der ein Teil der Überdeckung des Übertragungszeitraums durch Echtzeitprognosezeiträume ist und für jeden Zeitpunkt $t$ innerhalb des jeweiligen Echtzeitprognosezeitraums $T_{RT}$ die folgenden Schritte,

JJ) Erstellen einer Echtzeitprognose für den zeitlichen Verlauf der physikalischen Leistung $p_\varphi(x,t)$ für mindestens einen Ort $x$ auf mindestens jeder Kante des Transportpfads gemäß Schritt ii. des Anspruchs 9 unter Einbeziehung mindestens einer Messung der in die jeweilige zum Echtzeitprognosezeitpunkt $t^{000}$, in den Transportgraph eingespeisten physikalischen Leistung,

KK) Bilden eines Echtzeitenergiepakets für die Einspeisung über die Einspeisekante in diesen Transportpfad gemäß Schritt II), indem in dem zugeordneten Echtzeitdatenpaket der zeitliche Verlauf für den Echtzeitprognosezeitraum $T_{RT}$ der nominellen Leistung an mindestens einem Ort $x$ auf jeder Kante der Transportpfade, über die die Übertragung des Energiepakets von der Einspeisekante der Quelle an die entsprechende Bedarfskante der Senke erfolgt, gleich den entsprechenden Prognosen aus den Schritten HH) und II) gesetzt wird und der Rest für alle Zeitpunkte $t$ innerhalb des Echtzeitprognosezeitraums $T_{res}$ und alle Teilgraphen konstant gleich Null gesetzt wird,

LL) Übermitteln des Echtzeitdatenpaketes an die Kontrollinstanzen des Transportgraphen und

MM) Einstellen der physikalischen Leistung $p_\varphi(x,t)$ für mindestens einen Ort $x$ auf jeder Kante des Transportpfads, sodass die physikalische Leistung $p_\varphi(x,t)$ eine Funktion der in dem Echtzeitdatenpaket beschrieben nominellen Leistung $p_{nomRT}(x, t)$ für diesen Ort $x$ ist, und die physikalische Leistung $p_\varphi(x,t)$ zu jedem Zeitpunkt $t$ innerhalb des Übertragungszeitraums $T$ die in dem Datenpaket des Energiepakets beschriebene Äquivalenzrelation erfüllt, und

NN) für eine simultane Übertragung von Energiepaketen über eine einzige Kante eines Knotens für jeden Übertragungszeitraum $T$ Einstellen der physikalischen Leistung $p_\varphi(x,t)$ für mindestens einem Ort $x$ auf dieser Kante, sodass die physikalische Leistung $p_\varphi(x,t)$ eine Funktion der Summe der nominellen Leistungen der den simultan übertragenen Energiepaketen zugeordneten Echtzeitpakete an diesem Ort $x$ unter Berücksichtigung der Flussrichtung ist, sodass die physikalische Leistung $p_\varphi(x,t)$ zu jedem Zeitpunkt $t$ innerhalb des Übertragungszeitraums $T$ ein Element, der gemäß Anspruch 5 für das simultane Energiepaket gebildeten Äquivalenzklasse ist.

Zur Erläuterung, wenn wir im Folgendem von einem Transportgraph, Transportpfad und einem Energiepaket sprechen, so ist immer ein gebuchter Transportgraph, gebuchter Transportpfad und ein gebuchtes Energiepaket gemeint.

In dieser Ausführungsform wird für die Übertragung eines Energiepaketes $E$ die physikalische Leistung $p_\varphi(x,t)$ so eingestellt, dass diese ein Element der Leistungsklasse $\{p_{nom}(t),R(t),T\}$ des Energiepakets an mindestens einem Ort $x$ jeder Kante $e_i \in TP(E,Q,S,T)$ ist. Die Leistungsklasse wie auch der Transportpfad sind in dem, das Energiepakt definierenden, Datenpaket beschrieben. Zur Einstellung der physikalischen Leistung wird für mindestens einen Ort $x_i$ jeder Kante $e_i \in TP \subset TG$ eine Echtzeitprognose

$$p_{RT}(x_i, t^{\circ\circ\circ}, t \in T_{RT}) = \mathcal{EP}(x_i, t^{000}, t \in T_{RT}, p_{RT}(x_i, t^{\circ\circ\circ}, t \in T_{RT}), m(\vec{x}, t^1_{mess}), \dots, m(\vec{x}, t^l_{mess}))$$ unter Einbeziehung

mindestens einer Messung $m(x_l, t^{\circ\circ\circ}_{mess})$, der jeweiligen zum Echtzeitprognosezeitpunkt $t^{\circ\circ\circ}$, eingespeisten physikalischen Leistung $p_\varphi(x,t^{\circ\circ\circ})$ erstellt.

Mithilfe dieser Echtzeitprognosen werden dann Echtzeitdatenpakete und somit Echtzeitenergiepakete gebildet, sodass für die Einspeisung über die Einspeisekante $e_1$ des Transportpfads, der die Quelle $Q$ mit dem Transportpfad $TP$ verbindet, ein Echtzeitenergiepaket dadurch gebildet wird, dass dem zugeordneten Echtzeitdatenpaket der zeitliche Verlauf der nominellen Leistung an mindestens einem Ort $x_i$ auf jeder Kante $e_i$ der Teilgraphen, über die die Übertragung des Energiepakets von der Einspeisekante der Quelle an die entsprechende Bedarfskante der Senke erfolgt, gleich den entsprechenden Prognosen $p_{RT}(x_i, t^{000}, t \in T_{RT})$ und der Rest für alle Zeitpunkte $t$ innerhalb des Echtzeitprognosezeitraums $T_{RT}$ und für alle Teilgraphen konstant gleich Null gesetzt wird. Das so gebildete Echtzeitdatenpaket wird dann an die Kontrollinstanzen des Transportgraphen übermittelt.

Zu jedem Zeitpunkt $t$ während des Übertragungszeitraums $T$ wird die physikalische Leistung $p_\varphi(x_i,t)$ an mindestens einem Ort $x_i$ auf jeder Kante $e_i$ der Teilgraphen so eingestellt, dass die physikalische Leistung $p_\varphi(x_i,t)$ eine Funktion der in dem Echtzeitdatenpaket beschrieben nominellen Leistung $p_{nomRT}$ für diesen Ort $x_i$ ist, das heißt

$$p_\varphi(x_i, t) = f(p_{RT}(x_i, t^{000})) \text{ für } \forall\, t \in T_{RT}$$

mit dem für jedes $t \in T$ zugeordneten $t^{\circ\circ\circ}$ und $T_{RT}$ und die physikalische Leistung $p_\varphi$ zu jedem Zeitpunkt $t$ innerhalb des Übertragungszeitraums *T* die in dem Datenpaket des Energiepakets beschriebene Äquivalenzrelation erfüllt, das heißt

$$p_\varphi(x_i, t) \in \{p_{nom}(t), R(t), T\} \text{ mindestens ein } x_i \in e_i, \forall\, e_i \in TP \text{ und } \forall\, t \in T$$

gilt.

Des Weiteren wird in einer Ausführungsform die Leistung an mindestens einem Ort auf genau einer Kante über die simultan Energiepakete übertragen werden, so eingestellt, dass für eine simultane Übertragung von Energiepaketen über diese Kante eines Knotens für jeden Übertragungszeitraum *T* die physikalische Leistung $p_\varphi(x,t)$ an mindestens einem Ort *x* auf dieser Kante eine Funktion der Summe der nominellen Leistungen der den simultan übertragenen Energiepaketen zugeordneten Echtzeitpakete an diesem Ort *x* unter Berücksichtigung der Flussrichtung ist, sodass die physikalische Leistung $p_\varphi(x,t)$ zu jedem Zeitpunkt *t* innerhalb des Übertragungszeitraums *T* ein Element, der gemäß Anspruch 5 für das simultane Energiepaket gebildeten Äquivalenzklasse ist.

In einer Ausführungsform mit einem Datenpaket eines Energiepaketes *E,* das die Leistungsklasse $\{p_{nom}(t), R(t), T\}$ und den Transportpfad *TP,* über den das Energiepaket zur Ausführungszeit von einer Quelle *Q* zu einer Senke $S_1$ übertragen wird, beschreibt, wird dem Transportpfad *TP* eine Sequenz von Orten $x_i$, mit *i* = 0 bis *p* + 1 zugeordnet. Dabei steht $x_0$ für die Quelle, $x_1$ für die Anbindungsstelle der Einspeisekante 5.920 an den Einspeise-QFC 2.800, $x_{p+1}$ steht für die Senke, $x_p$ ist die Anbindungsstelle der Bedarfskante 5.920 an den Bedarfs-QFC 2.900, für *i* mit *i* > 1 und *i* < *p* - 1 bezeichnen die $x_i$, die Anbindungsstellen von QFC-Knoten von *TP* mit einer, bezogen auf der Übertragungsrichtung, Folgekante.

In einer Ausführungsform werden für die Orte $x_i$ jeweils Echtzeitprognosen $p_{RT}(x_i, t)$ zu einem Echtzeitprogno-sezeitpunkt $t^{000}$ für einen Echtzeitprognosezeitraum $T_{RT}$ durchgeführt.

In der bevorzugten Ausführungsform ist $T_{RT}$, in Abhängigkeit der Echtzeitprognosemethode, so gewählt, dass der Erwartungswert $< p_{RT}(x,t) >$ eine verschwindende Varianz $\vartheta$ auf dem Intervall $T_{echt}$ hat, und in dieser bevorzugten Ausführungsform, ist dann $\forall\, t$ aus $T_{RT}$

$$< p_{RT}(x, \quad t^{\circ\circ\circ}, \quad t \in T_{RT}) >_{\mathcal{EP}} = p_{RT}(x, t^{\circ\circ\circ})$$

Das bedeutet das die Echtzeitprognose für den Zeitraum $T_{RT}$ den zum Zeitpunkt $t^{\circ\circ\circ}$ bestimmten konstanten Wert $p_{RT}(x,t^{\circ\circ\circ})$ liefert. In einer bevorzugten Ausführungsform für die Echtzeitprognosen, sind die Echtzeitprognosezeitpunkte sich periodisch wiederholende Zeitpunkte $t_k^{\circ\circ\circ}$, die in Abhängigkeit der Echtzeitprognosedauer $T_{RT}$ so gewählt sind, dass der (k + 1) - *te* Echtprognosezeitpunkt $t_{k+1}^{\circ\circ\circ}$, an dem die Echtzeitprognose für den *k* + 1 - *ten* Echtzeitprognosezeitraum $T_{RT}^{k+1}$ durchgeführt wird, mit dem Beginn $t_{0RT}^{k}$ des Echtzeitprognosezeitraums $T_{RT}^{k}$ zusammen fällt. Damit wird der Echtzeitprognosezeitraum $T_{RT}^{k}$, durch das Zeitintervall mit dem Beginn $t_{k-1}^{\circ\circ\circ}$ und dem Endzeitpunkt $t_{k-1}^{\circ\circ\circ} + DT_{RT}^{k}$ bestimmt, wobei $DT_{RT}^{k}$ die Echtzeitprognosedauer des Echtzeitprognosezeitraum $T_{RT}^{k}$ bezeichnet. In einer bevorzugten Ausführungsform ist $DT_{RT}^{k} = DT_{RT}\ \forall\, k$ und die Übertragungszeiträume *T* aller Energiepakete mit der Dauer *DT* sind so gewählt, dass *DT* ein ganzzahliges Vielfaches von $DT_{RT}$ ist. In dieser bevorzugten Ausführungsform gibt es für jeden Übertragungszeitraum *T* ein $n \in \mathbb{N}$, sodass $T = \bigcup_{k=1}^{n} T_{RT}^{k}$ gilt und jedem $t \in T$ kann eineindeutig ein Echtzeitprogno-sezeitpunkt $t_k^{\circ\circ\circ}$ und ein Echtzeitprognosezeitraum $T_{RT}^{k}$ durch $t \in T_{RT}^{k}$ zugeordnet werden. In dieser bevorzugten Ausführungszeit gibt es bezogen auf einen Referenzzeitpunkt $\check{t}$ ein $k \in \mathbb{N}$, sodass für jeden Echtzeitprognosepunkt $t_k^{\circ\circ\circ}$ = $\check{t} + k \cdot DT_{RT}$ gilt. In dieser Ausführungsform gibt es somit eine eineindeutige Abbildung die einem Übertragungszeitraum *T* eines Energiepakets ein Tupel $(t_1^{\circ\circ\circ}, \dots, t_m^{\circ\circ\circ})$ von Echtzeitprognosezeitpunkten zuordnet.

In einer bevorzugten Ausführungsform ergibt sich mit dieser Wahl einen Fahrplan für die Durchführung der Echtzeitprognosen und daraus folgend eine Zeitreihe, von Echtzeitprognosewerten entsprechend der voranschreitenden Zeit für jeden Eintrag $(t_1^{\circ\circ\circ}, \dots, t_m^{\circ\circ\circ})$ des Fahrplans. In dieser bevorzugten Ausführungsform definiert jeder dieser Echtzeitprognosen ein Echtzeitdatenpaket, sodass es, ab dem Ausführungszeitpunkt für die Dauer *DT* von *T,* einen Stream, sprich Zeitreihe, von Echtzeitenergiepaketen $E_{RT}^{1}, \dots, E_{RT}^{m}$ übertragen wird. Wobei das definierende Echtzeitdatenpaket von $E_{RT}^{k}$ die Leistungsklasse $\{\vec{p}_{nomRT}^{k}, 0, T_{RT}^{k}\}$ und den Transportpfad *TP(Q,S,T)* beschreibt. Dabei bezeichnet

$$\vec{p}_{nomRT}^{k} = \left(p_{nomRT}^{1k}, \ldots, p_{nomRT}^{pk}\right) \text{ für alle für } t \in T_{RT}^{k} \text{ die nominelle Leistung } p_{nomRT}^{ki} \text{ des Echtzeitenergiepakets am}$$

Ort $x_i \in e_i \in TP$.

In einer bevorzugten Ausführungsform werden durch die Echtzeitprognosen am Ort $x_1$, das heißt an der Anbindungsstelle des Einspeise-QFC 2.800 mit der Einspeisekante 5.820, die nominellen Leistungen der Echtzeitpakete

$$p_{nomRT}^{11}, \ldots, p_{nomRT}^{1m}$$

für die Intervalle bis mittels der Echtzeitprognosen

$$p_{RT}(Quelle, t_k^{000}, t) = p_{RT}(x_0, t_k^{000}), \forall\, t \text{ aus } T_{RT}^{k}$$

der potentiell maximalen Erzeugungs- bzw. Einspeiseleistung der Quelle für die entsprechen Intervalle $T_{RT}^{1}$ bis $T_{RT}^{m}$ zu den Zeitpunkten $t_k^{000}$, als Funktion von $p_{RT}\left(x_0, t_k^{\circ\circ\circ}\right)$ bestimmt, sodass

$$p_{nomRT}(x_1, t_k^{000}) = p_{nomRT}^{1k} = f_{ein}(p_{RT}(x_0, t_k^{000}))$$

ist, wobei in $f_{ein}$ auch die mittels Echtzeitprognose bestimmten Übertragungsverluste von $x_0$ nach $x_1$ einfließen. In dieser Ausführungsform werden für alle anderen Orte $x_i$ mit $i > 1$ $p_{nomRT}^{ik}$ durch eine Prognosefunktion auf der Basis von Zeitreihen, der, an ausgewählten Orten $x'_1$ bis $x'_{j-1}$ gemessenen physikalischen Leistungen $p_{\varphi}^{1'}$ bis $p_{\varphi}^{j-1'}$, jeweils zu einem Zeitpunkt und von weiteren Messwerten, bestimmt. Dabei sind die Orte $x'_i$ die, bezogen auf $x_i$, vorherigen Anbindungsstellen in $TP$. In einer Ausführungsform werden so die entstehenden Übertragungsverluste mitberücksichtigt und die Prognosen werden für elektrische Übertragungsnetze auf Basis der Modelle der Elektromagnetischen Wechselwirkung berechnet.

In einer Ausführungsform, bei der die von einer Quelle maximal zur Einspeisung zur Verfügung gestellte Leistung auf verschiedenen Transportpfaden, die die Quelle mit unterschiedlichen Senken $S_i$ zur Übertragung verschiedener Energiepakete verbinden, übertragen wird, bestimmt sich die Funktion für die einzelnen Transportpfade als das Produkt von $p_{RT}(x_0, t_k^{000})$ mit dem Quotienten der nominellen Leistung der einzelnen Bedarfsdatenpakete der Senken oder der Energiepakete mit der nominellen Leistung des Bedarfsdatenpakets der Quelle.

In einer Ausführungsform, in der die Quelle regenerativ ist, wird $p_{RT}(x_0, t_k^{000})$ mit einer ausgezeichneten Echtzeitprognosefunktion $\widetilde{\mathcal{EP}}_{Ein}$ für eine regenerative Quelle, mit vernachlässigbarer Prognoseunsicherheit, die auf die entsprechenden Zeitreihen der Perimeter- und Netzwerkmesswerte sowie die Prognoseergebnisse der zuvor bestimmten Einspeiseprognose $\mathcal{P}_{Ein}$ angewendet wird, für alle $t$ aus $T_{RT}$, $p_{RT}(x_0, t_k^{000})$ bestimmt, sodass

$$p_{RT}\left(x_0, t_k^{\circ\circ\circ}\right) = \widetilde{\mathcal{EP}}_{Ein}\left(x_0;\, r_1, \ldots, r_l;\, t_k^{\circ\circ\circ}, pm_1(t_{k-s}^{\circ\circ\circ}), \ldots, pm_l(t_k^{\circ\circ\circ}), m(x_0, t_{k-n}^{\circ\circ\circ}), \ldots, m\left(x_0, t_k^{\circ\circ\circ}\right); \mathcal{P}_{Ein}\right)$$

gilt, wobei $p_{RT}(x_0, t_k^{000})$ für den Wert der Echtzeitprognose $\widetilde{\mathcal{EP}}_{Ein}$ für die Einspeiseleistung der Quelle am Ort $x_0$ steht und $t_k^{\circ\circ\circ}$ der dem Zeitpunkt $t$ zugeordnete Echtzeitprognosezeitpunkt ist.

Dabei sind die Eingabewerte von $\widetilde{\mathcal{EP}}_{Ein}$ die Zeitreihen der Messwerte $pm_i$ des Perimeternetzwerks an den Orten $r_1$ bis $r_l$ zu den Zeitpunkten $t_r^{\circ\circ\circ}, mit\, k - s \leq r \leq k, k, r, s \in \mathbb{N}$ und in Folge mit den Messwerten für die zurückliegenden Echtzeitprognosezeitpunkte bis zum Echtzeitprognosezeitpunkt $t_s^{000}$. Zusätzlich fließen Zeitreihen $m(x_0, t_l^{000})$, $k - n \leq l \leq k$ der in der Quelle erhobenen Messwerte sowie das Ergebnis der zuvor bestimmten Einspei-

seprognose $\mathcal{P}_{Ein}$ der Quelle als Eingangswerte in $\widetilde{\mathcal{EP}}_{Ein}$ ein.

In der bevorzugten Ausführungsform werden die zu den Zeitpunkten $t_k^{000}$ bestimmten Echtzeitpakete unmittelbar an die, für die Übertragung zuständige, Kontrollinstanz des zum Transportpfad gehörenden Transportgraphen übermittelt. In dieser bevorzugten Ausführungsform erfolgt die Übertragung des Energiepaketes *E* indem die entsprechenden, eineindeutig zugeordneten, Echtzeitpakete $E_{RT}^1, \cdots, E_{RT}^m$ übertragen werden, indem an den Orten $x_i$, *i* = 1 *bis p* der Kanten $e_i \in TP$ des gerichteten Transportpfads des gebuchten Transportgraphs, beginnend mit der Ausführungszeit, die gleich $t_1^{000} + DT_{RT}$ ist, und in Folge, zu jedem weiteren Startpunkts eines jeden Zeitraums $T_{RT}^k$, gemäß der vorher an die Kontrollinstanz übertragenen Echtzeitdatenpakete, die physikalische Leistung $p_\varphi(x_i, t)$ für alle $t \in T$ durch die Kontrollinstanz so eingestellt wird, dass diese eine Funktion, der entsprechend für t zugeordneten $T_{echt}^k$, nominellen Leistung $p_{nomRT}^{ki}$ ist, und somit $p_\varphi(x_i, t) = f(p_{nomRT}^{ki}) = Id(p_{nomRT}^{ki}) = p_{nomRT}^{ki}$, für alle $t \in T_{RT}^k$ und alle *i* und *k* gilt. Weiterhin wird die physikalische Leistung zu jedem Zeitpunkt innerhalb des Übertragungszeitraums *T* so eingestellt, dass diese die, in dem Datenpaket des Energiepakets beschriebene, Äquivalenzrelation erfüllt, und somit $p_\varphi(x_i, t) \in \{p_{nom}(t), R(t), T\}$ gilt. In dieser Ausführungsform sind jedem Energiepaket für die Übertragung die entsprechenden Echtzeitenergiepakete zugeordnet. In einer Ausführungsform werden für die simultane Übertragung von Pakten über eine Kante durch die zugeordneten Echtzeitprognosen entsprechend der globalen Orientierung die entsprechenden Vorzeichen der nominellen Leistungen $p_{nomRT}(t)$ der entsprechenden Energiepakete bestimmt.

In dieser Ausführungsform werden bei der simultanen Übertragung von Paketen über eine Kante, genannt simultane Kante, die superpositionierten Echtzeitpakete dadurch übertragen, dass für jedes Intervall $T_{RT}^k$ die nominellen Leistungen der den Energiepaketen zugeordneten Echtzeitpakete unter Berücksichtigung der Vorzeichen addiert werden und die physikalische Leistung an mindestens einem Ort x dieser simultanen Kante gleich der Summe der nominellen Leistung der Echtzeitpakete eingestellt wird.

In einer Ausführungsform wird bei einer simultanen Übertragung von Paketen $E_1, ... E_m$ über eine Kante $e_i$, die an einen Ohmknoten angebunden ist, an dem diese Pakete, entsprechend ihren Transportpfaden über unterschiedliche Kanten $e_r$ bis $e_l$ des Ohm-Knoten, die jeweils an einen QFC-Knoten angebunden sind, weitergeleitet werden, an den Orten $x_r \in e_r$ bis $x_l \in e_l$ der entsprechenden Folgekanten, die physikalische Leistung für $x_r$ bis $x_l$ durch die, durch die entsprechende Echtzeitprognose für diese Orte bestimmte, nominelle Leistung des, dem entsprechenden Paket zugeordneten Echtzeitpakets, eingestellt. Dies bedeutet für das Energiepaket $E_r$ das über die Kante $e_l$ weitergeleitet wird, dass an $x_l$ die physikalische Leistung gleich der ursprünglichen nominellen Leistung des zugeordneten Echtzeitpakets eingestellt wird, sodass

$$p_\varphi(x_l, t) = p_{RT}^{E_r}(x_l, t_k^{000}) \; \forall t \in T_{RT}^k$$

ist. In dieser Ausführungsform gilt o.B.d.A für zwei Orte $x_i$ und $x_j'$ der Transportpfade der Energiepakete E und *E'* mit den Übertragungszeiträumen *T* und *T'* mit $T'' = T \cap T' \neq \emptyset$, die über mindestens eine Kante übertragen werden, wobei $x_{i-1}$ ein Ort des Transportpfads von *E* und $x'_{j-1}$ ein Ort des Transportpfads von *E'* sind und wobei $x_{i-1} = x'_{j-1}$ ist, aber für die Folgeorte der beiden Transportgraphen $x_i \neq x_j'$ gilt, dass dann die physikalische Leistung an $x_i$ und $x'_j$ so eingestellt wird, dass $p_\varphi(x_i, t) = p_{nomRT}^E(x_i, t_k^{000}) \; \forall \; t \in T`$ *und* $t_k^{000} \in T_{RT}^k$ und $p_\varphi(x`_j, t) = p_{nomRT}^{E'}(x`_j, t_k^{`000})$, $\forall \; t \in T'$ und $t_k^{`000} \in T_{RT}^{`k}$ gilt. Dabei ist $p_{nomRT}^E(x_i, t_k^{000})$ der Wert der nominellen Leistung, am Ort $x_i$ für *t* aus *T*, des dem Energiepaket *E* zugeordneten, Echtzeitpaket. Entsprechendes gilt für $p_{nomRT}^{E'}(x`_j, t_k^{`000})$.

In einer Ausführungsform werden bei der Übertragung eines Energiepakets über den zugeordneten Transportpfad die Abtastrate für die Leistungsmessungen an der Quelle 6.000 und an den Orten des Übertragungspfads und die Dauer $DT_{RT}$, so gewählt, dass die Varianz der Echtzeitprognose vernachlässigbar ist, und die physikalische Leistung an den Orten $x_1$ bis $x_{s-p}$, wobei $x_1$ die Anbindungsstelle der Einspeisekante 5.820 an den Einspeise-QFC 2.800 und $x_p$ die Anbindungsstelle der Bedarfskante 5.920 an den Bedarfs-QFC 2.900 ist, wird mit herkömmlicher Regelungstechnik gemäß den nominellen Leistungen der entsprechenden Echtzeitpakete eingestellt.

In dieser Ausführungsform wird die physikalische Leistung so geregelt, dass sie an jedem dieser Orte x und für jeden Zeitpunkt *t* aus dem Übertragungszeitraum des Energiepakets die Summe aus der nominellen Leistung des Energiepakets und dem Rest nicht übersteigt.

In dieser Ausführungsform erfolgt, wenn in einem der QFC-Knoten, die die Leistung einstellen, eine Fehlleistung eingespeist wird, das heißt die eingespeiste physikalische Leistung für ein $T_{Echt}^k$ kleiner ist als die Differenz der nominellen Leistung und des Rests des Energiepakets, ein Re-Routing, das heißt es wird eine andere Quelle bestimmt, die den Bedarf der Senke deckt, oder es erfolgt ein Abbruch der Übertragung und eine Störungsmeldung.

In einer anderen Ausführungsform wird die physikalische Leistung an den Orten der Kanten des Transportgraphs auf Basis der Zeitreihen der Leistungsmessungen, die mit der notwendige Abtastrate, an den Messstellen des Transportgraphs erfasst wurden, mit Methoden der künstlichen Intelligenz, z. B. Deep Learning Networks, entsprechend der nominellen Leistungen der, dem Energiepaket zugeordneten, Echtzeitdatenpakete eingestellt.

In einer Ausführungsform mit den Schritten, in denen für den Echtzeitprognosezeitraum $T_{RT}$, für jeden Echtzeitprognosezeitraum $T_{RT}$, der ein Teil der Überdeckung des Übertragungszeitraums durch Echtzeitprognosezeiträume ist und für jeden Zeitpunkt (t) innerhalb des jeweiligen Echtzeitprognosezeitraums $T_{RT}$

OO) für jeden Einspeiseknoten $K_{Qi}$, an den über einen gebuchten Transportpfad des gebuchten, um Kompensation erweiterten Transportgraphen eine Quelle $Q_i$ angebunden ist, wobei die Quelle $Q_i$ zur Deckung des Bedarfs der Senke $S$ gebucht ist, Bestimmen einer von der Quelle über die Kante des Transportpfades, über den der Bedarfsknoten $K_S$ der Senke $S$ angebunden ist, eingespeisten Leistung an mindestens einem Ort $x$ dieser Kante mit einer Echtzeiteinspeiseprognose,

PP) Bestimmen der Differenz $\delta(t)$ zwischen der Summe der in alle gebuchten Transportpfade, die alle Quellen $Q_i$ mit der Senke $S$ verbinden, eingespeisten physikalischen Leistungen aus den Echtzeiteinspeiseprognosen und der von der Senke $S$, die über die Bedarfskante an den Bedarfsknoten $K_S$ angebunden ist, entnommenen physikalischen Leistung an einem Ort $x$ der Bedarfskante aus der Echtzeitbedarfsprognose,

QQ) für jeden Zeitpunkt $t$ innerhalb des Echtzeitprognosezeitraums $T_{RT}$ Bilden einer maximalen Gesamtkompensationsleistung $C(t)$ als Summe aller maximalen Kompensationsleistungen $C_i(t)$ aller gebuchten Quellen $Q_i$ und der Senke $S$ und für jeden gebuchten Kompensationsknoten $K_{SASi}$, Bestimmen eines Quotienten $\gamma_i(t)$ aus der maximalen Kompensationsleistung $C_i(t)$ des jeweiligen Kompensationsknotens $K_{SASi}$ und der maximalen Gesamtkompensationsleistung $C(t)$,

RR) Bestimmen von Echtzeitkompensationspaketen zur Übertragung auf dem Kompensationsgraphen als Teilgraph des gebuchten erweiterten Transportgraphen, die die Kompensationsknoten $K_{SASi}$ und die Senke $S$ verbinden, indem für jeden Kompensationspfad des gebuchten Kompensationsgraphen, der einen Kompensationsknoten $K_{SASi}$ mit der Senke verbindet, in den dazugehörigen Echtzeitkompensationsdatenpaketen die nominelle Leistung $p_{nomKomRT}(x,t)$ für mindestens einen Ort $x$ jeder Kante des jeweiligen Kompensationspfads eine Funktion des Produkts der in Schritt PP) bestimmten Differenz $\delta(t)$ mit dem Quotienten $\gamma_i(t)$, aber nur maximal bis zu dem Wert der maximalen Kompensationsleistung $C_i(t)$ ist, und der Rest $R(t)$ konstant gleich null gesetzt werden, wobei dann, wenn das Produkt $\gamma_i(t) \cdot \delta(t)$ negativ ist, dieses um den durch eine Echtzeitprognose für einen Ort $x$ der Kante des Kompensationspfades, über den der Bedarfsknoten $K_S$ an den Kompensationsknoten $K_{SASi}$ angebunden ist, bestimmten Betrag zum Ausgleich der bei der Übertragung von dem Kompensationsknoten zu der entsprechenden Senke $S$ anfallenden Verluste erhöht wird,

SS) Übermitteln der Echtzeitkompensationsdatenpakete an die Kontrollinstanzen und

TT) Übertragen der Echtzeitkompensationspakete, indem zu jedem Zeitpunkt $t$ innerhalb des Übertragungszeitraums $T$ an mindestens einem Ort $x$ auf den Kanten der Kompensationspfade die physikalische Leistung $p_\varphi(x,t)$ so eingestellt wird, dass diese gleich der nominellen Leistung $p_{nomKomRT}(x,t)$ der Echtzeitkompensationspakete für diesen Ort $x$ ist, und gleichzeitig zu jedem Zeitpunkt $t$ innerhalb des Übertragungszeitraums $T$ die physikalischen Leistungen $p_\varphi(x,t)$ so eingestellt werden, dass diese gleich der nominellen Leistungen der Echtzeitenergiepakete $p_{nomRT}(x,t)$ an den zuvor durch die in den Echtzeitprognosen gewählten Orten $x$ auf dem Transportgraphen sind, sodass die physikalische Leistung $p_\varphi(x,t)$ an einem durch die Echtzeitprognose für den Bedarf gewählten Orts $x$ auf der Bedarfskante gleich der Summe der nominellen Leistungen der Energiepakete, die von den Einspeiseknoten $K_{Qi}$ an den Bedarfsknoten $K_S$ übertragen werden, plus der Kompensationsleistung $\delta(t)$ ist, wobei die Kompensationsleistung $\delta(t)$ gleich der Differenz zwischen der physikalischen Leistung $p_\varphi(x,t)$ der von der Senke gemäß der Echtzeitbedarfsprognose entnommenen Leistung und der Summe der nominellen Leistungen der an die Senke $S$ übertragenen Energiepakete ist.

In einer Ausführungsform löst die Erfindung die vorangestellte Aufgabenstellung der Einstellung der entsprechenden physikalischen Leistungen zur Übertragungszeit für den Fall, das nur ein Energiepaket $E$, mit der Leistungsklasse $\{p_{nom}(t),R(t),T\}$, von einer Quelle $Q$ über einen Transportpfad $TP(E,Q,S,T)$, im Folgenden mit $TP$ an eine Senke $S$ übertragen wird und das Energiepaket $E = E_D \oplus E_v$ mit $E_D = E_B$ ist, und der Bedarfsknoten $K_{S_{x_{p+1}}}$ über einen Kompensationspfad $KP\left(K_{SAS}, K_{S_{x_{p+1}}}\right)$ mit einem einzigen Kompensationsknoten $K_{SAS}$ verbunden ist, über den die entsprechenden Kompensationspakete übertragen werden, mit den folgenden Schritten. Dabei bezeichnet $S_{xp+1}$ eine Senke am Ort $x_{p+1}$ des Übertragungsnetzwerks und $K_{S_{xp+1}}$ bezeichnet den entsprechenden, über einen Kompensationspfad an die Senke $S_{xp+1}$ angebundenen, Kompensationsknoten. An dem Ort $x_p$ des Transportgraphen, als Teilgraph des entsprechend optimiert bestimmten, um die Kompensation erweiterten, Transportgraphen, das ist die Anbindungsstelle der Bedarfskante 5.920 an den Bedarfs-QFC 2.900, wobei diese Bedarfskante mit ihrem anderem Ende mit der Senke verbunden ist, wird durch Echtzeitprognosen $\mathcal{EP}(x_p, t_k^{000})$ zu den Zeitpunkten $t_k^{000}$ für die Zeiträume $T_{RT}^k$ die nominellen Leistung $p_{nomRT}^{Ein}(x_p, t_i^{\circ\circ\circ})$ der Echtzeitpakete an $x_p$ bei der Übertragung des Energiepakets $E$, die durch diese Übertragung in die Bedarfskante eingespeist werden, bestimmt. Gleichzeitig werden zu den Zeitpunkten $t_k^{000}$ durch Echtzeitprognosen die nominellen Leistung $p_{nomRT}^{Bed}(x_n, t_k^{0000})$ der Echtzeitbedarfspakete für die Bedarfsleistung der Senke am Ort $x_p$ für die Zeiträume $T_{RT}^k$ bestimmt. Dies erfolgt dadurch, dass $p_{nomRT}^{Bed}(x_p, t_k^{000})$ als Funktion der Echtzeitprognose $f(\mathcal{EP}_{Bed}(x_{p+1}, , t_k^{000}))$ für den Bedarf der Senke $S$ am Ort $x_{p+1}$ bestimmt wird, wobei $f(\mathcal{EP}_{Bed}(x_{p+1}, , t_k^{000}))$ auch die Übertragungsverluste von $x_p$ an $x_{p+1}$ den Ort der Senke beinhaltet. Als nächster Schritt in dieser Ausführungsform werden die Differenzen

$$\delta(t_k^{000}) = p_{nomRT}^{Ein}(x_p, t_k^{000}) - p_{nomRT}^{Bed}(x_p, t_k^{000})$$

bestimmt und die beiden Fälle $\delta(t_k^{000}) < 0$, die Unterdeckung $|\delta(t_k^{000})| = \delta_k^+$ und $\delta(t_k^{\circ\circ\circ}) > 0$, die Überdeckung $\delta(t_k^{000}) = \delta_k^-$ behandelt. Dabei gilt $\delta_k^- > 0$ sowie $\delta_k^+ > 0$. Zur Erinnerungen die Vorzeichen in den Exponenten sind entsprechend der daraus folgenden Übertragungsrichtungen gemäß der Vorzeichenregeln für einen Ohmknoten, wie es der Bedarfsknoten ist, gewählt. Ist $\delta(t_k^{000}) < 0$, Unterdeckung, dann werden entsprechend für alle $t_k^{000}$ zum Ausgleich entstehender Übertragungsverluste $v(t_k^{000})$ bestimmt. Dabei ist $v(t_k^{000}) = v_k^+$ der Wert einer Echtzeitprognosen für einen Verlust der, bei der Übertragung von $\delta_k^+$ über den Kompensationspfad $KP\left(K_{SAS}, K_{S_{x_{p+1}}}\right)$ entstehen würde. In dieser Ausführungsform wird dann für alle t aus $T_{RT}^k$ am Ort $x_{K_{SAS}}^{KP}$, das ist die Anbindungsstelle des Kompensationspfads an den QFC, der über eine Kante mit dem Kompensationsknoten $K_{SAS}$ angebunden ist, die physikalische Leistung an $x_{K_{SAS}}^{KP}$ eingestellt. Dies erfolgt dadurch, dass, die physikalische Leistung, die der Kompensationsknoten in den Kompensationspfad am Ort $x_{K_{SAS}}^{KP'}$ der Anbindungskante von $K_{SAS}$ an den Kompensationspfad einspeist, so eingestellt wird, dass $p_\varphi(x_{K_{SAS}}^{KP}, t) = (\delta_k^+ + v_k^+) \in \{0, (C'(t), T_{echt}^k\} \forall t \in T_{RT}^k$ gilt. Wobei $v_k^+$ entsprechend der Richtung ein positives Vorzeichen hat, und somit am Ort $x_p$ der Bedarfskante, die an die Senke angebunden ist, die physikalische Leistung zu

$$p_\varphi(x_p, t) = p_{nomRT}^{Ein}\left(x_p, t_k^{000}\right) + \delta_k^+ = p_{nomRT}^{Bed}(x_p, t_k^{000})$$

eingestellt wird. Dabei ist $C(t)$ die maximale Kompensationsleistung die der Kompensationsknoten $K_{SAS}$ aufnehmen kann und $C'(t) = C(t) + v_{Exakt}(C(t))$, wobei $v_{Exakt}(C(t))$ der exakt berechnete Verlust bei der Übertragung von $C(t)$ über $KP\left(K_{SAS}, K_{S_{x_{p+1}}}\right)$ mit positivem Vorzeichen ist. Durch entsprechende Echtzeitprognosen

$$\mathcal{EP}(p_\varphi\left(x_{K_{SAS}}, t\right), x_r^{KP}, t_k^{000}))$$

wird auf Basis des zuvor bestimmten $p_\varphi\left(x^{KP}_{K_{SAS}},t\right) = \left(\delta^+_k + v^+_k\right)$ für die Orte $x^{KP}_r$ der Kanten $e^{KP}_r$ des Kompensationspfads $KP\left(K_{SAS}, K_{S_{x_{p+1}}}\right)$, dort die nominellen Leistungen der Echtzeitkompensationspakete zu

$$p_{nomRT}(x^{KP}_r, t^{000}_k) = \mathcal{EP}(p_\varphi\left(x^{KP}_{K_{SAS}},t\right), x^{KP}_r, t^{\circ\circ\circ}_k) \in \left\{0, C'(t), T^k_{echt}\right\} \forall t \in T^k_{RT}$$

bestimmt. Klarerweise muss $p_{nomRT}(x^{KP}_r, t^{000}_k) = p_\varphi\left(x^{KP}_{K_{SAS}},t\right)$ für $x^{KP}_r = x^{KP}_{K_{SAS}}$ gelten.

In dieser Ausführungsform wird für den Fall das $\delta\left(t^{\circ\circ\circ}_k\right) > 0$ ist, die physikalische Leistung an dem Ort $x^{KP}_{K_S}$, das ist die Anbindungsstelle des Kompensationspfads $KP\left(K_{SAS}, K_{S_{x_{p+1}}}\right)$ mit dem QFC, der über eine Kante des Kompensationspfads mit dem Senken-Knoten $K_{S_{x_{p+1}}}$ verbunden ist, so eingestellt, dass $p_\varphi\left(x^{KP}_{K_S},t\right) = \delta^-_k \in \{0, C(t), T^k_{RT}\} \forall t \in T^i_{RT}$ ist und an $x_p$ die physikalische Leistung, unter Beachtung der Vorzeichenregeln des Ohmknotens $K_S$, zu

$$p_\varphi(x_p,t) = (p_{nomRT}\left(x_p, t^{000}_k\right) - \delta^-_k) \in \{p_{nom}(t), R(t), T^k_{RT}\}, \forall t \in T^k_{RT}$$

eingestellt wird. Entsprechend wie für den Fall $\delta(t^{000}_k) < 0$ werden durch Echtzeitprognosen auf Basis von $p_\varphi\left(x^{KP}_{K_S},t\right)$ die nominellen Leistungen der Echtzeitpakete an den Orten der Kanten des Kompensationspfads $KP\left(K_{SAS}, K_{S_{x_{p+1}}}\right)$ bestimmt.

In einer Ausführungsform wird zu jedem Zeitpunkt t innerhalb des Übertragungszeitraums $T$ die physikalischen Leistungen $p_\varphi(x_i,t)$ an den Orten $x_i \in e_i$ auf dem Transportgraphen bis zum Bedarfsknoten $K_S$ gleich $p_{nomRT}\left(x_i, t^{\circ\circ\circ}_k\right)$ sowie an den Orten $x^{KP}_r$ des Kompensationspfads wird die physikalische Leistung $p_\varphi\left(x^{KP}_r,t\right)$ gleich der entsprechenden nominellen Leistung der Echtzeitkompensationspakete eingestellt, sodass die physikalische Leistung $p_\varphi(x_p,t)$ an dem durch die Echtzeitprognose für den Bedarf gewählten Orts $x_p$ auf der Bedarfskante gleich der Summe der nominellen Leistungen $p_{nomi}(t)$ der Energiepakete $E_i$, die von den Einspeiseknoten $K_{Qi}$ an den Bedarfsknoten $K_S$ übertragen werden, plus der Kompensationsleistung $\delta'(t)$ ist, wobei die Kompensationsleistung $\delta'(t)$ gleich der Differenz zwischen der physikalischen Leistung der von der Senke gemäß der Echtzeitbedarfsprognose entnommenen Leistung und der Summe der nominellen Leistungen der an die Senke S übertragenen Energiepakete ist.

Durch eine Rechnung folgt eine äquivalente Einstellung der physikalischen Leistung mittels einer Kompensationsleistung $\delta'(t)$, so dass

$$p_\varphi(x_p,t) = p_{nomRT}\left(x_p, t^{\circ\circ\circ}_k\right) + \delta(t^{\circ\circ\circ}_k) = p_{nom}(t) + \delta'(t), \text{ gilt indem } \delta'(t)$$

zu

$$\delta'(t) = p_{nomRT}\left(x_p, t^{\circ\circ\circ}_k\right) - p_{nom}(t) + \delta(t^{\circ\circ\circ}_k)$$

gesetzt wird.

In dieser Ausführungsform werden unmittelbar nach den entsprechenden Echtzeitprognosen die entsprechenden Echtzeitdatenpakete mit den durch diese Echtzeitprognosen bestimmten nominellen Leistungen gebildet und an die Kontrollinstanz übermittelt. Zur Ausführungszeit werden dann auf Basis des Energiedatenpakets von $E$ und der, $E$ zugeordneten, Echtzeitdatenpakete und der Kompensationsechtzeitdatenpakete durch die Kontrollinstanz die entsprechenden physikalischen Leistungen an den entsprechenden Orten eingestellt.

In einer Ausführungsform in der für eine Senke $S_{x_{p+1}}$, am Ort $x_{p+1}$, zur Deckung des Bedarfsenergiepakets $E_B$, mit der Leistungsklasse $\{p_{nom}(t), R(t), T\}$, in einem Übertragungszeitraum $T$, und zur Kompensation ein erweiterten Transportgraphen

$$ETG\left(TP_1\left(E_1,Q_{x01},S_{x_{p+1}}\right),...TP_n(E_n,Q_{x0n},S_{x_{p+1}}),; KP_1\left(K_{SAS_1},S_{x_{p+1}}\right),...,KP_m\left(K_{SAS_m},S_{x_{p+1}}\right)\right)$$

gebucht ist, erfolgt die Einstellung der entsprechenden physikalischen Leistungen entsprechend der nachfolgenden Schritte. Gemäß der Buchung werden über die Transportpfade $TP_l(E_l,Q_{x0l},S_{xp+1}T)$ von $ETG$ die Energiepakete $E_1$ bis $E_m$ mit den Leistungsklassen $\{p_{nom}^l(t),R_i(t),T_i\}$ und $E_B = \oplus E_{Dl}$ sowie $T = \cup T_l$, zur Übertragungszeit an die Senke $S_{xp+1}$ übertragen. Dabei ist $E_{Dl}$ das Deckungspaket des Energiepakets $E_l$. Gleichzeitig werden, je nach Übertragungsrichtung, in Abhängigkeit einer Unter- oder eine Überdeckung, Kompensationsenergiepakete $KE_j$, $j$ = 1 bis m, entweder mit den Leistungsklassen $\{0,Cj'(t),T\}$ oder mit $\{0,C_j(t),T\}$ über die Kompensationspfade $KP_j\left(K_{SAS_j},K_{S_{x_{p+1}}}\right)$ übertragen. Wobei die Kompensationsknoten $K_{SAS_j}$ jeweils eine physikalische Leistung bis zur maximalen Kompensationsleistung $C_j$ aufnehmen können oder jeweils eine maximal physikalische Leistung bis eine maximalen, um eine Verlustleistung erhöhte Kompensationsleistung $C'_j(t) = C_j(t) + v_{cj}(t)$ abgeben können. Dabei sind die $v_{cj}(t)$ die jeweiligen, durch entsprechende Echtzeitprognosen bestimmten, Verluste die jeweils bei der Übertragung von $C(t)$ über den Kompensationsgraph $KP_j\left(K_{SAS_j},K_{S_{x_{p+1}}}\right)$ entstehen. In dieser Ausführungsform ist die maximale Gesamtkompensationsleistung $C(t)$ die Summe $\sum C_j(t)$ der maximalen Kompensationsleistungen $C_j$ der gebuchten Kompensationsknoten mit $C(t) = \sum C_j(t)$ und der Quotient $\gamma_j(t) = \frac{C_j(t)}{C(t)}$ bestimmt den Anteil jedes Kompensationsknotens zur Gesamtkompensation $C(t)$. In dieser Ausführungsform werden dann die Kompensationsenergiepakete $KE_j$ übertragen, sodass für alle $t$ aus $T$ auf der Bedarfskante 5.920 am Ort $x_p$ die physikalische Leistung zu $p_\varphi(t) = p_{nom}(t) + \delta(t)$ eingestellt wird, wobei $\delta(t)$ eine Kompensationsleistung ist.

In einer Ausführungsform erfolgt die Echtzeitprognose zur Bestimmung der superpositionierten nominelle Leistung der gleichzeitig in die Bedarfskante 5.920, die den Bedarfs-QFC mit der Senke $S_{xp+1}$, verbindet eingespeisten und an die Senke übertragenen Energiepaket $E_l$ mit $l$ = 1 bis m am Ort $x_p$ durch $p_{nomRT}(x_p,t_k^{000}) = \sum_{l=1}^m p_{nomRT}^l(x_p,t_k^{000})$, dabei bezeichnet $p_{nomRT}^l(x_p,t_k^{000})$ die, durch Echtzeitprognose bestimmte, nominelle Leistung, des zu $E_l$ zugeordneten, Echtzeitpakets am Ort $x_p$ der Bedarfskante 5.920. In dieser Ausführungsform haben alle Transportpfade $TP(E_i, Q_i, S_{xp+1},T)$ über die, die Energiepakete, an die Senke übertragen werden die Bedarfskante 5.920 gemeinsam. Dann wird in dieser Ausführungsform die Differenz

$$\delta(t_k^{°°°}):= \delta(x_p,t_k^{000}) = (p_{nomRT}^{Ein}(x_p,t_k^{000}) - p_{nomRt}^{Bedarf}(x_p,t_k^{000}))$$

bestimmt und die Fälle der Unterdeckung, $\delta(t_k^{000}) < 0$, oder der Überdeckung, $\delta(t_k^{000}) > 0$, betrachtet. Zur Verdeutlichung haben wir $p_{nomRT}(x_p,t_k^{000})$ mit $p_{nomRT}^{Ein}(x_p,t_k^{000})$ bezeichnet.

In dieser Ausführungsform werden für den Fall $\delta(t_k^{°°°}) < 0$ zur Kompensation der Unterdeckung von $|\delta(t_k^{°°°})| = \delta_k^+$ Echtzeitkompensationspakete über die Kompensationspfade $KP_j\left(K_{SAS_j},K_{S_{x_{p+1}}}\right)$ übertragen, indem am Ort $x_{K_{SAS_j}}$ die physikalische Leistung $p_\varphi\left(x_{K_{SAS_j}},t\right)$ mit der entsprechenden Flussrichtung so eingestellt wird, dass gemäß der Abbildung $t \to T_{echt}^k$

$$p_\varphi\left(x_{K_{SAS_j}},t\right) = \left(\delta_{kj}^+ + v_j(t_k^{°°°})\right) \in \{0;\ C'_j(t) = (C_j(t) + v(C_j(t));\ T_{echt}^k\} \forall t \in T_{echt}^k$$

gilt, mit $\delta_{kj}^{+} = \left|\delta\left(x_{K_{SAS_j}}, t_k^{\circ\circ\circ}\right)\right| = \left|\gamma_j\left(t_k^{\circ\circ}\right) \cdot \delta\left(t_k^{\circ\circ}\right)\right|$. Dabei sind $v_j\left(t_k^{\circ\circ\circ}\right)$ die Echtzeitprognosen der jeweiligen Über-

tragungsverluste von $\delta_{kj}^{+}$ über den Kompensationspfad $KP_j\left(K_{SAS_J}, K_{S_{x_{p+1}}}\right)$. Des Weiteren gilt, dass die, durch die Echtzeitkompensationspakete, übertragenen Leistungen, am Ort $x_p$ der Bedarfskante 5.920 zu

$$\delta_k^{+} = \sum \delta_{kj}^{+}$$

superpositionieren und somit, entsprechend der Vorzeichenregeln für Ohmknoten, am Ort $x_p$ der Bedarfskante 5.920, die physikalische Leistung zu

$$p_\varphi(x_p, t) = \left(\sum p_{nomRT_l}^{ein}\left(x_p, t_k^{\circ\circ\circ}\right) + \delta_k^{+}\right) \in \{p_{nom}(t), R(t), T_{RT}^k\} \, \forall t \in T_{RT}^k$$

eingestellt wird. Dabei ist $\sum p_{nomRT_l}^{ein}\left(x_p, t_k^{\circ\circ\circ}\right)$ die nominelle Leistung der superpositionierte nominellen Leistungen der, den Energiepaketen $E_l$ zugeordneten, Echtzeitenergiepaketen.

In dieser Ausführungsform gilt $\delta_{kj}^{+} \leq C'_j(t) \, \forall \, t \in T_{RT}^k$.

Für den Fall der Überdeckung d. h. $\delta(t) > 0$ wird an den Orten $\widehat{x_j}$ der Anbindungskanten der Kompensationspfade $KP_j\left(K_{SAS_J}, K_{S_{x_{p+1}}}\right)$ an den Bedarfsknoten $K_{S_{x_{p+1}}}$ die die physikalische Leistung $p_\varphi(\widehat{x_j}, t)$ mit der entsprechenden Flussrichtung so eingestellt, dass gemäß der Abbildung $t \to T_{echt}^k$ und $\delta_{kj}^{-} = \gamma_i \cdot \delta(t_k^{000})$

$$p_\varphi(\widehat{x_j}, t) = \delta_{kj}^{-} \in \left\{0, C_j(t), T_{RT}^k\right\} \forall t \in T_{RT}^k$$

Ist. Weiterhin wird die physikalische Leistung an $x_p$, entsprechend der Vorzeichenregeln für Ohmknoten, so eingestellt, dass

$$p_\varphi(x_p, t) = \sum p_{nomRT_l}^{ein}\left(x_p, t_k^{\circ\circ\circ}\right) - \delta_{kj}^{-}\right) \in \{p_{nom}(t), R(t), T_{RT}^k\} \forall t \in T_{RT}^k$$

und $\delta_{kj}^{-} \leq C_j(t) \, \forall \, t \in T_{RT}^k$ gilt. In dieser Ausführungsform wird somit die physikalische Leistung $p_\varphi\left(x_p, t_k^{000}\right)$ am Ort $x_p$ auf Basis der Echtzeitprognosen so eingestellt, dass

$$p_\varphi(x_p, t) = \sum_{i=1}^{n} p_{nom}^{E_i}(t) + \delta'(t)$$

gilt. Zur Klarheit haben wir die nominelle Leistung der Energiepakete mit $p_{nom}^{E_l}$ und die nominellen Leistungen der zu zugeordneten Echtzeitpakete mit $p_{nomRT}^l$, sowie in der Folge die nominelle Leistung des zu deckenden Bedarfsdatenpaket mit $p_{nom}^E$ bezeichnet. Die Kompensationsleistung $\delta'(t)$ wird für alle t aus T dadurch bestimmt, indem jedem t das entsprechende $T_{echt}^k$ und dem dazu gehörigen $t_k^{000}$ gewählt wird und dann $\delta'(t)$ entsprechend durch

$$\delta'(t) = \sum_{i=1}^{n} p_{nomRt}^i\left(t_k^{\circ\circ\circ}\right) - \sum_{i=1}^{n} p_{nom}^{E_i}(t) + \sum_{j=1}^{m} \delta_j\left(t_k^{\circ\circ\circ}\right)$$

mittels der durch Echtzeitpakete bestimmten nominellen Leistungen der zu $E_l$ assoziierten Echtzeitpakete und den nominellen Leistungen $\delta_j(t_k^{000})$ der entsprechenden Kompensationsechtzeitpakete bestimmt wird. Entsprechend werden dann analog wie bei dem einfachen Fall nur eines Kompensationsknotens dann mittels Echtzeitprognosen die nominellen Leistungen der Echtzeitkompensationspakte an den Orten der Kompensationsgraphen bestimmt. Gleichermaßen ergibt sich das die physikalische Leistung an $x_p$ so eingestellt wird, dass diese gleich der Summe der nominellen Leistungen $p_{nomi}(t)$ der Energiepakete $E_i$, die von den Einspeiseknoten $K_{Qi}$ an den Bedarfsknoten $K_S$ übertragen werden, plus der Kompensationsleistung $\delta'(t)$ ist, wobei die Kompensationsleistung $\delta'(t)$ gleich der Differenz zwischen der physikalischen Leistung der von der Senke gemäß der Echtzeitbedarfsprognose entnommenen Leistung und der Summe der nominellen Leistungen der an die Senke $S$ übertragenen Energiepakete ist.

In dieser Ausführungsform werden unmittelbar nach den entsprechenden Echtzeitprognosen die entsprechenden, den Energiepaketen zugeordneten Echtzeitdatenpakete und Kompensationsechtzeitdatenpaketen, mit den, durch diese Echtzeitprognosen bestimmten, nominellen Leistungen gebildet und an die Kontrollinstanz übermittelt.

Zur Ausführungszeit werden dann auf Basis der Energiedatenpakete von $E_l$ und der, $E_l$ zugeordneten, Echtzeitdatenpakete und der Kompensationsechtzeitdatenpakete durch die Kontrollinstanz die entsprechenden physikalischen Leistungen an den entsprechenden Orten eingestellt, , sodass an dem Ort $x_p$ der Bedarfskante

$$p_\varphi(x_p,t) = \left(\sum_{l=1}^{n} p_{nom}^{El}(t) + \delta'(t)\right) \in \{p_{nom}^{E}(x_p,t);\ R(t);\ T\}$$

ist.

In einer Ausführungsform weist die Erfindung für jeden Echtzeitprognosezeitraum $T_{RT}$, der Teil der Überdeckung des Übertragungszeitraums durch Echtzeitprognosezeiträume ist mit dem Echtzeitprognosezeitpunkt $t^{000}$ weiterhin die Schritte aufweist, für jeden Zeitpunkt (t) innerhalb des jeweiligen Echtzeitprognosezeitraums $T_{RT}$

UU) für jeden Einspeiseknoten $K_{Qi}$, an den über eine Einspeisekante eine Quelle $Q_j$ angebunden ist, wobei die Quelle $Q_j$ zur Deckung des Bedarfs der Senke $S$ gebucht ist, für jeden Zeitpunkt $t$ innerhalb des Echtzeitprognosezeitraum, Bestimmen des Anteils $\rho(t)$ der eingespeisten physikalischen Leistungen $p_\varphi(x,t)$ aus den Echtzeiteinspeiseprognosen an mindestens einem Ort $x$ der jeweiligen Einspeisekanten der durch die Äquivalenzrelation definierte Grenzen des von dem Einspeiseknoten $K_{Qi}$ an die Senke $S$ zu übertragenden Energiepaketes überschreitet oder unterschreitet,

VV) für jeden Zeitpunkt $t$ innerhalb des Echtzeitprognosezeitraums $T_{RT}$ Bilden einer maximalen Gesamtausgleichsleistung $D(t)$ als Summe aller maximalen Ausgleichsleistungen $D_i(t)$ der für die Quellen $Q_i$ gebuchten Ausgleichsknoten $K_{Ausi}$ und für jeden Ausgleichsknoten $K_{Ausi}$ Bestimmen eines Quotienten $g_i(t)$ aus der maximalen Ausgleichsleistung $D_i(t)$ des jeweiligen Ausgleichsknotens $K_{Ausi}$ und der maximalen Gesamtausgleichsleistung $D(t)$,

WW) Bestimmen von Echtzeitausgleichspaketen zur Übertragung auf allen gebuchten Ausgleichspfaden die die Ausgleichsknoten $K_{Ausi}$ und die Quelle $Q_l$ verbinden, indem in den dazugehörigen Echtzeitausgleichsdatenpaketen die nominelle Leistung $p_{nomAusRT}(x, t)$ für mindestens einen Ort $x$ jeder Kante des jeweiligen Ausgleichspfads eine Funktion des Produkts der in Schritt UU) bestimmten Abweichung $\rho(t)$ mit dem Quotienten $g_i(t)$, aber nur maximal bis zu dem Wert der maximalen Ausgleichsleistung $D_i(t)$ ist, und der Rest $R_i(t)$ konstant gleich null gesetzt wird, wobei dann, wenn das Produkt $g_i(t) \cdot \rho(t)$ negativ ist, dieses um den durch eine Echtzeitprognose für einen Ort $x$ der Kante des Ausgleichspfades, über die der Einspeiseknoten $K_{Qi}$ an den Ausgleichsknoten $K_{Ausi}$ angebunden ist, bestimmten Betrag zum Ausgleich der bei der Übertragung von dem Ausgleichsknoten zu der entsprechenden Quelle anfallenden Verluste erhöht wird,

XX) Übermitteln der Echtzeitausgleichsdatenpakete an die den Knoten auf den Ausgleichsgraphen zugeordneten Kontrollinstanzen,

YY) Übertragen der Echtzeitausgleichspakete, indem zu jedem Zeitpunkt $t$ innerhalb des Übertragungszeitraums $T$ für mindestens einen Ort $x$ auf jeder Kante des Ausgleichsgraphs die physikalische Leistung $p_\varphi(x, t)$ so eingestellt wird, dass diese gleich der nominellen Leistung $p_{nomAusRT}(x,t)$ der Echtzeitausgleichspakete für den Ort $x$ ist, und

ZZ) zu jedem Zeitpunkt $t$ innerhalb des Übertragungszeitraums $T$ Einstellen der physikalischen Leistung $p_\varphi(x,t)$ für mindestens einen Ort $x$ jeder Kante des Transportpfads, sodass die physikalische Leistung $p_\varphi(x,t)$ gleich der nominellen Leistung $p_{nomRT}(x,t)$ der Echtzeitenergiedatenpakete für den Ort $x$ ist und ein Element der Leistungsklasse des zu übertragenden Energiepakets ist.

In einer Ausführungsform in der, der um Kompensation und Ausgleich, erweiterte Transportgraph $EETG(TP(E,Q,S);\ AP(K_{Aus},Q))$ nur einen Transportpfad $TP(E,Q,S)$ zur Übertragung eines Energiepakets mit der Leistungsklasse $\{p_{nom}(t),R(t),T\}$ von der Quelle $Q$ an die Senke $S$ und einen Ausgleichpfad $AP(K_{Aus},Q)$ der die Quelle 6.000 mit dem Ausgleichsknoten $K_{Aus}$ verbindet besteht, werden die Einstellung der physikalischen Leistungen gemäß der folgenden Schritte durchgeführt. Der um Ausgleich und Kompensation erweiterte gebuchte Transportgraph *EETG* enthält beispielhaft nur einen Ausgleichsknoten $K_{Aus}$ der zu jedem Zeitpunkt *t* des Übertragungszeitraums *T* maximale eine physikalische Leistung bis zu einer maximalen um den Verlust erhöhten Ausgleichsleistung D(t) = D(t) + v(D(t)), abgeben kann. Wobei *D(t)* die maximale Ausgleichsleistung von $K_{Aus}$ und eine Funktion des Restes R(t) des Energiepakets ist. Somit verfügt $K_{Aus}$ zu jedem Zeitpunkt *t* des Übertragungszeitraums *T* über das Potential maximal eine physikalische Leistung bis zur maximalen Ausgleichsleistung *D(t)* aufnehmen zu können. Des Weiteren ist {$p_{nom}(t),R(t),T$}, die Leistungsklasse des über *EETG* übertragenen Energiepakets *E*.

In dieser Ausführungen werden, zu den passenden Echtzeitprognosezeitpunkten $t_k^{000}$ , für die Echtzeitprognosezeiträumen $T_{RT}^k$ , die den Übertragungszeitraum *T* des Energiepaketes *E* durchschnittsfrei überdecken, Echtzeitprognosen für die maximale Erzeugungsleistung $p_{RT}(x_0, t_k^{000})$ für die Quelle Q am Ort $x_0$ erstellt. Durch die Funktion $f_{ein}$ wird dann durch Echtzeitprognose die Leistung an $x_1$ bestimmt. Für das entsprechende Echtzeitpaket, gilt, dass für dessen nominelle Leistung am Ort $x_1$ der Einspeisekante 5.810

$$p_{nom}(x_1,t) = p_{nomRT}(x_1,t_k^{000}) = f_{ein}(p_{RT}(x_0,t_k^{000})),\forall t$$ aus dem jeweiligen Echtzeitprognosezeitraum $T_{echt}^k$ ist.

Der Einfachheit halber bezeichnen wir jetzt $p_{nomRT}(x_1,t_k^{000})$ mit $p_{nomRT}^{1k} := p_{nomRT}(x_1,t_k^{000})$ .

Im nächsten Schritt dieser Ausführungsform werden dann für alle $T_{RT}^k$ und jedes $t \in T_{RT}^k$ , die t E *T* betrachtet, in denen eine Überdeckung mit $p_{nomRT}^{1k} > (p_{nom}(t) + R(t))$ oder eine Unterdeckung mit $p_{nomRT}^{1k} < (p_{nom(t)} - R(t))$ vorliegt. In dieser Ausführungsform wird für alle $T_{RT}^k$ und jedes $t \in T_{RT}^k$ für die Überdeckung, $p_{nomRT}^{1k} > (p_{nom}(t) + R(t))$ ,

$$\rho^-(t) = \begin{cases} p_{nomRt}^{1k} - (p_{nom}(t) + R(t)), & p_{nomRt}^{1k} - (p_{nom}(t) + R(t)) > 0 \\ 0 & ,sonst \end{cases}$$

und für den Fall der Unterdeckung, $p_{nomRt}^{1k} < (p_{nom(t)} - R(t))$ ,

$$\rho^+(t) = \begin{cases} (p_{nom}(t) - R(t)) - p_{nomRT}^{1k}, & (p_{nom}(t) - R(t)) - p_{nomRT}^{1k} > 0 \\ 0 & ,sonst \end{cases}$$

durch die entsprechenden Echtzeitprognosen bestimmt. In einer bevorzugten Ausführungsform wird gefordert, dass für die nominelle Leistung $p_{nom}(t)$ und den Rest R(t) eines Energiepakets,

$$p_{nom}(t) = p_{nom}(t_k^{\circ\circ\circ}) \ \forall \ t \ aus \ T_{RT}^k \ und \ R(t) = R(t_k^{\circ\circ\circ}) \ \forall \ t \ aus \ T_{RT}^k$$

gilt. Das heißt sowohl die nominelle Leistung wie auch der Rest sind auf $T_{RT}^k$ konstant und somit folgt, dass $\rho^-(t) = \rho^-(t_k^{\circ\circ\circ}) = \rho_k^-$ *und* $\rho^+(t) = \rho^+(t_k^{\circ\circ\circ}) = \rho_k^+ \ \forall \ t$ *aus* $T_{RT}^k$ ist. Unmittelbar nach der durch die Echtzeitprognose bestimmten $\rho_k^-$ und $\rho_k^+$ ,werden jetzt die nominellen Leistungen für die Echtzeitausgleichspaketen, für den Fall das $\rho_k^- > 0$ ist durch

$$p_{nomRT}^{Ausgleich}(x_{in}^{Aus},t) = \rho_k^- \leq D(t) \ \forall \ t \ aus \ T_{RT}^k$$

bestimmt. Wobei $x_{in}^{Aus}$ die Anbindungsstelle des Ausgleichspfads mit dem QFC-Knoten ist, der über eine Kante des Ausgleichspfads mit dem Einspeiseknoten $K_Q$ verbunden ist. Für den Fall, dass $\rho_k^+ > 0$ ist

$$p_{nomRT}^{Ausgleich}(x_{out}^{Aus}, t) = \rho`(t_k^{°°°}) = (\rho_k^+ + v_{RT}^k) \leq D(t) + v_{RT}^k < \forall\, t \in T_{RT}^k \text{ , mit } v_{RT}^k := v_{RTt}(\rho_k^+, AP(K_{Aus}, K_Q))$$ gesetzt. Dabei bezeichnet $v_{Rt}(\rho_k^+, AP(K_{Aus}, K_Q))$ die Echtzeitprognose des Verlusts bei der Übertragung von $\rho_k^+$ über

den Ausgleichspfad $AP(K_{Aus}, K_Q)$und $x_{out}^{Aus}$ die Anbindungsstelle des Ausgleichspfads an den QFC, der über eine Kante mit dem Ausgleichsknoten $K_{Aus}$ verbunden ist. In dieser Ausführungsform werden dann die nominellen Leistungen der

Echtzeitausgleichpakete, zu $\rho`_{RT}(x_{out}^{Aus}, t_k^{°°°}) = \rho'(t_k^{°°°})$ für $\rho_k^+ > 0$ oder für $\rho_k^- > 0$ zu $\rho_{RT}(x_{in}^{Aus}, t_k^{°°°}) = \rho_k^-$ be-stimmt. Unmittelbar nach der Bestimmung der Echtzeitausgleichsdatenpakete werden diese an die Kontrollinstanz 220.000 des Daten- und Rechnernetzwerks 200.000 übermittelt. In dieser Ausführungsform, wird zur Ausführungszeit der Übertragung des Energiepakets über seinen Transportpfad, in Abhängigkeit der Übertragungsrichtung, die physikalische Leistung, gemäß der nominellen Leistung des Echtzeitausgleichspakets, so eingestellt, dass die physikalische Leistung für die Orte $x_{in}^{Aus}$ und $x_{out}^{Aus}$ des Ausgleichspfads $p_\varphi^{Aus}(x_{in}^{Aus}, t) = p_\varphi^{Aus}(x_{in}^{Aus}, t_k^{°°°}) = \rho_k^-$ bzw.

$p_\varphi^{Aus}(x_{out}^{Aus}, t_k^{°°°}) = \rho'(t_k^{°°°})\, \forall\, t$ aus $T_{RT}^k$ ist. Gleichzeitig wird entweder für $\rho_k^- > 0$ an $x_2 \in e_2$, das ist der mindestens eine Ort auf der Kante $e_2$, die den Einspeiseknoten $K_Q$ mit dem Transportpfad $TP(E, Q; S)$ verbindet, die physikalische Leistung so eingestellt, dass $\forall\, t$ aus $T_{RT}^k$ , entsprechend der Vorzeichenregeln für den Ohmknoten $K_Q$,

$$p_\varphi(x_2, t) = p_\varphi(x_2, t_k^{°°°}) = p_{nomRT}^E(x_2, t_k^{°°°}) - p_\varphi^{Aus}(x_{in}^{Aus}, t_k^{°°°}) = p_{nomRT}^E(x_2, t_k^{°°°}) - \rho_k^-$$

ist, oder für $\rho_k^+ > 0$ , wird gleichzeitig die physikalische Leistung zu

$$p_\varphi(x_2, t) = p_\varphi(x_2, t_k^{°°°}) = p_{nomRT}^E(x_2, t_k^{°°°}) + p_\varphi^{Aus}(x_{out}^{Aus}, t_k^{°°°}) = p_{nomRT}^E(x_2, t_k^{°°°}) + \rho'(t_k^{°°°})$$ eingestellt. Die nomi-nellen Leistungen für die Echtzeitausgleichspakete an den anderen Orten des Ausgleichpfads wird durch die entsprechenden Echtzeitprognosen bestimmt. Darüber hinaus werden die Leistungen so eingestellt, dass für alle $t$ aus $T\, p_\varphi(x_2, t)$

$\in \{p_{nom}(t), R(t), T\}$ und $p_\varphi(x_{out}^{Aus}, t) \in \{0, (D(t) + v(D(t))), T\}$ bzw. $p_\varphi(x_{in}^{Aus}, t) \in \{0, D(t), T\}$ ist. Dabei ist $v(D(t))$ der berechnete Verlust für die Übertragung von $D(t)$ über den Ausgleichspfad. In einer Ausführungsform sind mehrere Ausgleichsknoten $K_{Aus}^i$ , über Ausgleichspfaden $AP_i$ mit dem Einspeiseknoten $K_Q$ verbunden, und $D_i(t)$ die maximalen

Ausgleichsleistungen der Ausgleichsknoten $K_{Aus}^i$ sind. In dieser Ausführungsform gilt $D(t) = \Sigma\, D_i(t)$ und $D'(t) = \Sigma(D_i(t) + v_{Di}(t))$,wobei das Gesamtausgleichspotential $D(t)$ eine Funktion des Rests $R_E(t)$ des ensprechenden Energiepakets der betrachteten Quelle $Q$ ist. Dabei sind $v_{Di}(t))$ die durch Echtzeitprognose bestimmten Übertragungsverluste von $D_i(t)$

über die Ausgleichspfade $AP_i$. Es bleibt die Bestimmung der nominellen Leistungen $\rho_{ki}^-$ bzw. $\rho_i'(t_k^{°°°})$ für die Echtzeit-ausgleichspakete über die entsprechenden Ausgleichspfade $AP_i$ .

Diese werden durch $\rho_{ki}^- = g_i \cdot \rho_k^+$ bzw. $\rho_i`(t_k^{000}) = \rho_{ki}^+ + v_i(t_k^{°°°})$ bestimmt. Wobei $\rho_{ki}^- = g_i \cdot \rho_k^+$ und

$v_i(t_k^{°°°})$ der, durch Echtzeitprognose bestimmte, Übertragungsverlust von $\rho_{ki}^+$ über den Ausgleichgraphen $AP_i$ ist und

$g_i$ durch $g_i = \dfrac{D_i(t_k^{000})}{D(t_k^{000})}$ bestimmt ist. Die entsprechend gebildeten Echtzeitausgleichdatenpakete werden dann an die Kontrollinstanz übermittelt und zur Ausführungszeit werden an den entsprechenden Orten jeweils eine physikalische Leistung in den jeweiligen Echtzeitintervallen $T_{RT}^k$ entsprechend der Echtzeitdatenpakete einstellt, sodass diese ein Element der Leistungsklasse des zu übertragenden Energiepakets an mindestens einem Ort der Kante, die den Einspeiseknoten $K_Q$ mit dem Transportpfad $TP(E, Q, S, T)$ ist.

Ausführungsform für ein System zum gerichteten Übertragen von Energie in Form mindestens eines Energiepakets mit einem Übertragungsnetzwerk und einem Daten- und Rechnernetzwerk,

wobei das Übertragungsnetzwerk umfasst

mindestens zwei Knoten, von denen einer ein Einspeiseknoten $K_Q$ und einer ein Bedarfsknoten $K_S$ ist, mindestens eine Kante, wobei jede Kante genau zwei Knoten miteinander verbindet, mindestens einen Leistungssteller, wobei der mindestens eine Leistungssteller derart eingerichtet und angeordnet ist, dass mittels des mindestens einen Leistungsstellers für mindestens einen Ort $x$ auf jeder Kante eine tatsächlich über die jeweilige Kante fließende physikalische Leistung $p_\varphi(x,t)$ einstellbar ist, eine Mehrzahl von Quellen $Q$, wobei jede der Quellen $Q$ über eine Einspeisekante mit einem Einspeiseknoten $K_Q$ verbunden ist, und eine Mehrzahl von Senken $S$, wobei jede der Senken $S$ über eine Bedarfskante mit einem Bedarfsknoten $K_S$ verbunden ist,

wobei das Daten- und Rechnernetzwerk aufweist

mindestens einen Rechnerknoten und mindestens eine auf dem mindestens einen Rechnerknoten ausgeführte Kontrollinstanz, wobei das Daten- und Rechnernetzwerk derart ausgestaltet und mit dem mindestens einen Leistungssteller wirksam verbunden ist, dass in dem Betrieb des Systems die physikalische Leistung $p_\varphi(x,t)$ durch den mindestens einen Leistungssteller für mindestens einen Ort $x$ auf jeder Kante von der Kontrollinstanz steuerbar ist, wobei die mindestens eine Kontrollinstanz des mindestens einen Rechnerknotens derart ausgestaltet ist, dass die Kontrollinstanz in dem Betrieb des Systems ein Verfahren ausführt mit den Schritten:

A) Bilden eines Datenpaketes, wobei das Datenpaket genau einem Energiepaket eineindeutig zugeordnet ist, wobei das Datenpaket das jeweilige Energiepaket definiert und wobei das Datenpaket beschreibt

i) einen Übertragungszeitraum $T$ des Energiepakets mit einer Dauer $DT$ und einer Ausführungszeit $t_0$, die den Beginn des Übertragungszeitraums $T$ kennzeichnet, ii) einen zuvor bestimmten Transportpfad eines Transportgraphen des Übertragungsnetzwerks zur gerichteten Übertragung des Energiepakets, der mindestens eine aus der Mehrzahl von Quellen $Q$ mit genau einer aus der Mehrzahl von Senken $S$ verbindet, wobei die genau eine aus der Mehrzahl von Quellen $Q$ über genau eine Einspeisekante an einen Einspeiseknoten $K_Q$ des zuvor bestimmten Transportpfads angebunden ist und die genau eine Senke $S$ über eine Bedarfskante des zuvor bestimmten Transportpfads an den Bedarfsknoten $K_S$ angebunden ist, und iii) eine Äquivalenzklasse $\{p_{nom}(t), R(t), T\}$ des Energiepaketes,

wobei die Äquivalenzklasse $\{p_{nom}(t), R(t), T\}$ gegeben ist durch

einen durch mindestens eine Prognose zuvor bestimmten zeitlichen Verlauf einer nominellen Leistung $p_{nom}(t)$ des Energiepaketes und einen zeitlichen Verlauf eines Restes $R(t)$ als Funktion einer Prognoseunsicherheit der mindestens einen Prognose, wobei es für jeden Zeitpunkt $t$ innerhalb des Übertragungszeitraums $T$ des Energiepakets ein $\mu(t)$, mit $-1 \leq \mu(t) < 1$ oder mit $-1 < \mu(t) \leq 1$ oder mit $-1 \leq \mu(t) \leq 1$ gibt, sodass die physikalische Leistung $p_\varphi(x,t)$ bei der Übertragung des Energiepaketes zu jedem Zeitpunkt $t$ und an mindestens einem Ort $x$ auf jeder Kante des Transportpfads als Summe aus der nominellen Leistung $p_{nom}(t)$ und dem Produkt aus $\mu(t)$ und dem Rest $R(t)$ festlegt ist,

wobei die Äquivalenzklasse durch eine Äquivalenzrelation definiert ist, gemäß der für jeden Zeitpunkt $t$ des Übertragungszeitraums $T$ eine erste physikalische Leistung $p'_\varphi(\hat{x},t)$ an einem beliebigen Ort $\hat{x}$ einer Kante des Transportpfads und eine zweite physikalische Leistung $p_\varphi(x,t)$ an einem beliebigen Ort $x$ einer Kante des Transportpfads genau dann äquivalent sind, wenn es einen vorgegebenen Rest $R(t)$ größer oder gleich null und kleiner oder gleich einem Grenzwert $R_{max}$ sowie ein $\mu(t)$, mit $-1 \leq \mu(t) < 1$ oder mit $-1 < \mu(t) \leq 1$ oder mit $-1 \leq \mu(t) \leq 1$ gibt, so dass die erste physikalische Leistung $p'_\varphi(\hat{x},t)$ gleich der Summe aus der zweiten physikalischen Leistung $p_\varphi(x,t)$ und dem Produkt von $\mu(t)$ und dem Rest $R(t)$ ist,

B) vor der Ausführungszeit $t_0$ Übertragen des Datenpaketes an alle Kontrollinstanzen des Daten- und Rechnernetzwerks an denen die Leistungssteller zum Steuern der physikalischen Leistung angebunden sind, so dass alle für das Übertragen eines Energiepakets notwendigen Daten auf den Kontrollinstanzen kohärent sind, und

C) beginnend mit der Ausführungszeit $t_0$ Übertragen des dem Datenpaket eineindeutig zugeordneten Energiepaketes,

wobei für alle Zeitpunkte $t$ innerhalb des Übertragungszeitraums $T$ des Energiepakets die auf dem Transportpfad zwischen dem Einspeiseknoten $K_Q$ und dem Bedarfsknoten $K_S$ fließende physikalische Leistung $p_\varphi(x,t)$ für mindestens einen Ort $x$ jeder Kante des Transportpfads so eingestellt wird, dass die in den Bedarfskonten $K_S$ eingespeiste physikalische Leistung ein Element der von dem Datenpaket beschriebenen Äquivalenzklasse $\{p_{nom}(t), R(t), T\}$ ist.

In einer Ausführungsform ist das Daten- und Rechnernetzwerk gemäß der schematischen Darstellung der Figur 3 und der dazugehörigen Beschreibung ausgeführt.

In einer Ausführungsform ist mindestens ein Knoten des Daten- und Rechnernetzwerks 200.000 mit einem Neuromorphic Chip zur Ausführung der Prognosen gemäß der Ansprüche 3 und 9, beispielhaft durch speziell trainierte Spiking Neuronal Networks, ausgestattet. In einer weiteren Ausführungsform kann mindestens ein Knoten des Daten- und Rechnernetzwerks 200.000 als Quanten Computer zur Ausführung der Verfahren gemäß der Ansprüche 3, und 7 bis 12 ausgeführt sein.

In einer Ausführungsform bildet ein Ohmknoten, an den n-Kanten angeschlossen sind und an jeder dieser Kanten ein QFC- Knoten angeschlossen ist, einen sogenannten Quantum Grid 2.0 Router. Dabei sind die Sensoren und Stelleinrichtungen dieser n- QFC-Knoten mit dem CPS 2.500 des Ohmknotens über eine Datenanbindung verbunden. Der CPS-Knoten 2.500 des Ohmknotens übernimmt somit die Funktion der CPS-Knoten der einzelnen QFC-Knoten. Da diese nicht mehr benötigt werden können diese in den einzelnen QFC-Knoten entfallen

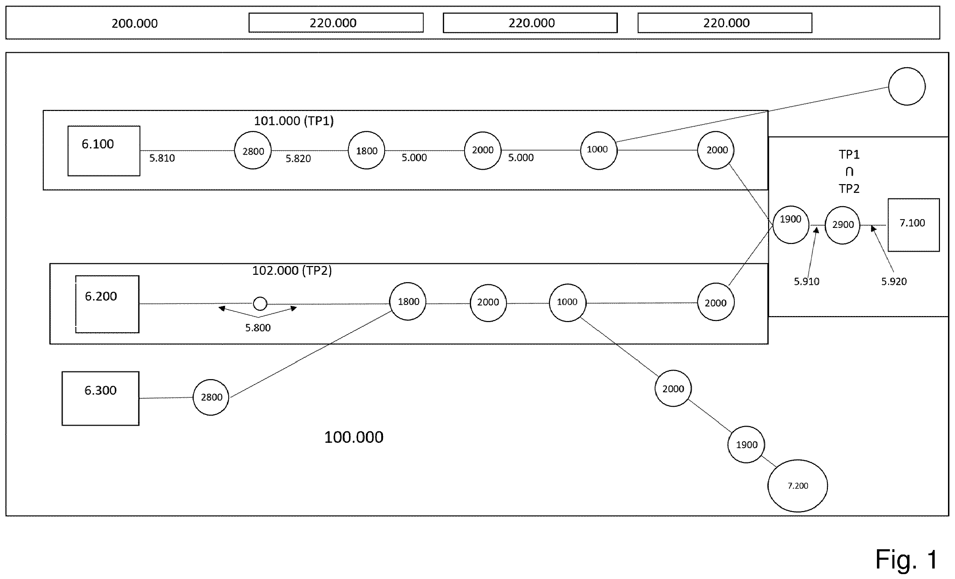

In einer Ausführungsform wird die physikalische Leistung an einem Ort $x$ einer Kante des Übertragungsnetzwerks Fig. 1 eingestellt, indem dieser Ort $x$ die Anbindungsstelle dieser Kante an einem QFC-Knoten gemäß Figur 5 eingestellt wird.

In einer Ausführungsform umfasst jeweils die Einspeisekante, als aktive Kante, den Einspeise-QFC zur Einstellung der physikalischen Leistung an mindestens einem Ort $x$ der Einspeisekante, sowie die Bedarfskante, als aktive Kante, den Bedarfs-QFC zur Einstellung der physikalischen Leistung an mindestens einem Ort x der Bedarfskante.

Soweit hier Aspekte der Erfindung im Hinblick auf das System zum gerichteten Übertragen von Energie in Form mindestens eines Energiepakets beschrieben werden, so gelten diese auch für das zuvor beschriebene entsprechende Verfahren und umgekehrt. Soweit das Verfahren mit einem System gemäß dieser Erfindung ausgeführt wird, so weist dieses System die entsprechenden Einrichtungen hierfür auf. Insbesondere sind Ausführungsformen des Systems zum Ausführen zuvor beschriebener Ausführungsformen des Verfahrens geeignet.

Insoweit die oben beschriebenen Ausführungsformen zumindest teilweise realisiert werden können, wobei eine softwaregesteuerte Datenverarbeitungsvorrichtung verwendet wird, ist es offensichtlich, dass ein Computerprogramm, das solch eine Softwaresteuerung bereitstellt und ein Speichermedium, auf welchem solch ein Computerprogramm gespeichert ist, als Aspekte der Erfindung in Betracht zu ziehen sind.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.

Figur 1    ist eine schematische Darstellung des erfindungsgemäßen Energieübertragungssystems mit einem beispielhaften Transportgraphen.

Figur 2    ist eine schematische Darstellung eines Übertragungsnetzwerks und eines um Kompensation und Ausgleich erweiterten Transportgraphs.

Figur 3    ist eine schematische Darstellung des Daten- und Rechnernetzwerks mit Kontrollinstanz.

Figur 4    ist eine schematische Darstellung eines Ohm-Knotens.

Figur 5    ist eine schematische Darstellung eines QFC-Knotens.

Figur 1 zeigt eine schematische Darstellung einer möglichen Ausführungsform des erfindungsgemäßen Systems zum gerichteten Übertragen von Energie am Beispiel eines elektrischen Versorgungsnetzwerks bestehend aus einem Übertragungsnetzwerk 100.000 und einem Daten- und Rechnernetzwerk 200.000. Die Datenverbindungen zwischen den Einspeiseknoten 1.800, Bedarfsknoten 1.900, Einspeise-, Bedarfs-QFCs, QFC-Knoten 2.000, Ohm-Knoten 1.000 und Kanten 5.000 des Übertragungsnetzwerks sowie die Datenanbindung des Daten- und Rechnernetzwerks an andere Datennetzwerke wie z. B. das Internet sind nicht ausgeführt. Des Weiteren zeigt die Figur 1 schematisch die Kontrollinstanzen, die auf den Rechnerknoten des Daten- und Rechnernetzwerks ausgeführt werden, zur Einstellung der physikalischen Leistungen an Orten der Kanten des Übertragungsnetzwerks. Die Darstellung des Übertragungsnetzwerks umfasst schematisch die Darstellung zweier Transportgraphen bestehend aus Kanten und Ohm- sowie QFC-Knoten, sodass Quellen mit einer Senke zur Übertragung von Energiepaketen verbunden werden. Ein Knoten von 100.000, an dessen Kante 5.000 von 100.000 eine Quelle 6.000 angebunden ist, wird im Sinne dieser Anmeldung als Einspeiseknoten 1.800 bezeichnet. Ein QFC 2001, siehe Figur 4, einer aktive Einspeisekante 2.800, der sowohl fest mit der Quelle 6.000 wie auch fest mit dem Einspeiseknoten 1.800 verbunden ist, wird als Einspeise-QFC 2.800 bezeichnet. Ein Knoten von 100.000, an dessen Kante 5.000 eine Senke 7.000 angebunden ist, wird im Sinne dieser Anmeldung als Bedarfsknoten 1.900 bezeichnet. Diese Kante hat die Ausführungsform einer aktiven Kante und wird als Einspeisekante bezeichnet. Der QFC 2.001 dieser Einspeisekante, die mit diesem Bedarfsknoten 1.900 und mit der Senke 7.000 verbunden ist, wird als Bedarfs-QFC 2.900 bezeichnet. In Figur 1 sind ist die Einspeisekante in der Ausführungsform einer aktiven Kante gezeigt, die die Einspeisekante 5810, die die Quelle mit dem Einspeise-QFC 2.800 und die Einspeisekante 5.820 die diesen QFC mit dem Einspeiseknoten verbindet, besteht. Dabei verfügt eine aktive Kante an ihren Endstellen jeweils über zwei Anbindungsstellen zur flexiblen Anbindung. Entsprechend ist die Bedarfskante 5.900 in der Ausführungsform als aktive Kante gezeigt, die aus der Bedarfskante 5.910, die die Senke mit dem Bedarfs-QFC 2.900 und der Bedarfskante 5.920, die diesen QFC mit dem Bedarfsknoten verbindet, besteht. Weiterhin zeigt die Figur 1 eine schematische Darstellung eines Übertragungsnetzwerks gemäß einer ersten Ausführungsform und der Darstellung von zwei Transportpfaden der vorliegenden Erfindung. Dabei kann das Übertragungsnetzwerk aus mehreren autonomen Übertragungsnetzwerken die zusammengeschlossen sind gebildet werden. Genauso kann sich analog das Daten- und Rechnernetzwerk aus autonomen, mit einander vernetzten, Daten- und Rechnernetzwerken gebildet werden. Anhand der Figur 1 wird die mögliche Übertragung eines ersten Energiepakets $E_1$ von einem Windgenerator 6.100 an einen Privathaushalt 7.100 als Senke über einen Transportpfad 101.000 und die Übertragung eines zweiten Energiepakets $E_2$ von einem Solargenerator 6.200 über einen zweiten Transportgraph 102.000 ebenfalls an den Privathaushalt 7.100 gezeigt. Dabei ist der Privathaushalt ein Prosumer, der in anderen Betriebszuständen des Übertragungsnetzwerks auch eine Quelle bilden kann. Der Transportpfad 101.000 besteht aus der Einspeisekante 5.810 die den Windgenerator 6.100 mit dem Einspeise-QFC 2.800 verbindet. Dieser ist über die Einspeisekante 5.820 mit dem Einspeiseknoten 1.800 verbunden ist. Dieser ist dann über eine Kante 5.000 mit einem QFC 2.000 verbunden, der wiederum über eine Abfolge von Kanten 5.000, die mit QFCs 2.000 und Ohm-Knoten 1.000 verbunden sind, mit dem Bedarfsknoten 1.900 verbunden. Dieser Bedarfsknoten ist dann über die Bedarfskante 5.910 mit dem Bedarfs-QFC 2.900 verbunden. Der Transportpfad 101.000 endet dann mit der Anbindung von 2.900 über 5.920 am Privathaushalt in der Rolle einer Senke 7.100 bei dieser Übertragung. Der Aufbau in einer Ausführungsform eines Ohm-Knoten 1.000 und eines QFC-Knotens 2.000 wird in den Figuren 4 und 5 gezeigt. Bei den Kanten handelt es um aktive Einspeise- und Bedarfskanten sowie um Kanten bei denen es sich um die Leitungen zur Übertragung der entsprechenden physikalischen Leistungen handelt. Im Fall eines elektrischen Übertragungsnetzes sind es elektrische Leitungen. Im Fall eines Gasnetzes sind es entsprechende Rohrleitungen.

Zur Deckung des Bedarfs von 7.100 muss in diesem Beispiel simultan noch ein zweites Energiepaket $E_2$ übertragen werden. Das Routingverfahren hat dafür den Solargenerator 6.200 und den Transportpfad 102.000 gebucht, der Transportgraph 110.000 wird aus der Vereinigung der beiden Transportpfade 101.000 und 102.000 gebildet. Der Figur 1 ist zu entnehmen, dass die beiden Transportpfade nur den Bedarfsknoten 1.900 und die Bedarfsteilkanten 5.910 und 5.920 sowie den Bedarfs-QFC 2.900 gemeinsam haben, somit besteht der Transportgraph 110.000 als Teil des Übertragungsnetzwerks 100.000 aus diesen und aus allen anderen Knoten und Kanten der beiden Transportpfade. Weiterhin zeigt die Figur 1, dass ein drittes Energiepaket von der SynBio Quelle 6.300 über einen weiteren Transportpfad $TP3$ an die Senke 7.100 übertragen wird. Dieser Transportpfad ist an den Einspeiseknoten 1.800 des Transportpfads 102.000, mit $TP2$ bezeichnet, angebunden. Das heißt, der Knoten 1.800 ist auch der Einspeiseknoten für den Transportpfad $TP3$. Der Tranportpfad $TP3$ hat somit die Strecke in $TP2$ von 1.800 bis zum Ohmknoten 1.000 mit $TP2$ gemeinsam. Der Ohmknoten 1.000 von $TP2$ ist gleichzeitig der Bedarfsknoten von $TP3$.

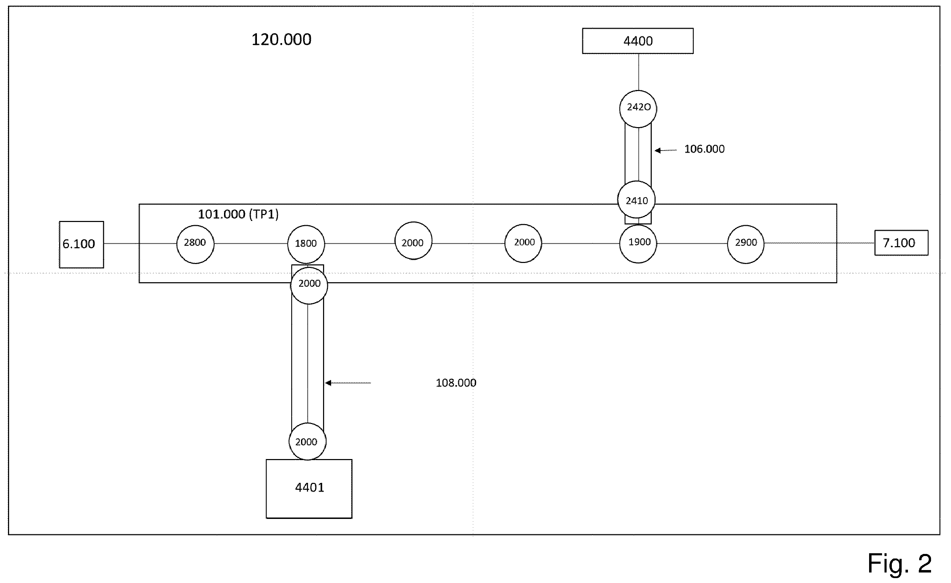

Figur 2 zeigt die Übertragung eines Paketes von einer Quelle 6.100 über einen Transportgraph 101.000 an eine Senke 7.100, wobei die Buchung sowohl eine Kompensation wie auch einen Ausgleich erfordert. Neben dem Transportpfad, der in diesem Fall identisch gleich dem Transportgraph ist, hat das Buchungsverfahren, sowohl den Kompensationsknoten 4.400, mit den durch das Energiepaket vorgegebenen Kapazitäten, wie auch den Kompensationspfad 106.000 der 4.400 mit dem Bedarfsknoten 2.900 verbunden ist, gebucht. Da auch der Ausgleich erforderlich ist, wurde durch das Routingverfahren entsprechend der Ausgleichsknoten 4.401 und der Ausgleichspfad 108.000, wobei 108.000 den Ausgleichsknoten 4.401 mit dem Einspeiseknoten 1.800 verbindet, mit den entsprechenden Kapazitäten gebucht. Der Kompensationspfad hat mit dem Transportpfad, den Bedarfsknoten und die Anbindung an die Senke und der Ausgleichspfad den Einspeiseknote und dessen Anbindung an die Quelle gemeinsam. Die Fig. 2 zeigt somit den Erweiterten Transportgraphen 120.000 mit der Kompensation und dem Ausgleich.

Die Fig. 3 zeigt den schematischen Aufbau des Daten- und Rechnernetzwerks 200.000 sowie die logischen Funktionen, die auf diesem Daten- und Rechnernetzwerk ausgeführt werden. Anhand der Figur 3 werden der Aufbau und die logischen Funktionen erläutert. Das Daten- und Rechnernetzwerk 200.000 besteht aus mit einander über ein Datennetzwerk als zumindest logischem Teilnetzwerk von 200.000 vernetzten Rechnerknoten. Diese Datenvernetzung kann über ein dezidiertes leitungs- und/oder funkbasiertes Datennetzwerk oder als virtuelles privates Netzwerk über eine Dateninfrastruktur Dritter realisiert sein. Auf jedem dieser Rechner können über einen virtuellen Router und/oder virtuelle Switche die entsprechend benötigten Datenvernetzungsfunktionen bereitgestellt werden. Des Weiteren können die Rechner von 200.000 über virtuelle Rechner zur Ausführung einer Kontrollinstanz 220.000 verfügen. Mindestens einer dieser Knoten ist ein die sogenannten CPS-Knoten 205.000, auf denen die entsprechenden Cyber Physical System (CPS) Funktionen zur Steuerung und Regelung der Leistungssteller der QFC-Knoten, die Erfassung von Messwerten und die Datenkommunikation mit 200.000 ausgeführt werden. Diese CPS 205.000 bilden zusammen als Teilnetzwerk von 200.000 das sogenannte CPS-Netzwerk. In einer Ausführungsform ist jedem Knoten des Übertragungsnetzwerks 100.000 mindestens ein CPS-Knoten zugeordnet. Dabei verfügen diese CPS-Knoten über eine entsprechende Datenanbindung an die Sensoren 1.300 der Ohm-Knoten und Sensoren 2.300 der QFCs sowie an die Stelleinrichtung 2400 der QFC-Knoten zur Steuerung der Einstellung der physikalischen Leistung durch des jeweiligen QFC-Knoten bzw. QFCs. Darüber hinaus ist in einer Ausführungsform jeder Sensor des Perimeternetzwerks, das heißt Sensoren an Orten außerhalb des Übertragungsnetzwerks, mindestens einem CPS-Knoten zugeordnet und über eine Datenanbindung mit 200.000 verbunden. Diese Sensoren des Perimeternetzwerks bilden zusammen mit den ihnen zugeordneten CPS-Knoten das Perimeternetzwerk 210.000 und dienen zur Erfassung von zusätzlichen Messwerten als Eingangsgrößen für die verschiedenen Prognose insbesondere für die Echtzeitprognosen der Leistungserzeugung der Quellen und des Leistungsbedarfs. In einer Ausführungsform kann ein CPS-Knoten ein speziell ausgestalteter Rechnerknoten mit eigener Bauform, -größe und Energieverbrauch sowie mit Anbindungen für analoge und digitale Datenkommunikation sein. Die kohärent gekoppelten Kontrollinstanzen 220.000 bilden gemeinsam ein virtuelles Kontrollinstanznetzwerk, indem die entsprechenden aufgabenspezifischen Kontrollinstanzen 220.000 auf den entsprechenden virtuellen Rechnern des Daten- und Rechnernetzwerks ausgeführt werden. Das Daten- und Rechnernetzwerk verfügt darüber hinaus über mindestens eine leitungsgebundene und/oder funkbasierte Datenanbindung an fremde Datennetzwerke eines Dritten, wie z. B. an das Internet. In einer Ausführungsform können die verschiedenen Aufgaben des erfindungsgemäßen Verfahrens, wie die Durchführung der Einspeise-, Bedarfs- und Echtzeitprognosen, dem Routingverfahren, bestehend aus dem Reservierungs- und Buchungsverfahrens und der optimierten Bestimmung der Transport- und der erweiterten Transportgraphen, sowie die Steuerung der QFCs zur Einstellung der physikalischen Leistung für die Übertragung der Pakete als verteilte Anwendung auf verschiedenen kohärent gekoppelten Kontrollinstanzen durchgeführt werden. Die Kontrollinstanzen werden auf den Rechnerknoten von 200.000 ausgeführt. In einer Ausführungsform kann z. B. mindestens eine Kontrollinstanz dafür zuständig sein in Abhängigkeit von Teilnetzen oder auch von bestimmten Knoten die Durchführung der entsprechenden Verfahrensschritte dediziert einer oder mehreren Kontrollinstanzen zu zuweisen, bzw. die entsprechenden Kontrollinstanzen zur Durchführung auf den virtuellen Rechnern der Rechnerknoten zu initialisieren. Dies kann z. b. die Lokalisierung, d. h. Ableitung eine für den Ort der Quelle modifizierten Wetterprognose, aus einer allgemeinen Wetterprognose, die von Dritten über die externe Datenanbindung bezogen wird, sein. Auch die Durchführung von Bedarfsprognosen, der Echtzeitprognosen sowie das des Routingverfahrens, kann für Teilnetze oder für Teilmengen von 100.000 entsprechend aufgeteilt und entsprechenden Kontrollinstanzen zugewiesen werden. Diese Zuweisungen können dynamisch je nach Lastsituation erfolgen. Somit hat jedes Element von 100.000 das über eine Datenanbindung an 200.000 verfügt eine für sich zuständige Kontrollinstanz.

Figur 4 zeigt schematisch den inneren Aufbau eines Ohm-Knotens 1.000. Dieser besteht aus dem Bus, den inneren Kanten die auf der einen Seite mit dem Bus und an der anderen Seite mit den Ports, das sind die Anbindungsstellen zur Anbindung äußerer Kanten, verbunden sind und den Sensoren 1.300 zur Messung der physikalischen Leistung an den verschieden Stellen im Ohm-Knoten. Diese teilen sich in die Sensoren zur Messung der Leistung auf den Messstellen der inneren Kanten und für die Leistungsmessung an der Messstelle des Busses auf. Die Sensoren 1.300 sind über Datenanbindungen mit dem CPS 205.000 verbunden. Das CPS 205.000 ist seinerseits mit der Datenanbindung 1.200 an 200.000 zum Datenaustausch mit der zuständigen Kontrollinstanz 220.000 verbunden.

Fig. 5 zeigt schematisch den inneren Aufbau eines QFC-Knotens. Der QFC Knoten besteht aus den beiden Ports a und b die jeweils über innere Kanten an den QFC-Quanten Flow Controller angebunden sind Der QFC ist wie folgt aufgebaut. Die innere 2.310 Kante von 2.000 ist auf der einen Seite an den bidirektionalen Leistungssteller 2.300 und einem Sensor 2.310 zur Leistungsmessung und auf der anderen Seite an den Port a), zum Anschluss einer äußeren Kanten, angebunden. Auf der anderen Anschlussseite von 2.300 schließt sich dann die innere Kante 2.320 mit dem Sensor 2.320 und dem Port b) an.

Der bidirektionale Leistungssteller 2.300 ist mit einer Stelleinrichtung 2.400 verbunden. Die Sensoren 2.310 und 2.320 sowie die Stelleinrichtung 2.400 sind mit einer Anbindung zur Übertragung von Daten an das entsprechende CPS 205.000 ausgestattet. Das CPS wiederum ist mit einer Anbindung an 200.000 zum Datenaustausch ausgerüstet. Darüber hinaus verfügt der QFC auf jeder seiner Kanten 2.110 und 2.120 über einen Puffer zum Ausgleich kleiner Abweichungen oder zur Realisierung der Quantisierung. In einer Ausführungsform wird zur Übertragung eines Energiepaketes entweder über eine Kante die an Port a) oder an Port b) angeschlossen ist, dies physikalische Leistung durch den Leistungsteller 2.300 an dem entsprechenden Ort der Kanten, das ist die Anschlussstelle an den entsprechenden Port, eingestellt. Dies erfolgt dadurch, dass die entsprechende Kontrollinstanz, durch die Stelleinrichtung die entsprechende Einstellung vornimmt. Diese geschieht in einer Ausführungsform dadurch, indem über die Datenanbindung von 205.000 an 200.000 die, dem zu übertragenden Energiepaket zugeordneten, Echtzeitdatenpakete von der entsprechenden Kontrollinstanz 220.000 an 205.000 zur Einstellung übermittelt werden. Dort werden dann die entsprechenden Einstelldaten für die Einstelleinrichtung berechnet und in ein Warteschlangensystem eingetragen. Für die entsprechenden Zeittakte entnimmt sich dann die Einstelleinrichtung 2.400 diese Werte aus der Warteschlange und stellt am Leistungssteller 2.300 in Abhängigkeit der Flussrichtung die Leistung ein. Die von den Sensoren ermittelten Daten werden an 205.000 übergeben und dort ggf. schon einer Bearbeitung unterzogen, indem in einer Ausführungsform beispielsweise gleitende Mittelwerte gebildet werden. Diese Werte werden dann zur weiteren Bearbeitung, z. B. für die Echtzeitprognosen, aber auch zur Fehlerfrüherkennung an 220.000 weiterübermittelt. In einer weiteren Ausführungsform werden die Einstellparameter zur Einstellung der physikalischen Leistung schon von der entsprechenden Kontrollinstanz berechnet und zur Einstellung an 205.000 übergeben.

Im Folgenden wollen wir mithilfe der Figuren 1 bis 5 das erfindungsgemäße Verfahren an einem sehr vereinfachten Beispiel erläutern. Dabei gehen wir davon aus, dass sich die in Figur 1 beschriebenen Quellen 6.100 und 6.200 sowie die Senke 7.100 in einem Gebiet befinden, wo aufgrund der jahreszeitliche Periode von einer im Wesentlichen konstanten Erzeugung und Verbrauch für den betrachteten Übertragungszeitraum $T$ ausgegangen werden kann. Die Zeitreihen der von den Sensoren des Perimeternetzwerks 210.000, die den Quelle 6.100 und 6.200 zugeordnete sind, erfassten Messwerte, werden an das Perimeternetzwerk 210.000, das wie Figur 3 zeigt, ein Teil des Daten- und Rechnernetzwerks 200.000 ist, übermittelt. Durch Sensoren im analogen elektrischen Teil der Quellen 6.100 und 6.1000 und den Sensoren des Einspeise-QFCs 2.800, wie sie in Figur 5 gezeigt sind, werden weitere Messwerte an das Daten- und Rechnernetzwerk übermittelt. Unter Verwendung der Ergebnisse einer allgemeinen Wetterprognose und den verschiedenen Zeitreihen der Messwerte, wird von einer oder mehreren Prognosesystemen als Teil, einer oder mehrerer Kontrollinstanzen 220.000, die auf 200.000 ausgeführt werden, für $T$ die Einspeiseprognosen erstellt. Analog wird von dem für die Senke zuständigen Prognosesystem als Teil der für die Senke zuständigen Kontrollinstanz Zeitreihen, der durch den Sensor des Bedarfs-QFCs die von der Senke 7.100 über die Bedarfskante 5.920 aufgenommene Leistung gemessen, erfasst. Des Weiteren werden durch Sensoren des Perimeternetzwerks 210.000, die der Senke zugeordnet sind Zeitreihen über die Leistungsverläufe im analog elektrischen Teil, der der Senke zugeordnet ist, gemessen. Auf Basis dieser Zeitreihen und zusätzlicher Informationen die den zukünftigen Verbrauch beeinflussen erstellt dann das der Senke zugeordnete Prognosesystem als Teil der entsprechenden Kontrollinstanz die Bedarfsprognose für die Senke 7.100. Zusätzlich werden Zeitreihen über die zeitlichen Verläufe der Leistung von den relevanten Sensoren in den Ohmknoten, wie diese in Figur 5 gezeigt sind, und den QFCs durch die relevanten Kontrollinstanzen erfasst und verarbeitet. In diesem Beispiel wollen wir eine Ausführungsform des in den Ansprüchen 7 und 8 beschriebene Verfahren zur Bestimmung der Reservierung und Buchung beschreiben, das wir im Folgenden als das sogenannte Routingverfahren bezeichnen. Für einen in der Zukunft liegenden Zeitraum $T$ werden durch das Routingverfahren auf Basis der Bedarfsprognose für die Senke 7.100 und den Einspeiseprognosen für den Windgenerator 6.100 und den Solargenerator 6.200 die entsprechenden Bedarfs- und Einspeisedatenpakete bestimmt. Wir nehmen an, dass die, durch das Routingverfahren auf Basis der Bedarfsprognose für 7.100 und den Einspeiseprognosen für 6.100 und 6.200, bestimmten Einspeisedatenpakete $E_{EinW}$ für 6.100 und $E_{EinS}$ für 6.200 sich wie folgt zusammen setzten. Es gibt ein Teilpaket $E'_{EinW}$ des Einspeisedatenpaket $E_{EinW}$ des Windgenerator 6.100, sodass $E'_{EinW} = E_D \oplus E_{VTP1}$ ist. Wobei für das Deckungspaket $E_D = E_{Bed}$ gilt, wobei $E_{Bed}$ das Bedarfsdatenpakete der Senke 7.100 ist, und $E_{VTP1}$ das Verlustpaket zum Ausgleich des Verlusts, der bei der Übertragung von $E_D = E_{Bed}$ über den Transportpfad $TP1$ entsteht, ist. Für das Einspeisepaket $E_{EinS}$ gibt es ein Teilpaket $E'_{EinS}$, sodass $E'_{EinS} = E_D \oplus E_{VTP2}$ gilt. Dabei ist $E_{VTP2}$ das Verlustpaket, das den Verlust bei der Übertragung von $E_D = E_{Bed}$ über $TP2$ ausgleicht. Als Metrik für die Bestimmung welcher der beiden Pfade 101.000 und 102.000 der optimale ist, werden die anfallenden Kosten genommen. Wir nehmen an das für beide Quelle der Leistungspreis gleich ist und die Übertragungskosten nur von der Länge der Transportpfade und der gleichzeitig übertragenen Leistung abhängt. Gleichermaßen müssen aber die in Frage kommenden Transportpfade über die entsprechenden Übertragungskapazitäten verfügen. Wir nehmen an das sowohl 101.000 wie auch der Transportpfad 1002.000 über die entsprechenden Kapazitäten zur Übertragung der entsprechenden Energiepakete verfügen. Im Routingverfahren werden die möglichen Transportpfade die 6.100 mit 7.100 und 6.200 mit 7.100 verbinden und über die Übertragungskapazität verfügen die jeweiligen Energiepakete $E_1 = E'_{EinW} = E_D \oplus E_{VTP1}$ und $E_2 = E'_{EinS} = E_D \oplus E_{VTP2}$ zu übertragen, betrachtet. Dies sind die Transportpfade 101.000 und 102.000 in der Figur 1. Für die Buchung bestimmt das Routingverfahren welcher der beiden der optimalere Transportpfad ist. Da die Leistungspreise für beide Quellen gleich ist, ist der Transportpfad mit den kleinsten Übertragungskosten, die vor allem durch die Durchleitungskosten bestimmt sind, der optimale. Wir nehmen an, dass die beiden Transportpfade sich bzgl. der Länge und des spezifischen Leitungswiderstands nicht unterscheiden. Damit hängt der Durchleitungsverlust davon ab, ob simultan zusätzliche Pakete über eine Kante übertragen werden. Da sowohl der Windgenerator 6.100 über den Transportpfad 101.000 wie auch der Solargenerator 6.200 über den Transportpfad das Energiepaket $E_2$ zur Deckung des Bedarfs der Senke 7.100 übertragen können, muss das Routingverfahren zur Buchung, die Reservierung überspringen wir hier, den optimalsten der beiden Pfade auswählen.

Gemäß der Figur 1 ist für die Periode $T$ auch die Übertragung eines weiteren Energiepaketes vom SynBio Generator 6.300 an eine Senke 7.200 über einen Teilgraph 102.000 gebucht. Somit ist das Verlustpaket $E_{VTP2}$ für die Übertragung des Deckungspakets $E_D = E_{Bed}$ an 7.100 über 102.000 größer als das Verlustpaket $E_{VTP1}$ für die Übertragung von $E_D = E_{Bed}$ über 101.000 und somit wird 101.000 gebucht. Im Folgenden betrachten wir den Weg, den das gebuchte Energiepaket $E = E_1 = E'_{EinW} = E_D \oplus E_{VTP1}$ bei der Übertragung vom Windgenerator 6.100, über den optimiert bestimmten, Transportpfad 101.000 zur Senke 7.100 nimmt. Die Kantenbezeichnungen in der Figur 1 haben wir wiederum zu Gunsten der Klarheit weggelassen. Diese ergeben sich automatisch aus der Position der Kanten in der Figur. Die Übertragung erfolgt von 6.100 über die Einspeisekante 5.810, mit der 6.100 an den Einspeise-QFC 2.800 angebunden ist. Der Einspeise-OFC 2.800 überträgt dann das Paket über die Kante 5.820, mit dem er mit dem Einspeiseknoten 1.800 verbunden ist. Über eine Kante 5.000 die 1.800 mit dem folgenden QFC 2.000 verbindet, wird dann das Paket über den Ohm-Knoten 1.000 über eine Kante 5.000 und über einen weiteren QFC 2.000, dann über die folgende Kante an den Bedarfsknoten 1.900 übertragen. Über die Bedarfskante 5.910, die an 1.900 angeschlossen ist, überträgt der Bedarfs-QFC 2.900 dann über die Bedarfskante 5.920 das Paket an die Senke 7.100. Alle Ohm- und QFC-Knoten sind über eine Datenanbindung mit dem Daten- und Rechnernetzwerk 200.000, genauso wie alle Sensoren des Perimeternetzwerks 210.000, die der Quelle 6.100 zugeordnet sind, angebunden. Die Architektur, der Aufbau und die Komponenten von 200.000 sind aus der Figur 3 für das Daten- und Rechnernetzwerk und der zugehörigen Beschreibung ersichtlich. Dies gilt auch für ausgewählte Sensoren in den analogen Teilen von 6.100 und 7.100 deren Messwerte in die verschiedenen Prognosen einfließen. So verfügt der analoge Netzwerkteil über Sensoren zur Messung der, der von den einzelnen Verbrauchern von 7.100, aufgenommenen Leistungen und übermittelt diese über das Perimeternetzwerk 210.000 an die zuständige Kontrollinstanz 220.000, die auf dem Daten- und Rechnernetzwerk 200.000 ausgeführt wird. Durch den Sensor 2.320, wie er in der Figur 5 gezeigt wird, wird auf der Kante 5.920 des Bedarfs-QFCs 2.900 die kumulierte, von 7.100, aufgenommene Leistung gemessen und wird für die verschiedenen Prognosen als einer der Eingangsparameter genutzt. Durch das Routingverfahren die Quelle 6.100, der Transportpfad 101.000 mit dem zu übertragende Energiepaket $E$ zur Deckung des Bedarfspakets $E_{Bed}$ der Senke 7.100 bestimmt, sodass $E = E'_{EinW} = E_D \oplus E_{VTP1} = E_{Bed}$ ist. Im Folgenden wollen wir anhand unseres Beispiels näher erläutern wie die Pakete $E_{EinW}$ und $E_{Bed}$ bestimmt werden. Zu einem Prognosezeitpunkt $t°$ wird das Einspeisedatenpaket für 6.1000 mittels einer Einspeiseprognose für die von der Quelle im Übertragungszeitraum $T$ zur Übertragung bereitstellbare Leistung bestimmt. Wir nehmen an das, dass für die Ausführungszeit $t_0 = t° + 24h$ gilt und die Dauer $DT$ von $T$ eine Stunde beträgt. Entsprechend muss das Bedarfsdatenpaket der Senke 7.100 für den Zeitraum $T$ gebildet werden. Das Daten- und Rechnernetzwerks 200.000 verfügt über ein Prognosesystem, als Teilsystem einer oder mehrerer kohärent gekoppelten Kontrollinstanzen 220.000, das auf 200.000 ausgeführt wird. Bei $T$ handelt es sich, wie angenommen, um einen jahrestypischen Verbrauchszeitraum, in dem die Leistungsaufnahme von 7.100 gut von den zeitlichen Verläufen in der Vergleichszeiträume der Vergangenheit widergespiegelt wird.

Zur Verdeutlichung vereinfachen wir unser Beispiel noch weiter und nehmen an, dass die Messwerte für diese Vergleichszeiträume einer Gaußschen Verteilung genügen, und über $T$ einen konstanten Erwartungswert, Mittelwert, von $< p_{Bed}(t) >: = < p_{Bed} > = 100kW, \forall\ t$ aus $T$, mit einer konstanten Standardabweichung von $\sigma = 5\%$ haben. Damit lagen in der Vergangenheit im Intervall von $-3\sigma$ bis $+3\sigma$ ca. 99,7% der Werte der Leistungsaufnahme der Senke 7.100 und schwankten innerhalb der Grenzen von $85kW$ bis $115kW$. Es liegt somit nahe für gleiche jahreszeitliche Periode diese Daten für die Bedarfsprognose des entsprechenden Übertragungszeitraum zu nehmen. Zur Vereinfachung nehmen wir in unserem Beispiel weiter an, dass die Einspeiseprognose für $T$, aufgrund jahreszeitlich bedingter weitgehend konstanter Windverhältnisse, für die Quelle einen Mittelwert eine prognostizierte Leistung $< p_{Ein}(t) > = 110kW, \forall\ t$ aus $T$ ergibt. Für die Standardabweichung der Einspeiseprognose nehmen wir an das diese auch $\sigma = 5\%$ ist. Auf Basis dieser Prognosen bildet jetzt das Routingverfahren das Bedarfs-, Einspeise, Deckungs- und das Verlustdatenpaket. Dabei prüft das Routingverfahren ob sich $E'_{EinW} = E_D \oplus E_{VTP1}$ bilden lässt. Entsprechend der Bedarfsprognose ist es naheliegend die nominelle Leistung des Bedarfsdatenpakets zu $p_{nomBed}(t) = < p_{Bed}(t) > = < p_{Bed} > = 100kW$ zu bestimmen.

Weiterhin liegt es nahe den Rest $R_{Bed}(t)$ der Leistungsklasse des Bedarfsdatenpakets zu $R_{Bed}(t) = f_{PrognoseBed}(\sigma) = 3\sigma < p_{Bed} > = 15kW$ zu wählen. Da die Standardabweichungen der Bedarfs- und der Einspeiseprognose gleich sind, lässt sich aus der Einspeiseprognose die Leistungsklasse des Einspeisedatenpakets zu $\{110kW, 16,5kW, T\}$ bestimmen. Damit ist dann auch die Leistungsklasse des Deckungspakets $E_D$, mit $E_D = E_B$, zu $\{100kW, 15kW, T\}$ bestimmt. Nehmen wir jetzt der Einfachheit halber noch an das der Verlust bei der Übertragung des Deckungspakets 5% beträgt, dann ist die Leistungsklasse des Verlustpakets $E_{VTP1}$ gleich $\{5kW, 0,75kW, T\}$. Damit ist $E'_{EinW} = E_D \oplus E_{VTP1}$ ein Teilpaket von $E_{EinW}$ und das zur Deckung des Bedarfs der Senke 7.100 von der Quelle 6.100 über 101.000 an 7.100 zu übertragenen Energiepaket $E$ wird durch die Buchung des Datenpakets mit der Leistungsklasse $\{p_{nomE}(t) = 105kW, R_E(t) = 15,75kW, T\}$ von $E'_{EinW}$ bestimmt. Im Rahmen des Routingverfahrens wurde zwischen der Quelle 6.100 und der Senke 7.100 ein Vertrag geschlossen, sodass die Quelle an mindestens einem Ort $x_p$ der Bedarfskante 5.920 eine physikalische Leistung eingestellt wird, die ein Element der Leistungsklasse von $E$ ist.

Gleichermaßen verpflichtet sich die Senke über die Bedarfskante 5.920 eine Leistung aufzunehmen, die an $x_p$ ein Element dieser Leistungsklasse von $E$ ist. Das heißt in unserem Beispiel, dass der Windgenerator 6.100 über 101.001 in die Bedarfskante 5.920 z. B. eine physikalische Leistung von $p_\varphi^{Ein}(x_p, t) = 90kW$ vertragsgemäß einspeisen darf und gleichzeitig die Senk 7.100 dort eine Leistung von $p_\varphi^{Bed}(x_p, t) = 110kW$ vertragsgemäß entnehmen darf. Das heißt innerhalb der Grenzen, die durch die Leistungsklasse des übertragenden Energiepakets festgelegt sind, kann es eine zulässige Differenz oder eine Unter bzw. Überdeckung zwischen der eingespeisten physikalischen Leistung $p_\varphi^{Ein}(x_p, t)$ und dem Leistungsbedarf $p_\varphi^{Bed}(x_p, t)$ an der Anbindungsstelle $x_p$ der Bedarfskante 5.920 an den Bedarfs-QFC 2.900 geben. Die zulässige maximale Abweichung beträgt somit

$$\left| p_\varphi^{Ein}(x_p, t) - p_\varphi^{Bed}(x_p, t) \right| = \delta(t) \leq 30kW = 2 \cdot R_{Bed} = 2 \cdot \frac{R_{Bed}}{R_E} \cdot R_E = f_C(R) = C(t)$$

, womit sich $f_c(R) \approx 1{,}9 \cdot R_E$

ergibt. Eine Aufgabe der Bedarfsprognose ist es, für den Fall das die Senke in ihrem analogen Teil über einen Speicher verfügt zu prognostizieren, ob dieser über das Potential verfügt maximal eine Leistung von $C(t)$, $\forall t$, aufnehmen oder abgeben zu können um die Differenz $\delta(t)$ kompensieren zu können. Für den Fall das die Senke nicht über dieses Potential verfügt, wird über die Bedarfsprognose das Routingverfahren mit der Bestimmung eines um die Kompensation erweiterten Transportgraphen beauftragt. Für den Fall das die Senke 7.100 mit einem Speicher in ihrem analogen elektrischen Teil ausgestattet ist, der $C(t)$ abgeben oder aufnehmen zu kann, wird die Differenz $\delta(t)$ durch eine geeignete Regelung, z.B. durch die Bedingung $p_{Bedarf}(t) + p_{ein}(t) + p_{Speicher}(t) = 0$, $\forall\ t\ aus\ T$, kompensiert. Das ist, gemäß Anspruch 1, die einfachste Ausführungsform der Erfindung, sodass durch die Übertragung des Energiepakets von 6.100 über 101.000 der Bedarf von 7.100 gedeckt wird.

An dieser Stelle wollen wir anmerken, dass die Verbesserung der Prognosegenauigkeit sofort in die benötigte Speicherkapazität einfließt. Kann $\sigma$ z. B. von 5% auf 2,5 % reduziert werden, dann verkleinert sich $C = 2R$ von 30 $kW$ auf 15 $kW$ und über den ganzen Zeitraum $T$ verringert sich die Energie, die vom Speicher maximal aufgenommen oder abgegeben werden können muss von $30kW \cdot T$ auf $15kW \cdot T$. Aus diesem Grund werden zwischen der Reservierung und der abschließenden Buchung weitere Prognosen mit immer kleiner werdendem Abstand zwischen dem Prognose- und dem Ausführungszeitpunkt durchgeführt, sodass die Prognoseunsicherheit kleiner wird. Reservierte aber dann nicht mehr benötigte Kapazitäten werden dann wieder frei gegeben. Die Abfolge der Prognosen endet nach der Buchung mit der Sequenz der Echtzeitprognosen. Auch hier werden nicht mehr benötigte Kapazitäten unverzüglich frei gegeben, wenn Sie aufgrund der genaueren Prognose nicht mehr benötigt werden. Verfügt die Senke über keinen geeigneten Speicher, dann wir durch das Routingverfahren ein optimal bestimmter erweiterte Transportgraph bestimmt. In unserem Beispiel zeigt die Figur 2 den so um die Kompensation erweiterten Transportgraph. Dieser besteht aus dem Transportpfad 101.000 der die Quelle 6.100 mit der Senke 7.100 verbindet und den Kompensationsknoten 4.400 der über den Kompensationspfad 106.000 mit dem Bedarfsknoten der Senke 7.100 verbunden ist. Bei dem Kompensationsknoten handelt es sich um einen Speicher, der für jeden Zeitpunkt des Übertragungszeitraums, maximal eine Leistung bis zur maximalen Kompensationsleistung $C(t)$ konstant gleich $C(t) = 30kW$ aufnehmen oder eine, um den bei der Übertragung von $C(t)$ entstehenden Verlust v(t) erhöhte Leistung $C'(t) = C(t) + v(t)$ abgeben kann.

Für den Fall das die Quelle die physikalische Leistung $p_\varphi^{Ein}(x_p, t) = p_\varphi^{Bed}(x_p, t) + \delta(t)$ einspeist stellt der QFC Knoten 2.410, der auf der einen Seite mit dem Bedarfsknoten 1.900 und auf der anderen Seite mit dem Kompensationspfad 106.000 verbunden ist, die Leistung $\delta(t)$ und der QFC 2.420, der auf der einen Seite mit dem Kompensationspfad 106.000 und auf der anderen Seite mit dem Speicher als Kompensationsknoten 4.400 verbunden ist, dort die Leistung die in 4.400 eingespeist wird, zu $\tilde{\delta}(t) = \delta(t) - \delta_V(t)$ ein. Dabei ist $\delta_V(t)$ der Verlust der bei der Übertragung von $\delta(t)$ über 106.000 entsteht. Für den Fall, dass $p_\varphi^{Ein}(x_p, t) = p_\varphi^{Bed}(x_p, t) - \delta(t)$ ist, stellt der QFC 2.420 die Leistung $\tilde{\delta}(t) = \delta(t) + \delta_V(t)$ in 106.000 ein und über den QFC 2.410 wird dann $\delta(t)$ in den Bedarfsknoten 1.900 eingespeist. Da der Bedarfsknoten ein Ohmknoten ist, ergibt sich unter Berücksichtigung der Flussrichtung, dass die physikalische Leistung vom Bedarfs-QFC für den Ort $x_p$ der Bedarfskante genau gleich dem Bedarf eingestellt werden können. Zur Bestimmung von $\delta(t)$ und $\tilde{\delta}(t)$ werden $p_\varphi^{Ein}(x_p, t)$ und $p_\varphi^{Bed}(x_p, t)$ durch Prognosen, bzw. durch Echtzeitprognosen bestimmt. Damit werden auf dem Kompensationspfad Pakete mit der Leistungsklasse $\{p_{nom}(t) = 0, R(t) = C(t), T\}$ übertragen. Durch eine Umrechnung entspricht das dann, dass die für $x_p$ eingestellte physikalische Leistung sich als Summe der nominellen Leistung des übertragenen Energiepakets E und einer Kompensationsleistung $\delta(t)$ darstellen lässt:

$$p_{\varphi(x_p,t)} = p_{nom}(t) + \delta'(t).$$

In unserem Beispiel hatten wir zum einem angenommen, dass sowohl die Einspeise- wie auch die Bedarfsprognose dieselbe prozentuale Standardabweichung von 5% und zum anderem das die Funktion $f_{Prognose}$ die Multiplikation mit dem Faktor 3 ist.

In der nachfolgenden Betrachtung wollen wir anhand des Beispiels zeigen, dass die Funktion zur Bestimmung des Rests fallweise erfolgt. Um dies zu erläutern betrachten wir jetzt den Fall das ein an die Senke 7.100 angeschlossener analoger Speicher nicht vollständig $C(t) = 2R_{Bed} = 30kW$ zur Verfügung stellen kann. Die Bedarfsprognose ergibt aber, dass der analoge Speicher für jeden Zeitpunkt des Übertragungszeitraum nur $10kW$ aufnehmen oder abgeben kann. Zur Vereinfachung vernachlässigen wir die Verluste. In diesem Fall kann aufgrund der Bedarfsprognose ein Bedarfsdatenpaket mit einem Rest $R'_{Bed}(t) = \frac{2}{3}R_{Ein}(t) = 10kW$ gebildet werden. Die nominelle Leistung bleibt über $T$ konstant gleich 100kW. Entsprechend fordert die Senke dann, dass das Routing einen um Kompensation erweiterten Transportgraph 120.000 bestimmt. Der Kompensationsknoten muss dann über eine maximale Kompensationsleistung von $C(t) = 2 \cdot R'_{Bed}(t)$ verfügen. Durch die Übertragung des so modifizierten Energiepakets $E$ mit der Leistungsklasse $\{100kW, 10kW, T\}$ variiert die von der Quelle eingespeiste physikalische Leistung im Intervall von $-2\sigma$ bis $+2\sigma$, wo hingegen der Bedarf der Senke im Bereich von $-3\sigma$ bis $+3\sigma$ variiert. Das heißt in ca. 95% der Fälle wird eine mögliche Differenz zwischen der eingespeisten und der von der Senke 7.100 benötigte physikalische Leistung von dem Kompensationsknoten von 120.000 kompensiert. Über das Energiepaket und das Kompensationspaket des Kompensationsknotens 4.400 kann somit maximal eine physikalische Leistung $p_{\varphi}(x_p,t) = p_{nom}(t) + R'_{Bed}(t) = 110kW$ in die Bedarfskante der Senke 7.100 eingespeist werden. Für die Fälle wo sich der Bedarf z. B. im Intervall zwischen $+2\sigma$ und $+3\sigma$ befindet, wird fehlende Differenz dann von dem analogen Speicher kompensiert. Beträgt z. B. der Bedarf 115kW dann wird über die Regelung des analogen Speichers die fehlenden $5kW$ im analogen Teil ausgeglichen. Die Wahl des neuen Restes für das Bedarfsdatenpakets kann in diesem Fall einfach dadurch begründet sein, dass sich durch die Nutzung des analogen Speichers der Bezugspreis für das Energiepaket und der Kompensation verringert.

Zentral ist das die Quellen und Senken eine allgemein gültige Vereinbarung zur Übertragung von Energiepaketen geschlossen haben. In unserem Beispiels nehmen wir an das sich die Quelle und die Senke gemäß dieser Vereinbarung verpflichtet haben, dass in 99,7% der Zeitpunkte eines Übertragungszeitraums sowohl eingespeiste wie auch die aufgenommene physikalische Leistung ein Element des vereinbarungsgemäßen Energiepakets ist.

In unserem Bespiel kann die Quelle 6.100 aber nur in ca. 95% der Zeitpunkte eine physikalische Leistung einspeisen die ein Element der Leistungsklasse $\{100kW, 10kW, T\}$ des modifizierten Energiepakets ist. In den übrigen Zeitpunkten liegt die physikalische Leistung der Quelle im $|2\sigma|$ bis $|3\sigma|$ Bereich und es gibt entweder eine Unterdeckung $\rho^+$, die Leistung ist kleiner als $90kW$, z.B. sie beträgt $85kW$ oder es gibt eine Überdeckung $\rho^-$, die Leistung von 6.100 ist größer als $110kW$, z.B. sie beträgt $125kW$. Um diese Lücke auszugleichen benötigt die Quelle eine zusätzliche maximale Ausgleichsleistung $|D(t)|$ von $5kW$. Da $D(t) = f_D(R(t))$ und $R(t) = R'_{Bed}(t)$ für das modifizierte Energiepaket ist, bestimmt sich die Funktion $f_D$ zu $f_D = (1 - \frac{R(t)}{R_{Ein(t)}}) \cdot R_{Ein}(t)$. Im Rahmen der Einspeiseprognose wird, in dem Fall das die Quelle über einen angebundenen analogen Speicher verfügt, auch prognostiziert welches $D(t)$ dieser aufnehmen oder abgeben kann. Falls die Einspeiseprognose zeigt, dass 6.100 über einen solchen analogen Speicher verfügt, der für jeden Zeitpunkt des Übertragungszeitraum eine physikalische Leistung bis zur maximalen Ausgleichsleistung von $D(t) = 5kW$ aufnehmen oder abgeben kann, dann erfolgt der Ausgleich durch diesen. Das heißt sowohl eine Unterdeckung $\rho^+(t)$, wie auch eine Überdeckung $\rho^-(t)$ wird mittels einer entsprechenden Regelung, analog zur Kompensation, durch den Speicher ausgeglichen.

Sollte ein Ausgleich über einen analogen Speicher nur teilweise oder gar nicht möglich sein, so fordert die Einspeiseprognose vom Routingverfahren einen optimiert bestimmten um Ausgleich und Kompensation erweiterten Transportgraph, wie ihn Figur 2 gezeigt, an. In Figur 2 ist der Ausgleichsknoten 4.401 , der über einen Ausgleichpfad 108.000 an den Einspeiseknoten 1.800 der Quelle 6.100 angebunden ist. Das Routingverfahren hat 4.401 so bestimmt, dass dieser, zum Beispiel ein Speicher ist, maximal eine physikalische Leistung bis zur maximale Ausgleichsleistung D(t) aufnehmen bzw. eine physikalische Leistung bis zu $D'(t) = D(t) + v_{108.00}(D(t))$ abgeben kann. Dabei ist dieses $D(t)$ der verbleibende Teil der nicht von einem analogen Speicher der Quelle 6.100 ausgeglichen werden kann.

Auf dem Ausgleichspfad werden dann Ausgleichpakete mit der Leistungsklasse $\{0, D(t), T\}$ übertragen. Zur Übertagungszeit wird dann das modifizierte Energiepaket über den Transportpfad 101.000 übertragen und die physikalische Leistung, entsprechen der Flussrichtung an den beiden QFCs des Ausgleichspfads so gestellt werden, dass diese entweder gleich $\rho^+(t)$ oder $\rho^-(t)$ ist.

An dieser Stelle wollen wir anmerken, dass sowohl die Einspeise- wie auch die Bedarfsprognosen und die daraus abgeleitete Bildung der Einspeise-, Bedarfs-, Deckungs- und Verlustdatenpakete Teil des iterativen Routingverfahrens sind. Neben den Verhältnissen der Erwartungswerte z der Bedarfs- und Einspeiseprognosen zu einander spielt auch das Verhältnis der Varianzen, bzw. Standardabweichungen dieser Prognosen zu einander eine entscheidende Rolle bei der Bestimmung der Leistungsklasse eines zu übertragenden Energiepakets unter Verwendung des Kompensations- und Ausgleichsmechanismus.

Um die Vielfältig der Möglichkeiten zur Bestimmung des zu übertragenden Energiepakets zu zeigen, modifizieren wir jetzt unser Beispiel etwas. Wir nehmen an, dass der Übertragungszeitraum in eine Periode sehr stabiler Windverhältnisse fällt, sodass die Standardabweichung, im Gegensatz zu der vorher betrachteten, nur noch die Hälfte, also $\sigma' = \sigma_{Ein}$ = 2,5% und somit $R_{Ein}$ = 3 · $\sigma'$ ·< $p_{Ein}(t)$ > = 7,5$kW$ beträgt. Vernachlässigen wir der Einfachheit halber wieder die Verluste, so könnte man das Deckungspaket $E_D$ und somit das zu übertragende Energiepaket E gleich dem Bedarfsdatenpaket $E_{Bed}$ mit der Leistungsklasse {100$kW$, 15$kW$,$T$} setzen. Weiter nehmen wir an das die Senke 7.100 über einen analogen Speicher verfügt um die Kompensation der Differenz $C(t)$ = 2 · $R_{Bed}$ zwischen der eingespeisten und benötigten Leistung leisten zu können. Da die von der Quelle 6.100 eingespeiste physikalische Leistung aufgrund der, um die Hälfte kleineren, Schwankungsbreite, ein Element von $E_{Bed}$ ist, kann die Quelle 6.100 durch die Übertragung dieses Energiepaktes $E = E_D = E_{Bed}$, gemäß der Vereinbarung, den Bedarf der Senke 7.100 decken. Aber die Wahl dieses Paketes hat zur Folge, dass für die Übertragung des Energiepakets unnötig viel, und zwar doppelt so viel, Übertragungskapazität wie nötig reserviert werden muss. Eine alternative Möglichkeit ein Energiepaket zu definieren ist den Rest $R_E$ des Energiepakets gleich $R_{Ein}$ = 7,5$kW$ zu setzen. Damit muss nur die wirklich benötigte Übertragungskapazität reserviert werden. Damit aber eine mögliche Differenz kompensiert werden kann, muss wiederum $C(t)$ = $f_c(R_{Bed})$ gesetzt werden. Da sich $R_{Bed}$ wieder in Abhängigkeit von $R$ ausdrücken lässt. Ist auch in diesem Fall $f_C$ eine Funktion von $R$. Da wir angenommen haben das der Speicher dieses $C(t)$ kompensieren kann, wird aufgrund der um die Hälfte geringeren Übertragungskosten dieses Energiepaket zusammen mit 101.000 als optimal bestimmter Transportgraph bzw. Transportpfad bestimmt. Anhand des Beispiels sieht man das ein Transportpfad $TP(E,Q,S,T)$ immer aus einem Pfad $P$ im Übertragungsnetzwerk der die Quelle $Q$ mit der Senke $S$ und einem Energiepaket $E$ , das durch seine Leistungsklasse {$p_{nom}(t),R(t),T$} definiert ist, besteht.

Abschließend wollen wir uns kurz mit der Übertragung des Energiepakets und der zugeordneten Kompensations- und Ausgleichspakete befassen. Dazu nehmen wir an, dass alle Größen "quantisiert sind. Dazu nehmen wir an das die Dauer $DT$ = 100$dt$ und die Dauer aller Echtzeitprognosezeiträume $DT_{RT}$ = $dt$ ist. Damit lässt sich $T$ durch die Echtzeitprognosezeiträume $T_{RT}^{l}$ mit $l$ = 1 *bis* 100 durchschnittsfrei überdecken. Jeweils zu den Echtzeitprognosezeiträume $t_l^{000}$ werden die entsprechenden Echtzeitprognosen durchgeführt. Dabei ist $t_1^{000}$ so gewählt, dass für die Ausführungszeit $t_0 = t_1^{000} + dt$ sowie für $t_l^{000} = t_1^{000} + (l-1) \cdot dt$ gilt. Entsprechend der Echtzeitprognosen werden dann die nominellen Leistungen der entsprechenden Echtzeitpaket gebildet, sodass für die nominelle Leistungen der Echtzeitenergiepakete zu $p_{nomRT}(x_{TP},t) = n_{ij}^{TP} \cdot dp$ , der Echtzeitkompensationspakete zu $p_{nomRT}^{Komp}(x_{KP},t) = n_{ir}^{kP} \cdot dp$ , sowie für die Echtzeitausgleichspakete zu $p_{nomRT}^{Aus}(x_{AP},t) = n_{is}^{AP} \cdot dp$ bestimmt sind. Dabei sind $n_{ij}^{TP}, n_{ir}^{kP}$ und $n_{is}^{AP}$ ganze Zahlen größergleich Null, $dp$ ist die Elementarleistung, das sogenannte "Leistungsquäntchen" und $dt$ das "Zeitquäntchen". Mit dem Index $j$ wird der Ort $x$ der Kante $e_j^{TP}$ des Transportpfads $TP$ 101.000 bezeichnet. Entsprechende sind die Indizes $r$ und $s$ für die Kanten des Kompensationspfads $KP$ 106.000 und den Ausgleichspfad $AP$ 108.000 zu verstehen. Mit dem Index $i$ wird der "quantisierte" Zeitpunkt bezeichnet, der dem Zeitpunkt t mit (i - 1) $\leq$ t $\leq$ i · $dt$ zugeordnet ist.

In unserem Beispiel werden entsprechend der Sequenz der Echtzeitprognosen für die Abfolge der $T_{RT}^{l}$ die Werte $n_{ij}^{TP}, n_{ir}^{kP}$ und $n_{is}^{AP}$ von den entsprechenden Kontrollinstanzen 220.000 bestimmt und über die entsprechenden Datenanbindungen an die CPS 205.000 der entsprechenden QFCs 2.000, wie in Figur 5 übermittelt. Dort werden diese in die entsprechenden Stellparameter, z. B. Pulsweiten für den Leistungssteller 2.300 erzeugt und an die Stelleinrichtung 2.300 übermittelt. Diese stellt dann über den Leistungssteller, z. b. einem bidirektionalen Hochsetz- Tiefsetzstellers die Leistung entsprechend der Flussrichtung an der entsprechenden Anbindungsstelle der jeweiligen an die Kante 2.110 oder der Kante 2.120 des entsprechenden QFCs ein. Durch diese Übertragung der entsprechenden Echtzeitpakete wird dann das Energiepaket von der Quelle an die Senke übertragen und vertragsgemäß der Bedarf der Senke gedeckt.

Abschließend wollen wir noch bemerken das mit den Fortschritten im Quanten Computing mindestens ein Knoten des Daten- und Rechnernetzwerks als Quanten Computer ausgeführt sein kann. Aufgrund der überlegenen Rechenleistung des Quanten Computers und des Fortschrittes in den Modelle zur präzisen langfristigen Wettervorhersage die neben dem Routingverfahren auf diesem Quantum Computer ausgeführt werden können, kann somit ein hoch dynamisches und genaues regeneratives hybrides Energieversorgungssystem realisiert werden der den heutigen Lösungen überlegen ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

**Bezugszeichenliste**

100.000 Übertragungsnetzwerk
200.000 Daten- und Rechnernetzwerk, genannt Kontrollnetzwerk
210.000 Perimeter-Sensornetzwerk
220.000 Kontrollinstanz
205.000 CPS Rechnerknoten
110.000 Transportgraph ohne Kompensation und Ausgleich
120.000 Erweiterter Transportgraph mit Kompensation und Ausgleich
101.000,102.000 Transportpfade
106.000 Kompensationspfad
108.000 Ausgleichspfade
1.000 Ohmknoten
1300 Sensoren des Ohmknotens
1.800 Einspeiseknoten
1.900 Bedarfsknoten
2.000 QFC-Knoten
2.001 QFC
2.300 bidirektionaler Leistungssteller
2.110 innere Kante mit Port a): Anschlussstelle zum flexiblen Verbinden des Leistungsstellers mit einer äußeren Kante
2.120 Innere Kante mit Port b): Anschlussstelle zum flexiblen Verbinden des Leistungsstellers mit einer äußeren Kante
2.310 bis 2.320 Sensoren für die Messung der Leistung auf den inneren Kanten
2.400 Einrichtung zum Einstellen der Flussrichtung und der Größe der Leistung auf dem bidirektionalen Leistungssteller
205.000 CPS Rechner
2.800 Einspeise-QFC der Einspeisekante 5.800
2.900 Bedarfs-OFC der Bedarfskante 5.900
4.400 Kompensationsknoten
4.401 Ausgleichsknoten
5.000 Kante
5.810 Anbindungsteil der Einspeisekante von der Quelle zum Einspeise-QFC
5.820 Anbindungsteil der Einspeisekante vom Einspeise-QFC zum Einspeiseknoten

5.910 Anbindungsteil der Bedarfskante vom Bedarfs-QFC zum Bedarfsknoten

5.920 Anbindungsteil der Bedarfskante vom Bedarfs-QFC zur Senke

6.100 Windgeneratoren

6.200 Solargeneratoren

7.100 Privathaushalt als Senke

**Zitate enthalten in der Beschreibung**

Zitierte Patentliteratur:

- EP 2 430 723 B1

- EP 2 250 588 A2

- DE 10 2012 204 035 A1

- US 5027 264

- US 9013902 B2

Zitierte Nicht-Patentliteratur:

- R. Abe, H. Taoka, D. McQuilkinDigital grid: communicative electrical grids of the future, IEEE Transactions on Smart Grid 2 (2) (June 2011) 399e410

- F. Girbau-Llistuella, J.M. Rodriguez-Bernuz, E. Prieto-Araujo, A. Sumper Experimentalvalidation of a single phase intelligent power router, in: IEEE PES Innovative Smart Grid Technologies Europe, 2014.

- Alex Q. Huang et al.

  The Energy Internet - An Open Energy Platform to Transform Legacy Power Systems into Open Innovation and Global Economic Engines
  ISBN (Online): 978-0-08-102215-3, ISBN (Online): 978-0-08-102215-3
  Edited by Wencong Su, Alex Q. Huang

- Wikipedia, https://www.wikipedia.de

- Sven Oliver Krumke, Hartmut NoltemeierGraphentheoretische Konzepte und Algorithmen, 3.Auflage, Springer Verlag ISBN 978-3-8348-2264-2 (eBook), Buch

**Patentansprüche**

1. Verfahren zum gerichteten Übertragen von Energie in Form mindestens eines Energiepakets von einer Mehrzahl von Quellen $Q$ über mindestens zwei Knoten, von denen einer ein über eine Einspeisekante mit einer aus der Mehrzahl von Quellen $Q$ verbundener Einspeiseknoten $K_Q$ und einer ein über eine Bedarfskante mit einer Senke S verbundener Bedarfsknoten $K_S$ ist, und über eine Mehrzahl von Kanten an eine Mehrzahl von Senken $S$ in einem Übertragungsnetzwerk, wobei das Übertragungsnetzwerk mittels eines Daten- und Rechnernetzwerkes derart steuerbar ist, dass für mindestens einem Ort $x$ auf jeder aus der Mehrzahl von Kanten eine tatsächlich fließende physikalische Leistung $p_\varphi(x,t)$ von einer Kontrollinstanz des Daten- und Rechnernetzwerks einstellbar ist, mit den Schritten:

    A) Bilden eines Datenpaketes für jedes Energiepaket, wobei das Datenpaket genau einem Energiepaket eineindeutig zugeordnet ist, wobei das Datenpaket das jeweilige Energiepaket definiert und wobei das Datenpaket beschreibt

i. einen Übertragungszeitraum $T$ des Energiepakets mit einer Dauer $DT$ und einer Ausführungszeit $t_0$, die den Beginn des Übertragungszeitraums $T$ kennzeichnet,

ii. einen zuvor bestimmten Transportpfad eines Transportgraphen des Übertragungsnetzwerks zur gerichteten Übertragung des Energiepakets, der mindestens eine aus der Mehrzahl von Quellen $Q$ mit genau einer aus der Mehrzahl von Senken verbindet, wobei die genau eine aus der Mehrzahl von Quellen $Q$ über genau eine Einspeisekante an einen Einspeiseknoten $K_Q$ des zuvor bestimmten Transportpfads angebunden ist und die genau eine Senke $S$ über eine Bedarfskante des zuvor bestimmten Transportpfads an den Bedarfsknoten $K_S$ angebunden ist, und

iii. eine Äquivalenzklasse $\{p_{nom}(t), R(t), T\}$ des Energiepaketes,

wobei die Äquivalenzklasse gegeben ist durch

einen durch mindestens eine Prognose zuvor bestimmten zeitlichen Verlauf einer nominellen Leistung $p_{nom}(t)$ des Energiepaketes und

einen zeitlichen Verlauf eines Restes $R(t)$ als Funktion einer Prognoseunsicherheit der mindestens einen Prognose,

wobei es für jeden Zeitpunkt $t$ innerhalb des Übertragungszeitraums T des Energiepakets ein $\mu(t)$, mit $-1 \leq \mu(t) < 1$ oder mit $-1 < \mu(t) \leq 1$ oder mit $-1 \leq \mu(t) \leq 1$ gibt, sodass die physikalische Leistung $p_\varphi(x,t)$ bei der Übertragung des Energiepaketes zu jedem Zeitpunkt $t$ und an mindestens einem Ort $x$ auf jeder Kante des Transportpfads als Summe aus der nominellen Leistung $p_{nom}(t)$ und dem Produkt aus $\mu(t)$ und dem Rest $R(t)$ festlegt ist,

wobei die Äquivalenzklasse durch eine Äquivalenzrelation definiert ist, gemäß der für jeden Zeitpunkt $t$ des Übertragungszeitraums $T$ eine erste physikalische Leistung $p'_\varphi(x,t)$ an einem beliebigen Ort $x$ einer Kante des Transportpfads und eine zweite physikalische Leistung $p_\varphi(x,t)$ an einem beliebigen Ort $x$ einer Kante des Transportpfads genau dann äquivalent sind, wenn es einen vorgegebenen Rest $R(t)$ größer oder gleich null und kleiner oder gleich einem Grenzwert $R_{max}$ sowie ein $\mu(t)$, mit $-1 \leq \mu(t) < 1$ oder mit $-1 < \mu(t) \leq 1$ oder mit $-1 \leq \mu(t) \leq 1$ gibt, so dass die erste physikalische Leistung $p'_\varphi(\hat{x},t)$ gleich der Summe aus der zweiten physikalischen Leistung $p_\varphi(x,t)$ und dem Produkt von $\mu(t)$ und dem Rest $R(t)$ ist,

B) vor der Ausführungszeit $t_0$ Übertragen des Datenpaketes an alle Kontrollinstanzen zumindest aller Knoten oder aller Kanten auf dem Transportpfad,

C) beginnend mit der Ausführungszeit $t_0$ Übertragen des dem Datenpaket eineindeutig zugeordneten Energiepaketes,

wobei für alle Zeitpunkte $t$ innerhalb des Übertragungszeitraums $T$ des Energiepakets die auf dem Transportpfad zwischen dem Einspeiseknoten $K_Q$ und dem Bedarfsknoten $K_S$ fließende physikalische Leistung $p_\varphi(x,t)$ für mindestens einen Ort $x$ jeder Kante des Transportpfads so eingestellt wird, dass die in den Bedarfskonten $K_S$ eingespeiste physikalische Leistung ein Element der von dem Datenpaket beschriebenen Äquivalenzklasse $\{p_{nom}(t), R(t), T\}$ ist.

2. Verfahren nach dem vorhergehenden Anspruch, wobei das Datenpaket darüber hinaus beschreibt

iv) einen zuvor bestimmten Kompensationspfad des Transportgraphen des elektrischen Übertragungsnetzwerkes, der einen zuvor bestimmten Kompensationsknoten $K_{SAS}$ über eine Mehrzahl von Kanten mit dem Bedarfsknoten $K_S$ verbindet, wobei der Kompensationsknoten $K_{SAS}$ zu jedem Zeitpunkt $t$ des Übertragungszeitraums $T$ des Energiepaketes eine physikalische Leistung bis zu einer zuvor bestimmten maximalen Kompensationsleistung $C(t)$, wobei die zuvor bestimmte maximale Kompensationsleistung $C(t)$ als Funktion des Rests $R(t)$ bestimmt ist, aufnehmen kann, oder eine physikalische Leistung bis zu der maximalen Kompensationsleistung $C(t)$, optional erhöht um einen durch eine Prognose bestimmten Verlustabfall, über den Kompensationspfad abgeben kann, und

wobei in Schritt C) die zwischen dem Kompensationsknoten $K_{SAS}$ und zumindest dem Bedarfsknoten $K_S$ fließende physikalische Leistung für mindestens einen Ort $x$ auf der Mehrzahl von Kanten des Kompensationspfads so eingestellt wird, dass die physikalische Leistung an diesem mindestens einen Ort $x$ zu jedem Zeitpunkt *t* innerhalb des Übertragungszeitraums *T* ein Element einer Äquivalenzklasse {$p_{nom}(t) = 0, R(t) = C(t), T$} mit einer nominellen Leistung $p_{nom}(t)$ von Null und einem Rest mit dem Wert der zuvor bestimmten maximalen Kompensationsleistung $C(t)$ ist, und dass an mindestens einem Ort *x* der Bedarfskante, die über die Bedarfskante zwischen dem Bedarfsknoten $K_S$ und der an diesen Bedarfsknoten angebundenen Senke *S* fließende physikalische Leistung $p_\varphi(x,t)$ gleich der nominellen Leistung $p_{nom}(t)$ des Energiepaketes plus einer Kompensationsleistung $\delta(t)$ als Funktion der Prognose ist,
und/oder das Datenpaket beschreibt

v) einen zuvor bestimmten Ausgleichspfad des Transportgraphen des Übertragungsnetzwerkes, der über eine Mehrzahl von Kanten einen zuvor bestimmten Ausgleichsknoten $K_{Aus}$ und den Einspeiseknoten $K_Q$ verbindet, wobei der Ausgleichsknoten $K_{Aus}$ zu jedem Zeitpunkt *t* des Übertragungszeitraums *T* des Energiepaketes eine physikalische Leistung bis zu einer zuvor bestimmten maximalen Ausgleichsleistung $D(t)$, wobei die zuvor bestimmte maximale Ausgleichsleistung $D(t)$ als Funktion des Rests $R(t)$ bestimmt ist, aufnehmen oder eine physikalische Leistung bis zu der maximalen Ausgleichsleistung $D(t)$, optional erhöht um den durch eine Prognose bestimmten Verlustabfall, über den Ausgleichspfad abgeben kann, und

wobei in Schritt C) die zwischen dem Ausgleichsknoten $K_{Aus}$ und dem Einspeiseknoten $K_Q$ fließende physikalische Leistung für mindestens einen Ort *x* auf der Mehrzahl von Kanten des Ausgleichspfads so eingestellt wird, dass an diesem mindestens einem Ort *x* diese physikalische Leistung zu jedem Zeitpunkt *t* innerhalb des Übertragungszeitraums *T* ein Element einer Äquivalenzklasse {$p_{nom}(t) = 0, R(t) = D(t), T$} mit einer nominellen Leistung $p_{nom}(t)$ von Null und einem Rest mit dem Wert der zuvor bestimmten maximalen Ausgleichsleistung $D(t)$ ist, und dass die zwischen dem Einspeiseknoten $K_Q$ und dem Bedarfsknoten $K_S$ fließende physikalische Leistung $p_\varphi(x,t)$ für mindestens einen Ort *x* auf der Mehrzahl von Kanten des Transportpfads ein Element der Äquivalenzklasse {$p_{nom}(t), R(t), T$} des Energiepaketes ist.

3.  Verfahren nach einem der vorhergehenden Ansprüche, wobei das Verfahren für einen frei wählbaren Prognosezeitraum $T_{prog}$ mit einem Prognosebeginn $t_{0prog}$ und einer Prognosedauer $DT_{prog}$ weiterhin die Schritte aufweist, zu einem Prognosezeitpunkt $t^0$, der vor dem Prognosebeginn $t_{0prog}$ liegt,

    D) Erstellen einer Einspeiseprognose für eine zu jedem Zeitpunkt t in dem Prognosezeitraum $T_{prog}$ von der jeweiligen Quelle bereitstellbaren prognostizierten Einspeiseleistung $p_{progEin}(t)$, wobei die Einspeiseprognose eine Einspeiseprognoseunsicherheit aufweist und
    E) Erstellen einer Bedarfsprognose für einen zu jedem Zeitpunkt *t* in dem Prognosezeitraum $T_{prog}$ von der jeweiligen Senke abzunehmenden prognostizierten Leistungsbedarf $p_{progBed}(t)$, wobei die Bedarfsprognose eine Bedarfsprognoseunsicherheit aufweist wobei der zeitliche Verlauf der nominellen Leistung $p_{nom}(t)$ des Energiepaketes mindestens aus der Einspeiseprognose und der Bedarfsprognose bestimmt ist und

    wobei der zeitliche Verlauf des Restes R(t) eine Funktion zumindest der Einspeiseprognoseunsicherheit und der Bedarfsprognoseunsicherheit ist.

4.  Verfahren nach dem vorhergehenden Anspruch, wobei das Verfahren die Schritte umfasst

    F) Bilden eines Bedarfsdatenpakets {$p_{progBed}(t), R(t), T_{prog}$} der Senke, wobei das Bedarfsdatenpaket den prognostizierten zeitlichen Verlauf der von der Senke benötigten nominellen Leistung $p_{nomBed}(t)$ zu jedem Zeitpunkt t innerhalb des Prognosezeitraums $T_{prog}$ und den zeitlichen Verlauf eines Restes $R(t)$ als Funktion der Bedarfsprognoseunsicherheit der Bedarfsprognose zu jedem Zeitpunkt *t* innerhalb des Prognosezeitraums $T_{prog}$ beschreibt,
    G) Bilden eines Einspeisedatenpakets der Quelle, wobei das Einspeisedatenpaket den prognostizierten zeitlichen Verlauf der von der Quelle einzuspeisenden nominellen Leistung $p_{nomEin}(t)$ zu jedem Zeitpunkt *t* innerhalb des Prognosezeitraums $T_{prog}$ und den zeitlichen Verlauf eines Restes $R(t)$ als Funktion der Einspeiseprognoseunsicherheit der Einspeiseprognose zu jedem Zeitpunkt *t* innerhalb des Prognosezeitraums $T_{prog}$ beschreibt, und

    wobei das Bilden der Äquivalenzklasse eines Energiepakets zur Übertragung von einer Quelle an eine Senke durch mindestens eine Zuweisung eines Teilpakets des Einspeisedatenpakets zu einem Teilpaket des Bedarfsdatenpakets zumindest zur Deckung des Bedarfs der Senke umfasst.

5.  Verfahren nach einem der vorhergehenden Ansprüche, wobei dann, wenn eine Mehrzahl von Energiepaketen gleichzeitig über genau eine Kante des Übertragungsnetzwerks übertragen werden, die Schritte ausgeführt werden

H) Superpositionieren der gleichzeitig übertragenen Energiepakete zu genau einem simultanen Energiepaket mit einem superpositionierten simultanen Datenpaket

I) Einstellen der über die genau eine Kante fließenden physikalischen Leistung, so dass die physikalische Leistung an mindestens einem Ort $x$ der genau einen Kante ein Element der Äquivalenzklasse $\{p_{nom}(t),R(t),T\}$ des superpositionierten simultanen Datenpakets des genau einen durch die Superpositionierung in Schritt H) gebildeten simultanen Energiepakets ist, wobei die nominelle Leistung $p_{nom}(t)$ dieser Äquivalenzklasse $\{p_{nom}(t),R(t),T\}$ die Summe der nominellen Leistungen der gleichzeitig übertragenen Energiepakete ist, wobei bei der Summenbildung für die nominelle Leistung $p_{nom}(t)$ die Flussrichtungen der Leistung berücksichtigt wird, und wobei der Rest $R(t)$ der Äquivalenzklasse $\{p_{nom}(t),R(t),T\}$ die Summe der Reste der gleichzeitig übertragenen Energiepakete ist und wobei für die Summenbildung des Rests die Flussrichtung unberücksichtigt bleibt.

6. Verfahren nach dem vorhergehenden Anspruch, wobei das Verfahren weiterhin die Schritte aufweist

J) an jedem Knoten auf dem Übertragungsnetzwerk Bestimmen der Anteile der an jeder Kante des jeweiligen Knoten in einem frei wählbaren Prüfzeitraum zur gleichzeitigen Übertragung an den nächsten Knoten anstehenden Energiepakete anhand der Datenpakete,

K) für die Dauer des Prüfzeitraums Einstellen der Leistungseinspeisung in jede Kante des jeweiligen Knotens, so dass die physikalische Leistung $p_\varphi(x,t)$ an mindestens einem Ort $x$ der jeweiligen Kante ein Element einer Äquivalenzklasse $\{p_{nom}(t),R(t),T\}$ ist, deren nominelle Leistung $p_{nom}(t)$ die Summe der nominellen Leistungen der gleichzeitig übertragenen Energiepakete ist, wobei bei der Summenbildung für die nominelle Leistung die Flussrichtungen der elektrischen Leistung berücksichtigt wird, und deren Rest die Summe der Reste der gleichzeitig übertragenen Energiepakete ist, wobei für die Summenbildung des Rests die Flussrichtung unberücksichtigt bleibt, wobei die Flussrichtung für eine über eine Kante des Knotens ausgespeiste elektrische Leistung mit dem entgegengesetzten Vorzeichen zu der Flussrichtung, einer über eine Kante eingespeisten elektrischen Leistung gezählt wird.

7. Verfahren nach einem der vorhergehenden Ansprüche soweit von Anspruch 3 abhängig, wobei das Verfahren für einen Reservierungszeitraum $T_{res}$ weiterhin die Schritte umfasst, zu einem Reservierungszeitpunkt $t^{00}$, wobei der Reservierungszeitpunkt $t^{00}$ vor dem Beginn des Reservierungszeitraums $T_{res}$ mit einem Startzeitpunkt $t_{0res}$ und einer Reservierungsdauer $DT_{res}$ liegt und wobei der Reservierungszeitraum $T_{res}$ innerhalb des Prognosezeitraums $T_{prog}$ liegt,

L) für jede Senke Bestimmen der Menge aller Transportgraphen, von denen jeder an die Senke angebunden ist, sodass für jeden dieser Transportgraphen jede an den Transportgraphen angeschlossene Quelle über einen Transportpfad des Transportgraphen mit der Senke verbunden ist und für den Reservierungszeitraum $T_{res}$ über ein Teilpaket $E'_{Ein}$ eines von dem Einspeisedatenpaket definierten Einspeisepakets $E_{Ein}$ verfügt, wobei dieses verfügbare Teilpaket $E'_{Ein}$ aus einem von einem Deckungsdatenpaket $E_D$ definierten Deckungspaket und einem von einem Verlustdatenpaket $E_v$ definierten Verlustpaket gebildet wird, wobei die Deckungspakete der Quellen $Q$ des Transportgraphen zusammen einen maximierten Teil eines von dem Bedarfsdatenpaket definierten Bedarfspakets der Senke $S$ decken und wobei das jeweilige Verlustdatenpaket den durch eine Prognose bestimmten Verlust bei der Übertragung des jeweiligen von dem Deckungsdatenpaket definierten Deckungspaketes über den entsprechenden Transportpfad beschreibt,

M) Zuordnen eines Verlustdatenpakets $E_v$ zu jedem der Deckungsdatenpakete, wobei jedes der von den Deckungsdatenpaketen definierten Deckungspakete über einen ihm zugeordneten Transportpfad als Teilgraph eines Transportgraphs aus der Menge der Transportgraphen, die gemäß dem vorangestellten Schritt L) gebildet werden, übertragen wird, wobei eine nominelle Leistung der Äquivalenzklasse eines von dem Verlustdatenpaket definierten Verlustpakets durch eine Prognose des Verlustes und der Rest der Äquivalenzklasse des von dem Verlustdatenpaket definierten Verlustpakets als eine Funktion einer Prognoseunsicherheit einer Verlustprognose bestimmt werden, wobei die nominelle Verlustleistung die mittels der Verlustprognose prognostizierte, bei der Übertragung des Deckungspakets über den Transportpfad von der Quelle $Q$ zu der Senke $S$ abfallende Leistung ist, und wobei für die Verlustprognose alle in dem Reservierungszeitraum über den betrachteten Transportpfad zu übertragenen Energiepakete berücksichtigt werden, und der Transportpfad eine verfügbare Übertragungskapazität hat, um das Teilpaket $E'_{Ein}$, das aus dem von dem Deckungsdatenpaket definierten Deckungspaket $E_D$ und dem von dem Verlustdatenpaket definierten Verlustpaket $E_v$ gebildet wird, wobei das von dem Deckungsdatenpaket definierte Deckungspaket $E_D$ und das von dem Verlustdatenpaket übertragene Verlustpaket $E_v$ dieselbe Übertragungsrichtung haben, zu übertragen,

N) wobei die Äquivalenzklasse des Teilpakets $E'_{Ein}$ dadurch gebildet wird, dass die nominellen Leistungen des Deckungspakets und des Verlustpaketes sowie die Reste addiert werden und wobei das Verlustpaket dieselbe Flussrichtung wie das Deckungspaket hat und der Übertragungszeitraum $T$ gleich dem Reservierungszeitraum $T_{res}$ gesetzt wird,

O) für jede Senke Bestimmen der optimierten Transportpfade als Teilgraphen des bezüglich einer gewählten Metrik optimiert bestimmten Transportgraphen, wobei jede Quelle eines jeden so optimiert bestimmten Transportpfads, der diese Quelle $Q$ mit der Senke $S$ des Transportgraphen zur Übertragung eines Teilpakets des Einspeisepakets verbindet, zu jedem Zeitpunkt $t$ innerhalb des Reservierungszeitraums $T_{res}$ eine verfügbare Leistung bereitstellt, die ein Element der Äquivalenzklasse des gemäß dem vorstehenden Schritt N) bestimmten Teilpaktes ist,

P) Bilden jeweils eines Reservierungsdatenpakets zur Definition eines Reservierungspakets des Transportpfads aus Schritt O), wobei das Reservierungsdatenpaket des Reservierungspakets die Äquivalenzklasse des jeweiligen Teilpakets des Einspeisepakets als Äquivalenzklasse des Reservierungspakets, die Einspeisekante des jeweiligen Teilpakets des Einspeisepakets als Einspeisekante des Reservierungspakets, den Transportpfad und den Reservierungszeitraum $T_{res}$ beschreibt,

Q) für jede Quelle des Transportgraphen Bestimmen eines noch verfügbaren Teilpakets des Einspeisepakets jeder Quelle, sodass das Einspeisepaket durch Superposition aller Reservierungspakete und diesem verfügbaren Teilpaket für den Reservierungszeitraum gebildet wird,

R) für jede Senke für den Reservierungszeitraum $T_{res}$ Bestimmen des noch nicht gedeckten Teilpakets des Bedarfspakets, sodass das Bedarfspaket aus den Deckungspaketen gemäß Schritt N) den der Senke zugeordneten Reservierungspaketen und dem nicht gedeckten Teilpaket gebildet wird,

S) für jeden Zeitpunkt t aus dem Reservierungszeitraum $T_{res}$ Bestimmen der noch verfügbaren Übertragungskapazität des Übertragungsnetzwerks, sodass die vorgegebene Übertragungskapazität des Übertragungsnetzwerks die Summe aus der noch verfügbaren Übertragungskapazität und aus der Summe der nominellen Leistungen zuzüglich der Reste der Reservierungspakete ist,

T) für jede Einspeiseprognose, Bedarfsprognose und Verlustprognose durch die mindestens einer der durch sie bestimmten Werte geändert wird, wiederholen der vorangehenden Schritte,

U) für jedes in den Schritten L) bis O) gebildete Reservierungspaket zu einem freiwählbaren Buchungszeitpunkt $t_{Buch}$, der vor dem Startzeitpunkt $t_{0res}$ des Reservierungspakets liegt, verbindliches Buchen des Reservierungsdatenpakets des Reservierungspakets als das Datenpaket des Energiepakets, wobei der Übertragungszeitraum des Energiepakets der Reservierungszeitraum ist, wobei die Äquivalenzklasse $\{p_{nom}(t), R(t), T = T_{res}\}$ die Äquivalenzklasse des Reservierungspakets ist, wobei die Einspeisekante des Reservierungspakets die Einspeisekante des Energiepakets ist und wobei der Transportpfad des Reservierungspakets der Transportpfad des Energiepakets ist und

V) zur Ausführungszeit $t_0$ Übertragen des jeweiligen Energiepakets gemäß des Datenpakets des Energiepakets.

8. Verfahren nach dem vorhergehenden Anspruch soweit von Anspruch 2 abhängig, wobei das Verfahren für einen Reservierungszeitraum $T_{res}$ weiterhin die Schritte umfasst, zu dem Reservierungszeitpunkt $t^{00}$,

W) für jede Senke Bestimmen der Menge der Transportgraphen, die jeweils an die Senke angebunden sind, sodass für jeden dieser Transportgraphen jede an den Transportgraphen angeschlossene Quelle über einen Transportpfad des Transportgraphen mit der Senke verbunden ist und ein verfügbares Teilpaket des noch verfügbaren Einspeisepakets der Quelle hat, wobei dieses verfügbare Teilpaket aus einem von einem Deckungsdatenpaket definierten Deckungspaket und einem von einem Verlustdatenpaket definierten Verlustpaket gebildet wird, wobei die Deckungspakete der Quellen $Q_i$ des Transportgraphen zusammen einen maximierten Teil des Bedarfsdatenpakets der Senke $S$ decken und wobei das Verlustpaket den durch eine Prognose bestimmten Verlust bei der Übertragung des jeweiligen Deckungspaketes über den entsprechenden Pfad beschreibt,

X) für jede Senke und jeden gemäß Schritt W) bestimmten Transportgraphen, Erweitern des jeweiligen Transportgraphen zu einem erweiterten Transportgraphen durch Bestimmen der Kompensationsknoten des jeweiligen erweiterten Transportgraphen, indem für jede Quelle des erweiterten Transportgraphen die Kompensationsknoten bestimmt werden, sodass jeder dieser Kompensationsknoten über mindestens einen Kompensationspfad, als Teilgraph des erweiterten Transportgraphen, mit der Senke $S$ verbunden ist und die Kompensationsknoten zusammen über eine zuvor bestimmte maximale Gesamtkompensationsleistung $C(t)$ verfügen, um für jeden Zeitpunkt $t$ innerhalb des Reservierungszeitraums $T_{res}$ eine physikalische Leistung bis zu dieser maximalen Gesamtkompensationsleistung $C(t)$ aufzunehmen, wobei die maximale Gesamtkompensationsleistung $C(t)$ eine Funktion der Reste der Deckungspakete der jeweiligen Quelle $Q$ ist, und um über die Kompensationspfade in Summe eine physikalische Leistung bis zu dieser maximalen Gesamtkompensationsleistung

$C(t)$, die um die durch Prognose bestimmten Verlustleistungen, die bei der Übertragung der Teilpakete von den Kompensationsknoten über die Kompensationspfade abfallen, erhöht ist, in den Bedarfsknoten $K_S$ einzuspeisen,

Y) für jede Senke Bestimmen genau eines gemäß einer vorgegebenen Metrik optimierten erweiterten Transportgraphen aus der Menge aller gemäß den Schritten W) und X) bestimmten erweiterten Transportgraphen, die jeder über eine Bedarfskante mit der Senke verbunden sind,

Z) für den optimierten erweiterten Transportgraphen aus Schritt Y) Bilden der Reservierungsdatenpakete zur Definition der Reservierungspakete der über den optimalen erweiterten Transportgraphen zu übertragenden Energiepakete, wobei das Reservierungsdatenpaket jedes Reservierungspakets die Äquivalenzklasse des jeweiligen verfügbaren Einspeisepakets als Äquivalenzklasse des Reservierungspakets, die Einspeisekante des jeweiligen Einspeisepakets als Einspeisekante des entsprechenden Einspeiseknotens $K_Q$ des Reservierungspakets, den entsprechenden Transportpfad, der die Quelle mit der Senke verbindet, den Reservierungszeitraum $T_{res}$, sowie die Kompensationsknoten mit den entsprechenden Kompensationspotentialen und den Kompensationspfaden, die die Kompensationsknoten mit dem Bedarfsknoten $K_S$ an dem die Senke über die Bedarfskante angebunden ist, beschreibt,

AA) Bestimmen der noch verfügbaren Teilpakete der Einspeisepakete und der noch nicht gedeckten Anteile des Bedarfspakets der noch verfügbaren Übertragungskapazitäten gemäß des Schrittes O), Reduzieren der noch verfügbaren Kapazität der reservierten Kompensationsknoten um die reservierten maximalen Leistungen zur Aufnahme und zur Abgabe der entsprechenden Leistungen, Reduzieren der noch verfügbaren Übertragungskapazitäten der Kompensationspfade um die reservierten und um die Verlustleistung erhöhten Potentialen zur Abgabe von Leistung der reservierten Kompensationsknote

BB) für jede Einspeiseprognose, Bedarfsprognose und Verlustprognose durch die mindestens einer der durch sie bestimmten Werte geändert wird, Wiederholen der vorangehenden Schritte,

CC) für jedes in den vorangestellten Schritten gebildete Reservierungspaket eines optimierten erweiterten Transportgraphen, zu einem freiwählbaren Buchungszeitpunkt $t_{Buch}$, der vor dem Startzeitpunkt $t_{0res}$ des Reservierungspakets liegt, verbindliches Buchen der Reservierungsdatenpakete der Reservierungspakete als die Datenpakete der Energiepakete, wobei für jedes dieser Datenpakete der Übertragungszeitraum des Energiepakets der Reservierungszeitraum ist, wobei die Äquivalenzklasse $\{p_{nom}(t),R(t),T\}$ die Äquivalenzklasse des Reservierungspakets ist und die Einspeisekante des Reservierungspakets die Einspeisekante des Energiepakets ist, und verbindliches Buchen der reservierten Übertragungskapazitäten auf dem optimalen erweiterten Transportgraphen und

zur Ausführungszeit $t_0$ Übertragen des jeweiligen Energiepakets gemäß des Datenpakets des Energiepakets über die gebuchten Kapazitäten des gebuchten erweiterten Transportgraphen, und/oder

DD) für jede Senke Erweitern der in den Schritten W) und X) zuvor bestimmten möglichen Transportgraphen und/oder zuvor bestimmten möglichen erweiterten Transportgraphen um die möglichen Ausgleichsknoten und die möglichen Ausgleichspfade, sodass jeder dieser Ausgleichsknoten über einen Ausgleichspfad mit einer der Quellen des Transportgraphen und/oder erweiterten Transportgraphen, für die das zugeordnete Einspeisedatenpaket einen Ausgleich fordert, verbunden ist und diese Ausgleichsknoten Einzeln oder in Summe den Ausgleich für die entsprechenden Quellen leisten können und die die bei der Übertragung des Ausgleichspakets von dem Ausgleichsknoten an die Quelle auftretenden durch mindestens eine Verlustprognose bestimmten Verluste ausgleichen können,

EE) gemäß einer vorgegebenen Metrik Bestimmen eines optimierten Transportgraphen mit Ausgleich oder eines um die Kompensation erweiterten Transportgraphen mit Ausgleich aus der Menge der möglichen, gemäß Schritt DD) bestimmten Transportgraphen mit Ausgleich oder eines um die Kompensation erweiterten Transportgraphen mit Ausgleich und

FF) für den so bestimmten optimierten Transportgraphen mit Ausgleich oder eines um die Kompensation erweiterten Transportgraphen mit Ausgleich Durchführen der Schritte Z) bis CC).

9. Verfahren nach einem der vorhergehenden Ansprüche soweit von Anspruch 3 abhängig, wobei das Verfahren für einen Echtzeitprognosezeitraum $T_{RT}$ mit einem Echtzeitprognosebeginn $t_{0RT}$ und einer Echtzeitprognosedauer $DT_{RT}$, wobei der Echtzeitprognosezeitraum $T_{RT}$ ein Teilzeitraum des Reservierungszeitraums $T_{res}$ des Reservierungspakets ist, weiterhin die Schritte aufweist, zu einem Echtzeitprognosezeitpunkt $t^{000}$, der nach dem Reservierungszeitpunkt $t^{00}$ des Reservierungszeitraums $T_{res}$ und vor dem Echtzeitprognosebeginn $t_{0RT}$ liegt,

GG) Messen mindestens eines Parameters,
HH) Erstellen einer Echtzeitprognose $p_{RT}(x,t)$ der physikalischen Leistung $p_\varphi(x,t)$ zu jedem Zeitpunkt $t$ innerhalb des Echtzeitprognosezeitraums $T_{RT}$ an einem Ort $x$ des Übertragungsnetzwerks, wobei die Echtzeitprognose $p_{RT}(x,t)$ eine vernachlässigbare Echtzeitprognoseunsicherheit aufweist und unter Einbeziehung des mindestens

59

einen Parameters erstellt wird, wobei die physikalische Leistung $p_{\varphi}(x,t)$ eine Funktion dieses Parameters ist, und

II) Bilden eines Echtzeitenergiepaketes für die Übertragung über einen Teilgraphen des Übertragungsnetzwerks, indem das dem Echtzeitenergiepaket zugeordnete Echtzeitdatenpaket, welches das Echtzeitenergiepaket definiert, den zeitlichen Verlauf der nominellen Leistung $p_{nomRT}(x,t) = p_{RT}(x,t)$ an mindestens einem Ort $x$ jeder Kante des Teilgraphen als Funktion des prognostizierten zeitlichen Verlaufs der in diesen Teilgraph eingespeisten physikalischen Leistung $p_{\varphi}(x,t)$ an dem Ort $x$ beschreibt, wobei der Rest $R(t)$ konstant gleich Null und der Übertragungszeitraum $T$ gleich dem Echtzeitprognosezeitraum $T_{RT}$ gesetzt wird.

**10.** Verfahren nach dem vorhergehenden Anspruch soweit von Anspruch 5 abhängig, wobei das Übertragen des dem Datenpaket zugeordneten Energiepakets über einen gerichteten Transportpfad des gebuchten Transportgraphen, der die Quelle für das Energiepaket mit der Senke verbindet, für jeden Echtzeitprognosezeitraum $T_{RT}$, der ein Teil der Überdeckung des Übertragungszeitraums durch Echtzeitprognosezeiträume ist und für jeden Zeitpunkt $t$ innerhalb des jeweiligen Echtzeitprognosezeitraums $T_{RT}$ die folgenden Schritte umfasst

JJ) Erstellen einer Echtzeitprognose für den zeitlichen Verlauf der physikalischen Leistung $p_{\varphi}(x,t)$ für mindestens einen Ort $x$ auf mindestens jeder Kante des Transportpfads gemäß Schritt ii. des Anspruchs 9 unter Einbeziehung mindestens einer Messung der in die jeweilige zum Echtzeitprognosezeitpunkt $t^{000}$, in den Transportgraph eingespeisten physikalischen Leistung,

KK) Bilden eines Echtzeitenergiepakets für die Einspeisung über die Einspeisekante in diesen Transportpfad gemäß Schritt II), indem in dem zugeordneten Echtzeitdatenpaket der zeitliche Verlauf für den Echtzeitprognosezeitraum $T_{RT}$ der nominellen Leistung an mindestens einem Ort $x$ auf jeder Kante der Transportpfade, über die die Übertragung des Energiepakets von der Einspeisekante der Quelle an die entsprechende Bedarfskante der Senke erfolgt, gleich den entsprechenden Prognosen aus den Schritten HH) und II) gesetzt wird und der Rest für alle Zeitpunkte $t$ innerhalb des Echtzeitprognosezeitraums $T_{res}$ und alle Teilgraphen konstant gleich Null gesetzt wird,

LL) Übermitteln des Echtzeitdatenpaketes an die Kontrollinstanzen des Transportgraphen und

MM) Einstellen der physikalischen Leistung $p_{\varphi}(x,t)$ für mindestens einen Ort $x$ auf jeder Kante des Transportpfads, sodass die physikalische Leistung $p_{\varphi}(x,t)$ eine Funktion der in dem Echtzeitdatenpaket beschrieben nominellen Leistung $p_{nomRT}(x,t)$ für diesen Ort $x$ ist, und die physikalische Leistung $p_{\varphi}(x,t)$ zu jedem Zeitpunkt $t$ innerhalb des Übertragungszeitraums $T$ die in dem Datenpaket des Energiepakets beschriebene Äquivalenzrelation erfüllt, und

NN) für eine simultane Übertragung von Energiepaketen über eine einzige Kante eines Knotens für jeden Übertragungszeitraum $T$ Einstellen der physikalischen Leistung $p_{\varphi}(x,t)$ für mindestens einem Ort $x$ auf dieser Kante, sodass die physikalische Leistung $p_{\varphi}(x,t)$ eine Funktion der Summe der nominellen Leistungen der den simultan übertragenen Energiepaketen zugeordneten Echtzeitpakete an diesem Ort $x$ unter Berücksichtigung der Flussrichtung ist, sodass die physikalische Leistung $p_{\varphi}(x,t)$ zu jedem Zeitpunkt $t$ innerhalb des Übertragungszeitraums $T$ ein Element, der gemäß Anspruch 5 für das simultane Energiepaket gebildeten Äquivalenzklasse ist.

**11.** Verfahren nach Anspruch 8 oder 9 soweit von den Ansprüchen 2 und 8 abhängig, wobei das Verfahren für den Echtzeitprognosezeitraum $T_{RT}$ weiterhin die Schritte aufweist, für jeden Echtzeitprognosezeitraum $T_{RT}$, der ein Teil der Überdeckung des Übertragungszeitraums durch Echtzeitprognosezeiträume ist und für jeden Zeitpunkt (t) innerhalb des jeweiligen Echtzeitprognosezeitraums $T_{RT}$

OO) für jeden Einspeiseknoten $K_{Qi}$, an den über einen gebuchten Transportpfad des gebuchten, um Kompensation erweiterten Transportgraphen eine Quelle $Q_i$ angebunden ist, wobei die Quelle $Q_i$ zur Deckung des Bedarfs der Senke $S$ gebucht ist, Bestimmen einer von der Quelle über die Kante des Transportpfades, über den der Bedarfsknoten $K_S$ der Senke $S$ angebunden ist, eingespeisten Leistung an mindestens einem Ort $x$ dieser Kante mit einer Echtzeiteinspeiseprognose,

PP) Bestimmen der Differenz $\delta(t)$ zwischen der Summe der in alle gebuchten Transportpfade, die alle Quellen $Q_i$ mit der Senke S verbinden, eingespeisten physikalischen Leistungen aus den Echtzeiteinspeiseprognosen und der von der Senke $S$, die über die Bedarfskante an den Bedarfsknoten $K_S$ angebunden ist, entnommenen physikalischen Leistung an einem Ort $x$ der Bedarfskante aus der Echtzeitbedarfsprognose,

QQ) für jeden Zeitpunkt $t$ innerhalb des Echtzeitprognosezeitraums $T_{RT}$ Bilden einer maximalen Gesamtkompensationsleistung $C(t)$ als Summe aller maximalen Kompensationsleistungen $C_i(t)$ aller gebuchten Quellen $Q_i$ und der Senke $S$ und für jeden gebuchten Kompensationsknoten $K_{SASi}$ Bestimmen eines Quotienten $\gamma_i(t)$ aus der maximalen Kompensationsleistung $C_i(t)$ des jeweiligen Kompensationsknotens $K_{SASi}$ und der maximalen Gesamtkompensationsleistung $C(t)$,

RR) Bestimmen von Echtzeitkompensationspaketen zur Übertragung auf dem Kompensationsgraphen als Teilgraph des gebuchten erweiterten Transportgraphen, die die Kompensationsknoten $K_{SASi}$ und die Senke $S$ verbinden, indem für jeden Kompensationspfad des gebuchten Kompensationsgraphen, der einen Kompensationsknoten $K_{SASi}$ mit der Senke verbindet, in den dazugehörigen Echtzeitkompensationsdatenpaketen die nominelle Leistung $p_{nomKomRT}(x,t)$ für mindestens einen Ort $x$ jeder Kante des jeweiligen Kompensationspfads eine Funktion des Produkts der in Schritt PP) bestimmten Differenz $\delta(t)$ mit dem Quotienten $\gamma_i(t)$, aber nur maximal bis zu dem Wert der maximalen Kompensationsleistung $C_i(t)$ ist, und der Rest $R(t)$ konstant gleich null gesetzt werden, wobei dann, wenn das Produkt $\gamma_i(t) \cdot \delta(t)$ negativ ist, dieses um den durch eine Echtzeitprognose für einen Ort $x$ der Kante des Kompensationspfades, über den der Bedarfsknoten $K_S$ an den Kompensationsknoten $K_{SASi}$ angebunden ist, bestimmten Betrag zum Ausgleich der bei der Übertragung von dem Kompensationsknoten zu der entsprechenden Senke $S$ anfallenden Verluste erhöht wird,

SS) Übermitteln der Echtzeitkompensationsdatenpakete an die Kontrollinstanzen und

TT) Übertragen der Echtzeitkompensationspakete, indem zu jedem Zeitpunkt $t$ innerhalb des Übertragungszeitraums $T$ an mindestens einem Ort $x$ auf den Kanten der Kompensationspfade die physikalische Leistung $p_\varphi(x,t)$ so eingestellt wird, dass diese gleich der nominellen Leistung $p_{nomKomRT}(x,t)$ der Echtzeitkompensationspakete für diesen Ort $x$ ist, und gleichzeitig zu jedem Zeitpunkt $t$ innerhalb des Übertragungszeitraums $T$ die physikalischen Leistungen $p_\varphi(x,t)$ so eingestellt werden, dass diese gleich der nominellen Leistungen der Echtzeitenergiepakete $p_{nomRT}(x,t)$ an den zuvor durch die in den Echtzeitprognosen gewählten Orten $x$ auf dem Transportgraphen sind, sodass die physikalische Leistung $p_\varphi(x,t)$ an einem durch die Echtzeitprognose für den Bedarf gewählten Orts $x$ auf der Bedarfskante gleich der Summe der nominellen Leistungen der Energiepakete, die von den Einspeiseknoten $K_{Qi}$ an den Bedarfsknoten $K_S$ übertragen werden, plus der Kompensationsleistung $\delta'(t)$ ist, wobei die Kompensationsleistung $\delta'(t)$ gleich der Differenz zwischen der physikalischen Leistung $p_\varphi(x,t)$ der von der Senke gemäß der Echtzeitbedarfsprognose entnommenen Leistung und der Summe der nominellen Leistungen der an die Senke $S$ übertragenen Energiepakete ist.

12. Verfahren nach Anspruch 9 oder 10 soweit von den Ansprüchen 2 und 8 abhängig, wobei das Verfahren für jeden Echtzeitprognosezeitraum $T_{RT}$, der Teil der Überdeckung des Übertragungszeitraums durch Echtzeitprognosezeiträume ist mit dem Echtzeitprognosezeitpunkt $t^{000}$ weiterhin die Schritte aufweist, für jeden Zeitpunkt (t) innerhalb des jeweiligen Echtzeitprognosezeitraums $T_{RT}$

UU) für jeden Einspeiseknoten $K_{Qi}$, an den über eine Einspeisekante eine Quelle $Q_i$ angebunden ist, wobei die Quelle $Q_i$ zur Deckung des Bedarfs der Senke $S$ gebucht ist, für jeden Zeitpunkt $t$ innerhalb des Echtzeitprognosezeitraum, Bestimmen des Anteils $\rho(t)$ der eingespeisten physikalischen Leistungen $p_\varphi(x,t)$ aus den Echtzeiteinspeiseprognosen an mindestens einem Ort $x$ der jeweiligen Einspeisekanten der durch die Äquivalenzrelation definierte Grenzen des von dem Einspeiseknoten $K_{Qi}$ an die Senke $S$ zu übertragenden Energiepaketes überschreitet oder unterschreitet,

VV) für jeden Zeitpunkt $t$ innerhalb des Echtzeitprognosezeitraums $T_{RT}$ Bilden einer maximalen Gesamtausgleichsleistung $D(t)$ als Summe aller maximalen Ausgleichsleistungen $D_i(t)$ der für die Quellen $Q_i$ gebuchten Ausgleichsknoten $K_{Ausi}$ und für jeden Ausgleichsknoten $K_{Ausi}$ Bestimmen eines Quotienten $g_i(t)$ aus der maximalen Ausgleichsleistung $D_i(t)$ des jeweiligen Ausgleichsknotens $K_{Ausi}$ und der maximalen Gesamtausgleichsleistung $D(t)$,

WW) Bestimmen von Echtzeitausgleichspaketen zur Übertragung auf allen gebuchten Ausgleichspfaden die die Ausgleichsknoten $K_{Ausi}$ und die Quelle $Q_l$ verbinden, indem in den dazugehörigen Echtzeitausgleichsdatenpaketen die nominelle Leistung $p_{nomAusRT}(x,t)$ für mindestens einen Ort $x$ jeder Kante des jeweiligen Ausgleichspfads eine Funktion des Produkts der in Schritt UU) bestimmten Abweichung $\rho(t)$ mit dem Quotienten $g_i(t)$, aber nur maximal bis zu dem Wert der maximalen Ausgleichsleistung $D_i(t)$ ist, und der Rest $R_i(t)$ konstant gleich null gesetzt wird, wobei dann, wenn das Produkt $g_i(t) \cdot \rho(t)$ negativ ist, dieses um den durch eine Echtzeitprognose für einen Ort $x$ der Kante des Ausgleichspfades, über die der Einspeiseknoten $K_{Qi}$ an den Ausgleichsknoten $K_{Ausi}$ angebunden ist, bestimmten Betrag zum Ausgleich der bei der Übertragung von dem Ausgleichsknoten zu der entsprechenden Quelle anfallenden Verluste erhöht wird,

XX) Übermitteln der Echtzeitausgleichsdatenpakete an die den Knoten auf den Ausgleichsgraphen zugeordneten Kontrollinstanzen,

YY) Übertragen der Echtzeitausgleichspakete, indem zu jedem Zeitpunkt $t$ innerhalb des Übertragungszeitraums $T$ für mindestens einen Ort $x$ auf jeder Kante des Ausgleichsgraphs die physikalische Leistung $p_\varphi(x,t)$ so eingestellt wird, dass diese gleich der nominellen Leistung $p_{nomAusRT}(x, t)$ der Echtzeitausgleichspakete für den Ort $x$ ist, und

ZZ) zu jedem Zeitpunkt $t$ innerhalb des Übertragungszeitraums $T$ Einstellen der physikalischen Leistung $p_\varphi(x,t)$ für mindestens einen Ort $x$ jeder Kante des Transportpfads, sodass die physikalische Leistung $p_\varphi(x,t)$ gleich

der nominellen Leistung $p_{nomRT}(x,t)$ der Echtzeitenergiedatenpakete für den Ort $x$ ist und ein Element der Leistungsklasse des zu übertragenden Energiepakets ist.

**13.** System zum gerichteten Übertragen von Energie in Form mindestens eines Energiepakets mit einem Übertragungsnetzwerk und einem Daten- und Rechnernetzwerk,

wobei das Übertragungsnetzwerk umfasst

mindestens zwei Knoten, von denen einer ein Einspeiseknoten $K_Q$ und einer ein Bedarfsknoten $K_S$ ist, mindestens eine Kante, wobei jede Kante genau zwei Knoten miteinander verbindet, mindestens einen Leistungssteller, wobei der mindestens eine Leistungssteller derart eingerichtet und angeordnet ist, dass mittels des mindestens einen Leistungsstellers für mindestens einen Ort $x$ auf jeder Kante eine tatsächlich über die jeweilige Kante fließende physikalische Leistung $p_\varphi(x,t)$ einstellbar ist, eine Mehrzahl von Quellen $Q$, wobei jede der Quellen $Q$ über eine Einspeisekante mit einem Einspeiseknoten $K_Q$ verbunden ist, und eine Mehrzahl von Senken $S$, wobei jede der Senken $S$ über eine Bedarfskante mit einem Bedarfsknoten $K_S$ verbunden ist,

wobei das Daten- und Rechnernetzwerk aufweist

mindestens einen Rechnerknoten und mindestens eine auf dem mindestens einen Rechnerknoten ausgeführte Kontrollinstanz, wobei das Daten- und Rechnernetzwerk derart ausgestaltet und mit dem mindestens einen Leistungssteller wirksam verbunden ist, dass in dem Betrieb des Systems die physikalische Leistung $p_\varphi(x,t)$ durch den mindestens einen Leistungssteller für mindestens einen Ort x auf jeder Kante von der Kontrollinstanz steuerbar ist, wobei die mindestens eine Kontrollinstanz des mindestens einen Rechnerknotens derart ausgestaltet ist, dass die Kontrollinstanz in dem Betrieb des Systems ein Verfahren ausführt mit den Schritten:

A) Bilden eines Datenpaketes, wobei das Datenpaket genau einem Energiepaket eineindeutig zugeordnet ist, wobei das Datenpaket das jeweilige Energiepaket definiert und wobei das Datenpaket beschreibt

i) einen Übertragungszeitraum $T$ des Energiepakets mit einer Dauer $DT$ und einer Ausführungszeit $t_0$, die den Beginn des Übertragungszeitraums $T$ kennzeichnet, ii) einen zuvor bestimmten Transportpfad eines Transportgraphen des Übertragungsnetzwerks zur gerichteten Übertragung des Energiepakets, der mindestens eine aus der Mehrzahl von Quellen $Q$ mit genau einer aus der Mehrzahl von Senken $S$ verbindet, wobei die genau eine aus der Mehrzahl von Quellen $Q$ über genau eine Einspeisekante an einen Einspeiseknoten $K_Q$ des zuvor bestimmten Transportpfads angebunden ist und die genau eine Senke S über eine Bedarfskante des zuvor bestimmten Transportpfads an den Bedarfsknoten $K_S$ angebunden ist, und iii) eine Äquivalenzklasse $\{p_{nom}(t), R(t), T\}$ des Energiepaketes,

wobei die Äquivalenzklasse $\{p_{nom}(t), R(t), T\}$ gegeben ist durch

einen durch mindestens eine Prognose zuvor bestimmten zeitlichen Verlauf einer nominellen Leistung $p_{nom}(t)$ des Energiepaketes und einen zeitlichen Verlauf eines Restes $R(t)$ als Funktion einer Prognoseunsicherheit der mindestens einen Prognose, wobei es für jeden Zeitpunkt $t$ innerhalb des Übertragungszeitraums $T$ des Energiepakets ein $\mu(t)$, mit $-1 \leq \mu(t) < 1$ oder mit $-1 < \mu(t) \leq 1$ oder mit $-1 \leq \mu(t) \leq 1$ gibt, sodass die physikalische Leistung $p_\varphi(x,t)$ bei der Übertragung des Energiepaketes zu jedem Zeitpunkt $t$ und an mindestens einem Ort $x$ auf jeder Kante des Transportpfads als Summe aus der nominellen Leistung $p_{nom}(t)$ und dem Produkt aus $\mu(t)$ und dem Rest $R(t)$ festlegt ist,

wobei die Äquivalenzklasse durch eine Äquivalenzrelation definiert ist, gemäß der für jeden Zeitpunkt $t$ des Übertragungszeitraums $T$ eine erste physikalische Leistung $p'_\varphi(\hat{x},t)$ an einem beliebigen Ort $\hat{x}$ einer Kante des Transportpfads und eine zweite physikalische Leistung $p_\varphi(x,t)$ an einem beliebigen Ort $x$ einer Kante des Transportpfads genau dann äquivalent sind, wenn es einen vorgegebenen Rest $R(t)$ größer oder gleich null und kleiner oder gleich einem Grenzwert $R_{max}$ sowie ein $\mu(t)$, mit $-1 \leq \mu(t) < 1$ oder mit $-1 < \mu(t) \leq 1$ oder mit $-1 \leq \mu(t) \leq 1$ gibt, so dass die erste physikalische Leistung $p'_\varphi(\hat{x},t)$ gleich der Summe aus der zweiten physikalischen Leistung $p_\varphi(x,t)$ und dem Produkt von $\mu(t)$ und dem Rest $R(t)$ ist,

B) vor der Ausführungszeit $t_0$ Übertragen des Datenpaketes an alle Kontrollinstanzen des Daten- und Rechnernetzwerks an denen die Leistungssteller zum Steuern der physikalischen Leistung angebunden sind, so dass alle für das Übertragen eines Energiepakets notwendigen Daten auf den Kontrollinstanzen kohärent sind, und

C) beginnend mit der Ausführungszeit $t_0$ Übertragen des dem Datenpaket eineindeutig zugeordneten Energiepaketes,

wobei für alle Zeitpunkte $t$ innerhalb des Übertragungszeitraums $T$ des Energiepakets die auf dem Transportpfad zwischen dem Einspeiseknoten $K_Q$ und dem Bedarfsknoten $K_S$ fließende physikalische Leistung $p_\varphi(x,t)$ für mindestens einen Ort $x$ jeder Kante des Transportpfads so eingestellt wird, dass die in den Bedarfskonten $K_S$ eingespeiste physikalische Leistung ein Element der von dem Datenpaket beschriebenen Äquivalenzklasse $\{p_{nom}(t),R(t),T\}$ ist.

## Claims

1. A method for directional transmission of energy in the form of at least one energy packet from a plurality of sources $Q$ via at least two nodes, one of which is a supply node $K_Q$ connected via a supply edge to one of the plurality of sources $Q$ and one of which is a demand node $K_S$ connected via a demand edge to a load $S$, and via a plurality of edges to a plurality of loads $S$ in a transmission network, the transmission network being controllable by means of a data and computer network in such a way that for at least one location $x$ on each of the plurality of edges an actually flowing physical power $p_\varphi(x,t)$ is controllable by a control instance of the data and computer network, which method comprises the steps of:

    A) forming a data packet for each energy packet, wherein the data packet is biuniquely assigned to exactly one energy packet, wherein the data packet defines the respective energy packet, and wherein the data packet describes

        i. a transmission period $T$ of the energy packet with a duration $DT$ and an execution time $t_0$, which execution time $t_0$ identifies the start of the transmission period $T$,
        ii. a predetermined transport path of a transport graph of the transmission network for the directed transmission of the energy packet, which transport path connects at least one of the plurality of sources $Q$ with exactly one of the plurality of loads, wherein the exactly one of the plurality of sources $Q$ is connected to a supply node $K_Q$ of the predetermined transport path via exactly one supply edge and the exactly one load $S$ is connected to the demand node $K_S$ via a demand edge of the predetermined transport path, and
        iii. an equivalence class $\{p_{nom}(t),R(t),T\}$ of the energy packet,

            wherein the equivalence class is given by

                a nominal power $p_{nom}(t)$ of the energy packet as a function of time, wherein the nominal power $p_{nom}(t)$ is determined beforehand by at least one prediction, and a remainder $R(t)$ as a function of time and as a function of a prediction uncertainty of the at least one prediction, wherein for each point in time $t$ within the transmission period $T$ of the energy packet there is a $\mu(t)$, with $-1 \leq \mu(t) < 1$ or with $-1 < \mu(t) \leq 1$ or with $-1 \leq \mu(t) \leq 1$, such that the physical power $p_\varphi(x,t)$ during the transmission of the energy packet at each point in time $t$ and at at least one location $x$ on each edge of the transport path is fixed as the sum of the nominal power $p_{nom}(t)$ and the product of $\mu(t)$ and the remainder $R(t)$,

            wherein the equivalence class is defined by an equivalence relation, according to which equivalence relation, for any point in time $t$ of the transmission period $T$, a first physical power $p'_\varphi(\hat{x},t)$ at any location $\hat{x}$ of an edge of the transport path and a second physical power $p_\varphi(x,t)$ at any location $x$ of an edge of the transport path are equivalent only if there is a predetermined remainder $R(t)$ greater than or equal to zero and less than or equal to a limit value $R_{max}$ and a $\mu(t)$, with $-1 \leq \mu(t) < 1$ or with $-1 < \mu(t) \leq 1$ or with $-1 \leq \mu(t) \leq 1$, such that the first physical power $p'_\varphi(\hat{x},t)$ is equal to the sum of the second physical

power $p_\varphi(x,t)$ and the product of $\mu(t)$ and the remainder $R(t)$,

B) prior to the execution time $t_0$ transmitting the data packet to all control instances of at least all nodes or all edges on the transport path,

C) beginning with the execution time $t_0$ transmitting the energy packet biuniquely assigned to the data packet, wherein for all points in time $t$ within the transmission period $T$ of the energy packet, the physical power $p_\varphi(x,t)$ flowing on the transport path between the supply node $K_Q$ and the demand node $K_S$ is set at at least one location $x$ of each edge of the transport path in such a way that the physical power fed into the demand node $K_S$ is an element of the equivalence class $\{p_{nom}(t),R(t),T\}$ described by the data packet.

2. The method according to the preceding claim, wherein the data packet furthermore describes

iv) a predetermined compensation path of the transport graph of the electrical transmission network connecting a predetermined compensation node $K_{SAS}$ node to the demand node $K_S$ via a plurality of edges, wherein the compensation node $K_{SAS}$ at any point in time $t$ of the transmission period $T$ of the energy packet either can receive a physical power up to a predetermined maximum compensation power $C(t)$, wherein the predetermined maximum compensation power $C(t)$ as a function of the remainder $R(t)$, or can deliver a physical power up to the maximum compensation power $C(t)$, optionally increased by a loss drop determined by a prediction, via the compensation path, and

wherein, in step C), the physical power flowing between the compensation node $K_{SAS}$ and at least the demand node $K_S$ is controlled for at least one location $x$ on the plurality of edges of the compensation path such that the physical power at the at least one location $x$ is at any point in time $t$ within the transmission period $T$ an element of an equivalence class $\{p_{nom}(t) = 0, R(t) = C(t), T\}$ with a nominal power $p_{nom}(t)$ of zero and a remainder having the value of the previously determined maximum compensation power $C(t)$ and such that at at least one location $x$ of the demand edge the physical power $p_\varphi(x,t)$ flowing through the demand edge between the demand node $K_S$ and the load $S$ connected to this demand node is equal to the nominal power $p_{nom}(t)$ of the energy packet plus a compensation power $\delta(t)$ as a function of the prediction, and/or the data packet describes

v) a previously determined balancing path of the transport graph of the transmission network, which via a plurality of edges connects a previously determined balancing node $K_{Aus}$ and the supply node $K_Q$, wherein the balancing node $K_{Aus}$ at any point in time $t$ of the transmission period $T$ of the energy packet can receive a physical power up to a predetermined maximum balancing power $D(t)$, wherein the predetermined maximum balancing power $D(t)$ is determined as a function of the remainder $R(t)$, or provide a physical power up to the maximum balancing power $D(t)$, optionally increased by the loss drop determined by a prediction, via the balancing path, and

wherein, in step C), the physical power flowing between the balancing node $K_{Aus}$ and the supply node $K_Q$ for at least one location $x$ on the plurality of edges of the balancing path is controlled such that at this at least one location $x$ the physical power at any point in time $t$ within the transmission period $T$ is an element of an equivalence class $\{p_{nom}(t) = 0, R(t) = D(t), T\}$ with a nominal power $p_{nom}(t)$ of zero and a remainder with the value of the predetermined maximum balancing power $D(t)$ and such that the physical power $p_\varphi(x,t)$ flowing between the supply node $K_Q$ and the demand node $K_S$ for at least one location $x$ on the plurality of edges of the transport path is an element of the equivalence class $\{p_{nom}(t),R(t),T\}$ of the energy packet.

3. The method according to any one of the preceding claims, wherein the method for an arbitrary prediction period $T_{prog}$ with a prediction start $t_{0prog}$ and a prediction duration $DT_{prog}$ further comprising the steps of, at a prediction point in time $t^0$, which is prior to the prediction start $t_{0prog}$,

D) generating of a supply prediction for a supply power $p_{progEin}(t)$ to be supplied at any point in time $t$ in the prediction period $T_{prog}$ from the respective source, wherein the supply prediction has a supply prediction uncertainty, and

E) generating a demand prediction for a power demand $p_{progBed}(t)$ predicted to be required by the respective load at any point in time $t$ in the prediction period $T_{prog}$, wherein the demand prediction has a demand prediction uncertainty, wherein the temporal course of the nominal power $p_{nom}(t)$ of the energy packet is determined at least from the supply prediction and the demand prediction, and

wherein the temporal course of the remainder $R(t)$ is a function of at least the supply prediction uncertainty and the demand prediction uncertainty.

4. The method according to the preceding claim, the method comprising the steps of

F) forming a demand data packet $\{p_{progBed}(t), R(t), T_{prog}\}$ of the load, the demand data packet describing the predicted temporal course of the nominal power required by the load $p_{nomBed}(t)$ at any point in time $t$ within the prediction period $T_{prog}$ and the temporal course of a remainder $R(t)$ as a function of the demand prediction uncertainty of the demand prediction at any point in time $t$ within the prediction period $T_{prog}$,

G) forming a supply data packet of the source, the supply data packet describing the predicted temporal course of the nominal power $p_{nomEin}(t)$ to be supplied by the source at any point in time $t$ within the prediction period $T_{prog}$ and the temporal course of a remainder $R(t)$ as a function of the supply prediction uncertainty of the supply prediction at any point in time $t$ within the prediction period $T_{prog}$ and

wherein forming of the equivalence class of an energy packet for transmission from a source to a load comprises at least one allocation of a sub-packet of the supply data packet to a sub-packet of the demand data packet at least to meet the demand of the load.

5. The method according to any one of the preceding claims, wherein, when a plurality of energy packets is transmitted simultaneously via exactly one edge of the transmission network, the following steps are carried out

H) superpositioning the simultaneously transmitted energy packets to exactly one simultaneous energy packet with a superpositioned simultaneous data packet,

I) adjusting the physical power flowing via the exactly one edge, so that the physical power at at least one location $x$ of the exactly one edge is an element of the equivalence class $\{p_{nom}(t), R(t), T\}$ of the superpositioned simultaneous data packet of the exactly one simultaneous power packet formed by the superpositioning in step H), wherein the nominal power $p_{nom}(t)$ of this equivalence class $\{p_{nom}(t), R(t), T\}$ is the sum of the nominal powers of the simultaneously transmitted energy packets, wherein in the summation for the nominal power $p_{nom}(t)$ the flow directions of the power is taken into account, and wherein the remainder $R(t)$ of the equivalence class $\{p_{nom}(t), R(t), T\}$ is the sum of the remainders of the simultaneously transmitted energy packets and wherein for the summation of the remainder the flow direction is disregarded.

6. The method according to the preceding claim, the method further comprising the steps of

J) at each node on the transmission network determining the fractions of energy packets pending at each edge of the respective node in an arbitrary test period for simultaneous transmission to the next node based on the data packets,

K) for the duration of the test period, adjusting the power supply to each edge of the respective node so that the physical power $p_{\varphi}(x, t)$ at at least one location $x$ of the respective edge is an element of an equivalence class $\{p_{nom}(t), R(t), T\}$ whose nominal power $p_{nom}(t)$ is the sum of the nominal powers of the simultaneously transmitted energy packets, the flow directions of the electrical power being taken into account in the summation for the nominal power, and the remainder of which is the sum of the remainders of the simultaneously transmitted energy packets, the flow direction being disregarded for the summation of the remainder, wherein the flow direction for an electrical power fed out via an edge of the node being counted with the opposite sign compared to the flow direction of an electrical power supplied via an edge.

7. The method according to any one of the preceding claims insofar as dependent on claim 3, wherein the method at a reservation point in time $t^{00}$ and for a reservation period $T_{res}$, wherein the time $t^{00}$ is prior to the start of the reservation period $T_{res}$, which reservation period has a start time $t_{0res}$ and a reservation duration $DT_{res}$, and wherein the reservation period $T_{res}$ is within the prediction period $T_{prog}$, further comprises the steps of,

L) for each load, determining the amount of all transport graphs, each of which transport graphs is connected to the load, such that for each of these transport graphs, each source connected to the transport graph is connected to the load via a transport path of the transport graph and, for the reservation period $T_{res}$ via a sub-packet $E'_{Ein}$ of a supply packet defined by the supply data packet for the reservation period, wherein this available sub-packet $E'_{Ein}$ is formed by a coverage packet defined by a coverage data packet $E_D$ and a loss packet $E_v$, the coverage packets of the sources $Q$ of the transport graph together cover a maximized portion of a demand packet of the load $S$ defined by the demand data packet and wherein the respective loss data packet describes the loss determined by a prediction during the transmission of the respective coverage packet defined by the coverage data packet via the corresponding transport path,

M) associating a loss data packet $E_v$ to each of the coverage data packets, wherein each of the coverage packets defined by the coverage data packets is transmitted via a transport path assigned thereto as a subgraph of a transport graph out of the amount of transport graphs formed according to the preceding step L), wherein a nominal power of the equivalence class of a loss packet defined by the loss data packet is determined by a prediction of the loss and the remainder of the equivalence class of the loss packet defined by the loss data packet is determined as a function of a prediction uncertainty of a loss prediction, wherein the nominal power of the loss is the power predicted to be lost in the transmission of the cover packet via the transport path from the source $Q$ to the load $S$ by the loss prediction, and wherein for the loss prediction all energy packets to be transmitted via the considered transport path during the reservation period are taken into account, and the transport path has an available transmission capacity to transmit the sub-packet $E'_{Ein}$ which is composed of the coverage packet defined by the coverage data packet $E_D$ and the loss packet defined by the loss data packet $E_v$, wherein the coverage packet $E_D$ defined by the coverage data packet and the loss packet $E_v$ defined by the loss data packet have the same transmission direction,

N) wherein the equivalence class of the sub-packet $E'_{Ein}$ is formed by adding the nominal powers of the coverage packet and the loss packet and the remainders, and wherein the loss packet has the same flow direction as the coverage packet and the transmission period $T$ is set equal to the reservation period $T_{res}$,

O) for each load, determining the optimized transport paths as subgraphs of the transport graph optimizedly determined with respect to a selected metric, wherein each source of each transport path so optimizedly determined, connecting that source Q with the load S of the transport graph for the transmission of a sub-packet of the supply packet, at any point in time $t$ within the reservation period $T_{res}$ provides an available power which is an element of the equivalence class of the sub-packet determined in accordance with step N) above,

P) forming in each case a reservation data packet for defining a reservation packet of the transport path from step O), wherein the reservation data packet of the reservation packet describes the equivalence class of the respective sub-packet of the supply packet as an equivalence class of the reservation packet, the supply edge of the respective sub-packet of the supply packet as the supply edge of the reservation packet, the transport path and the reservation period $T_{res}$,

Q) for each source of the transport graph determining a sub-packet of the supply packet of each source that is still available, so that the supply packet is formed by superposition of all reservation packets and this available sub-packet for the reservation period,

R) for each load for the reservation period $T_{res}$ determining the not yet covered sub-packet of the demand packet, so that the demand packet is formed from the coverage packets according to step N), the reservation packets being assigned to the load and the not covered sub-packet,

S) for each time $t$ in the reservation period $T_{res}$ determining the remaining available transmission capacity of the transmission network, such that the given transmission capacity of the transmission network is the sum of the remaining available transmission capacity and the sum of the nominal powers plus the remainders of the reservation packets,

T) for each supply prediction, demand prediction and loss prediction by which at least one of the values determined by them is changed, repeating the preceding steps,

U) for each reservation packet formed in steps L) to O) at an arbitrary booking time $t_{Buch}$, which is prior to the start time $t_{0res}$ of the reservation packet, bindingly booking the reservation data packet of the reservation packet as the data packet of the energy packet, wherein the transmission period of the energy packet is the reservation period, wherein the equivalence class $\{p_{nom}(t), R(t), T = T_{res}\}$ is the equivalence class of the reservation packet, wherein the supply edge of the reservation packet is the supply edge of the energy packet, and wherein the transport path of the reservation packet is the transport path of the energy packet, and

V) at the execution time $t_0$ transmitting of the respective energy packet according to the data packet of the energy packet.

8. The method according to the preceding claim insofar as dependent on claim 2, the method, for a reservation period $T_{res}$, further comprising the steps of, at the reservation point in time $t^{00}$,

W) for each load, determining the set of transport graphs each connected to the load such that, for each one of this set of transport graphs, each source connected to the transport graph is connected to the load via a transport path of the transport graph and has an available sub-packet of the remaining available supply packet of the source, the available sub-packet being formed from a coverage packet defined by a coverage data packet and a loss packet defined by a loss data packet, wherein the coverage packets of the sources $Q_i$ of the transport graph together cover a maximized portion of the demand data packet of the load S and wherein the loss packet describes the loss in the transmission of the respective coverage packet over the corresponding path, which loss is determined by a prediction,

X) for each load and each transport graph determined according to step W), extending the respective transport graph to an extended transport graph by determining the compensation nodes of the respective extended transport graph such that for each source of the extended transport graph the compensation nodes are determined, wherein each of these compensation nodes is connected via at least one compensation path, as a subgraph of the extended transport graph, to the load S and the compensation nodes together provide a maximum total compensation power $C(t)$ determined beforehand in order to receive a physical power up to the maximum total compensation power $C(t)$ at each point in time $t$ within the reservation period $T_{res}$, wherein the maximum total compensation power $C(t)$ is a function of the remainders of the coverage packets of the respective source $Q$ and in order to supply via the compensation paths in sum a physical power up to this maximum total compensation power $C(t)$, which is increased by the power losses determined by prediction, which power losses drop during the transmission of the sub-packets from the compensation nodes via the compensation paths into the demand node $K_S$,

Y) for each load determining exactly one extended transport graph optimized according to a given metric from the set of all extended transport graphs determined according to steps W) and X), each of the extended transport graphs being connected to the load via a demand edge,

Z) for the optimized extended transport graph of step Y) forming the reservation data packets for defining the reservation packets of the energy packets to be transmitted over the optimized extended transport graph, wherein the reservation data packet of each reservation packet includes the equivalence class of the respective available supply packet as the equivalence class of the reservation packet, the supply edge of the respective supply packet as the supply edge of the corresponding source node $K_Q$ of the reservation packet, the corresponding transport path connecting the source to the load, the reservation period $T_{res}$, as well as the compensation nodes with the corresponding compensation potentials and the compensation paths connecting the compensation nodes with the load node $K_S$ to which the load is connected via the demand edge,

AA) determining the still available sub-packets of the supply packets and the not yet covered portions of the demand packet of the still available transmission capacities according to step O), reducing the still available capacity of the reserved compensation nodes by the reserved maximum powers for receiving and for delivering the corresponding powers, reducing the still available transmission capacities of the compensation paths by the reserved potentials for delivering power of the reserved compensation nodes increased by the power loss,

BB) for each supply prediction, demand prediction and loss prediction by which at least one of the values determined by the respective prediction is changed, repeat the previous steps,

CC) for each reservation packet of an optimized extended transport graph formed in the preceding steps, at an arbitrary booking point in time $t_{Buch}$, which booking point in time $t_{Buch}$ is prior to the start time $t_{0res}$ of the reservation packet, bindingly booking the reservation data packets of the reservation packets as the data packets of the energy packets, wherein for each of these data packets the transmission period of the energy packet is the reservation period, wherein the equivalence class $\{p_{nom(t)}, R(t), T\}$ is the equivalence class of the reservation packet and the supply edge of the reservation packet is the supply edge of the energy packet, and bindingly booking the reserved transmission capacities on the optimal extended transport graph, and

at the execution time $t_0$ transmission of the respective energy packet according to the data packet of the energy packet via the booked capacities of the booked extended transport graph,

and/or

DD) for each load, extending the possible transport graphs and/or possible extended transport graphs previously determined in steps W) and X) by the possible balancing nodes and the possible balancing paths, such that each of these balancing nodes is connected via a balancing path to one of the sources of the transport graph and/or extended transport graph, for which the associated supply data packet requires a balancing, and these balancing nodes can individually or collectively provide a balancing for the corresponding sources and can balance the losses determined by at least one loss prediction occurring during the transmission of the balancing packet from the balancing node to the source,

EE) according to a predetermined metric, determining an optimized transport graph with balancing or an extended transport graph with compensation with a balancing out of the set of possible transport graphs with a balancing determined according to step DD) or a transport graph with compensation extended by the compensation, and

FF) for the optimized transport graph with balancing determined in this way or a transport graph with balancing extended by the compensation carrying out steps Z) to CC).

9. The method according to any one of the preceding claims insofar as dependent on claim 3, wherein the method for a real-time prediction period $T_{RT}$ with a real-time prediction start $t_{0RT}$ and a real-time prediction duration $DT_{RT}$, wherein the real-time prediction period $T_{RT}$ is a sub-period of the reservation period $T_{res}$ of the reservation packet, further comprises the steps of, at a real-time prediction point in time in time $t^{000}$ after the reservation point in time in time $t^{00}$ of the reservation period $T_{res}$ and prior to the real-time prediction start $t_{0RT}$,

GG) measuring at least one parameter,

HH) creating a real-time prediction $p_{RT}(x, t)$ of the physical power $p_{\varphi}(x, t)$ at any point in time $t$ within the real-time prediction period $T_{RT}$ at a location x of the transmission network, the real-time prediction $p_{RT}(x, t)$ having negligible real-time prediction uncertainty and being created with consideration of the at least one parameter, wherein the physical power $p_{\varphi}(x, t)$ is a function of the at least one parameter, and

II) forming a real time energy packet for transmission over a subgraph of the transmission network by using the real time data packet associated with the real time energy packet, which real time data packet defines the real time energy packet, which real time data packet describes the time history of the nominal power $p_{nomRT}(x, t) = p_{RT}(x, t)$ at at least one location $x$ of each edge of the subgraph as a function of the predicted time history of the physical power supplied into that subgraph $p_{\varphi}(x, t)$ at the location $x$, wherein the remainder $R(t)$ is set equal to constant zero and the transmission period $T$ is set equal to the real-time prediction period $TRT$.

10. The method according to the preceding claim insofar as dependent on claim 5, wherein transmitting the energy packet associated with the data packet over a directed transport path of the booked transport graph connecting the source for the energy packet to the load, for each real-time prediction time period $T_{RT}$, which is a part of an overlap of the transmission period by real-time prediction periods and for each point in time $t$ within the respective real-time prediction period $T_{RT}$ comprises the following steps

JJ) creating a real-time prediction for the temporal course of the physical power $p_{\varphi}(x, t)$ for at least one location $x$ on at least each edge of the transport path according to step ii. of claim 9, including at least one measurement of the physical power fed into the respective transport graph at the real-time prediction point in time $t^{000}$, supplied into the transport graph,

KK) forming a real-time energy packet for the supply via the supply edge into this transport path according to step II), in that in the associated real-time data packet the temporal course of the nominal power over the real-time prediction period $T_{RT}$ at at least one location $x$ on each edge of the transport paths, over which transport paths the transfer of the power packet from the source supply edge to the corresponding load demand edge occurs is set equal to the corresponding predictions from steps HH) and II), and the remainder for all points in time $t$ within the real-time prediction period $T_{res}$ and all subgraphs is constantly set equal to zero,

LL) transmitting the real-time data packet to the control instances of the transport graph; and

MM) setting the physical power $p_{\varphi}(x, t)$ for at least one location $x$ on each edge of the transport path, such that the physical power $p_{\varphi}(x, t)$ is a function of the nominal power $p_{nomRT}(x, t)$ described in the real-time data packet for that location $x$, and the physical power $p_{\varphi}(x, t)$ at any point in time $t$ within the transmission period $T$ satisfies the equivalence relation described in the data packet of the energy packet, and

NN) for simultaneous transmission of energy packets via a single edge of a node for each transmission period $T$ setting the physical power $p_{\varphi}(x, t)$ for at least one location $x$ on this edge, so that the physical power $p_{\varphi}(x, t)$ is a function of the sum of the nominal powers of the real-time packets associated with the simultaneously transmitted energy packets at that location x taking into account the direction of flow, so that the physical power $p_{\varphi}(x, t)$ at any point in time $t$ within the transmission period $T$ is an element of the equivalence class formed for the simultaneous energy packet according to claim 5.

11. The method according to claim 8 or 9 insofar as dependent on claims 2 and 8, wherein the method for the real-time prediction period $T_{RT}$ further comprising the steps of, for each real-time prediction period $T_{RT}$, which is a part of an overlap of the transmission period by real-time prediction periods, and for each point in time $t$ within the respective real-time prediction period $T_{RT}$

OO) for each supply node $K_{Qi}$ to which a source is connected via a booked transport path of the booked transport graph extended by compensation, whereby the source $Q_i$ is booked to cover the demand of the load S, determining a power supplied by the source via the edge of the transport path, via which edge the load node $K_s$ of the load $S$ is connected, at at least one location $x$ of that edge by a real-time supply prediction,

PP) determining the difference $\delta(t)$ between the sum of the physical power supplied into all booked transport paths which connect all sources $Q_i$ with the load $S$ from the real-time supply predictions, and the physical power taken by the load $S$, which load $S$ is connected to the demand node $K_S$ via the demand edge, at a location $x$ of the demand edge from the real-time prediction,

QQ) for each point in time $t$ within the real-time prediction period $T_{RT}$ forming a maximum total compensation power $C(t)$ as the sum of all maximum compensation powers $C_i(t)$ of all booked sources $Q_i$ and the load $S$ and for each booked compensation node $K_{SASi}$ determining of a quotient $\gamma_i(t)$ of the maximum compensation power $C_i(t)$ of the respective compensation node $K_{SASi}$ and the maximum total compensation power $C(t)$,

RR) determining real-time compensation packets for transmission on the compensation graph as a subgraph of the booked extended transport graph, which includes the compensation nodes $K_{SASi}$ and the load $S$, by adding, for each compensation path of the booked compensation graph connecting a compensation node $K_{SASi}$ with the load, in the associated real-time compensation data packets, the nominal power $p_{nomKomRT}(x, t)$ for at least one location $x$ of each edge of the respective compensation path a function of the product of the difference $\delta(t)$ determined in step PP) with the quotient $\gamma_i(t)$ but only up to a maximum of the value of the maximum compensation power $C_i(t)$ and the remainder $R(t)$ is constantly set equal to zero, wherein if the product $\gamma_i(t) \cdot \delta(t)$ is negative, the product $\gamma_i(t) \cdot \delta(t)$ is increased by an amount determined by a real-time prediction for a location $x$ of the edge of the compensation path via which edge the demand node $K_S$ is connected to the compensation node $K_{SASi}$, to compensate for the losses incurred in the transmission from the compensation node to the corresponding load $S$,

SS) transmitting the real-time compensation data packets to the control instances, and

TT) transmitting the real-time compensation packets by, at any point in time $t$ within the transmission period $T$, at at least one location $x$ on the edges of the compensation paths, setting the physical power $p_\varphi(x, t)$ such that the physical power $p_\varphi(x, t)$ is equal to the nominal power $p_{nomKomRT}(x, t)$ of the real-time compensation packets for this location $x$, and by simultaneously at any point in time $t$ within the transmission period $T$ setting the physical powers $p_\varphi(x, t)$ to be equal to the nominal powers of the real-time energy packets $p_{nomRT}(x, t)$ at the locations $x$ on the transport graph previously selected by the real-time predictions, so that the physical power $p_\varphi(x, t)$ at a location $x$ selected by the real-time prediction for the demand on the demand edge is equal to the sum of the nominal powers of the energy packets sent from the supply nodes $K_{Qi}$ to the demand node $K_S$ plus the compensation power $\delta'(t)$, wherein the compensation power $\delta'(t)$ is equal to the difference between the physical power $p_\varphi(x, t)$ of the power taken by the load according to the real-time demand prediction and the sum of the nominal powers of the energy packets transmitted to the load $S$.

12. The method according to claim 9 or 10 insofar as dependent on claims 2 and 8, the method comprising, for each real-time prediction period $T_{RT}$, which is part of the overlap of the transmission period by real-time prediction periods with the real-time prediction point in time $t^{000}$ further comprising the steps of, for each point in time $t$ within the respective real-time prediction period $T_{RT}$

UU) for each supply node $K_{Qi}$ to which a source $Q_i$ is connected via a supply edge wherein the source $Q_i$ is to cover the demand of the load $S$ for each point in time $t$ within the real-time prediction period, determining a fraction $\rho(t)$ of the supplied physical power $p_\varphi(x, t)$ from the real-time supply predictions at at least one location $x$ of the respective supply edges, which fraction $\rho(t)$ exceeds or falls below the limits defined by the equivalence relation of the power to be transmitted from the source node $K_{Qi}$ to the load $S$,

VV) for each point in time $t$ within the real-time prediction period $T_{RT}$ forming a maximum total balancing power $D(t)$ as the sum of all maximum balancing powers $D_i(t)$ of the balancing nodes $K_{Ausi}$ booked for the sources $Q_i$ and for each balancing node $K_{Ausi}$ determining a quotient $g_i(t)$ from the maximum balancing power $D_i(t)$ of the respective balancing node $K_{Ausi}$ and the maximum total balancing power $D(t)$,

WW) determining real-time balancing packets for transmission on all booked balancing paths that include the balancing nodes $K_{Ausi}$ and the source $Q_i$, wherein in the associated real-time balancing data packets the nominal power $p_{nomAusRT}(x, t)$ for at least one location $x$ of each edge of the respective balancing path is a function of the product of the deviation $\rho(t)$ determined in step UU) with the quotient $g_i(t)$ but only up to a maximum of the value of the maximum compensation power $D_i(t)$, and the remainder $R_i(t)$ is constantly set equal to zero, wherein if the product $g_i(t) \cdot \rho(t)$ is negative, this product $g_i(t) \cdot \rho(t)$ is increased by the amount determined by a real time prediction for a location $x$ of the edge of the balancing path via which edge the supply node $K_{Qi}$ is connected to the balancing node $K_{Ausi}$ to compensate for losses incurred during transmission from the balancing node to the corresponding source,

XX) transmitting the real-time balancing data packets to the control instances associated with the nodes on the balancing graphs,

YY) transmitting the real-time balancing packets by at any point time $t$ within the transmission period $T$ for at least one location $x$ on each edge of the balancing graph setting the physical power $p_\varphi(x, t)$ to be equal to the nominal power $p_{nomAuSRT}(x, t)$ of the real-time compensation packets for the location $x$, and

ZZ) at any point in time $t$ within the transmission period $T$ setting the physical power $p_\varphi(x, t)$ for at least one location $x$ of each edge of the transport path, so that the physical power $p_\varphi(x, t)$ is equal to the nominal power $p_{nomRT}(x, t)$ of the real-time energy data packets for the location $x$ and the physical power $p_\varphi(x, t)$ is an element of the power class of the energy packet to be transmitted.

**13.** A system for directional transmission of energy in the form of at least one energy packet with a transmission network and a data and computer network,

wherein the transmission network comprises

at least two nodes, one of which is a supply node $K_Q$ and one of wich is a demand node $K_S$,
at least one edge, wherein each edge connects exactly two nodes,
at least one power controller, wherein the at least one power controller is arranged and located such that, by means of the at least one power controller for at least one location $x$ on each edge, a physical power $p_\varphi(x, t)$ actually flowing via the respective edge is settable,
a plurality of sources $Q$, wherein each of the sources $Q$ is connected to a supply node via a supply edge $K_Q$, and
a plurality of loads $S$, wherein each of the loads $S$ is connected to a demand node $K_S$ via a demand edge,

wherein the data and computer network comprises

at least one computer node and
at least one control instance executed on the at least one computer node,
wherein the data and computer network is configured and operatively connected to the at least one power controller such that, during operation of the system, the physical power $p_\varphi(x, t)$ is controllable by the at least one power controller for at least one location $x$ on each edge by the control instance,
wherein the at least one control instance of the at least one computer node is configured such that, during operation of the system, the control instance executes a method comprising the steps of:

A) forming a data packet, wherein the data packet is biuniquely assigned to exactly one energy packet, wherein the data packet defines the respective energy packet and wherein the data packet describes

i) a transmission period $T$ of the energy packet with a duration $DT$ and an execution time $t_0$, which marks the beginning of the transmission period $T$,
ii) a predetermined transport path of a transport graph of the transmission network for the directed transmission of the energy packet, which transport path connects at least one of the plurality of sources $Q$ with exactly one of the plurality of loads $S$, wherein the exactly one of the plurality of sources $Q$ is connected via exactly one supply edge to a supply node $K_Q$ of the previously determined transport path and the exactly one load $S$ is connected via a demand edge of the predetermined transport path to the demand node $K_S$, and
iii) an equivalence class $\{p_{nom}(t), R(t), T\}$ of the energy packet,

wherein the equivalence class $\{p_{nom}(t), R(t), T\}$ is given by
a nominal power $p_{nom}(t)$ of the energy packet as a function of time, wherein the nominal power $p_{nom}(t)$ is determined beforehand by at least one prediction, and a remainder $R(t)$ as a function of time and as a function of a prediction uncertainty of the at least one prediction, wherein for each point in time $t$ within the transmission period $T$ of the energy packet there is a $\mu(t)$, with $-1 \le \mu(t) < 1$ or with $-1 < \mu(t) \le 1$ or with $-1 \le \mu(t) \le 1$ so that the physical power $p_\varphi(x, t)$ during the transmission of the energy packet at any point in time $t$ and at at least one location $x$ on each edge of the transport path is fixed as the sum of the nominal power $p_{nom}(t)$ and the product of $\mu(t)$ and the remainder $R(t)$,
wherein the equivalence class is defined by an equivalence relation, according to which equivalence relation, for each point in time $t$ of the transmission period $T$, a first physical power $p'_\varphi(\hat{x}, t)$ at any location $\hat{x}$ of an edge of the transport path and a second physical power $p_\varphi(x, t)$ at any location $x$ of an edge of the transport path are equivalent only if there is a predetermined remainder $R(t)$ greater than or equal to zero and less than or equal to a limit value $R_{max}$ and a $\mu(t)$, with $-1 \le \mu(t) < 1$ or with $-1 < \mu(t) \le 1$ or with $-1 \le \mu(t) \le 1$ so that the first physical power $p'_\varphi(\hat{x}, t)$ is equal to the sum of the second physical power $p_\varphi(x, t)$ and the product of $\mu(t)$ and the remainder $R(t)$,

B) prior to the execution time $t_0$ transmitting the data packet to all control instances of the data and computer network to which the power controllers are connected for controlling the physical power, so that all data necessary for transmitting an energy packet are coherent on the control instances, and

C) beginning with the execution time $t_0$ transmitting the energy packet biuniquely assigned to the data packet,

wherein for all points in time $t$ within the transmission period $T$ of the energy packet, the physical power $p_\varphi(x, t)$ flowing on the transport path between the supply node $K_Q$ and the demand node $K_S$ is set at at least one location $x$ of each edge of the transport path in such a way that the physical power fed into the demand node $K_S$ is an element of the equivalence class $\{p_{nom}(t), R(t), T\}$ described by the data packet.

**Revendications**

1. Procédé de transfert dirigé d'énergie sous la forme d'au moins un paquet d'énergie à partir d'une pluralité de sources $Q$ en passant par au moins deux noeuds dont un est un noeud d'injection $K_Q$ relié à une de la pluralité de sources $Q$ par le biais d'une arête d'injection et un est un noeud de besoins $Ks$ relié à un puits S par le biais d'une arête de besoins ainsi qu'en passant par une pluralité de puits S dans un réseau de transfert par le biais d'une pluralité d'arêtes, le réseau de transfert pouvant être commandé moyennant un réseau de données et d'ordinateurs de façon telle que, pour au moins un endroit x sur chacune de la pluralité d'arêtes, une puissance physique $p_\varphi(x,t)$ passant réellement puisse être ajustée par une instance de contrôle du réseau de données et d'ordinateurs, avec les étapes :

   A) former un paquet de données pour chaque paquet d'énergie, le paquet de données étant attribué à précisément un paquet d'énergie, le paquet de données définissant le paquet d'énergie respectif, et le paquet de données décrivant

   i. une période de transfert $T$ du paquet d'énergie avec une durée $DT$ et un instant de mise en oeuvre $t_0$ indiquant le début de la période de transfert $T$,
   ii. un trajet de transport préalablement déterminé d'un graphe de transport du réseau de transfert pour le transfert dirigé du paquet d'énergie, qui relie au moins une de la pluralité de sources $Q$ à précisément un de la pluralité de puits, ladite précisément une de la pluralité de sources $Q$ étant reliée à un noeud d'injection $K_Q$ du trajet de transport préalablement déterminé par le biais d'une arête d'injection et ledit précisément un puits $S$ étant relié au noeud de besoins $K_S$ par le biais d'une arête de besoins du trajet de transport préalablement déterminé et
   iii. une classe d'équivalence $\{p_{nom}(t), R(t), T\}$ du paquet d'énergie,

      la classe d'équivalence étant donnée par

         une évolution dans le temps préalablement déterminée par au moins un pronostic d'une puissance nominale $p_{nom}(t)$ du paquet d'énergie et
         une évolution dans temps d'un reste $R(t)$ en fonction d'une incertitude de pronostic dudit au moins un pronostic,
         pour chaque instant $t$ pendant la période de transfert $T$ du paquet d'énergie, existant un $\mu(t)$ avec $-1 \le \mu(t) < 1$ ou avec $-1 < \mu(t) < 1$ ou avec $-1 \le \mu(t) \le 1$, si bien que, lors du transfert du paquet d'énergie, la puissance physique $p_\varphi(x,t)$ soit déterminée, pour chaque instant $t$ et à au moins un endroit x sur chaque arête du trajet de transfert comme la somme de la puissance nominale $p_{nom}(t)$ et du produit de $\mu(t)$ et du reste $R(t)$,

      la classe d'équivalence étant définie par une relation d'équivalence selon laquelle, pour chaque instant $t$ de la période de transfert $T$, une première puissance physique $p'_\varphi(\hat{x}, t)$ à un endroit quelconque $\hat{x}$ d'une arête du trajet de transfert et une deuxième puissance physique $p_\varphi(x,t)$ à un endroit quelconque x d'une arête du trajet de transfert sont exactement équivalentes lorsqu'il y a un reste prédéterminé $R(t)$ supérieur ou égal à zéro ou inférieur ou égal à une valeur limite $R_{max}$ ainsi qu'un $\mu(t)$ avec $-1 \le \mu(t) < 1$ ou avec $-1 < \mu(t) \le 1$ ou avec $-1 \le \mu(t) \le 1$, si bien que la première puissance physique $p'_\varphi(\hat{x}, t)$ soit égale à la somme de la deuxième puissance physique $p_\varphi(x,t)$ et du produit de $\mu(t)$ et du reste $R(t)$,

   B) avant l'instant de mise en oeuvre $t_0$, transférer le paquet de données à toutes les instances de contrôle d'au moins tous les noeuds ou toutes les arêtes sur le trajet de transfert,
   C) à partir de l'instant de mise en oeuvre $t_0$, transférer le paquet d'énergie clairement associé au paquet de données,
   pour tous les instants $t$ de la période de transfert $T$ du paquet d'énergie, la puissance physique $p_\varphi(x,t)$ passant

sur le trajet de transfert entre le noeud d'injection $K_Q$ et le noeud de besoins $K_S$ étant réglée pour au moins un endroit x de chaque arête du trajet de transfert de façon que la puissance physique faite entrer dans les noeuds de besoins $K_S$ soit un élément de la classe d'équivalence $(p_{nom}(t), R(t), T}$ décrite par le paquet de données.

2. Procédé selon la revendication précédente,

le paquet de données décrivant en outre
iv) un trajet de compensation préalablement déterminé du graphe de transfert du réseau de transfert électrique qui relie un noeud de compensation préalablement déterminé $K_{SAS}$ par une pluralité d'arêtes au noeud de besoins $Ks$, le noeud de compensation $K_{SAS}$ pouvant recevoir à tout instant $t$ de la période de transfert T du paquet d'énergie, une puissance physique allant jusqu'à une puissance de compensation maximale $C(t)$ préalablement prédéterminée, la puissance de compensation maximale $C(t)$ préalablement prédéterminée étant déterminée en fonction du reste $R(t)$, ou pouvant fournir une puissance physique jusqu'à la puissance de compensation maximale $C(t)$, optionnellement augmentée d'une baisse de perte déterminée par un pronostic, par le trajet de compensation, et
à l'étape C), la puissance physique circulant entre le noeud de compensation $K_{SAS}$ et au moins le noeud de besoins $Ks$ étant ajustée pour au moins un endroit $x$ sur la pluralité d'arêtes du trajet de compensation de sorte que la puissance physique audit au moins un endroit $x$ soit pour chaque instant $t$ pendant la période de transfert $T$ un élément d'une classe d'équivalence $\{p_{nom}(t) = 0, R(t) = C(t), T}$ avec une puissance nominale $\{p_{nom}(t)\}$ de zéro et un reste de la valeur de la puissance de compensation $C(t)$ maximale préalablement déterminée, et de sorte que, à au moins un endroit $x$ de l'arête de besoins, la puissance physique $p_\varphi(x,t)$ circulant par l'arête de besoins entre le noeud de besoins $K_S$ et le puits S attaché à ce noeud de besoins soit égale à la puissance nominale $p_{nom}(t)$ du paquet d'énergie plus une puissance de compensation $\delta'(t)$ en fonction du pronostic, et/ou le paquet de données décrivant
v) un trajet d'égalisation préalablement déterminé du graphe de transport du réseau de transfert qui relie un noeud d'égalisation $K_{Aus}$ et le noeud d'injection $K_Q$ par une pluralité d'arêtes, le noeud d'égalisation $K_{Aus}$ pouvant recevoir à tout instant $t$ de la période de transfert T du paquet d'énergie, une puissance physique allant jusqu'à une puissance d'égalisation maximale $D(t)$ préalablement prédéterminée, la puissance d'égalisation maximale $D(t)$ préalablement prédéterminée étant déterminée en fonction du reste $R(t)$, ou pouvant fournir par le trajet d'égalisation une puissance physique jusqu'à la puissance d'égalisation maximale $D(t)$, optionnellement augmentée d'une baisse de perte déterminée par un pronostic, et
à l'étape C), la puissance physique circulant entre le noeud d'égalisation $K_{Aus}$ et le noeud d'injection $K_Q$ étant ajustée pour au moins un endroit $x$ sur la pluralité d'arêtes du trajet d'égalisation de sorte que la puissance physique audit au moins un endroit $x$ soit, à chaque instant $t$ pendant la période de transfert $T$, un élément d'une classe d'équivalence $\{p_{nom}(t) = 0, R(t) = D(t), T}$ avec une puissance nominale $p_{nom}(t)$ de zéro et un reste de la valeur de la puissance d'égalisation $D(t)$ maximale préalablement déterminée, et de sorte que, à au moins un endroit $x$ sur la pluralité d'arêtes du trajet de transfert, la puissance physique $p_\varphi(x,t)$ circulant entre le noeud d'injection $K_Q$ et le noeud de besoins $K_S$ soit un élément de la classe d'équivalence $\{p_{nom}(t), R(t), T}$ du paquet d'énergie.

3. Procédé selon l'une des revendications précédentes, le procédé comprenant en outre, pour une période de pronostic $T_{prog}$ avec un début de pronostic $t_{0prog}$ et une durée de pronostic $DT_{prog}$ et à un instant de pronostic $t_0$ situé avant le début de pronostic $t_{0prog}$, les étapes

D) faire un pronostic d'injection pour une puissance d'injection pronostiquée $p_{progEin}(t)$ pouvant être mise à disposition par la source respective à tout instant $t$ dans la période de pronostic $T_{prog}$, le pronostic d'injection comprenant une incertitude de pronostic d'injection, et
E) faire un pronostic de besoins pour un besoin de puissance pronostiquée $p_{progBed}(t)$ destinée à être prélevée par le puits respectif pour chaque instant $t$ dans la période de pronostic $T_{prog}$, le pronostic de besoins comprenant une incertitude de pronostic de besoins,
l'évolution dans le temps de la puissance nominale $p_{nom}(t)$ du paquet d'énergie étant déterminée au moins à partir du pronostic d'injection et du pronostic de besoins, et
l'évolution dans le temps du reste $R(t)$ étant fonction au moins de l'incertitude de pronostic d'injection et de l'incertitude de pronostic de besoins.

4. Procédé selon la revendication précédente, le procédé comprenant les étapes

F) former un paquet de données de besoins $\{p_{progBed}(t), R(t), T_{prog}\}$ du puits, le paquet de données de besoins décrivant l'évolution dans le temps pronostiquée de la puissance nominale $p_{progBed}(t)$ demandée par le puits, à tout instant $t$ dans la période de pronostic $T_{prog}$ et l'évolution dans le temps d'un reste $R(t)$ en fonction de l'incertitude de pronostic de besoins du pronostic de besoins à tout instant $t$ dans la période de pronostic $T_{prog}$,

G) former un paquet de données d'injection de la source, le paquet de données d'injection décrivant l'évolution dans le temps pronostiquée de la puissance nominale $p_{progBed}(t)$ à injecter par la source, à tout instant $t$ pendant la période de pronostic $T_{prog}$ et l'évolution dans le temps d'un reste $R(t)$ en fonction de l'incertitude de pronostic d'injection du pronostic d'injection à tout instant $t$ dans la période de pronostic $T_{prog}$, et

la formation de la classe d'équivalence d'un paquet d'énergie pour le transfert d'une source à un puits comprenant au moins l'association d'un paquet partiel du paquet de données d'injection à un paquet partiel du paquet de données de besoins, au moins pour couvrir les besoins du puits.

5. Procédé selon l'une des revendications précédentes, les étapes suivantes étant mises en oeuvre lorsqu'une pluralité de paquets d'énergie sont transférés en même temps par précisément une arête du réseau de transfert

H) superposer les paquets d'énergie transférés en même temps pour en faire précisément un paquet d'énergie simultané avec un paquet de données simultané superposé,

I) ajuster la puissance physique passant par précisément une arête, si bien que la puissance physique soit, à au moins un endroit $x$ de la précisément une arête, un élément de la classe d'équivalence $\{p_{nom}(t), R(t), T\}$ du paquet de données simultané superposé du précisément un paquet d'énergie formé à l'étape H) par superposition, la puissance nominale $p_{nom}(t)$ de cette classe d'équivalence $\{p_{nom}(t), R(t), T\}$ étant la somme des puissances nominales des paquets d'énergie transférés simultanément, lors de la formation de la somme pour la puissance nominale $p_{nom}(t)$, la direction de transfert de la puissance étant prise en compte, et le reste $R(t)$ de la classe d'équivalence $\{p_{nom}(t), R(t), T\}$ étant la somme des restes des paquets d'énergie simultanément transférés et la direction de transfert n'étant pas prise en compte pour former la somme.

6. Procédé selon la revendication précédente, le procédé comprenant en outre les étapes de

J) à chaque noeud sur le réseau de transfert, déterminer, sur la base des paquets de données, les proportions des paquets d'énergie à chaque arête du noeud respectif qui sont en attente, dans une période de test pouvant être choisie librement, d'un transfert simultané au noeud suivant,

K) pour la durée de la période de test, ajuster l'injection de puissance dans chaque arête du noeud respectif, de sorte que la puissance physique $p_\varphi(x,t)$ soit à au moins un endroit $x$ de l'arête respective un élément d'une classe d'équivalence $\{p_{nom}(t), R(t), T\}$ dont la puissance nominale $p_{nom}(t)$ est la somme des puissances nominales des paquets d'énergie simultanément transmis, lors de la formation de la somme pour la puissance nominale, les directions de flux de la puissance électrique étant prises en compte et son reste étant la somme des restes des paquets d'énergie simultanément transférés, pour la formation de la somme des restes, la direction de flux n'étant pas prise en compte, la direction de flux d'une puissance électrique sortie par une arête du noeud étant comptée avec un signe inverse par rapport à la direction de flux d'une puissance électrique injectée par une arête.

7. Procédé selon l'une des revendications précédentes dans la mesure où elles dépendent de la revendication 3, le procédé comprenant en outre, pour une période de réservation $T_{res}$, à un instant de réservation $t^{00}$, l'instant de réservation $t^{00}$ étant situé avant le début de la période de réservation $T_{res}$ avec un injstant de début $T_{0res}$ et une durée de réservation $DT_{res}$ et la période de réservation $T_{res}$ étant située dans la période de pronostic $T_{prog}$, les étapes

L) pour chaque puits, déterminer la quantité de tous les graphes de transport dont chacun est relié au puits, de sorte que pour chacun de ces graphes de transport, chaque source reliée aux graphes de transport soit reliée, par un trajet de transport du graphe de transport, au puits et dispose pour la période de réservation $T_{res}$ d'un paquet partiel $E'_{Ein}$ d'un paquet d'injection $E_{Ein}$ défini par le paquet de données d'injection, ce paquet partiel $E'_{Ein}$ disponible étant formé par un paquet de couverture défini par un paquet de données de couverture $E_D$ et un paquet de données de perte défini par un paquet de données de perte $E_V$, les paquets de couverture des sources $Q$ du graphe de transport couvrant ensemble une partie maximisée d'un paquet de besoins du puits $S$, défini par le paquet de données de besoins, et le paquet de données de perte respectif décrivant la perte déterminée par un pronostic, lors du transfert du paquet de couverture respectif défini par le paquet de données de couverture, par le trajet de transport respectif,

M) associer un paquet de données de perte $E_V$ à chacun des paquets de données de couverture, chacun des paquets de couverture définis par les paquets de données de couverture étant transféré, par un trajet de transport qui lui est associé, comme graphe partiel d'un graphe de transport parmi la quantité de graphes de transport formés selon l'étape précédente L), une puissance nominale de la classe d'équivalence d'un paquet de perte défini par le paquet de données de perte, étant déterminé par un pronostic de la perte et le reste de la classe d'équivalence du paquet de perte défini par le paquet de données de perte étant déterminé comme une fonction d'une incertitude de pronostic d'un pronostic de perte, la puissance de perte nominale étant la baisse de puissance survenant lors du transfert du paquet de couverture par le trajet de transport de la source $Q$ au puits $S$, et tous les paquets d'énergie à transférer pendant la période de réservation par le trajet de transport à considérer étant pris en compte, et le trajet de transport ayant une capacité de transfert disponible pour transférer le paquet partiel $E'_{Ein}$ qui est formé du paquet de couverture $E_D$ défini par le paquet de données de couverture et du paquet de perte $E_V$ défini par le paquet de données de couverture, le paquet de couverture $E_D$ défini par le paquet de données de couverture et le paquet de perte $E_V$ défini par le paquet de données de couverture ayant la même direction de transfert,

N) la classe d'équivalence du paquet partiel $E'_{Ein}$ étant formé en additionnant les puissances nominales du paquet de couverture et du paquet de perte ainsi que les restes et le paquet de perte ayant la même direction de flux que le paquet de couverture et la période de transfert T étant mise comme période de réservation $T_{res}$,

O) déterminer pour chaque puits les trajets de transport optimisés comme graphes partiels du graphe de transport déterminé de façon optimisée par rapport à une métrique choisie, chaque source d'un trajet de transport ainsi déterminé de façon optimisée, qui relie la source Q au puits S du graphe de transport pour le transfert d'un paquet partiel du paquet d'injection, fournissant à chaque instant $t$ dans la période de réservation $T_{res}$ une puissance disponible qui est un élément de la classe d'équivalence du paquet partiel déterminé selon l'étape précédente N),

P) former un paquet de données de réservation respectif pour la définition d'un paquet de réservation du trajet de transport de l'étape O), le paquet de données de réservation du paquet de réservation décrivant la classe d'équivalence du paquet partiel respectif du paquet d'injection comme classe d'équivalence du paquet de réservation, l'arête d'injection du paquet partiel respectif du paquet d'injection comme arête d'injection du paquet de réservation, le trajet de transport et la période de réservation $T_{res}$,

Q) pour chaque source du graphe de transport, déterminer un paquet partiel encore disponible du paquet d'injection de chaque source, de sorte que, pour la période de réservation, le paquet d'injection soit formé par superposition de tous les paquets de réservation et de ce paquet partiel disponible,

R) pour chaque puits, pour la période de réservation $T_{res}$, déterminer le paquet partiel non encore couvert du paquet de besoins, de sorte que le paquet de besoins soit formé à partir des paquets de couverture selon l'étape N), des paquets de réservation associés au puits et du paquet partiel non encore couvert,

S) pour chaque instant $t$ de la période de réservation $T_{res}$, déterminer la capacité de transfert encore disponible du réseau de transfert, de sorte que la capacité de transfert spécifiée du réseau de transfert soit la somme de la capacité de transfert encore disponible et de la somme des puissances nominales augmentée des restes des paquets de réservation,

T) pour chaque prévision d'injection, prévision de besoins et prévision des pertes par laquelle au moins une des valeurs déterminée par elle est modifiée, répéter les étapes précédentes,

U) pour chaque paquet de réservation formé aux étapes L) à O), à un instant de réservation $t_{Buch}$ qui peut être choisi librement et qui est situé avant l'instant de début $t_{0res}$ du paquet de réservation, réserver de façon ferme le paquet de données de réservation du paquet de réservation comme le paquet de données du paquet d'énergie, la période de transfert du paquet d'énergie étant la période de réservation, la classe d'équivalence $(p_{nom}(t), R(t), T)$ étant la classe d'équivalence du paquet de réservation, l'arête d'injection du paquet de réservation étant l'arête d'injection du paquet d'énergie et le trajet de transport du paquet de réservation étant le trajet de transport du paquet d'énergie et

V) à l'instant de mise en oeuvre $t_0$, transférer le paquet d'énergie respectif en fonction du paquet de données du paquet d'énergie.

**8.** Procédé selon la revendication précédente dans la mesure où elles dépendent de la revendication 2, le procédé comprenant en outre, pour une période de réservation $T_{res}$, les étapes de, à l'instant de réservation $t^{00}$,

W) pour chaque puits, déterminer la quantité de graphes de transport qui sont associés respectivement au puits, de sorte que pour chacun de ces graphes de transport, chaque source reliée au graphe de transport soit reliée au puits par un trajet de transport du graphe de transport et ait un paquet partiel disponible du paquet d'injection encore disponible de la source, ce paquet partiel disponible étant formé par un paquet de couverture défini par un paquet de données de couverture et un paquet de pertes défini par un paquet de données de pertes, les paquets de couverture des sources $Q_i$ du graphe de transport couvrant ensemble une partie maximale du paquet de données de besoins du puits S et le paquet de pertes décrivant les pertes, déterminées par un pronostic, lors du transfert du paquet de couverture respectif par le trajet correspondant,

X) pour chaque puits et pour chaque graphe de transport déterminé selon l'étape W), élargir le graphe de transport à un graphe de transport élargi par détermination du noeud de compensation du graphe de transport élargi respectif en déterminant les noeuds de compensation pour chaque source du graphe de transport élargi, de sorte que chacun de ces noeuds de compensation soit relié à la source S par au moins un trajet de compensation en tant que graphe partiel du graphe de transport élargi, et que les noeuds de compensation disposent ensemble d'une puissance de compensation totale $C(t)$ préalablement déterminée, afin de recevoir pour chaque instant $t$ pendant la période de réservation $T_{res}$, une puissance physique allant jusqu'à cette puissance de compensation totale $C(t)$ maximale, la puissance de compensation totale $C(t)$ étant fonction des restes des paquets de couverture de la source Q respective, et afin d'injecter dans le noeud de besoins $K_s$, par les trajets de compensation, au total une puissance physique allant jusqu'à cette puissance de compensation totale $C(t)$ maximale augmentée des puissances de perte déterminées par pronostic perdues lors du transfert des paquets partiels des noeuds de compensation par les trajets de compensation,

Y) pour chaque puits, déterminer parmi la quantité de graphes de transport élargis déterminés selon les étapes W) et X) et dont chacun est relié au puits par une arête de besoins, précisément un graphe de transport élargi optimisé selon une métrique prédéterminée,

Z) pour le graphe de transport élargi optimisé de l'étape Y), former les paquets de données de réservation pour définir les paquets de réservation des paquets d'énergie à transférer par le graphe de transport élargi optimal, le paquet de données de réservation de chaque paquet de réservation décrivant la classe d'équivalence du paquet d'injection disponible respectif comme classe d'équivalence du paquet de réservation, l'arête d'injection du paquet d'injection respectif comme arête d'injection du noeud d'injection $K_Q$ du paquet de réservation, le trajet de transport correspondant qui relie la source au puits, la période de réservation $T_{res}$, ainsi que les noeuds de compensation avec les potentiels de compensation correspondants et les trajets de compensation qui relient les noeuds de compensation au noeud de besoins $K_S$ auquel le puits est relié par l'arête de besoins,

AA) déterminer les paquets partiels encore disponibles des paquets d'injection et des parts non encore couvertes du paquet de besoins des capacités de transfert encore disponibles selon l'étape O), réduire la capacité encore disponible des noeuds de compensation réservés des puissances maximales réservées pour la réception et la fourniture des puissances correspondantes, réduire les capacités de transfert encore disponibles des trajets de compensation des potentiels réservés et augmentés de la puissance de pertes pour fournir de la puissance des noeuds de compensation réservés,

BB) pour chaque pronostic d'injection, pronostic de besoins et pronostic de pertes, par lequel au moins une des valeurs déterminée par eux est changé, répéter les étapes précédentes,

CC) pour chaque paquet de réservation d'un graphe de transport élargi optimisé formé aux étapes précédentes, à un instant de réservation $t_{Buch}$ pouvant être choisi librement et qui est situé avant l'instant de début $t_{0res}$ du paquet de réservation, réserver fermement les paquets de données de réservation des paquets de réservation en tant que paquets de données des paquets d'énergie, pour chacun de ces paquets de données, la période de transfert du paquet d'énergie étant la période de réservation, la classe d'équivalence $(p_{nom}(t), R(t), T)$ étant la classe d'équivalence du paquet de réservation et l'arête d'injection du paquet de réservation étant l'arête du paquet d'énergie, et réserver fermement les capacités de transfert réservées sur le graphe de transport élargi optimal et,

à l'instant de mise en oeuvre $t_0$, transférer le paquet d'énergie respectif selon le paquet de données du paquet d'énergie par les capacités réservées du graphe de transport élargi réservé

et/ou

DD) pour chaque puits, élargir les graphes de transport possibles et/ou les graphes de transport élargis possibles, déterminés auparavant dans les étapes W) et X), par les noeuds d'égalisation possibles et les arêtes d'égalisation possibles, de sorte que chacun de ces noeuds d'égalisation soit relié, par un trajet d'égalisation, à une des sources du graphe de transport et/ou du graphe de transport élargi pour laquelle le paquet de données d'injection requiert une égalisation et afin que ces noeuds d'égalisation puissent mettre en oeuvre, individuellement ou en somme, l'égalisation pour les sources correspondantes et puissent égaliser les pertes déterminées par au moins un pronostic de pertes et apparaissant lors du transfert du paquet d'égalisation du noeud d'égalisation à la source,

EE) selon une métrique donnée, déterminer un graphe de transport optimisé avec égalisation ou un graphe de transport avec égalisation élargi par la compensation avec égalisation à partir de la quantité des graphes de transport possibles déterminés selon l'étape DD) avec égalisation ou un graphe de transport élargi par la compensation avec égalisation et

FF) mettre en oeuvre les étapes Z) à CC) pour le graphe de transport optimisé avec égalisation ainsi déterminé ou pour un graphe de transport avec égalisation élargi par la compensation.

**9.** Procédé selon l'une des revendications précédentes dans la mesure où elles dépendent de la revendication 3, le procédé comprenant en outre, pour une période de pronostic en temps réel $T_{RT}$ avec un début de pronostic en temps réel $t_{0RT}$ et une durée de pronostic en temps réel $DT_{RT}$, la période de pronostic en temps réel $T_{RT}$ étant une période partielle de la période de réservation $T_{res}$ du paquet de réservation, les étapes de, à un instant de pronostic en temps réel $t^{000}$ qui est situé après l'instant de réservation $t^{00}$ de la période de réservation $T_{res}$ et avant le début de pronostic en temps réel $t_{0RT}$,

GG) mesurer au moins un paramètre,
HH) effectuer un pronostic en temps réel $p_{RT}(x,t)$ de la puissance physique $p_\varphi(x,t)$ à chaque instant $t$ pendant la période de pronostic en temps réel $T_{RT}$ à un endroit $x$ du réseau de transfert, le pronostic en temps réel $p_{RT}(x,t)$ ayant une incertitude de pronostic en temps réel négligeable et étant réalisé en tenant compte dudit au moins un paramètre, la puissance physique $p_\varphi(x,t)$ étant fonction de ce paramètre, et
II) former un paquet d'énergie en temps réel pour le transfert par un graphe partiel du réseau de transfert, par le fait que le paquet de données en temps réel associé au paquet d'énergie en temps réel et définissant le paquet d'énergie en temps réel, décrit l'évolution de la puissance nominale $p_{nomRT}(x,t) = p_{RT}(x,t)$ à au moins un endroit $x$ de chaque arête du graphe partiel en fonction de l'évolution dans le temps pronostiquée, à cet endroit $x$, de la puissance physique $p_\varphi(x,t)$ injectée dans ce graphe partiel, le reste $R(t)$ étant constamment égal à zéro et la période de transfert $T$ étant mise égale à la période de pronostic en temps réel $T_{RT}$.

**10.** Procédé selon la revendication précédente dans la mesure où elles dépendent de la revendication 5, le transfert du paquet d'énergie associé au paquet de données par un trajet de transfert dirigé du graphe de transport réservé qui relie la source pour le paquet d'énergie au puits, comprenant pour chaque période de pronostic en temps réel $T_{RT}$ qui est une partie du recouvrement de la période de transfert avec des périodes de pronostic en temps réel, et pour chaque instant $t$ pendant la période de pronostic en temps réel $T_{RT}$ respectif, les étapes suivantes

JJ) réaliser un pronostic en temps réel pour l'évolution dans le temps de la puissance physique $p_\varphi(x,t)$ pour au moins un endroit $x$ sur au moins une arête du trajet de transport selon l'étape ii. de la revendication 9 en tenant compte d'au moins une mesure de la puissance physique respective injectée dans le graphe de transport à l'instant de pronostic en temps réel $t^{000}$,
KK) former un paquet d'énergie en temps réel pour l'injection, par l'arête d'injection, dans le trajet de transport selon l'étape II), par le fait que dans le paquet de données en temps réel associé, l'évolution dans le temps de la puissance nominale est mise, pour la période de pronostic en temps réel $T_{RT}$ à au moins un endroit $x$ sur chaque arête des trajets de transport par lesquels le transfert du paquet d'énergie est effectué de l'arête d'injection de la source vers l'arête de besoins correspondante du puits, égale aux pronostics correspondants des étapes HH) et II) et le reste est mis à zéro pour tous les instants $t$ dans la période de pronostic en temps réel $T_{RT}$ et pour tous les trajets partiels,
LL) transmettre le paquet de données en temps réel aux instances de contrôle du graphe de transport et
MM) ajuster la puissance physique $p_\varphi(x,t)$ pour au moins un endroit $x$ sur chaque arête du trajet de transport, de sorte que la puissance physique $p_\varphi(x,t)$ soit fonction de la puissance nominale $p_{nomRT}(x,t)$ décrite dans le paquet de données en temps réel pour cet endroit $x$ et que la puissance physique $p_\varphi(x,t)$ remplisse à chaque instant t dans la période de transfert $T$ la relation d'équivalence décrite dans le paquet de données du paquet d'énergie, et
NN) pour un transfert simultané de paquets d'énergie par une seule arête d'un noeud pour chaque période de transfert $T$, ajuster la puissance physique $p_\varphi(x,t)$ pour au moins un endroit $x$ sur cette arête, de sorte que la puissance physique $p_\varphi(x,t)$ soit fonction de la somme des puissances nominales des paquets en temps réel associés aux paquets d'énergie transférés simultanément à cet endroit $x$ en tenant compte de la direction du flux, de sorte que la puissance physique $p_\varphi(x,t)$ soit à tout instant $t$ pendant la période de transfert $T$ un élément de la classe d'équivalence formé pour le paquet d'énergie simultané selon la revendication 5.

**11.** Procédé selon la revendication 8 ou 9 dans la mesure où elles dépendent des revendications 2 et 8, le procédé comprenant pour la période de pronostic en temps réel $T_{RT}$ pour chaque période de pronostic en temps réel $T_{RT}$ qui est une partie du recouvrement de la période de transfert par des périodes de pronostic en temps réel et pour chaque instant (t) dans la période de pronostic en temps réel $T_{RT}$, en outre les étapes

OO) pour chaque noeud d'injection $K_{Qi}$ auquel une source est reliée par le trajet de transport réservé du graphe de transport réservé et élargi d'une compensation, la source $Q_i$ étant réservée pour couvrir les besoins du puits $S$, déterminer une puissance injectée par la source par l'arête du trajet de transport par lequel de noeud de besoins $Ks$ du puits S est relié, à au moins un endroit $x$ de cette arête avec un pronostic d'injection en temps réel,

PP) déterminer la différence $\delta$(t) entre la somme de toutes les puissances injectées dans tous les trajets de transport réservés qui relient toutes les sources $Q_i$ avec le puits $S$, à partir des pronostics d'injection en temps réel, et la puissance physique prélevée du puits $S$ qui est relié au noeud de besoins $K_S$ par l'arête de besoins, à un endroit $x$ de l'arête de besoins du pronostic de besoins en temps réel,

QQ) pour chaque instant $t$ pendant la période de pronostic en temps réel $T_{RT}$, former une puissance de compensation totale $C(t)$ maximale comme somme de toutes les puissances de compensation $C_i(t)$ de toutes les sources réservées $Qi$ et du puits $S$, et pour chaque noeud de compensation $K_{SASi}$ réservé, déterminer un quotient $\gamma_i(t)$ à partir de la puissance de compensation $C_i(t)$ maximale du noeud de compensation $K_{SASi}$ respectif et de la puissance de compensation totale $C(t)$,

RR) déterminer des paquets de compensation en temps réel pour le transfert sur le graphe de compensation en tant que graphe partiel du graphe de transport élargi réservé, qui relient les noeuds de compensation $K_{SASi}$ au puits $S$, par le fait que pour chaque trajet de compensation du graphe de compensation réservé qui relie un noeud de compensation $K_{SASi}$ au puits, dans les paquets de données de compensation en temps réel, la puissance nominale $p_{nomKomRT}(x,t)$ est, pour au moins un endroit $x$ de chaque arête du trajet de compensation respectif, fonction du produit de la différence $\delta$(t) déterminée à l'étape PP) et du quotient $\gamma_i(t)$, mais au maximum jusqu'à la valeur de la puissance de compensation $C_i(t)$ maximale et que le reste $R(t)$ est mis constamment à zéro, et lorsque le produit $\gamma_i(t) \cdot \delta$(t) est négatif, celui-ci est augmenté de la valeur déterminée par un pronostic en temps réel pour un endroit $x$ de l'arête du trajet de compensation par lequel le noeud de besoins $Ks$ est relié au noeud de compensation $K_{SASi}$, pour équilibrer les pertes se produisant lors du transfert du noeud de compensation au puits $S$ correspondant,

SS) transmettre les paquets de données de compensation en temps réel aux instances de contrôle et

TT) transférer les paquets de compensation en temps réel par le fait d'ajuster la puissance physique $p_\varphi(x,t)$ à chaque instant $t$ pendant la période de transfert $T$ à au moins un endroit $x$ sur les arêtes des trajets de compensation de façon telle que celle-ci soit égale à la puissance nominale $p_{nomKomRT}(x,t)$ des paquets de compensation en temps réel pour cet endroit $x$, et que, en même temps, à chaque instant $t$ pendant la période de transfert $T$, les puissances physiques $p_\varphi(x,t)$ sont ajustées de façon telle que celles-ci soient égales aux puissances nominales $p_{nomRT}(x,t)$ des paquets d'énergie en temps réel aux endroits $x$, sur les graphes de transport, choisis auparavant par les pronostics en temps réel, si bien que la puissance physique $p_\varphi(x,t)$ soit égale, à un endroit x sur l'arête de besoins choisi par le pronostic en temps réel pour les besoins, à la somme des puissances nominales des paquets d'énergie qui sont transférés des noeuds d'injection $K_{Qi}$ au noeud de besoins $Ks$, augmenté de la puissance de compensation $\delta'(t)$, la puissance de compensation $\delta'(t)$ étant égale à la différence entre la puissance physique $p_\varphi(x,t)$ de la puissance prélevée du puits selon le pronostic de besoins en temps réel et la somme des puissances nominales des paquets d'énergie transférés au puits S.

**12.** Procédé selon la revendication 9 ou 10 dans la mesure où elles dépendent des revendications 2 et 8, le procédé comprenant en outre, pour chaque période de pronostic en temps réel $T_{RT}$ qui est une partie du recouvrement de la période de transfert par des périodes de pronostic en temps réel avec l'instant de pronostic en temps réel $t^{000}$ et pour chaque instant (t) pendant la période de pronostic en temps réel $T_{RT}$, les étapes

UU) pour chaque noeud d'injection $K_{Qi}$ auquel une source $Q_i$ est reliée par une arête d'injection, la source $Q_i$ étant réservée pour couvrir les besoins du puits $S$, et pour chaque instant $t$ pendant la période de pronostic en temps réel, déterminer, à partir des pronostics d'injection en temps réel à au moins un endroit $x$ des arêtes d'injection respectives, la partie $p(t)$ des puissances physiques $p_\varphi(x,t)$ qui est supérieure ou inférieure à des limites définies par la relation d'équivalence, du paquet d'énergie transféré du noeud d'injection $K_{Qi}$ au puits $S$,

W) pour chaque instant $t$ pendant la période de pronostic en temps réel $T_{RT}$, former une puissance d'égalisation totale $D(t)$ maximale comme la somme de toutes les puissances d'égalisation $Di(t)$ maximales pour les noeuds d'égalisation $K_{Ausi}$ réservés pour les sources $Q_i$, et pour chaque noeud d'égalisation $K_{Ausi}$, déterminer un quotient $gi(t)$ de la puissance d'égalisation totale $D_i(t)$ maximale du noeud d'égalisation $K_{Ausi}$ respectif et de la puissance d'égalisation totale $D(t)$ maximale,

WW) déterminer des paquets d'égalisation en temps réel pour le transfert sur les trajets d'égalisation réservés qui relient les noeuds d'égalisation $K_{Ausi}$ à la source $Qi$, par le fait que, dans les paquets de données d'égalisation en temps réel, la puissance nominale $p_{nomKomRT}(x,t)$ est, pour au moins un endroit x de chaque arête du trajet d'égalisation respectif, fonction du produit de l'écart $p(t)$ déterminé à l'étape UU) et du quotient $g_i(t)$, mais au maximum jusqu'à la valeur de la puissance d'égalisation $Di(t)$ maximale, et que le reste $R_i(t)$ est constamment mise à zéro, et lorsque le produit $gi(t) \cdot p(t)$ est négatif, celui-ci est augmenté d'un montant déterminé par un pronostic en temps réel pour un endroit x de l'arête du trajet d'égalisation par laquelle le noeud d'injection $K_{Qi}$ est relié au noeud d'égalisation $K_{Ausi}$, pour l'égalisation des pertes survenant lors du transfert du noeud d'égalisation à la source correspondante,

XX) transmettre les paquets de données d'égalisation en temps réel aux instances de contrôle associées aux noeuds,

YY) transférer les paquets d'égalisation en temps réel par le fait que, à chaque instant $t$ pendant la période de transfert $T$ pour chaque endroit $x$ sur chaque arête du graphe d'égalisation, la puissance physique $p_\varphi(x,t)$ est ajustée de façon telle que celle-ci soit égale à la puissance nominale $p_{nomAusRT}(x,t)$ des paquets d'égalisation en temps réel pour l'endroit $x$, et

ZZ) à chaque instant $t$ pendant la période de transfert $T$, ajuster la puissance physique $p_\varphi(x,t)$ pour au moins un endroit $x$ de chaque arête du trajet de transport de façon que la puissance physique $p_\varphi(x,t)$ soit égale à la puissance nominale $p_{nomRT}(x,t)$ des paquets de données d'énergie en temps réel pour l'endroit $x$ et un élément de la classe de puissance du paquet d'énergie à transférer.

13. Système pour un transfert dirigé d'énergie sous la forme d'au moins un paquet d'énergie, avec un réseau de transfert et un réseau de données et d'ordinateurs,

le réseau de transfert comprenant

au moins deux noeuds dont un est un noeud d'injection $K_Q$ et un est un noeud de besoins $Ks$,

au moins une arête, chaque arête reliant précisément deux noeuds l'un à l'autre,

au moins un ajusteur de puissance, ledit au moins un ajusteur de puissance étant configuré et disposé de façon telle que, moyennant ledit au moins un ajusteur de puissance, pour au moins un endroit $x$ sur chaque arête, une puissance physique $p_\varphi(x,t)$ réellement passant par l'arête respective puisse être ajustée,

une pluralité de sources $Q$, chacune des sources $Q$ étant reliée par une arête d'injection à un noeud d'injection $K_Q$, et

une pluralité de puits $S$, chaque puits $S$ étant relié par une arête de besoins à un noeud de besoins $Ks$,

le réseau de données et d'ordinateurs comprenant

au moins un noeud d'ordinateurs et

au moins une instance de contrôle mise en oeuvre sur ledit au moins un noeud d'ordinateurs,

le réseau de données et d'ordinateurs étant configuré et relié effectivement audit au moins un ajusteur de puissance de façon telle que, lors du fonctionnement du système, la puissance physique $p_\varphi(x,t)$ puisse être commandée par l'instance de contrôle par le biais dudit au moins un ajusteur pour au moins un endroit x sur chaque arête,

ladite au moins une instance de contrôle dudit au moins un noeud d'ordinateurs étant configurée de façon que, lors du fonctionnement du système, l'instance de contrôle mette en oeuvre un procédé avec les étapes :

A) former un paquet de données, le paquet de données étant attribué à précisément un paquet d'énergie, le paquet de données définissant le paquet d'énergie respectif, et le paquet de données décrivant

i) une période de transfert $T$ du paquet d'énergie avec une durée $DT$ et un instant de mise en oeuvre $t_0$ indiquant le début de la période de transfert $T$,

ii) un trajet de transport préalablement déterminé d'un graphe de transport du réseau de transfert pour le transfert dirigé du paquet d'énergie, qui relie au moins une de la pluralité de sources $Q$ à précisément un de la pluralité de puits, ladite précisément une de la pluralité de sources $Q$ étant reliée à un noeud d'injection $K_Q$ du trajet de transport préalablement déterminé et ledit précisément un puits S étant relié au noeud de besoins $Ks$ par le biais d'une arête de besoins du trajet de transport préalablement déterminé, et

iii) une classe d'équivalence $\{p_{nom}(t), R(t), T\}$ du paquet d'énergie,

la classe d'équivalence $(p_{nom}(t), R(t), T\}$ étant donnée par

une évolution dans le temps préalablement déterminée par au moins un pronostic d'une puissance nominale $p_{nom}(t)$ du paquet d'énergie et une évolution dans temps d'un reste $R(t)$ en fonction d'une incertitude de pronostic dudit au moins un pronostic,

pour chaque instant $t$ pendant la période de transfert $T$ du paquet d'énergie, existant un $\mu(t)$ avec $-1 \leq \mu(t) < 1$ ou avec $-1 < \mu(t) \leq 1$ ou avec $-1 \leq \mu(t) \leq 1$, si bien que, lors du transfert du paquet d'énergie, la puissance physique $p_\varphi(x,t)$ soit déterminée, pour chaque instant $t$ et à au moins un endroit $x$ sur chaque arête du trajet de transfert, comme la somme de la puissance nominale $p_{nom}(t)$ et du produit de $\mu(t)$ et du reste $R(t)$,

la classe d'équivalence étant définie par une relation d'équivalence
selon laquelle, pour chaque instant $t$ de la période de transfert $T$, une première puissance physique $p'_{\varphi}(\hat{x}, t)$ à un endroit quelconque $\hat{x}$ d'une arête du trajet de transfert et une deuxième puissance physique $p_{\varphi}(x,t)$ à un endroit quelconque $x$ d'une arête du trajet de transfert sont exactement équivalentes lorsqu'il y a un reste prédéterminé $R(t)$ supérieur ou égal à zéro ou inférieur ou égal à une valeur limite $R_{max}$ ainsi qu'un $\mu(t)$ avec $-1 \leq \mu(t) < 1$ ou avec $-1 < \mu(t) < 1$ ou avec $-1 \leq \mu(t) < 1$, si bien que la première puissance physique $p'_{\varphi}(\hat{x}, t)$ soit égale à la somme de la deuxième puissance physique $p_{\varphi}(x,t)$ et du produit de $\mu(t)$ et du reste $R(t)$,

B) avant l'instant de mise en oeuvre $t_0$, transférer le paquet de données à toutes les instances de contrôle du réseau de données et d'ordinateurs auxquelles les ajusteurs de puissance pour la commande de la puissance physique sont reliés, de sorte que toutes les données nécessaires au transfert d'un paquet d'énergie soient cohérentes aux instances de contrôle, et

C) à partir de l'instant de mise en oeuvre $t_0$, transférer le paquet d'énergie clairement associé au paquet de données,

pour tous les instants $t$ pendant la période de transfert $T$ du paquet d'énergie, la puissance physique $p_{\varphi}(x,t)$ passant sur le trajet de transfert entre le noeud d'injection $K_Q$ et le noeud de besoins $K_S$ étant réglée pour au moins un endroit x de chaque arête du trajet de transfert de façon que la puissance physique injectée dans le noeud de besoins $K_S$ soit un élément de la classe d'équivalence $(p_{nom}(t), R(t), T\}$ décrite par le paquet de données.

Fig. 1

Fig. 2

EP 4 012 871 B1

Fig. 3

EP 4 012 871 B1

EP 4 012 871 B1

Anbindung an das Netzwerk 200.000

CPS 205.000

1300

1300

1300

1300

1300

← Interner Bus →

Interne Kante

1.000

Fig. 4

Anbindung an Netzwerk 200.000

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2430723 B1
- US 9013902 B2, R. Abe et al., A. Sumper et al., Alex Q. Huang et al.
- DE 102012204035 A1
- US 5027264 A
- EP 2250588 A2

**In der Beschreibung aufgeführte Nicht-Patentliteratur**

- **R. ABE ; H. TAOKA ; D. MCQUILKIN.** Digital grid: communicative electrical grids of the future. *IEEE Transactions on Smart Grid 2,* Juni 2011, (2), 399e410
- **F. GIRBAU-LLISTUELLA ; J.M. RODRIGUEZ-BERNUZ ; E. PRIETO-ARAUJO ; A. SUMPER.** Experimentalvalidation of a single phase intelligent power router. *IEEE PES Innovative Smart Grid Technologies Europe,* 2014
- **ALEX Q. HUANG.** The Energy Internet - An Open Energy Platform to Transform Legacy Power Systems into Open Innovation and Global Economic Engines
- **SVEN OLIVER KRUMKE ; HARTMUT NOLTEMEIER.** Graphentheoretische Konzepte und Algorithmen. Springer Verlag